(19)

**Europäisches Patentamt**
**European Patent Office**
**Office européen des brevets**

(11) **EP 4 334 740 B1**

(12) **EUROPEAN PATENT SPECIFICATION**

(45) Date of publication and mention
of the grant of the patent:
**04.06.2025 Bulletin 2025/23**

(21) Application number: **22726140.1**

(22) Date of filing: **03.05.2022**

(51) International Patent Classification (IPC):
$G01S\ 7/35^{(2006.01)}$      $G01S\ 13/34^{(2006.01)}$

(52) Cooperative Patent Classification (CPC):
**G01S 7/354; G01S 7/356; G01S 13/345**

(86) International application number:
**PCT/EP2022/061874**

(87) International publication number:
**WO 2022/233887 (10.11.2022 Gazette 2022/45)**

(54) **METHOD FOR TWO-DIMENSIONAL AND THREE-DIMENSIONAL IMAGING BASED ON COLOCATED MULTIPLE-INPUT MULTIPLE-OUTPUT RADARS**

VERFAHREN ZUR ZWEIDIMENSIONALEN UND DREIDIMENSIONALEN BILDGEBUNG AUF DER BASIS VON BENACHBARTEN RADAREN MIT MEHREREN EINGÄNGEN UND MEHREREN AUSGÄNGEN

PROCÉDÉ D'IMAGERIE BIDIMENSIONNELLE ET TRIDIMENSIONNELLE BASÉE SUR DES RADARS À ENTRÉES MULTIPLES SORTIES MULTIPLES COLOCALISÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.05.2021 IT 202100011156**
           **03.05.2021 IT 202100011243**

(43) Date of publication of application:
**13.03.2024 Bulletin 2024/11**

(73) Proprietor: **CNH Industrial Italia S.p.A.**
**10156 Torino (IT)**

(72) Inventors:
• **FERRARI, Luca**
  **41126 MODENA (IT)**
• **VITETTA, Giorgio**
  **41121 Modena (MO) (IT)**
• **GUERZONI, Giorgio**
  **41034 Finale Emilia (MO) (IT)**
• **DAVOLI, Alessandro**
  **42124 Reggio Emilia (RE) (IT)**

• **DI VIESTI, Pasquale**
  **42020 Albinea (RE) (IT)**
• **SIRIGNANO, Emilio**
  **80030 Visciano (NA) (IT)**

(74) Representative: **CNH Industrial IP Department**
**Leon Claeysstraat 3A**
**8210 Zedelgem (BE)**

(56) References cited:
• SIRIGNANO EMILIO ET AL: "A Comparative Analysis of Deterministic Detection and Estimation Techniques for MIMO SFCW Radars", IEEE ACCESS, vol. 7, 23 February 2021 (2021-02-23), pages 129848 - 129861, XP011746445, DOI: 10.1109/ ACCESS.2019.2939432
• DAVOLI ALESSANDRO ET AL: "Machine Learning and Deep Learning Techniques for Colocated MIMO Radars: A Tutorial Overview", IEEE ACCESS, IEEE, USA, vol. 9, 23 February 2021 (2021-02-23), pages 33704 - 33755, XP011840954, DOI: 10.1109/ ACCESS.2021.3061424

**Description**

Field of the invention

The present invention relates to a deterministic method for the detection of multiple targets and the estimation of their spatial coordinates in a colocated multiple-input multiple-output radar system operating in a slowly changing two-dimensional or three-dimensional propagation scenario. Two specific embodiments of the proposed method are described in detail for both frequency modulated continuous wave radars (FMCW) and stepped frequency continuous wave (SFCW) radars. These embodiments have, among others, the following relevant features:

a) they exploit novel algorithms for estimating the parameters of multiple overlapped sinusoids or complex exponentials affected by additive noise;

b) they require the evaluation of one-dimensional fast Fourier transforms only and the search for the maxima of proper cost functions over one-dimensional (frequency, azimuth or elevation) domains;

c) they generate radar images in the form of clouds of points.

The second feature make them computationally efficient. Moreover, the first embodiment and part of the second embodiment lend themselves to an efficient implementation on parallel hardware platforms. Specific technical problems experienced in the implementation of the proposed embodiments on commercial radar devices are identified and possible solutions are proposed. Our numerical results lead to the conclusion that the described embodiments are able to generate accurate radar images in the presence of multiple and closely spaced targets.

Low cost commercial radar devices can be used to implement the present invention.

State of the art

MIMO radar systems can be divided in statistical MIMO radars and colocated MIMO radars on the basis of the distance between their transmit array and their receive array; in the first case, transmit and receive antennas are widely separated, whereas, in the second one, they are closely spaced and, in particular, they are usually placed on the same shield. In this document, we focus on colocated MIMO radars only; such systems play an important role in a number of applications, because of their limited cost, their small size and their ability to detect the presence of multiple targets. The performance achieved by any colocated MIMO radar system depends not only on some important characteristics of its hardware (e.g., the operating frequency, the number of transmit and receive antennas, the configuration of the transmit and receive arrays, etc.), but also on the techniques that are employed in the generation of its radiated waveforms and in the processing of the measurements acquired through its receive array. As far as the last issue is concerned, it is worth stressing that optimal (i.e., maximum likelihood, ML) techniques for the estimation of the overall number of targets and of their spatial coordinates cannot be employed in practice, since they require solving complicated multidimensional optimization problems and, consequently, entail a huge computational effort, even in the presence of a small number of targets. This has motivated the development of various sub-optimal estimation techniques able to achieve good estimation accuracy at a manageable computational cost. A well known sub-optimal technique employed in real world radar systems is the one described in "S. Rao, "MIMO Radar," Texas Instruments - Application Report SWRA554A, July 2018, for FMCW radar systems".

It requires: a) the computation of a multidimensional Fast Fourier Transform (FFT) of the real matrix collecting the time-domain samples of the signals acquired through the receive array of the employed radar device; b) the search for the peaks of the resulting amplitude spectrum over a range-azimuth-elevation domain or a range-azimuth domain in 3D and 2D imaging, respectively. Despite the practical importance of this technique, the computational effort it requires is still significant, since it involves multidimensional spectral analysis of the acquired signals. Moreover, it suffers from the following relevant drawback: it can miss targets whose electromagnetic echoes are weaker than those generated by other spatially close targets; this is due to the fact the spectral contribution due to weak echoes is usually hidden by that produced by stronger echoes. This drawback may substantially affect the overall quality of radar imaging in the presence of extended targets, since such targets can be usually modelled as a cluster of point targets characterized by different radar cross sections.

Alternative sub-optimal techniques available in the technical literature are

- D. Oh and J. Lee, "Low-Complexity Range-Azimuth FMCW Radar Sensor Using Joint Angle and Delay Estimation Without SVD and EVD," IEEE Sensors Journal, vol. 15, no. 9, pp. 4799-4811, Sep. 2015 and

- J.-J. Lin, Y.-P. Li, W.-C. Hsu, and T.-S. Lee, "Design of an FMCW radar baseband signal processing system for automotive application," SpringerPlus, vol. 5, no. 42, pp. 1-16, Jan 2016 and

- E. Sirignano, A. Davoli, G. M. Vitetta, and F. Viappiani, "A Comparative Analysis of Deterministic Detection and Estimation Techniques for MIMO SFCW Radars," IEEE Access, vol. 7, pp. 129 848-129 861, 2019.

They are based on the idea of turning a complicated multidimensional optimization problem into a series of simpler and interconnected optimization sub-problems, each of which involves a search for the local maxima of a specific cost function over a limited *one-dimensional* (1D) or 2D parameter space; this idea is exploited to develop range-azimuth estimators for *frequency modulated continuous wave* (FMCW) MIMO radars and for *stepped frequency continuous wave* (SFCW) MIMO radars. More specifically, target delays are first estimated by applying the *multiple signal classification* (MUSIC) algorithm to a temporal auto-correlation matrix or by identifying the beat frequencies in the downconverted received signal through spectral analysis (more specifically, through the FFT algorithm) in the solution proposed by Oh and in that proposed by Lin, respectively; then, the acquired information are exploited to estimate the DOA of the echoes originating from the detected targets. In the solutions developed by Sirignano, instead, the parameters of the dominant target are estimated first; then, its contribution to the received signals is cancelled and the resulting residual signals are processed to detect the next dominant target. This detection/estimation/cancellation procedure is iterated until no significant target is detected on the basis of the residual signals.

It is desired to improve the results obtained by Oh, Lin and Sirignano.

It should be clear that the FFT represents the practical implementation of the DFT through computer means. Therefore, DFT and FFT can be used in an interchangeable way. The same concept applies also to IFFT and IDFT.

Summary of the invention

The present solution shares some important features with the detection/estimation techniques developed in Lin and Sirignano. Indeed, similarly as the techniques illustrated in Sirignano, the present method is deterministic, it processes a single snapshot, operates in an iterative fashion and is computationally efficient; its last feature can be related to the fact it requires the evaluation of 1D FFTs only and the search for the global maximum of proper cost functions over 1D (frequency, azimuth or elevation) domains. Moreover, similarly to Lin, it first extracts the range of each detected target from the spectra of the received signals and, then, fuses the information originating from such spectra to extract *direction of arrival* (DOA) information. However, unlike the methods developed in prior art, it can be employed in both FMCW and SFCW radar systems.

Moreover, its two embodiments exploit new techniques for estimating the parameters of multiple overlapped sinusoids or multiple overlapped complex exponentials in the presence of additive noise. Advantageously, the present solution involve the following concepts:

1. The technique employed in range estimation computes three distinct 1D FFTs of the baseband signal acquired through all the receive antennas or through a portion of them. Moreover, it exploits a *serial cancellation* algorithm to make the detection of closely spaced targets possible. The use of multiple FFTs allows to achieve *high accuracy* in range estimation. This, in turn, results in a mitigation of the error accumulation phenomenon affecting, like any iterative deterministic method, the serial cancellation procedure on which the detection of multiple targets is based. Consequently, a good resolution is achieved, even in the presence of a large number of targets.

2. The technique employed in DOA estimation is conceptually similar to the one developed for range estimation, but processes the measurements referring to each of the ranges at which the presence of at least one target has been detected. For this reason, it accomplishes 1D FFT processing in the estimation of the angular coordinates of the target/targets detected at a specific range. Moreover, it exploits a serial cancellation algorithm to make the detection of such targets possible, even in the presence of similar angular coordinates, and a new method, called *spatial folding,* to detect ghost targets and refine range estimates. The combination of these algorithms allows to solve the problem of *merged measurements* or *unresolved measurements,* in the sense that targets generating merged measurements in the range domain are resolved at this stage.

The present invention will be made fully clear with the aid of the attached dependent claim describing preferred embodiment of the invention.

Brief description of the figures

The invention will become fully clear through the following detailed description, given by way of a mere exemplifying and non limiting example, to be read with reference to the attached drawing figures, wherein:

Figure 1 shows an example of architecture of a MIMO FMCW radar system;

Figure 2 discloses the time diagram of the instantaneous frequency of the RF signal radiated in a FMCW radar system;

Figure 3 shows an example of architecture of a MIMO SFCW radar system;

Figure 4 discloses the time evolution of the instantaneous frequency of the RF signal radiated in a SFCW radar system;

Figure 5 discloses a block diagram of a preferred embodiment of the proposed method;

Figure 6 discloses a virtual antenna array considered in the proposed method;

Figure 7 discloses a block diagram describing the first embodiment of the proposed method;

Figure 8a and 8b disclose: a) a representation of the vector $|\mathbf{X}_{v_{k_i}}|$; and b) a discrete range profile computed by the single target detection, range estimation and cancellation STDREC algorithm, subject of the present invention, respectively;

Figure 9 discloses the identification of the reference antenna on the considered virtual array;

Figure 10 shows an example of a reference vertical uniform virtual antenna (VULA) and a reference horizontal uniform virtual antenna (HULA) including the reference antenna;

Figure 11 shows the representation of the vertically folded HULAs;

Figure 12 shows a block diagram representing a second embodiment of the proposed method;

Figure 13 and Figure 14 disclose a physical array used in our experimental work and the corresponding virtual array associated with the physical array, respectively;

Figure 15 discloses a block diagram representing the first embodiment of the proposed method; a compensation technique based on deep-learning methods is employed in the SPE;

Figure 16 discloses a block diagram representing the proposed deep network architecture;

Figure 17 discloses a diagram of the Amplitude spectra of the received signal and of the residual and the estimates of the amplitudes computed by the STDREC algorithm;

Figure 18 discloses a 3D reconstruction of the propagation Scenario (radar image);

Figure 19a and 19b disclose the Amplitude of the elements of the vector $X^{(i)}_{\mathrm{VULA}}[l]$ and of the vector $\{X^{(\mathrm{VF})}_i[l]\}$, and the estimates of the amplitudes computed by the STDAEC algorithm;

Figure 20 discloses a 3D reconstruction (radar image) of the Scenario #3 for both FMCW and SFCW radar system running embodiment #1;

Figure 21 shows a block diagram representing the RPE in a FMCW radar system;

Figure 22 shows a block diagram of the SFE#1 algorithm employed in a FMCW radar system for range estimation;

Figure 23 shows a block diagram of the SFE#2 algorithm employed in a FMCW radar system for range estimation;

Figure 24 shows a block diagram of the CSFE#1 algorithm employed in a FMCW radar system for range estimation;

Figure 25 shows a block diagram of the CSFE#2 algorithm employed in a FMCW radar system for range estimation;

Figure 26 shows a block diagram of the fusion step in RPE;

Figure 27 shows a block diagram representing the SPE in a FMCW/SFCW radar system;

Figure 28 shows a block diagram of the acquisition step in SPE;

Figure 29 shows a block diagram of an iteration of the STDAEC algorithm;

Figure 30 shows a block diagram of the CSFE#1 algorithm employed in a FMCW radar system for vertical frequency estimation;

Figure 31 shows a block diagram of the CSFE#2 algorithm employed in a FMCW radar system for vertical frequency estimation;

Figure 32 shows a block diagram of the CSFE#1 algorithm employed in a FMCW radar system for horizontal frequency estimation;

Figure 33 shows a block diagram of the CSFE#2 algorithm employed in a FMCW radar system for horizontal frequency estimation;

Figure 34 shows a block diagram of the CSFE#1 algorithm employed in a FMCW radar system for the refinement step;

Figure 35 shows a block diagram of the CSFE#2 algorithm employed in a FMCW radar system for the refinement step;

Figure 36 shows a block diagram representing the RPE in a SFCW radar system;

Figure 37 shows a block diagram of the CSDE#1 algorithm employed in a SFCW radar system for range estimation;

Figure 38 shows a block diagram of the CSDE#2 algorithm employed in a SFCW radar system for range estimation;

Figure 39 shows a block diagram of the CSDE#1 algorithm employed in a SFCW radar system for vertical frequency estimation;

Figure 40 shows a block diagram of the CSDE#2 algorithm employed in a SFCW radar system for vertical frequency estimation;

Figure 41 shows a block diagram of the CSDE#1 algorithm employed in a SFCW radar system for horizontal frequency estimation;

Figure 42 shows a block diagram of the CSDE#2 algorithm employed in a SFCW radar system for horizontal frequency estimation;

Figure 43 shows a block diagram of the CSDE#1 algorithm employed in a SFCW radar system for the refinement step;

Figure 44 shows a block diagram of the CSDE#2 algorithm employed in a SFCW radar system for the refinement step.

The description of the propagation Scenarios #1, #2 and #3 is compared with that provided by their estimates through the attached tables 1 - 6, at the bottom of the detailed description. Table 1. Target parameters employed in scenario #1 and their estimates.

Table 2. Target parameters employed in scenario #2 and their estimates.

Table 3. Target parameters employed in scenario #3 and their estimates obtained with the FMCW MIMO radar and embodiment #1.

Table 4. Target parameters employed in scenario #3 and their estimates obtained with the FMCW MIMO radar and embodiment #2.

Table 5. Target parameters employed in scenario #3 and their estimates obtained with the SFCW MIMO radar and embodiment #1.

Table 6. Target parameters employed in scenario #3 and their estimates obtained with the SFCW MIMO radar and embodiment #2.

Table 7. RMSE and peak errors for scenario #3.

The same reference numerals and letters in the figures designate the same or functionally equivalent parts.

According to the present invention, the term "second element" does not imply the presence of a "first element", first, second, etc.. are used only for improving the clarity of the description and they should not be interpreted in a limiting way.

Detailed description of preferred embodiments of the invention

## 1. Radar system and signal models

In this section, the architecture of MIMO FMCW and SFCW colocated radar systems is illustrated. Moreover, the mathematical models of the signals transmitted and received in both systems are illustrated.

### 1.1. MIMO FMCW radar system

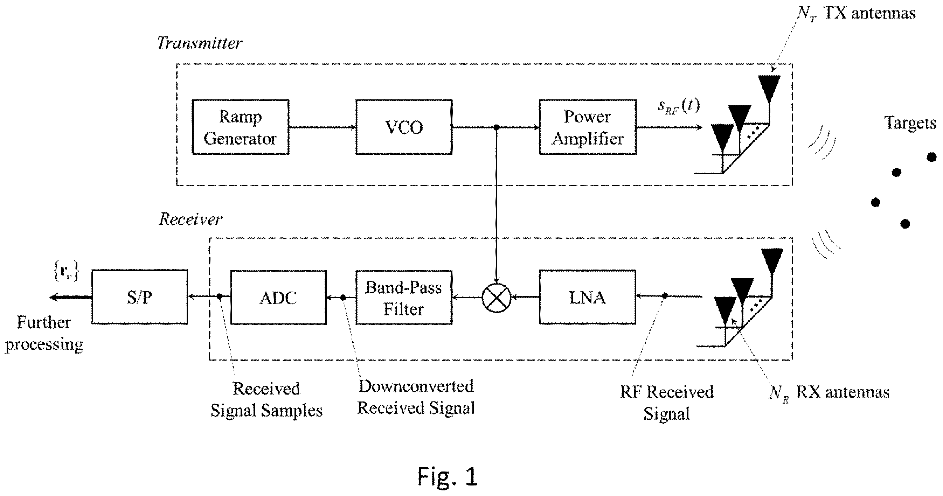

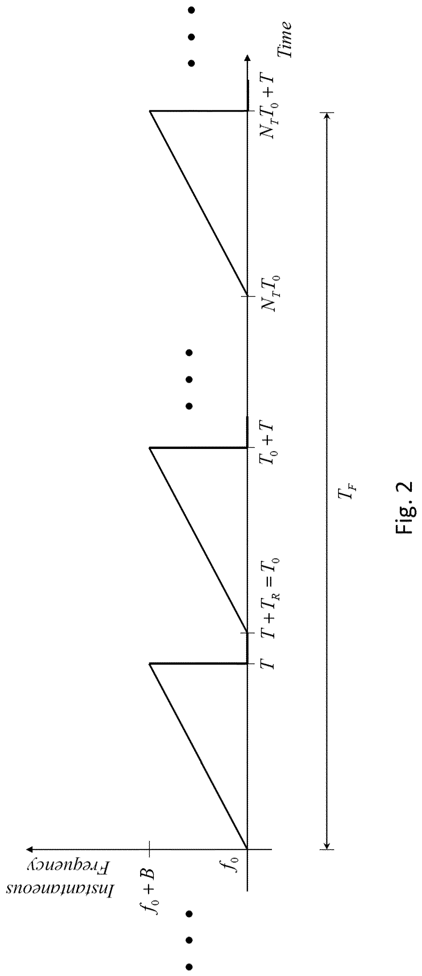

In this paragraph, we take into consideration the colocated MIMO FMCW radar system illustrated in Fig.1; we assume that this system is equipped with a 2D array. The radio frequency (RF) signal radiated by the radar transmitter is generated as follows. A ramp generator feeds a voltage controlled oscillator (VCO), that produces a chirp frequency modulated signal, whose instantaneous frequency evolves periodically, as illustrated in Figure 2; in this figure, the parameters $T$, $T_R$ and $T_0$ represent the chirp interval, the reset time and the pulse period (or pulse repetition interval), respectively , whereas $f_0$ and $B$ are the so called start frequency and the bandwidth, respectively, of the frequency modulated signal. The FM signal feeds a power amplifier whose response is sent to one of the $N_T$ available transmit (TX) antennas. It can be assumed that a time division multiplexing (TDM) strategy is employed in the selection of the TX antennas. This means that all the available TX antennas are used over $N_T$ consecutive chirp intervals, i.e. in a single transmission frame (lasting $T_F \triangleq N_T T_0$ s), so that all the available transmit diversity is exploited. It is worth stressing that, as already mentioned above, the proposed method processes a single snapshot of the received signals, i.e. the signals received in a transmission frame. Moreover, it relies on the assumption that the propagation scenario in which the radar system operates undergoes negligible variations in the observation interval, i.e. over $T_F$ s. For this reason, the presence of the Doppler phenomenon is not accounted for in the received signal model illustrated below.

The RF signal radiated in a single chirp interval and, in particular, in the time interval (0, T), can be expressed as (see Figure 1)

$$s_{RF}(t) = \Re\{s(t)\}, \quad (1.1)$$

where

$$s(t) \triangleq A_{RF}\exp\big(j\theta(t)\big), \quad (1.2)$$

$$\theta(t) \triangleq 2\pi\left(f_0 t + \frac{\mu}{2}t^2\right) \quad (1.3)$$

is the signal phase, $A_{RF}$ is its amplitude

$$\mu \triangleq \frac{B}{T} \quad (1.4)$$

is the chirp rate, i.e. the steepness of the employed frequency chirp. In the following we assume that the radiated signal $s_{RF}(t)$ (1.1) is reflected by $L$ targets and that the position of the $l$-th target (with $l = 0, 1, ..., L - 1$) with respect to the center of the antenna array is identified by its range $R_l$, its azimuth $\theta_l$ and its elevation $\phi_l$. Consequently, the useful component of the signal captured by each of the $N_T$ receive (RX) antennas consists of the superposition of $L$ echoes, each originating from a distinct target. Moreover, in deriving our method for detecting such targets and estimating their spatial coordinates, we usually refer to the N-dimensional column vector

$$\mathbf{r}_{p,q} \triangleq \left[ r_0^{(p,q)}, r_1^{(p,q)}, \ldots, r_{N-1}^{(p,q)} \right]^T$$

(1.5)

of the baseband signal samples acquired through the RX virtual antenna (RVA) identified by the horizontal index $p$ and the vertical index $q$. In the remaining part of this document, this antenna is denoted $(p, q)$ RVA or v-th RVA (with $v = 0, 1, ..., N_{VR}$ -1), for brevity, where $v$ is a single index related to the couple $(p, q)$ by a specific one-to-one mapping. If the single index $v$ is adopted, the notation

$$\mathbf{r}_v \triangleq \left[ r_{v,0}, r_{v,1}, \ldots, r_{v,N-1} \right]^T$$

(1.6)

is employed for the vector $\mathbf{r}_{p,q}$ (1.5).

It is important to point out that the v-th RVA virtual antenna is associated with a specific couple (TX antenna, RX antenna) of the 2D *physical* antenna array and represents a single element of the 2D *virtual antenna array,* which, generally speaking, consists of $N_{VR} = N_T \cdot N_R$ elements. Moreover, if the considered radar is equipped with a *uniform rectangular array* (URA), it can be assumed that its virtual array is made of $N_{ULA}$ horizontal *uniform linear arrays* (ULAs), each consisting of $N_{EL}$ elements, so that $p = 0, 1, ..., N_{EL} - 1, q = 0, 1, ..., N_{ULA} - 1$ and $N_{VR} = N_{ULA} \cdot N_{EL}$. Additional details about this technical issue can be found, for example, in Sirignano.

The expression of the $n$-th element $r_n^{(p,q)}$ (with $n = 0, 1, ..., N - 1$) of the received signal vector $\mathbf{r}_{p,q}$ (1.5) can be derived as follows. It can be shown that the delay of the echo generated by the $l$-th target and observed by the v-th RVA is (e.g., see eq 4 in "I. Bilik, O. Longman, S. Villeval, and J. Tabrikian, "The rise of radar for autonomous vehicles: Signal processing solutions and future research directions," IEEE Sig. Proc. Mag., vol. 36, no. 5, pp. 20-31, Sep. 2019")

$$\tau_{v,l} = \frac{2}{c} [R_l + x_v \cos(\phi_l) \sin(\theta_l) + y_v \sin(\phi_l)],$$

(1.7)

where the elements of the couple $(x_v, y_v)$ are the coordinates of the considered RVA with respect to a Cartesian reference system lying on the physical antenna array (the center of the virtual array is identified by $(x_v, y_v) = (0,0)$) . The RF signal originating from this target is amplified by a low noise amplifier (LNA) and, then, undergoes a frequency downconversion based on the locally generated chirp FM signal and band-pass filtering; if the delay due to this processing is neglected[1], the phase of the resulting beat signal (i.e., of the downconverted signal) available at the output of the band-pass filter is

$$\begin{aligned} \theta(t) - \theta\left(t - \tau_{v,l}\right) & \\ = \quad & 2\pi\left(f_0 t + \frac{\mu}{2} t^2\right) - 2\pi\left(f_0\left(t - \tau_{v,l}\right) + \frac{\mu}{2}\left(t - \tau_{v,l}\right)^2\right) \\ = \quad & 2\pi f_{v,l} t + \widehat{\psi}_{v,l}, \end{aligned}$$

(1.8)

where

$$f_{v,l} \triangleq \mu\, \tau_{v,l}$$

(1.9)

and

$$\widehat{\psi}_{v,l} \triangleq 2\pi f_0 \tau_{v,l} - \pi\mu\tau_{v,l}^2 \cong 2\pi f_0 \tau_{v,l},$$

(1.10)

since the term $\pi\mu\tau_{v,l}^2$ is usually negligible with respect to the term $2\pi f_0 \tau_{v,l}$. Therefore, the overall beat signal originating from the v-th RVA can be expressed as

$$r_v(t) = \sum_{l=0}^{L-1} a_l \cos(2\pi f_{v,l}\, t + \widehat{\psi}_{v,l}) + w_v(t),$$

(1.11)

for $\tau_M \le t \le T + \tau_m$, where $\tau_m$ and $\tau_M$ denote the minimum and the maximum of the target delays $\{\tau_{v,l}; l = 0, 1, ..., L\text{-}1\}$, $a_l$ is the amplitude of the $l$-th component of the useful signal (this amplitude depends on both the range $R_l$ and the reflectivity of the $l$-th target) and $w_v(t)$ is zero mean additive noise affecting the considered RX signal.

[1] Note that this assumption makes sense if all the RX signal chains introduce the same delay. Unluckily, this does not hold in commercial radar devices. However, the delays of all the signal chains can be accurately estimated and their differences, being deterministic quantities, can be accurately compensated for by means of an accurate calibration of the employed radar device.

The signal $r_v(t)$ (1.11) undergoes analog-to-digital conversion at a frequency $f_s = 1/T_s$, where $T_s$ denotes the sampling period. If, for simplicity, quantization effects are neglected, sampling the signal $r_v(t)$ at the instant $t = nT_s + \tau_M$ results in the real quantity

$$r_{v,n} = \sum_{l=0}^{L-1} a_l \cos(2\pi f_{v,l}\, nT_s + \psi_{v,l}) + w_{v,n},$$

(1.12)

that represents the n-th element of the vector $\mathbf{r}_v$ (1.6) (with $n = 0, 1, ..., N\text{-}1$); here, $w_{v,n} \triangleq w_v(nT_s)$ for any $n$ and $N$ denotes the overall number of samples acquired from each RVA and

$$\psi_{v,l} \triangleq \widehat{\psi}_{v,l} + 2\pi f_{v,l}\, \tau_M.$$

(1.13)

In our computer simulations, for any $v$, the sequence $\{w_{v,n}\}$ consists of zero mean and independent Gaussian random variables, each having variance $\sigma_w^2$.

In some FMCW radar devices, the frequency downconversion of the received RF signals entails the extraction of both the inphase and quadrature components of each of such signals. When this occurs, eqs. (1.11) and (1.12) are replaced by

$$r_v(t) = \sum_{l=0}^{L-1} a_l \exp(\mathrm{j}(2\pi f_{v,l}\, t + \widehat{\psi}_{v,l})) + w_v(t)$$

(1.14)

and

$$r_{v,n} = \sum_{l=0}^{L-1} a_l \exp(\mathrm{j}(2\pi f_{v,l}\, nT_s + \psi_{v,l})) + w_{v,n},$$

(1.15)

respectively. The meaning and expression of the parameters appearing in the last two equations are the same as those illustrated for eqs. (1.11) and (1.12), the only difference being represented all the involved signals and their samples are complex (in particular, the sequence $\{w_{v,n}\}$ consists of zero mean and independent complex Gaussian random variables, each having variance $\sigma_w^2$ ).

It is also worth mentioning that the maximum target delay $\tau_M$ (i.e., the maximum resolvable frequency) depends on the sampling frequency $f_s$ adopted in the analog-to-digital conversion since aliasing must be avoided; more specifically, it is not difficult to show that the inequality

$$\tau_M \leq \frac{f_s}{2\mu} \qquad (1.16)$$

must be satisfied. The signal model (1.12) can be also rewritten as

$$r_{v,n} = \sum_{l=0}^{L-1}\left[C_{v,l}\exp\left(j2\pi n F_{v,l}\right) + C_{v,l}^*\exp\left(-j2\pi n F_{v,l}\right)\right] + w_n \qquad (1.17)$$

where, for any $l$ and $v$,

$$C_{v,l} \triangleq \frac{1}{2}a_l \exp\left(j\psi_{v,l}\right) \qquad (1.18)$$

is the complex amplitude of the $l$-th target detected on the v-th RVA and

$$F_{v,l} \triangleq f_{v,l}T_s = f_{v,l}/f_s \qquad (1.19)$$

is the normalised frequency associated with the frequency $f_{v,l}$.

It is also important to point out that all the vectors $\{r_v\}$ are generated on the basis of the samples resulting from the analog-to-digital conversion of the $N_R$ downconverted signals associated with all the available physical RX antennas. The samples acquired from each RX antenna within the same chirp undergo *serial-to-parallel* conversion in the S/P block shown in Figure 1. We assume that this block also produces all the vectors $\{r_v\}$, which become available for further processing.

### 1.2. MIMO SFCW radar system

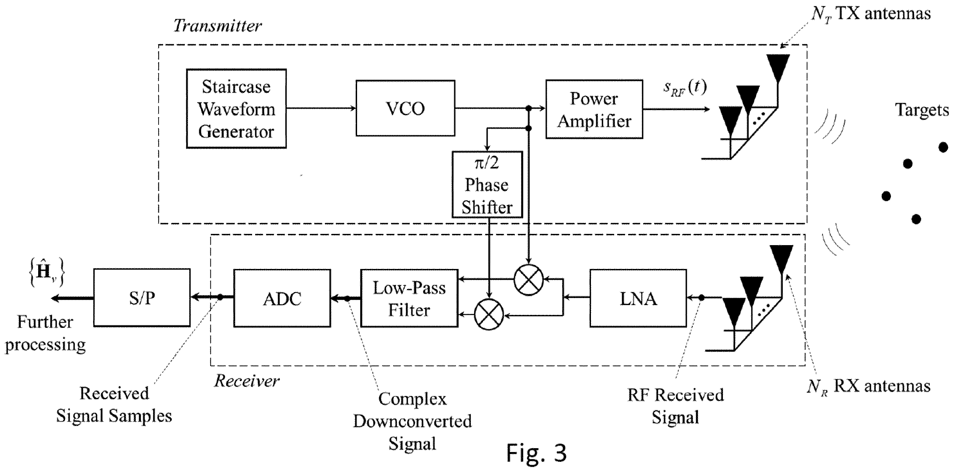

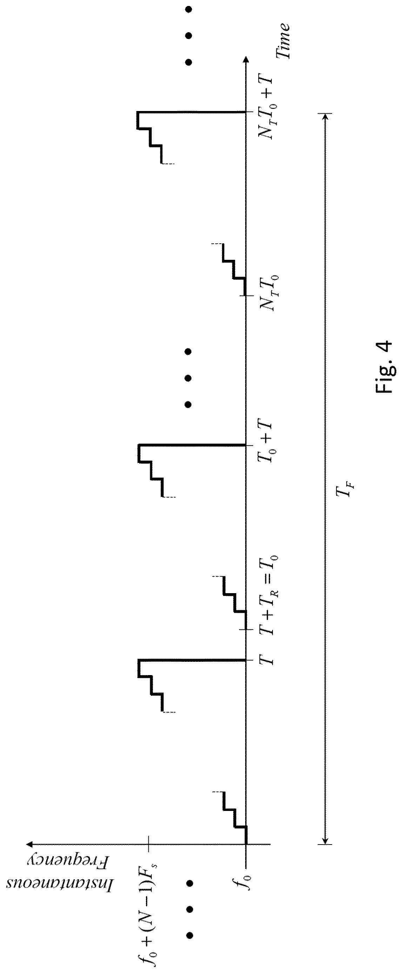

In this paragraph, we take into consideration the colocated MIMO SFCW radar system illustrated in Figure 3; we assume that this system, like the one shown in Figure 1, is equipped with a 2D array. The signal it radiates is generated as follows. A staircase waveform generator feeds a VCO, that produces a modulated continuous wave; this signal feeds a power amplifier whose response is sent to one of the $N_T$ available TX antennas. In the following, the parameters $T$, $T_R$ and $T_0$ represent the duration of each staircase, the reset time and the repetition interval, respectively, as illustrated in Figure 4. Moreover, similarly as the previous radar system, a TDM strategy can be employed in the selection of the TX antennas. This means that all the available TX antennas are used over $N_T$ consecutive staircase intervals, i.e. in a single transmission frame (lasting $T_F \triangleq N_T T_0$ s), so that all the available transmit diversity is exploited. It is worth stressing that, as already mentioned above, the proposed method process a single snapshot of the received signals, i.e. the signals received in a single transmission frame. Moreover, it relies on the assumption that the propagation scenario in which our radar system operates undergoes negligible variations in the observation interval, i.e. over $T_F$ s. For this reason, the presence of the Doppler phenomenon is not accounted for in the received signal model illustrated below.

The radiated RF signal $s_{RF}(t)$ is still expressed by eqs. (1.1)-(1.2). However, eq. (1.3) does not hold any more, since the time evolution of the instantaneous frequency of the signal $s_{RF}(t)$ is represented by a staircase lasting $T$ s and whose $N$ steps have equal duration; more specifically, the n-th value of this frequency is

$$f_n = f_0 + n\Delta f, \qquad (1.20)$$

with $n = 0, 1, ..., N - 1$, where $f_0$ is the minimum radiated frequency, $\Delta f$ is the frequency step size and $N$ is the overall number of transmitted frequencies (see Figure 4).

The transmitted signal allows to *sound* the communication channel between the TX and each of the RX antennas at the $N$ equally spaced frequencies expressed by eq. (1.20). For this reason, the processing accomplished at the receive side of the radar system aims at generating an estimate of the channel frequency response at each of these frequencies. More specifically, these estimates are collected in the vector

$$\mathbf{x}_{p,q} \triangleq \left[ x_0^{(p,q)}, x_1^{(p,q)}, \ldots, x_{N-1}^{(p,q)} \right]^T, \qquad (1.21)$$

that refers to the RVA identified by the horizontal index $p$ and the vertical index $q$ (and denoted $(p,q)$ RVA or v-th RVA); the equivalent notation

$$\mathbf{x}_v \triangleq \left[ x_{v,0}, x_{v,1}, \ldots, x_{v,N-1} \right]^T \qquad (1.22)$$

can be also adopted, where $v$ is a single index related with the couple $(p,q)$ through a specific one-to-one mapping. It is not difficult to prove that, under the same assumptions made in the derivation of eq. (1.12), the n-th element $x_{v,n}$ of the last vector can be expressed as

$$x_{v,n} = \sum_{l=0}^{L-1} a_l \exp\left( -j\left( 2\pi n \Delta f \tau_{v,l} + \psi_{v,l} \right) \right) + w_{v,n}, \qquad (1.23)$$

with $n = 0, 1, \ldots, N - 1$, where

$$\psi_{v,l} \triangleq 2\pi f_0 \tau_{v,l}, \qquad (1.24)$$

and the parameters $a_l$ and $\tau_{v,l}$ and the random variable $w_{v,n}$ have exactly the same meaning as the one illustrated for the received signal model (1.12) (in particular, $\tau_{v,l}$ is still expressed by eq. (1.7)). In our computer simulations, for any $v$, the sequence $\{w_{v,n}\}$ consists of zero mean and independent complex Gaussian random variables, each having variance $\sigma_w^2$. Moreover, the first term appearing in the right-hand side (RHS) of eq. (1.23) represents the frequency response of the communication channel associated with the $v$-th RVA at the frequency $f_n$ (1.20). It is also worth noting that eq. (1.23) can be put in the form

$$x_{v,n} = \sum_{l=0}^{L-1} A_{v,l} \exp(-j 2\pi n T_{v,l}) + w_{v,n}, \qquad (1.25)$$

where

$$A_{v,l} \triangleq a_l \exp\left( -j \psi_{v,l} \right) \qquad (1.26)$$

and

$$T_{v,l} \triangleq \tau_{v,l} \, \Delta f \qquad (1.27)$$

represent the complex amplitude characterizing the contribution of the $l$-th target to $x_{v,n}$ (1.25) and the delay of that target normalised with respect to $1/\Delta f$, respectively. The model (1.25), similarly as the model (1.12) developed for a FMCW radar, allows to interpret the signal observed on the $v$-th RVA as a superposition of $L$ oscillations. However, the former model is complex, whereas the latter one is real. This difference has to be kept carefully into account in our description of the detection/estimation techniques illustrated in the following section.

## 2. Description of the Proposed Method Proposed and of Its Two Embodiments

In this section, a novel method for detecting multiple targets and estimating their spatial coordinates (i.e., for generating a 3D or 2D radar image) in colocated MIMO FMCW/SFCW radar systems is described. First, we provide a general description of this method. Then, we illustrate two specific embodiments of it for a FMCW radar system employed for 3D or 2D radar imaging. Finally, we discuss how they can be adapted to a SFCW radar system.

### 2.1. General description of the proposed method

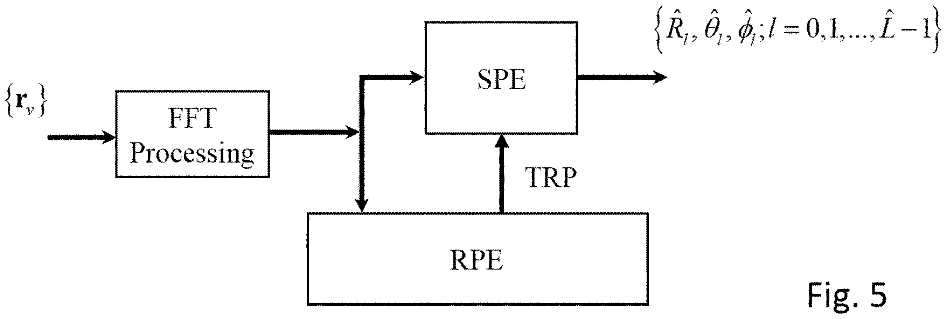

The overall architecture of the method we propose for the detection of multiple targets and the estimation of their spatial coordinates in a colocated MIMO radar system is described by the block diagram illustrated in Figure 5. Our method operates as follows. First of all, each vector of the set $\{r_v\}$ ($\{x_v\}$; see eqs. (1.6) and (1.22), respectively) undergoes FFT processing, so that signal analysis is moved from the time-domain (frequency-domain) to the frequency-domain (time-domain) in a FMCW (SFCW) radar system. The FFT output is processed by a range profile estimator (RPE); this generates an estimate of the target range profile (TRP), i.e. it identifies each range at which relevant echoes are detected and estimates their energy; the last quantity allows us to rank each identified range on the basis of its perceptual importance. The output of the FFT processing and the target range profile are processed by a spatial estimator (SPE). This block estimates the number of targets contributing to the range profile and their angular parameters (i.e., azimuth and elevation); moreover, it eventually produces a finer estimate of their range. Its output is represented by the set $\{(R_l, \hat{\theta}_l, \hat{\phi}_l); l = 0, 1, ..., \hat{L} - 1\}$, where $\hat{L}$ represents an estimate of the parameter $L$ (i.e., of the overall number of targets), whereas $\hat{R}_l$, $\hat{\theta}_l$, and $\hat{\phi}_l$, represent an estimate of the range $R_l$, azimuth $\theta_l$ and elevation $\phi_l$, respectively, of the $l$-th target (with $l = 0, 1, ..., \hat{L} - 1$).

The approach adopted in our method allows to separate range estimation from angular estimation, i.e. to turn a 3D detection/estimation problem in

- a 1D detection/estimation problem involving the detection of multiple targets and the estimation of their range only, plus

- a 2D estimation problem concerning the detection of targets having the same range and the estimation of their angular coordinates only.

Consequently, the overall problem of detecting multiple targets and estimating their range and angles is turned into a couple of simpler detection/estimation problems. Moreover, in our method, the techniques listed below are exploited to develop the computationally efficient signal processing techniques employed in the RPE and in the SPE.

Target range profile estimator

a) *Antenna selection* - The RPE processes the FFT outputs referring to all the RVAs or to a portion of them (say, $N_A$ of the $N_{VR}$ RVAs). On the one hand, a larger $N_A$ allows to generate a more accurate estimate of the TRP (i.e., of the number of detected targets, of their ranges and of their energies). On the other hand, the selection of a smaller $N_A$ results in a reduction of the overall computational effort devoted to the estimation of the TRP.

b) *Parallel processing and data fusion* - The measurements acquired through the $N_A$ RVAs mentioned in the previous point are processed in two steps. In the first step, target range estimation is accomplished on each RVA *independently of all the other* RVAs, i.e. the acquired measurements are processed on a per-antenna basis; this is beneficial when parallel computing hardware is employed in the execution of the first step. In the second step, the target range information extracted from each of the selected $N_A$ RVAs are fused to generate the TRP.

c) *Serial target cancellation* - Target detection and range estimation on each RVA is a *multidimensional problem* since it aims at detecting multiple targets and estimating their ranges. In our method, this multidimensional problem is turned into a sequence of 1D estimation problems by adopting a *serial interference cancellation* (SIC) approach (e.g., see "E. Sirignano, A. Davoli, G. M. Vitetta, and F. Viappiani, "A Comparative Analysis of Deterministic Detection and Estimation Techniques for MIMO SFCW Radars," IEEE Access, vol. 7, pp. 129 848-129 861, 2019."). This means that the noisy signal observed on each RVA is processed to *detect* a single (and, in particular, the strongest) target, and to *estimate* its range and complex amplitude. Then, the contribution of this target to the noisy signal is estimated and subtracted from the signal itself (i.e., the detected target is treated as a form of *interference*), so that *target cancellation* is accomplished. This *detection/estimation/cancellation* procedure is iteratively applied to the *residual noisy signal* until its overall energy drops below a given threshold.

**Spatial estimator**

a) *Alternating maximization* - The estimation of the angular coordinates (namely, azimuth and elevation) of a target whose range is known requires searching for the maximum of a proper cost function over a 2D domain. In our method, the *alternating maximization* (AM) technique is exploited to turn a multidimensional optimization problem into a set of interacting optimization problems, each involving a single variable and that are solved in an iterative fashion (e.g., see Par. IV-A "I. Ziskind and M. Wax, "Maximum likelihood localization of multiple sources by alternating projection," IEEE Trans Ac., Speech and Sig. Proc., vol. 36, no. 10, pp. 1553-1560, 1988."). More specifically, this technique is employed to develop iterative algorithms alternating the estimation of the elevation of a given target with that of its azimuth; for this reason, a 2D optimization problem is turned into a couple of interacting 1D optimization problems.

b) *Serial target cancellation* - Each of the ranges collected in the TRP is associated with an unknown number of targets; for this reason, the SPE is required to resolve all the targets associated with a given range and estimate their angular coordinates. In the technical literature about radar systems, the detection of an unknown number of targets characterized by the *same range* (or by ranges whose difference is below the range resolution of the employed radar system) and the estimation of their angular parameters is known to be a difficult multidimensional problem (e.g., see Par. III-C "D. Oh and J. Lee, "Low-Complexity Range-Azimuth FMCW Radar Sensor Using Joint Angle and Delay Estimation Without SVD and EVD," IEEE Sensors Journal, vol. 15, no. 9, pp. 4799-4811, Sep. 2015."). In our method, this multidimensional problem is turned into a sequence of 2D estimation problems by adopting a SIC approach (see "E. Sirignano, A. Davoli, G. M. Vitetta, and F. Viappiani, "A Comparative Analysis of Deterministic Detection and Estimation Techniques for MIMO SFCW Radars," IEEE Access, vol. 7, pp. 129 848-129 861, 2019." and references therein). This means that the *noisy signal referring to a specific range and acquired on all* the RVAs is processed to detect a single (and, in particular, the strongest) target, and to estimate its angular coordinates and its complex amplitude. Then, the contribution of this target to the noisy signal is subtracted from the signal itself (i.e., the detected target is treated as a form of *interference*), so that *target cancellation* is accomplished. This *detection/estimation/- cancellation* procedure is iteratively repeated on the *residual noisy signal* until its overall energy drops below a given threshold. Moreover, in our method, the SIC technique is combined with the AM approach described in the previous point; this allows to detect and estimate the angular parameters of a single target (i.e., to solve a 2D optimization problem) by means of an iterative procedure alternating the estimation of its elevation with that of its azimuth (i.e., by means of a technique solving a couple of 1D optimization problems).

c) *Parallel processing and data fusion* - Two different approaches can be used in the detection and estimation of multiple targets characterized by *different ranges.* In fact, the detection and the estimation of the targets associated with distinct ranges appearing in the TRP can be accomplished *in a parallel fashion* or *in a sequential fashion.* The first approach is potentially very useful when spatial estimation is executed on parallel computing hardware. In fact, in this case, multiple spatial estimation algorithms can be run *in parallel,* one for each of the ranges appearing in the TRP. Note, however, that target information generated by these algorithms need to be fused at the end of their processing. In fact, as it will become clearer in the following, spatial estimators analysing the measurements that refer to close ranges contained in the TRP may lead to the detection of the same target; in other words, some targets can be detected multiple times. The second approach is based on the idea of *sequentially* analysing the measurements associated with each of the ranges appearing in the TRP. In doing so, the order to be followed is based on the perceptual importance of these ranges, i.e. on their energy.

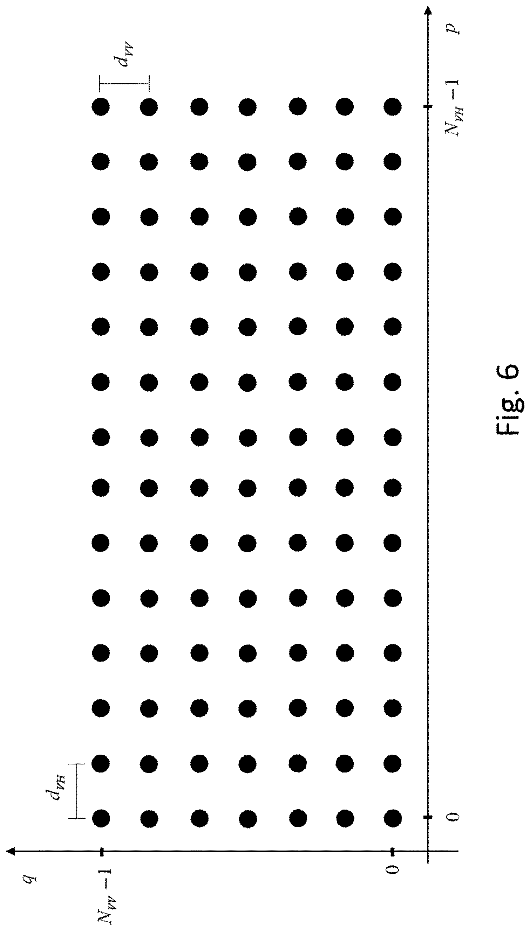

Two specific embodiments of the general method illustrated above are described in the following paragraph. In both cases, we assume, without loosing generality, that the available measurements are acquired through the $N_{VH} \times N_{VV}$ virtual URA illustrated in Figure 6; the horizontal (vertical) spacing between adjacent antennas in this array is denoted $d_{VH}$ ($d_{VV}$). Moreover, the embodiments are described first for a FMCW radar system employed for 3D imaging; then, we briefly discuss how they can be modified to be employed in a SFCW radar system and in the case of 2D radar imaging (see Paragraphs 2.3. SFCW radar system and 2.4. Adaptation to 2D Imaging, respectively).

**2.2. FMCW radar system**

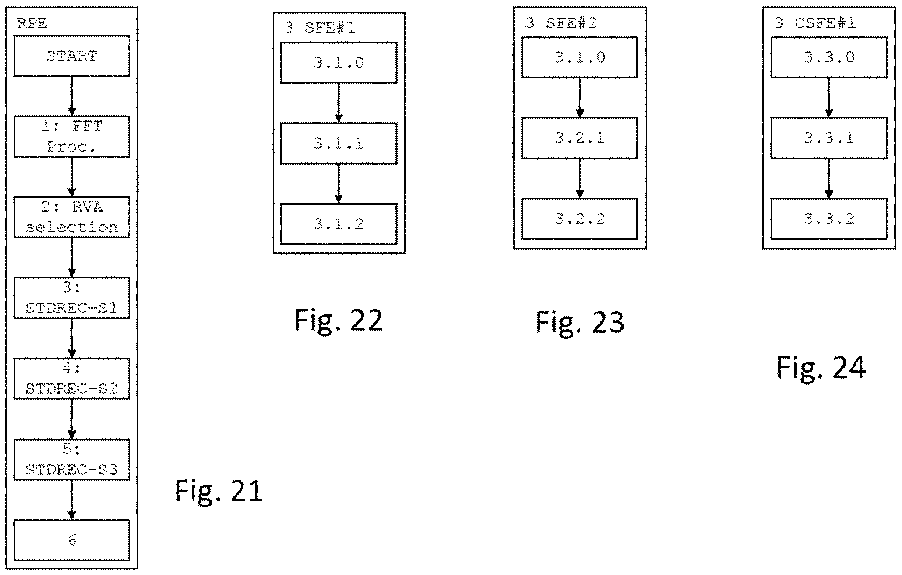

In summary, in the present invention is presented a method for the detection of targets through a MIMO FMCW radar equipped with a plurality of transmitting (TX) and receiving (RX) antennas, wherein each couple of said TX and RX antennas is replaced with the equivalent virtual antenna; said MIMO FMCW radar is arranged to generate real or complex signals in response to a propagation scenario including a plurality of point targets; said method includes (see Steps 1 - 6 of Figure 21):

- (Step 1: FFT processing) estimation of the spectrum ( $\overline{\mathbf{X}}_0^{(v)}$ ) of said signal and its first $N_{FFT}$ - 1 derivatives ( $\{\overline{\mathbf{X}}_k^{(v)}; \ k = 1, \dots, N_{FFT} - 1\}$) with $N_{FFT}$ = 3 when said signal is real and $N_{FFT}$ = 4 when said signal is complex, for each of said virtual antennas through FFT calculation with an oversampling factor (**M**),
- (Step 2: RVA selection) acquisition of a sub-set of a number (**$N_A$**) of virtual antennas spectrum and of the corresponding derivatives,

Recursive execution of

- (Step 3: STDREC-S1) calculation of an estimate of the parameters of the most dominant point target, including phase (**$\psi$**), amplitude (**a**) and frequency (**f**) for each of said virtual antennas of said sub-set on the basis of said spectrum, and its derivatives, through $N_{FFT}$ - 1 FFTs for each of said virtual antennas of said sub-set,
- (Step 4: STDREC-S2) cancellation of said most dominant point target and computation of a residual spectrum,
- (Step 5: STDREC-S3) computation of an energy of said residual spectrum and return to (Step 3) until said energy is over a predetermined threshold (**$T_{STDREC}$**), otherwise
- (Step 6) computation of an average energy and fusion of ranges information of said point targets detected by said number of virtual antennas to list said point targets according to said average energy in a decreasing order.

## 2.2.1. Embodiment #1

The processing accomplished in the first embodiment of the proposed method is described by the block diagram illustrated in Fig. 5 and can be divided in three tasks, each associated with one of the blocks appearing in that figure (the i-th task is denoted T*i* in the following).

In all these tasks, the signal received over a single array snapshot is processed. In the following, the structure of each task is described; additional details about the employed algorithms are provided in Paragraph 4.

**T1)** *FFT processing* - The processing accomplished within this task can be summarized as follows. Given the vector $\mathbf{r}_v$ (1.6), the **N**-dimensional vectors

$$\mathbf{x}_{1,v} \triangleq \left[x_{1,v,0}, x_{1,v,1}, \dots, x_{1,v,N-1}\right]^T \qquad (2.1)$$

and

$$\mathbf{x}_{2,v} \triangleq \left[x_{2,v,0}, x_{2,v,1}, \dots, x_{2,v,N-1}\right]^T \qquad (2.2)$$

are generated for *v* = 0, 1, ..., $N_{VR}$ - 1; here,

$$x_{m,v,n} \triangleq n^m \cdot r_{v,n} \qquad (2.3)$$

with *n* = 0, 1, ..., *N* - 1 and *m* = 1, 2. Then, the vectors $\mathbf{r}_v$, $\mathbf{x}_{1,v}$ and $\mathbf{x}_{2,v}$ undergo zero padding (ZP) for any *v*; this produces the $N_0$-dimensional vectors

$$\mathbf{x}_{0,\mathrm{ZP},v} = \left[\mathbf{r}_v^T \ \mathbf{0}_{(M-1)N}^T\right]^T, \qquad (2.4)$$

$$\mathbf{x}_{1,\mathrm{ZP},v} = \left[\mathbf{x}_{1,v}^T \ \mathbf{0}_{(M-1)N}^T\right]^T \qquad (2.5)$$

and

$$\mathbf{x}_{2,\mathrm{ZP},v} = \left[\mathbf{x}_{2,v}^T \; \mathbf{0}_{(M-1)N}^T\right]^T,$$ (2.6)

where $M$ is a positive integer (dubbed oversampling factor), $\mathbf{0}_D$ is a $D$-dimensional (column) null vector and

$$N_0 \triangleq M \cdot N.$$ (2.7)

Finally, the $N_0$-dimensional vectors

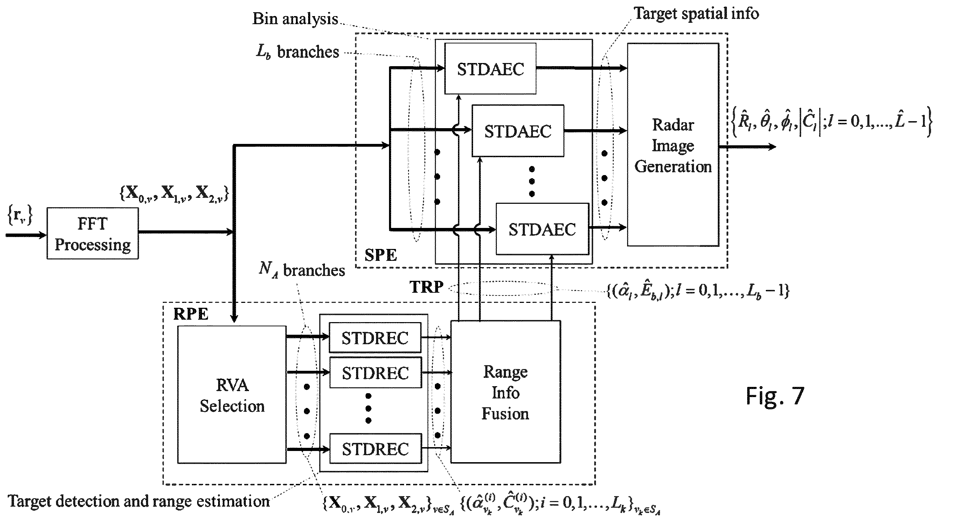

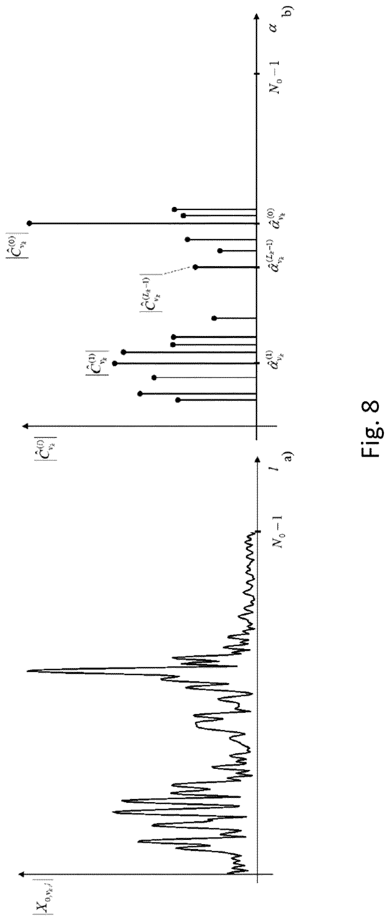

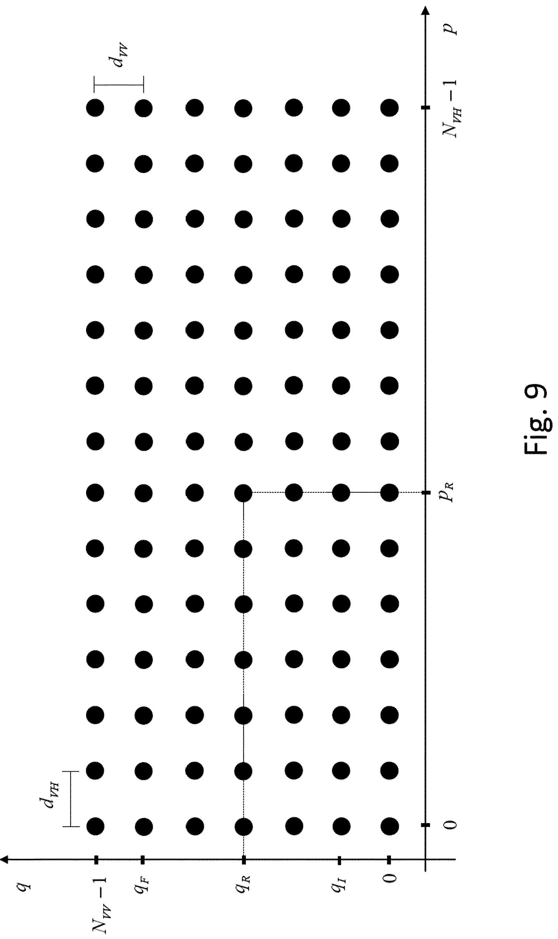

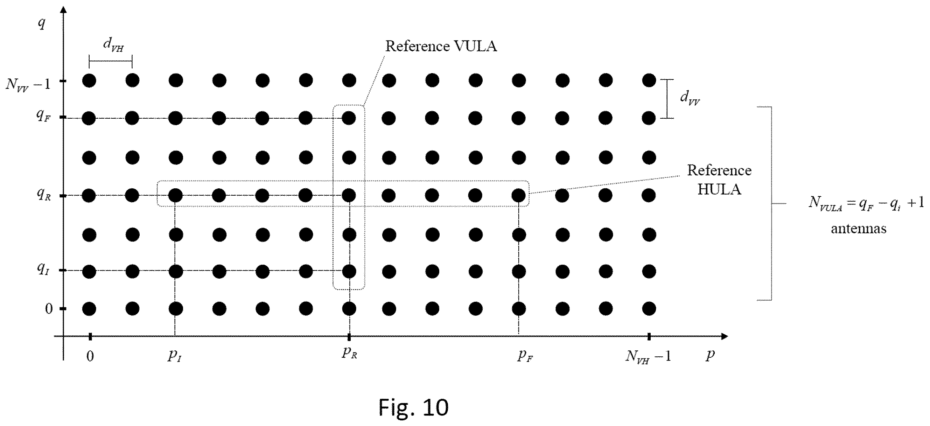

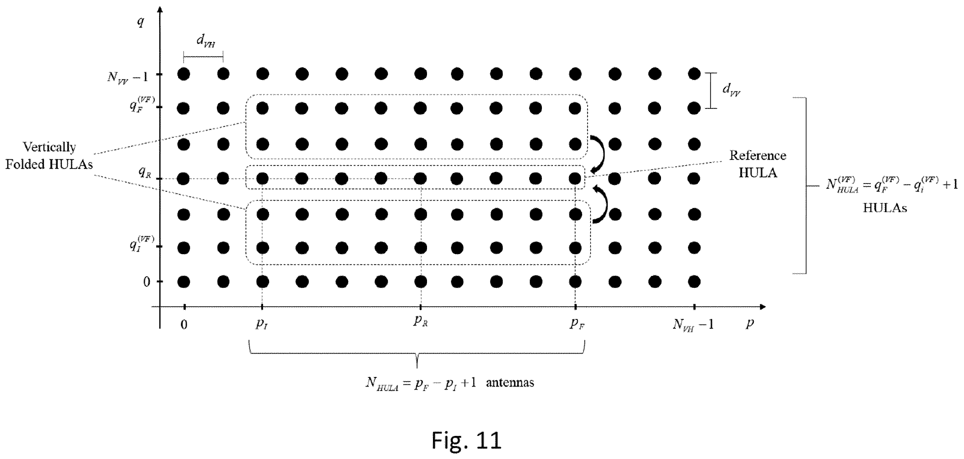

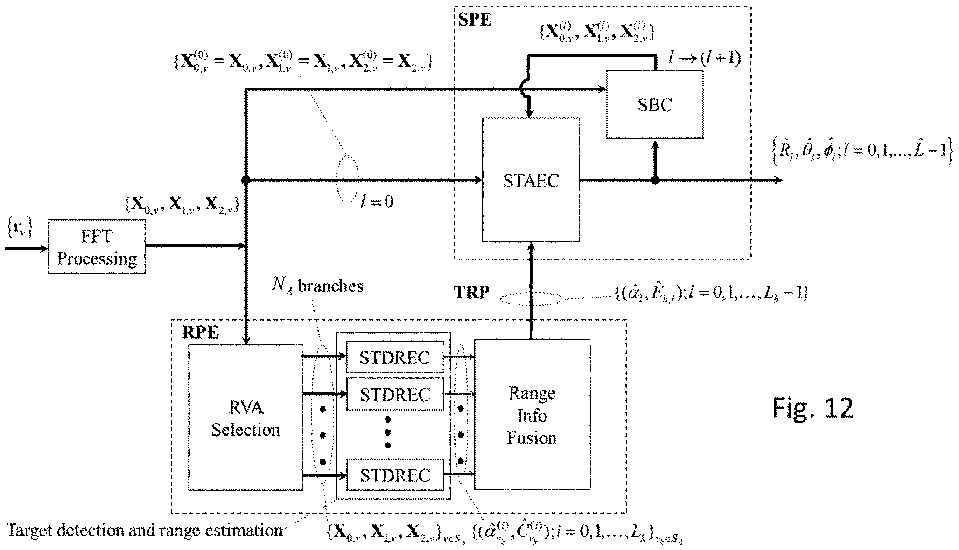

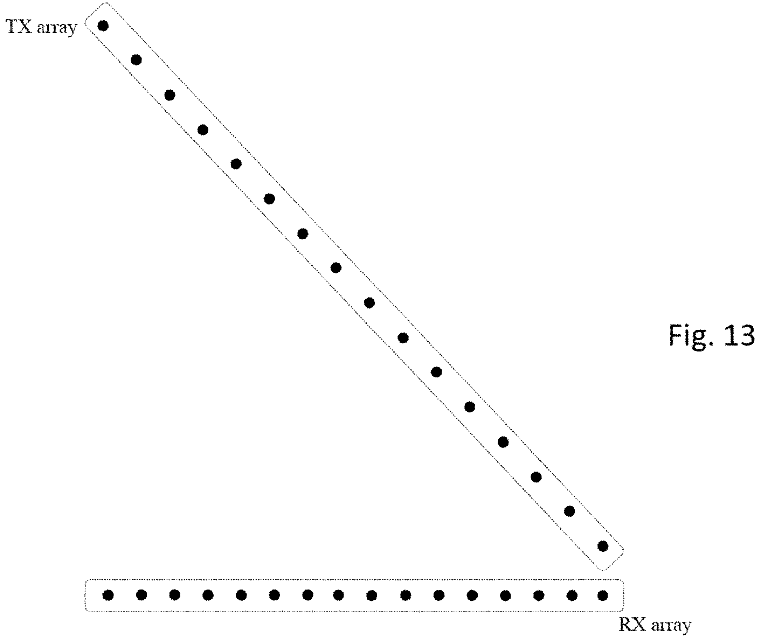

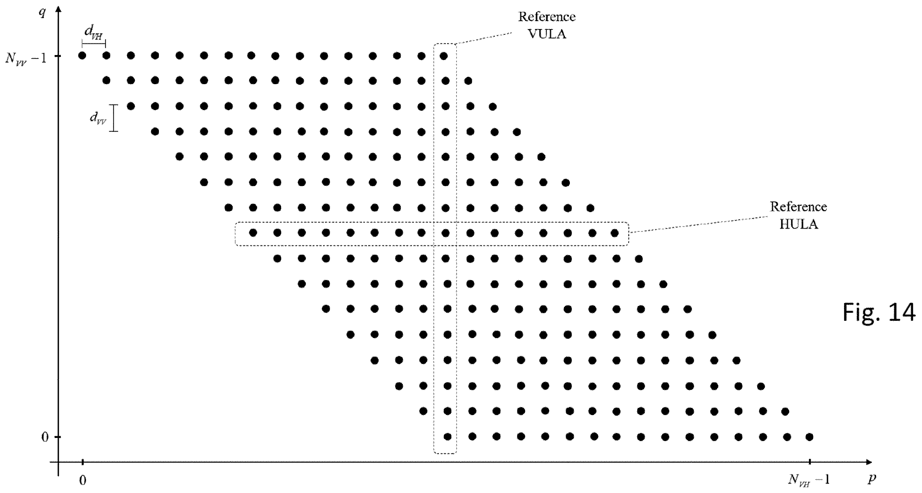

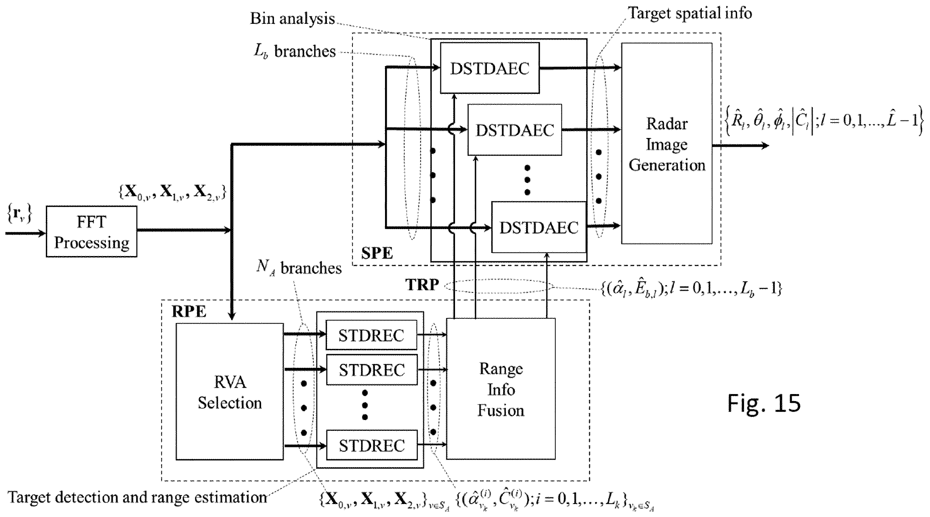

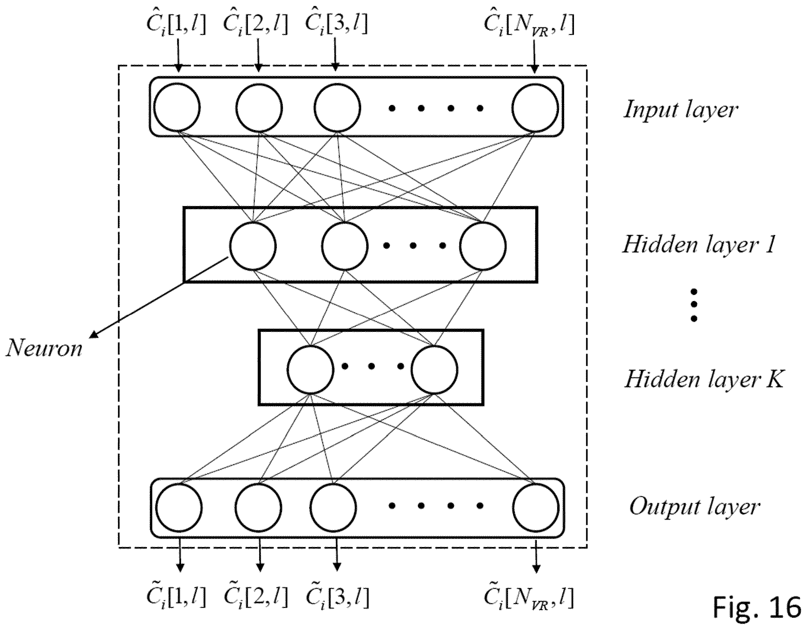

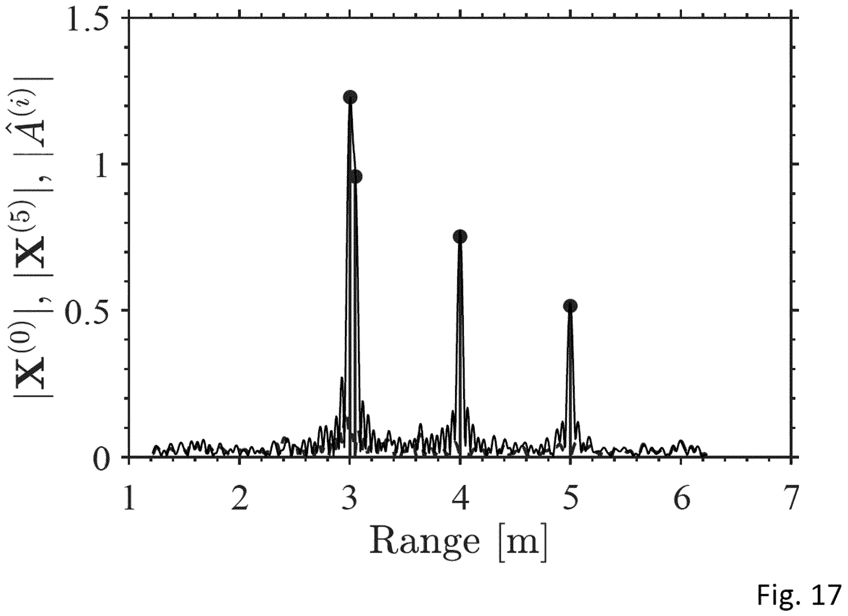

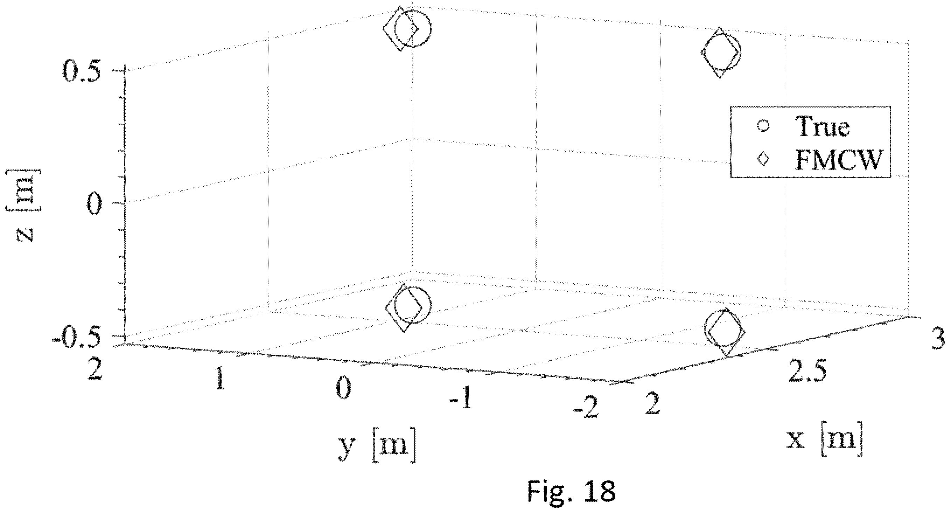

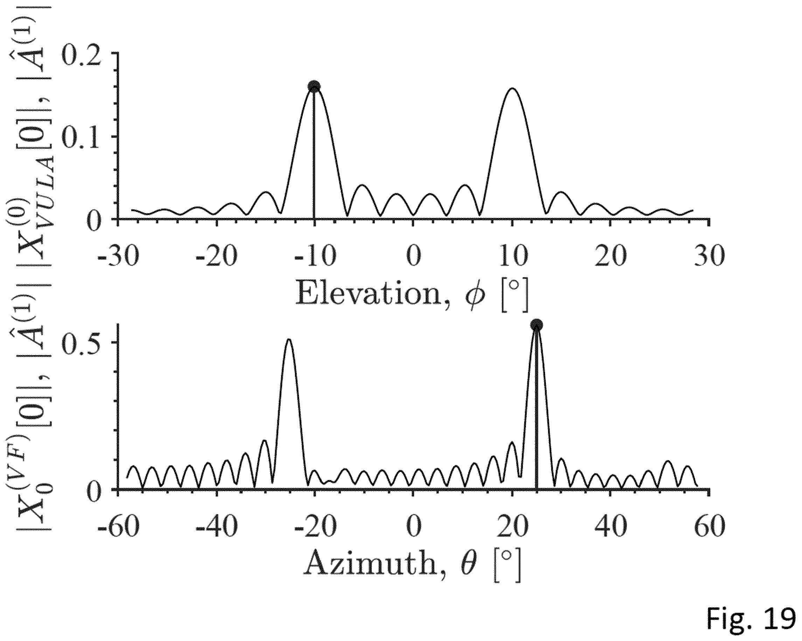

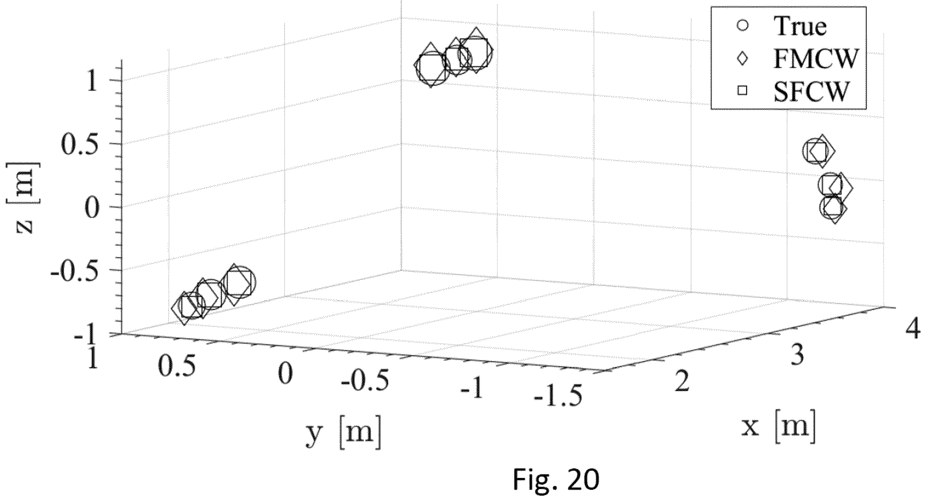

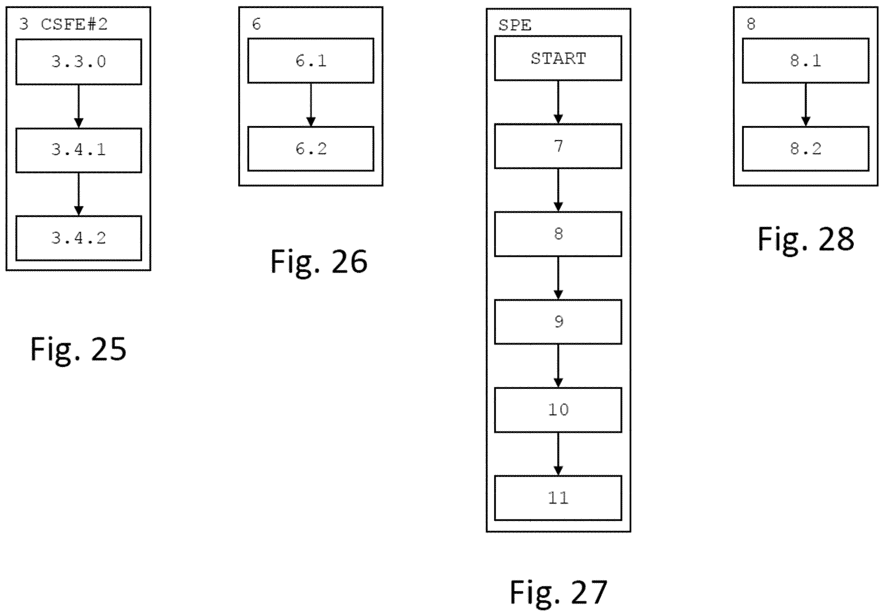

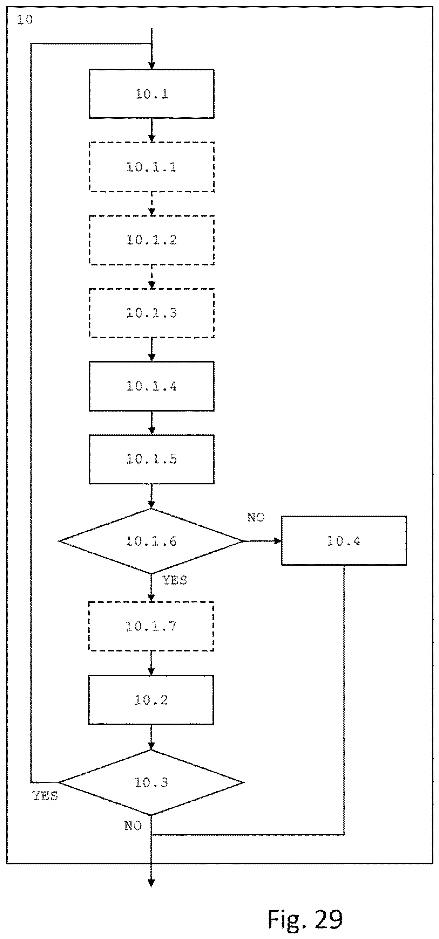

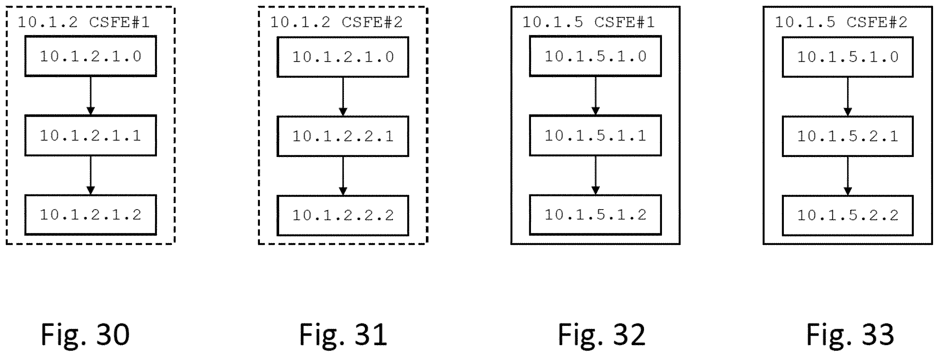

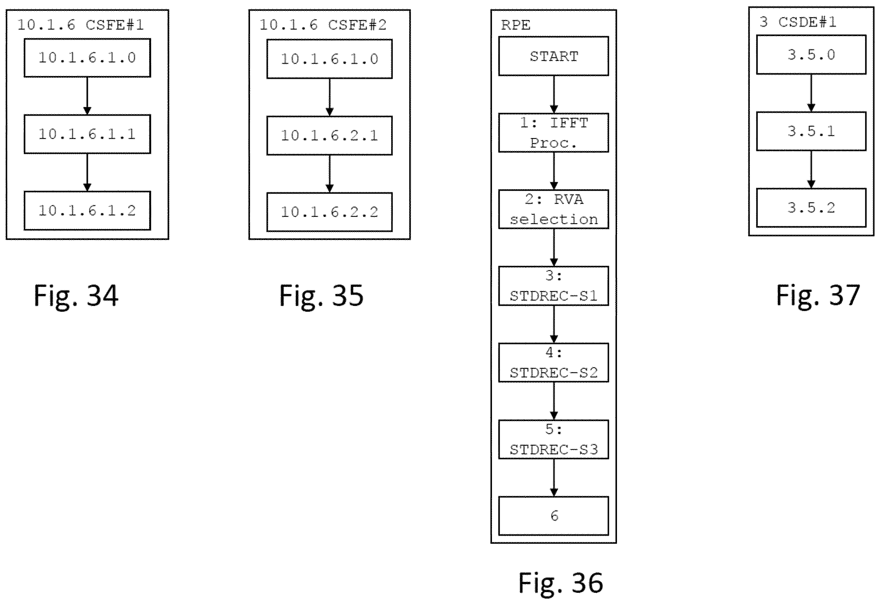

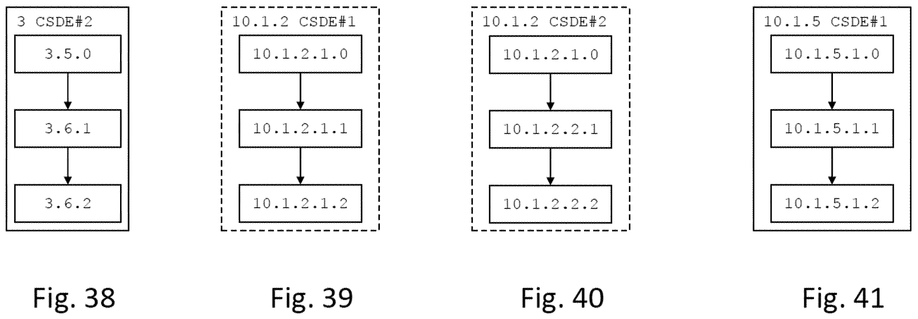

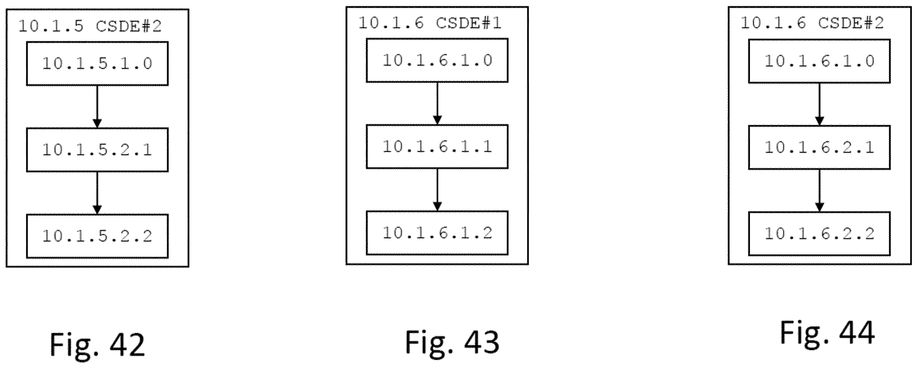

$$
\begin{aligned}
\mathbf{X}_{m,v} &= \left[X_{m,v,0}, X_{m,v,1}, \ldots, X_{m,v,N_0-1}\right]^T \\
&= \mathbf{X}_m[p,q] = \left[X_{m,0}[p,q], X_{m,1}[p,q], \ldots, X_{m,N_0-1}[p,q]\right]^T \triangleq \mathrm{DFT}_{N_0}\left[\mathbf{x}_{m,\mathrm{ZP},v}\right]
\end{aligned}
$$ (2.8)

with $m = 0,1,2$ are computed for any $v$ (i.e., for any $p$ and $q$); here, $\mathbf{DFT}_{N_0}[\mathbf{x}]$ denotes, up to a scale factor, the $N_0$-th order discrete Fourier transform (DFT) of the $N_0$-dimensional vector $\mathbf{x}$. More specifically, in the following, we assume that

$$X_{m,v,k} \triangleq \frac{1}{N} \sum_{n=0}^{N-1} n^m \cdot r_{v,n} \exp\left(-j\frac{2\pi nk}{N_0}\right),$$ (2.9)

with $k = 0, 1, ..., N_0 - 1$ and $m = 0,1, 2.$ The set $\{\mathbf{X}_{0,v}, \mathbf{X}_{1,v}, \mathbf{X}_{2,v}; v = 0, 1, ..., N_{VR} - 1\}$, consisting of $3 \cdot N_{VR} \, N_0$-dimensional vectors, is passed to both the RPE and SPE blocks, whose objectives have been summarized in the previous section.

It is important to point out that:

a) For any $v$, each of the vectors $\{\mathbf{X}_{0,v}, \mathbf{X}_{1,v}, \mathbf{X}_{2,v}\}$ (see eq. (2.8)) can be computed by executing a $N_0$-th order FFT.
b) The vector $\mathbf{X}_{0,v}$ (2.8) consists of $N_0$ equally spaced samples of the spectrum of the sequence $\{r_{v,n}\}$ acquired on the v-th RVA (see eq. (1.12)). The vectors $\mathbf{X}_{1,v}$ and $\mathbf{X}_{2,v}$ (see eq. (2.8)) instead, consist of, up to a scale factor, $N_0$ equally spaced samples of the *first derivative* and of the *second derivative,* respectively, of the same spectrum.
c) As already illustrated in the previous paragraph, the RPE aims at computing a *preliminary* estimate of the ranges (i.e., of the frequencies) at which the energy reflected by most of the targets is concentrated, i.e. at accomplishing *range profile estimation.* On the other hand, the SPE aims at estimating the complete spatial coordinates of the targets associated with each of the ranges included in the TRP, i.e. at accomplishing *spatial estimation.* The SPE exploits the range information generated by the RPE in order to *concentrate its computational effort on a set of well defined ranges;* this allows to reduce the dimensionality of the search space involved in spatial estimation. This explains also why the processing accomplished by the SPE cannot start before that at least a portion of the range/energy information generated by the RPE becomes available.

**T2)** RPE - The aim of this task is generating a preliminary estimate of the number of targets and of their ranges. Note that, in this step, multiple targets having the same range or ranges whose difference is below the range resolution of the employed radar system are detected as a single target and no effort is made to separate their contributions. The processing accomplished within this task involves $N_A$ of the $N_{VR}$ RVAs and consists of three consecutive steps listed below (the i-th step is denoted T2-Si in the following); each step is associated with one of the blocks contained in the RPE block appearing in Figure 7.

**T2-S1)** RVA *selection* - In this step, $N_A$ distinct RVAs are selected within the set of the $N_{VR}$ available RVAs on the basis of a specific algorithm. Consequently, only a portion of the set of triads $\{(\mathbf{X}_{0,v}, \mathbf{X}_{1,v}, \mathbf{X}_{2,v}); v = 0, 1, ..., N_{VR} - 1\}$ is processed in this step. In the following, the selected triads are denoted $\{(\mathbf{X}_{0,v}, \mathbf{X}_{1,v}, \mathbf{X}_{2,v}); v \in \mathcal{S}_A\}$, where

$$\mathcal{S}_A \triangleq \{v_0, \; v_1, \; ..., \; v_{N_A-1}\}$$

is the set of the values of the index $v$ identifying them.

**T2-S2)** *Target detection and range estimation* - This step aims at detecting the most relevant targets on *each* of the $N_A$ antennas selected in the previous step and at estimating their ranges (i.e., the frequencies associated with these ranges; see eqs. (1.7) and (1.9)) and their complex amplitudes (see eq. (1.18)). The processing accomplished within it is executed on an antenna-by-antenna basis and exploits a novel iterative estimation algorithm called *single target detection, range estimation and cancellation* (STDREC) and whose detailed description is provided in the Paragraph 4.1. The STDREC processing for the $v_k$-th RVA (with **k = 0, 1, ..., $N_A$ - 1**) can be summarized as follows. First of all, this algorithm is initialised by setting

$$(2.10)$$

$$\mathbf{X}_{m,v_k}^{(0)} \triangleq \mathbf{X}_{m,v_k},$$

with $m$ = 0,1,2 and the iteration index $i$ to 1. Then, it starts executing its iterations; moreover, in its i-th iteration, it accomplishes the three steps described below to detect a new target and cancel its contribution to the triad

$$(\mathbf{X}_{0,v_k}^{(i)},\ \mathbf{X}_{1,v_k}^{(i)},\ \mathbf{X}_{2,v_k}^{(i)})$$

(the p-th step of the considered i-th iteration is denoted STDREC-Sp in the following).

$$(\mathbf{X}_{0,v_k}^{(i)},\ \mathbf{X}_{1,v_k}^{(i)},\ \mathbf{X}_{2,v_k}^{(i)})$$

**STDREC-S1)** *Detection of a new target and estimation of its parameters* - The triad

is processed to detect a new (i.e., the i-th) target, and to estimate the frequency $f_{v_k}^{(i)}$ and the complex amplitude $c_{v_k}^{(i)}$ associated with it. Note that, generally speaking, the frequency $f_{v_k}^{(i)}$ is not a multiple of the *fundamental frequency*

$$(2.11)$$

$$f_{\mathrm{DFT}} = \frac{f_s}{N_0}$$

associated with the FFT processing executed in task T1; for this reason, generally speaking, it can be expressed as

$$(2.12)$$

$$f_{v_k}^{(i)} = \alpha_{v_k}^{(i)} f_{\mathrm{DFT}} + \delta_{v_k}^{(i)} f_{\mathrm{DFT}},$$

where $\alpha_{v_k}^{(i)}$ is an integer parameter belonging to the set **{0, 1, ..., $N_0$ - 1}** and $\delta_{v_k}^{(i)}$ is a real parameter, such that

$$\begin{cases} 0 \le \delta_{v_k}^{(i)} \le 0.5 & \text{if } \alpha_{v_k}^{(i)} = 0 \\ -0.5 < \delta_{v_k}^{(i)} \le 0 & \text{if } \alpha_{v_k}^{(i)} = N_0 - 1. \\ -0.5 < \delta_{v_k}^{(i)} \le 0.5 & \text{otherwise} \end{cases} \qquad (2.13)$$

The processing accomplished in this step is executed by an algorithm, dubbed single frequency estimator (SFE) if the received sequence **{$r_{v,n}$}** is real and complex single frequency estimator (CSFE) if the received sequence **{$r_{v,n}$}** is complex; this algorithm represents the most important part of the STDREC algorithm and is described in detail in Paragraph 4.1.2 if the received sequence **{$r_{v,n}$}** is real and in Paragraph 4.1.3 if the received sequence **{$r_{v,n}$}** is complex.

The SFE/CSFE computes the estimates $\widehat{C}_{v_k}^{(i)},\ \widehat{\alpha}_{v_k}^{(i)},\ \widehat{\delta}_{v_k}^{(i)}$ and

$$(2.14)$$

$$\widehat{f}_{v_k}^{(i)} = \widehat{\alpha}_{v_k}^{(i)} f_{\mathrm{DFT}} + \widehat{\delta}_{v_k}^{(i)} f_{\mathrm{DFT}}$$

of the parameters $C_{v_k}^{(i)}$, $\alpha_{v_k}^{(i)}$, $\delta_{v_k}^{(i)}$ and $f_{v_k}^{(i)}$, respectively, on the basis of the triad $(\mathbf{X}_{0,v_k}^{(i)},\ \mathbf{X}_{1,v_k}^{(i)},\ \mathbf{X}_{2,v_k}^{(i)})$.

In summary, the above method can be described as follows:

when a base-band signal made available by said radar is real in phase-component only, Step 3 of Figure 21 includes (see Steps 3.1.0 - 3.1.2 of Figure 22):

- (Step 3.1.0) representation of a target normalized frequency $F \triangleq f/f_s$, where $f_s$ is the sampling frequency, as sum of a main portion ($\alpha F_{\text{DFT}}$) and a residual portion ($\delta F_{\text{DFT}}$), where $F_{\text{DFT}} \triangleq 1/N_0$, where $N_0$ is the FFT order, wherein said main portion is determined by searching the index ($\hat{\alpha}$) of the vector element $\overline{X}_{0,\hat{\alpha}}^{(v)}$ corresponding to the maximum absolute value in a first half plus one elements of the same vector $\overline{\mathbf{X}}_0^{(v)}$ and said residual frequency is found through an iterative procedure together with the corresponding target complex amplitude $C \triangleq a\exp(j\psi)/2$, where $a$ is said target amplitude and $\psi$ is said target phase.

- (Step 3.1.1) Said iterative procedure includes a preliminary initialization comprising:

  a) setting the iteration index $i$ to **1,** the initial estimate of target complex amplitude **C** equal to said vector element ($\overline{X}_{0,\hat{\alpha}}^{(v)}$), the initial estimate of $\Delta \triangleq 2\pi\delta F_{\text{DFT}}$ to zero and the initial estimate of **F** to said main portion ($\hat{\alpha}F_{\text{DFT}}$);

  b) computing the complex coefficients {$K_p(2\hat{\alpha})$;p = 1,2,3} as the 2$\hat{\alpha}$-th element of the $N_0$-order DFT of the sequence $n^p$, with **p = 1, 2, 3;** then iteratively

- (Step 3.1.2) the i-th iteration is fed by the estimates of $\Delta$, F and C computed in the previous iteration, to generate new estimates of $\Delta$, **F** and **C,** for a predetermined number of iterations, wherein each iteration includes

  a) a first step where the residual $\hat{\Delta}$ is calculated solving the first order equation $b_{\hat{\alpha}}\tilde{\Delta} + c_{\hat{\alpha}} = 0$ OR the second order equation $a_{\hat{\alpha}}\tilde{\Delta}^2 + b_{\hat{\alpha}}\tilde{\Delta} + c_{\hat{\alpha}} = 0$

  in the variable $\tilde{\Delta}$ with:

$$a_{\hat{\alpha}} \triangleq 2\Im\left\{\left(\widehat{C}^*\right)^2 K_3(2\hat{\alpha})\right\},$$

$$b_{\hat{\alpha}} \triangleq -\Re\left\{\widehat{C}^* \overline{X}_{2,\hat{\alpha}}^{(v)}\right\} + 2\Re\left\{\left(\widehat{C}^*\right)^2 K_2(2\hat{\alpha})\right\},$$

$$c_{\hat{\alpha}} \triangleq \Im\left\{\widehat{C}^* \overline{X}_{1,\hat{\alpha}}^{(v)}\right\} - \Im\left\{\left(\widehat{C}^*\right)^2 K_1(2\hat{\alpha})\right\},$$

where $\Re\{x\}$ denotes the real part and $\tilde{\Im}\{x\}$ denotes the imaginary part of the complex quantity **x**; discarding one of the two solutions, which does not satisfy the inequalities:

$$\begin{cases} 0 \leq \widetilde{\Delta} \leq \pi F_{\mathrm{DFT}} & \text{if } \widehat{\alpha} = 0 \\ -\pi F_{\mathrm{DFT}} < \widetilde{\Delta} \leq \pi F_{\mathrm{DFT}} & \text{otherwise} \end{cases}$$

if said second order equation is solved; then the new estimate of $F$ is obtained by adding said residual ($\hat{\Delta}F_{\mathbf{DFT}}$) to said main portion ($\hat{\alpha}F_{\mathbf{DFT}}$);

b) a second step wherein said new estimate of $F$ is employed to compute the new estimate of $C$ as

$$\hat{C} = \frac{\overline{X}_{\mathrm{int}}(\hat{F}) - \overline{X}_{\mathrm{int}}^{*}(\hat{F}) \mathrm{g}(\hat{F})}{1 - \left| \mathrm{g}(\hat{F}) \right|^{2}}$$

where $g(F) \triangleq \frac{1}{N} \sum_{n=0}^{N-1} \exp\left(-j4\pi n F\right)$ and $\overline{X}_{\mathbf{int}}(\hat{F})$ is generated by interpolating the elements of said vector $M\overline{\mathbf{X}}_{0}^{(v)}$ where $M$ is said oversampling factor employed in said FFT calculations.

The above mentioned Steps 3.1.1 and 3.1.2 of Figure 22 can be replaced by an alternative method including (see Steps 3.2.1 - 3.2.2 of Figure 23):

- (Step 3.2.1) Said iterative procedure includes a preliminary initialization comprising:

a) setting the iteration index $i$ to $1$, the initial estimate of $C$ equal to said vector element ($\overline{X}_{0,\widehat{\alpha}}^{(v)}$), the initial estimate of $\Delta \triangleq 2\pi\delta\mathbf{F}_{\mathbf{DFT}}$ to zero and the initial estimate of $F$ to said main portion ($\hat{\alpha}F_{\mathbf{DFT}}$);

b) computing the complex coefficients $\{K_{p}(2\hat{\alpha}); p = 1,2,3\}$ as the $2\hat{\alpha}$-th element of the $N_0$-order DFT of the sequence $n^p$, with $p = 1, 2, 3$;

c) computing the real quantity $\rho \triangleq F/F_{\mathrm{DFT}}$;

then iteratively

- (Step 3.2.2) the $i$-th iteration is fed by the estimates of $\Delta$, $F$ and $C$ and the real quantity $\rho$ computed in the previous iteration, to generate new estimates of $\Delta$, $F$, $C$ and $\rho$, for a predetermined number of iterations, wherein each iteration includes

a) a first step where the residual $\hat{\Delta}$ is calculated solving the first order equation $b_{\hat{\alpha}}\widetilde{\Delta} + c_{\hat{\alpha}} = 0$ OR the second order equation $a_{\hat{\alpha}}\widetilde{\Delta}^2 + b_{\hat{\alpha}}\widetilde{\Delta} + c_{\hat{\alpha}} = 0$

in the variable $\widetilde{\Delta}$ with:

$$a_{\hat{\rho}} \triangleq 2\Im\left\{\left(\widehat{C}^{*}\right)^{2} K_{3}(2\hat{\rho})\right\},$$

$$b_{\hat{\rho}} \triangleq -\Re\left\{\widehat{C}^{*}\overline{X}_{2,\hat{\rho}}^{(v)}\right\} + 2\Re\left\{\left(\widehat{C}^{*}\right)^{2} K_{2}(2\hat{\rho})\right\},$$

$$c_{\hat{\rho}} \triangleq \Im\left\{\widehat{C}^* \overline{X}_{1,\hat{\rho}}^{(v)}\right\} - \Im\left\{\left(\widehat{C}^*\right)^2 \mathrm{K}_1(2\hat{\rho})\right\},$$

where $\Re\{x\}$ denotes the real part, $\Im\{x\}$ denotes the imaginary part of the complex quantity $x$, $\{K_p(2\hat{\rho}); p = 1,2,3\}$ are computed as:

$$K_p(2\hat{\rho}) \triangleq \frac{1}{N_0} \sum_{n=0}^{N-1} n^p \exp\left(-j\frac{4\pi n\hat{\rho}}{N_0}\right)$$

with $p = 1, 2, 3$ and $\{\overline{X}_{k,\hat{\rho}}^{(v)}; k = 1,2\}$ as:

$$\overline{X}_{k,\hat{\rho}}^{(v)} \triangleq \frac{1}{N_0} \sum_{n=0}^{N-1} n^k x_{r,n}^{(v)} \exp\left(-j\frac{2\pi n\hat{\rho}}{N_0}\right)$$

where $x_{r,n}^{(v)}$ is the n-th element of the said real base-band signal acquired on the v-th antenna; said coefficients ($\{\overline{X}_{k,\hat{\rho}}^{(v)}; k = 1,2\}$) can be also computed by interpolating the elements of said spectrum ($\overline{\mathbf{X}}_k^{(v)}$); discarding one of the two solutions, which does not satisfy the inequalities:

$$\begin{cases} 0 \le \widetilde{\Delta} \le \pi F_{\mathrm{DFT}} & \text{if } \widehat{\alpha} = 0 \\ -\pi F_{\mathrm{DFT}} < \widetilde{\Delta} \le \pi F_{\mathrm{DFT}} & \text{otherwise} \end{cases}$$

if said second order equation is solved; then the new estimate of $F$ is obtained by adding said residual ($\hat{\Delta}F_{\mathbf{DFT}}$) to said estimate of $F$;

b) a second step wherein the new estimate of $\rho$ is computed by dividing said new estimate of $F$ by $F_{\mathbf{DFT}}$;
c) a third step wherein said new estimate of $F$ is employed to compute the new estimate of C as:

$$\hat{C} = \frac{\overline{X}_{\mathrm{int}}(\hat{F}) - \overline{X}_{\mathrm{int}}^*(\hat{F})\mathrm{g}(\hat{F})}{1 - \left|g(\hat{F})\right|^2}$$

where $g(F) \triangleq \frac{1}{N} \sum_{n=0}^{N-1} \exp\left(-j4\pi nF\right)$ and $\overline{X}_{\mathrm{int}}(\hat{F})$ is generated by interpolating the elements of said vector $M\overline{\mathbf{X}}_0^{(v)}$ where $M$ is said oversampling factor employed in said FFT calculations.

When a base-band signal made available by said radar is complex with in phase and quadrature components, Step 3 of Figure 21 includes (see Steps 3.3.0 - 3.3.2 of Figure 24):

- (Step 3.3.0) representation of a target normalized frequency $F \triangleq f/f_s$, where $f_s$ is the sampling frequency, as sum of a main portion ($\alpha F_{\mathbf{DFT}}$) and a residual portion ($\delta F_{\mathbf{DFT}}$), where $F_{\mathrm{DFT}} \triangleq 1/N_0$, where $N_0$ is the FFT order, wherein said main portion is determined by searching the index ($\hat{\alpha}$) of the vector element $\overline{X}_{0,\hat{\alpha}}^{(v)}$ corresponding to the

maximum absolute value of the same vector $\overline{\mathbf{X}}_0^{(v)}$ and said residual frequency is found through an iterative procedure together with the corresponding target complex amplitude $A \triangleq a \exp(j\psi)$, where $a$ is said target amplitude and $\psi$ is said target phase.

- (Step 3.3.1) Said iterative procedure includes a preliminary initialization comprising:

setting the iteration index $i$ to **1,** the initial estimate of $A$ equal to said vector element ( $\overline{X}_{0,\widehat{\alpha}}^{(v)}$ ), the initial estimate of $\Delta \triangleq 2\pi\delta\mathbf{F_{DFT}}$ to zero and the initial estimate of $F$ to said main portion ($\hat{\alpha}\mathbf{F_{DFT}}$); then iteratively

- (Step 3.3.2) the i-th iteration is fed by the estimates of $\Delta$, $F$ and $A$ computed in the previous iteration, to generate new estimates of $\Delta$, $F$ and $A$, for a predetermined number of iterations, wherein each iteration includes

a) a first step where the residual $\hat{\Delta}$ is calculated solving the first order equation $b_{\widehat{\alpha}}\tilde{\Delta} + c_{\widehat{\alpha}} = \mathbf{0}$ OR the second order equation $a_{\widehat{\alpha}}\tilde{\Delta}^2 + b_{\widehat{\alpha}}\tilde{\Delta} + c_{\widehat{\alpha}} = \mathbf{0}$

in the variable $\tilde{\Delta}$ with:

$$a_{\widehat{\alpha}} \triangleq \Im\left\{\widehat{A}^* \overline{X}_{3,\widehat{\alpha}}^{(v)}\right\},$$

$$b_{\widehat{\alpha}} \triangleq \Re\left\{\widehat{A}^* \overline{X}_{2,\widehat{\alpha}}^{(v)}\right\},$$

$$c_{\widehat{\alpha}} \triangleq -\Im\left\{\widehat{A}^* \overline{X}_{1,\widehat{\alpha}}^{(v)}\right\},$$

where $\Re\{x\}$ denotes the real part and $\Im\{x\}$ denotes the imaginary part of the complex quantity $x$; discarding one of the two solutions, which does not satisfy the inequalities:

$$\begin{cases} 0 \leq \tilde{\Delta} \leq \pi F_{\mathrm{DFT}} & \text{if } \widehat{\alpha} = 0 \\ -\pi F_{\mathrm{DFT}} < \tilde{\Delta} \leq \pi F_{\mathrm{DFT}} & \text{otherwise} \end{cases}$$

if said second order equation is solved; then the new estimate of $F$ is obtained by adding said residual ($\hat{\Delta}\mathbf{F_{DFT}}$) to said main portion ($\hat{\alpha}\mathbf{F_{DFT}}$);

b) a second step wherein said new estimate of $F$ is employed to compute the new estimate of $A$ as $A = \overline{X}_{\mathbf{int}}(\hat{F})$ and $\overline{X}_{\mathbf{int}}(\hat{F})$ is generated by interpolating the elements of said vector $M\overline{\mathbf{X}}_0^{(v)}$ where $M$ is said oversampling factor employed in said FFT calculation.

The above mentioned Steps 3.3.1 and 3.3.2 of Figure 24 can be replaced by an alternative method including (see Steps 3.4.1 - 3.4.2 of Figure 25):

- (Step 3.4.1) Said iterative procedure includes a preliminary initialization comprising:

a) setting the iteration index $i$ to **1,** the initial estimate of $A$ equal to said vector element ( $\overline{X}_{0,\widehat{\alpha}}^{(v)}$ ), the initial estimate of $\Delta \triangleq 2\pi\delta F_{\mathbf{DFT}}$ to zero and the initial estimate of $F$ to said main portion ($\hat{\alpha}F_{\mathbf{DFT}}$);

b) computing the real quantity $\rho \triangleq F/F_{\mathrm{DFT}}$;

then iteratively

- (Step 3.4.2) the i-th iteration is fed by the estimates of $\Delta$, **F** and **A** and the real quantity $\rho$ computed in the previous iteration, to generate new estimates of $\Delta$, **F**, **A** and $\rho$, for a predetermined number of iterations, wherein each iteration includes:

a) a first step where the residual $\hat{\Delta}$ is calculated solving the first order equation $b_{\hat{\alpha}}\tilde{\Delta} + c_{\hat{\alpha}} = \mathbf{0}$ OR the second order equation $a_{\hat{\alpha}}\tilde{\Delta}^2 + b_{\hat{\alpha}}\tilde{\Delta} + c_{\hat{\alpha}} = \mathbf{0}$

in the variable $\tilde{\Delta}$ with:

$$a_{\hat{\rho}} \triangleq \Im\left\{\widehat{A}^* \overline{X}_{3,\hat{\rho}}^{(v)}\right\},$$

$$b_{\hat{\rho}} \triangleq \Re\left\{\widehat{A}^* \overline{X}_{2,\hat{\rho}}^{(v)}\right\},$$

$$c_{\hat{\rho}} \triangleq -\Im\left\{\widehat{A}^* \overline{X}_{1,\hat{\rho}}^{(v)}\right\},$$

where $\Re\{x\}$ denotes the real part, $\Im\{x\}$ denotes the imaginary part of the complex quantity $x$ and $\{\overline{X}_{k,\hat{\rho}}^{(v)}; k = 1,2,3\}$ is computed as:

$$\overline{X}_{k,\hat{\rho}}^{(v)} \triangleq \frac{1}{N_0} \sum_{n=0}^{N-1} n^k x_{c,n}^{(v)} \exp\left(-j\frac{2\pi n\hat{\rho}}{N_0}\right)$$

where $x_{c,n}^{(v)}$ is the n-th element of the said complex base-band signal acquired on the v-th antenna; said coefficients ($\{\overline{X}_{k,\hat{\rho}}^{(v)}; k = 1,2,3\}$) can be also computed by interpolating the elements of said spectrum ($\overline{\mathbf{X}}_k^{(v)}$); discarding one of the two solutions, which does not satisfy the inequalities:

$$\begin{cases} 0 \leq \tilde{\Delta} \leq \pi F_{\mathrm{DFT}} & \text{if } \hat{\alpha} = 0 \\ -\pi F_{\mathrm{DFT}} < \tilde{\Delta} \leq \pi F_{\mathrm{DFT}} & \text{otherwise} \end{cases}$$

if said second order equation is solved; then the new estimate of F is obtained by adding said residual ($\hat{\Delta}F_{\mathbf{DFT}}$) to said estimate of **F**;

b) a second step wherein the new estimate of $\rho$ is computed by dividing said new estimate of **F** by $F_{\mathbf{DFT}}$;

c) a third step wherein said new estimate of F is employed to compute the new estimate of **A** as $\hat{A} = \overline{X}_{\mathbf{int}}(\hat{F})$ and $\overline{X}_{int}$ ($\hat{F}$) is generated by interpolating the elements of said vector $M\overline{\mathbf{X}}_0^{(v)}$ where **M** is said oversampling factor employed in said FFT calculations.

**STDREC-S2)** *Cancellation of the new target* - The contribution ( $\mathbf{C}^{(i)}_{X_0,v_k}$ , $\mathbf{C}^{(i)}_{X_1,v_k}$ , $\mathbf{C}^{(i)}_{X_2,v_k}$ ), given by the i-th (i.e., by the last) target detected on the $v_k$-th RVA, to the triad $(\mathbf{X}^{(i)}_{0,v_k},\ \mathbf{X}^{(i)}_{1,v_k},\ \mathbf{X}^{(i)}_{2,v_k})$ is computed (see eqs. (4.200)-(4.202) if the received sequence $\{r_{v,n}\}$ is real and eqs. (4.224)-(4.226) if the received sequence $\{r_{v,n}\}$ is complex) and cancelled from the triad itself. Cancellation consists in the computation of the new *residual* triad

$$\mathbf{X}^{(i+1)}_{m,v_k} = \left[ X^{(i+1)}_{m,v_k,0}, X^{(i+1)}_{m,v_k,1}, \ldots, X^{(i+1)}_{m,v_k,N_0-1} \right]^T \triangleq \mathbf{X}^{(i)}_{m,v_k} - \mathbf{C}^{(i)}_{X_m,v_k}, \qquad (2.15)$$

with *m* = 0, 1, 2.

In summary, the above method can be summarized by considering that said cancellation, see Step 4 of Figure 21, includes the computation and subtraction of the contribution given by said dominant target to said spectrum ( $\overline{\mathbf{X}}^{(v)}_0$ ) and to the corresponding derivatives to compute a residual of the spectrum and of the corresponding derivatives.

**STDREC-S3)** Computation of the residual energy in the frequency domain - The energy

$$E^{(i+1)}_{v_k} \triangleq \left\| \mathbf{X}^{(i+1)}_{0,v_k} \right\|^2 = \sum_{p=0}^{N_0-1} \left| X^{(i+1)}_{0,v_k,p} \right|^2 \qquad (2.16)$$

of the residual spectrum vector $\mathbf{X}^{(i+1)}_{0,v_k}$ (2.15) is computed and compared with the positive threshold $T_{\mathbf{STDREC}}$ (which may exhibit a dependence on range). If this energy is below the threshold, the STDREC algorithm stops and $L_k$ = *i* relevant targets are detected on the $v_k$-th RVA; otherwise, the recursion index *i* is increased by one and a new recursion is started (i.e., we go back to **STDREC-S1)**.

It is worth pointing out that:

a) The availability of *accurate* estimates of the frequency $f^{(i)}_{v_k}$ and of the complex amplitude $C^{(i)}_{v_k}$ plays an important role in this step, since these parameters are exploited in the serial cancellation procedure based on eq. (2.15). In particular, ignoring the fractional part $\delta^{(i)}_{v_k}$ of the frequency $f^{(i)}_{v_k}$ (2.12) in this procedure (i.e., assuming that $\widehat{f}^{(i)}_{v_k} = \widehat{\alpha}^{(i)}_{v_k}\, f_{DFT}$ ; see eq. (2.14)) may result in significant *error accumulation*.

b) The estimate $\widehat{\delta}^{(i)}_{v_k}$ of the fractional part of the frequency $f^{(i)}_{v_k}$ (2.12) is exploited in target cancellation, but is not passed to the next (i.e., to the third) step of this task.

c) A threshold on the maximum computational effort required by the STDREC algorithm can be set by requiring that the recursion index *i* never exceeds a fixed threshold; this is equivalent to limit the overall number of targets that can be detected on each RVA.

d) The STDREC algorithm generates $N_A$ different data sets; the *k*-th data set consists of the quadruplets $\{(\widehat{\alpha}^{(i)}_{v_k},\ \widehat{\delta}^{(i)}_{v_k},\ \widehat{f}^{(i)}_{v_k},\ \widehat{C}^{(i)}_{v_k})$ ; $i =$ 0, 1, ..., $L_k$ - 1}, characterizing the $L_k$ targets detected on the $v_k$-th antenna (with *k* = 0, 1, ..., $N_A$ - 1). Note that the overall number of targets may change from antenna to antenna, especially in the presence of extended targets; this is due to the fact that the signals acquired on different RVAs can exhibit significant differences in their structure.

e) The following important interpretation of the processing accomplished by the STDREC algorithm on the $v_k$-th RVA can be given. The vector $\mathbf{X}_{0,v_k}$ can be seen as a collection of noisy spectral information referring to $N_0$ distinct *frequency bins* (i.e., to $N_0$ distinct *range bins*) and is usually *dense* in the presence of multiple extended targets, as illustrated in Figure 8-a) (where the absolute value of its elements is represented). The STDREC allows to extract a *discrete frequency* (i.e., *range*) *profile* from the vector $\mathbf{X}_{0,v_k}$, as illustrated in Figure 8-b). In various real world scenarios, this profile turns out to be *sparse,* even in the presence of a dense vector $\mathbf{X}_{0,v_k}$; this is beneficial, since allows to concentrate the RPE computational effort on a set of *specific ranges.* In the following, the *range profile*

referring to the $v_k$-th RVA is described by the set of $L_k$ couples $\mathcal{S}_{v_k} = \{(\widehat{a}_{v_k}^{(i)}, \quad \widehat{C}_{v_k}^{(i)})$ ; $i = 0, 1, ..., L_k$ - **1**} (with **k = 0, 1, ... , $N_A$ - 1**); the integer parameter $\widehat{a}_{v_k}^{(i)}$ identifies the *frequency bin* associated with the *i*-th target (or targets) detected on this RVA, whereas the absolute value of $\widehat{C}_{v_k}^{(i)}$ represents an estimate of the *strength* of the echo associated with it.

f) The STDREC algorithm can be used for detecting multiple targets and accurately estimating their range in a monostatic radar, i.e., equipped with a single TX antenna and a single RX antenna.

g) The STDREC algorithm can be easily extended in a way that *multiple targets* are detected and estimated in parallel in each of its iterations. If we focus on its i-iteration and the $v_k$-th RVA, this result is achieved by running multiple (say, $m_{v_k}^{(i)}$ ) instances of the SFE algorithm in parallel. Each of these instances is initialised with the frequency associated with the absolute maximum or a relative maximum detected in the sequence of the absolute values of the elements of the vector $\mathbf{X}_{0,v_k}^{(i)}$. A constraint is set on the minimum spacing between the $m^{(i)}$ detected frequencies in order to minimize the interference between the instances running in parallel. Moreover, after identifying the absolute maximum in the above mentioned sequence, a threshold, proportional to such a maximum, is set on the minimum value of the acceptable relative maximum/maxima, so that unrelevant frequencies are discarded. It is also worth stressing that, if *a cluster* of $m_{v_k}^{(i)}$ distinct frequencies is estimated, each of the components of the triplet $(C_{X_0,v_k}^{(i)}, \quad C_{X_1,v_k}^{(i)}, \quad C_{X_2,v_k}^{(i)})$ appearing in eq. (2.15) consists of the sum of $m_{v_k}^{(i)}$ terms, each associated with one of these frequencies.

**T2-S3)** Range information fusion - This step aims at merging the information provided by the $N_A$ data sets $\{\mathcal{S}_{v_k}\}$ generated in the previous step. Its output is represented by the

$$\mathcal{A}_b \triangleq \{\widehat{a}_l \,; l = 0,1, ..., L_b - 1\} \qquad (2.17)$$

collecting $L_b$ relevant frequency bins $\{\hat{a}_l;\ l = 0, 1, ..., L_b$ -1} and the set

$$\mathcal{E}_b \triangleq \{E_{b,l}; l = 0,1, ..., L_b - 1\} \qquad (2.18)$$

collecting the associated energies; these energies represent the perceptual importance of the identified bins, in the sense that the larger is the energy, the most important is the associated frequency bin. More specifically, the set $\mathcal{A}_b$ is made of all the integers that appear at least once in the $N_A$ sets

$$\left\{\mathcal{A}_b^{(v_k)}; k = 0,1, ..., N_A - 1\right\}, \qquad (2.19)$$

where the set

$$\mathcal{A}_b^{(v_k)} \triangleq \{\widehat{\alpha}_{v_k}^{(i)} ; i = 0,1, \ldots, L_k - 1\} \qquad (2.20)$$

identifies all the bins detected on the $v_k$-th RVA. Moreover, the average energy $E_{b,l}$ associated with the $\hat{\alpha}_l$-th bin (with $l = 0$,

$1, \ldots, L_b - 1$ ) is computed by summing up the square of the absolute value of all the amplitudes $\left\{\widehat{C}_{v_k}^{(i)}\right\}$ such that

$\widehat{\alpha}_{v_k}^{(i)} = \widehat{\alpha}_l$ for any $k \in \{0, 1, \ldots, N_A - 1\}$ and, for a given $k$, for any $i \in \{0, 1, \ldots, L_k - 1\}$, and dividing it by the overall number of antennas that contribute to this energy (this number is denoted $N_{b,l}$ ); in other words,

$$E_{b,l} = \frac{1}{N_{b,l}} \sum_{k=0}^{N_A-1} \sum_{i=0}^{L_k-1} \left|\widehat{C}_{v_k}^{(i)}\right|^2 \delta\left[\widehat{\alpha}_{v_k}^{(i)} - \widehat{\alpha}_l\right], \qquad (2.21)$$

where

$$N_{b,l} = \sum_{k=0}^{N_A-1} \sum_{i=0}^{L_k-1} \delta\left[\widehat{\alpha}_{v_k}^{(i)} - \widehat{\alpha}_l\right] \qquad (2.22)$$

and $\delta[z] = 1$ if $z = 0$ and $\delta[z] = 0$ if $z \neq 0$. The final output of the information fusion is represented by the set

$$\mathcal{S}_b \triangleq \left\{\left(\widehat{\alpha}_l, E_{b,l}\right); l = 0,1, \ldots, L_b - 1\right\}. \qquad (2.23)$$

Note that the cardinality $L_b$ of the last set represents a preliminary estimate of the overall number of targets; this is due to the fact that the energy associated with a given bin may originate from multiple targets, characterized by similar ranges.

In summary, the above fusion step (see Step 6 of Figure21) can be described as follows (see Steps 6.1 - 6.2 of Figure 26):

- (Step 6.1) fusion of the information provided by a number ($N_A$) of sub-sets collecting all the discretized ranges, named frequency bins, of said plurality of targets detected on each virtual antenna, to generate the overall set made of said frequency bins that appear at least once in said sub-sets.
- (Step 6.2) Method further comprising target energies estimation and fusion thereof, wherein fusion of said target energies includes collecting the energies associated with all the frequency bins of said sub-set to compute the average energy associated with a given frequency bin of said overall set by summing up the square of the absolute value of all the complex amplitudes corresponding to said frequency bin for all said virtual antennas and dividing it by the overall number of antennas that contribute to the computed average energy.

According to another aspect of the present invention, it is herewith disclosed a method, which is per se inventive, for the estimation of the angles here called SPE.

It should be clear that the SPE can be implemented independently from the RPE. Indeed, the RPE represents an inventive method for the estimation of ranges, but, in the implementation of the SPE any known method, such as the periodogram method as in "J. Selva, "ML Estimation and Detection of Multiple Frequencies Through Periodogram Estimate Refinement", IEEE Signal Processing Letters, vol. 24, n. 3, pagg. 249-253, mar. 2017" and references therein, for the estimation of the ranges can be implemented to feed the SPE.

In the same manner, RPE can be implemented independently from SPE, being possible to estimate angles from the ranges estimated by RPE, using known techniques, such as 2D FFT processing over the whole receive array as described in "S. Rao, "MIMO Radar," Texas Instruments - Application Report SWRA554A, July 2018, for FMCW radar systems".

Of course, the implementation of both RPE and SPE in succession as disclosed on Figure 5 represents the best solution.

In summary, in the present invention is presented a method for estimating the angular coordinates of point targets whose range has been estimated through a MIMO FMCW radar equipped with a plurality of transmitting (TX) and receiving (RX) antennas, wherein each couple of said TX and RX antennas is replaced with the equivalent virtual antenna; said virtual antennas form a virtual array composed by one or multiple horizontal uniform linear arrays (HULAs) and, optionally, one or multiple vertical uniform linear arrays (VULAs); said MIMO FMCW radar is arranged to generate real or complex signals in response to a propagation scenario including a plurality of point targets; said method includes (see Steps 7 - 11 of Figure 27):

- (Step 7) acquisition of a spectrum ( $\overline{\mathbf{X}}_0^{(v)}$ ) of said signal and its first $N_{FFT}$-**1** derivatives ( $\{\overline{\mathbf{X}}_k^{(v)};\ k = 1,\ldots,N_{FFT}-1\}$ ) with $N_{FFT}$ = **3** when said signal is real and $N_{FFT}$ = **4** when said signal is complex, for each of said virtual antennas,

- (Step 8) acquisition of a list of a predetermined number of discretized ranges, named frequency bins, of said previously detected point targets,

- (Step 9) selection of a reference antenna, an optional reference vertical uniform linear array, named Reference VULA, a reference horizontal uniform linear array, named Reference HULA, and, optionally, at least a sub-set with a number of said horizontal uniform linear arrays (HULAs) different from the Reference HULA,

- (Step 10 [STDAEC]) sequential execution for each of said frequency bins; said execution includes:

- (Step 10.1 [STDAEC-S1]) estimation of the horizontal spatial frequency and complex amplitude of the most dominant point target and optional estimation of the vertical spatial frequency; said estimation includes:

- optional (Step 10.1.1 [STDAE-S1]) computation of the spectrum ($\overline{\mathbf{s}}_{VULA,0}$) of the sequence collecting the samples of said spectrum ($\overline{\mathbf{X}}_0$) referred to said Reference VULA in the considered frequency bin and its first **3** derivatives ($\{\overline{\mathbf{s}}_{VULA,k};\ \mathbf{k = 1, 2, 3}\}$) through FFT calculation with an oversampling factor ($\overline{M}$),

- optional (Step 10.1.2 [STDAE-S2]) estimation of said vertical spatial frequency,

- optional (Step 10.1.3 [STDAE-S3]) combination of the spectra associated with the Reference HULA and said sub-set of HULAs, after compensating for the phase differences between the Reference HULA and said sub-set of HULAs employing said estimate of the vertical spatial frequency ($\boldsymbol{F_V}$); said superposition, named vertical folding, generates a vertically folded spectrum,

- (Step 10.1.4 [STDAE-S4]) computation of the spectrum ($\overline{\mathbf{s}}_{HULA,0}$) and its first three derivatives ($\{\overline{\mathbf{s}}_{HULA,k};\ \boldsymbol{k = 1,2,3}\}$) of the sequence collecting the samples of said spectrum ($\overline{\mathbf{X}}_0$) referred to said Reference HULA in the considered frequency bin, and optionally said spectrum is referred to said vertically folded spectrum if said optional steps (Step 10.1.1 - Step 10.1.3) are carried out; said computations are carried out through FFT calculation with an oversampling factor $\boldsymbol{(\overline{M})}$,

- (Step 10.1.5 [STDAE-S4]) estimation of said horizontal spatial frequency,

- (Step 10.1.6 [STDAE-S5]) checking whether combination of the spectra associated with said Reference HULA, after compensating for their phase differences on the basis of said estimated horizontal frequency and of said estimated vertical frequency, generates an amplitude peak in the resulting spectrum, named overall folded spectrum, wherein the spectra are associated with said virtual antennas of said sub-set of HULAs if said optional steps (Step 10.1.1 - Step 10.1.3) are carried out; and when the checking is positive execution of the following steps:

    - (Step 10.1.7) refinement of said range and complex amplitude of said most dominant point target;

    - optional (Step 10.1.8 [DEEPLEARNING]) compensation for the amplitude distortion due to the non-uniform response of the antenna array for each of said virtual antennas on the basis of said refined complex amplitude (Step 10.1.7), said estimated horizontal frequency and of said estimated vertical frequency employing a deep neural network to compute a new estimate of said complex amplitude for each of said virtual antennas,

- (Step 10.2 [STDAEC-S2]) cancellation of said most dominant point target,

- (Step 10.3 [STDAEC-S3]) calculation of a residual energy in the considered frequency bin and its comparison with a predetermined threshold ($T_{STDAEC}$), and checking whether said residual energy exceeds said predetermined threshold and, if so, return to said optional computation of the spectrum (Step 10.1.1) if the optional steps are executed or to computation of the spectrum (Step 10.1.4) if the optional steps are not executed, otherwise go to computation of the spatial coordinates (Step 11),

otherwise, in negative case of said checking (Step 10.1.6) execution of the following steps:

- (Step 10.4) updating of said acquired list of said frequency bins and return to Step 10 for a further frequency bin or exit when all frequency bins are examined,
wherein said sequential execution (Step 10) ends when all the frequency bins have been analyzed, then

- (Step 11) computation of the spatial coordinates of all the point targets belonging to all the frequency bins on the basis of said spatial frequencies and said complex amplitude and generation of an overall image of the propagation scenario.

Said execution (see Step 10 of Figure 27) for the first embodiment is carried out by running multiple parallel processes whose number is equal to the number of said frequency bins of said acquired list and said generation of the overall image (Step 11 of Figure 27) is carried out when all parallel processes have been executed.

**T3)** SPE - In this step, each of the $L_b$ frequency bins identified by the RPE are analysed in the angular (i.e., in the azimuth-elevation) domain. This allows to: a) estimate the angular coordinates (i.e., azimuth and elevation) of the target or of the targets whose frequencies (i.e., ranges) fall inside each bin of the set $\mathcal{S}_b$ (2.23); b) detect additional targets associated with adjacent frequency bins; c) estimate the angular coordinates (i.e., azimuth and elevation) and compute a finer estimate of the range of such additional targets. It is important to note that many commercial colocated MIMO radar systems are endowed with a 1D array (a linear uniform array, usually) and, consequently, can be exploited for 2D imaging only. Our method and its two embodiments can be also used in this case, since the only changes to be made concern the SPE, i.e. T3. In the following, we describe the SPE and how each step is modified to adapt it to 2D imaging.

In summary, the above mentioned acquisition (see Step 8 of Figure 27) includes (see Steps 8.1 - 8.2 of Figure 28):

- (Step 8.1) acquisition of a list of a predetermined number of discretized ranges of said plurality of point targets by selecting the indices of distinct frequency bins where at least one point target is detected.

- (Step 8.2) Method further comprising the acquisition of a list of a predetermined number of targets energy corresponding to said discretized ranges.

In this embodiment, the processing accomplished within this task consists of the two consecutive steps listed below (the i-th step is denoted T3-Si in the following); each step is associated with one of the blocks contained in the SPE block appearing in Figure 7.

**T3-S1)** *Bin analysis* - The processing accomplished within this task involves the whole set of triads {($\mathbf{X}_{0,v}$, $\mathbf{X}_{1,v}$, $\mathbf{X}_{2,v}$); $v = 0, 1, ..., N_{VR} - 1$} and is executed on a bin-by-bin basis, since it aims at identifying all the targets contributing to the energy of each bin contained in the TRP. For this reason, it consists in running $L_b$ estimators *in parallel,* one for each of the $L_b$ ranges (i.e., frequency bins) appearing in the TRP (see Figure 7). Moreover, the *l*-th estimator executes a novel recursive estimation algorithm, called *single target detection, angular estimation and cancellation* (STDAEC) and whose description is provided below (additional details can be found in Paragraph 4.1). The STDAEC algorithm processes the $N_{VH} \times N_{VV}$ matrix

$$\mathbf{X}[l] \triangleq \left[ X_{0,\widehat{\alpha}_l}[p, q] \right], \tag{2.24}$$

collecting the spectral information available on the whole virtual receive array and reffering to the $\hat{c}_l$-th frequency bin only (with $l = 0, 1, ..., L_b - 1$), detects $L[l]$ targets and, for each detected target, generates: a) an estimate of its complex amplitude; b) an estimate of its angular coordinates (i.e., its azimuth and its elevation); c) a refined estimate of its range (do not forget that the preliminary estimate of this range is provided by the index $\hat{\alpha}_l$ of the considered frequency bin). In the following, the azimuth, the elevation and the range characterizing the *i*-th target detected in the *l*-th frequency bin are denoted $\theta_i[l]$, $\phi_i[l]$ and $R_i[l]$, respectively; moreover, its complex amplitude, observed on a reference antenna of the virtual receive array shown in Figure 6 is denoted $C_i[l]$; in our description of the STDAEC, the selected reference antenna is identified by $(p, q) = (p_R, q_R)$, as shown in Figure 9. In the following, the estimates of the parameters $\theta_i[l]$, $\phi_i[l]$, $R_i[l]$ and $C_i[l]$ computed by the STDAEC are denoted $\hat{\theta}_i[l]$, $\hat{\phi}_i[l]$, $\hat{R}_i[l]$ and $\hat{C}_i[l]$, respectively.

The derivation of the STDAEC algorithm relies on the fact that the *i*-th target provides an *additive contribution* to all the elements of the matrix **X**[*l*] (2.24) and that the phase of this contribution exhibit *periodic variations* as we move horizontally or vertically along this matrix. More specifically, if we assume that the intensity of the echo received by each RVA from the *i*-th target does not change from antenna to antenna, the complex amplitude $C_i[p, q, l]$ associated with the *i*-th target detected in the *l*-th frequency bin and observed on the $(p, q)$ RVA (i.e., contributing to the spectral coefficient $X_i[p, q]$; see eqs. (1.7) and (1.10))

$$C_i[p, q, l]$$
$$= C_i[l]\exp\left[j\frac{4\pi}{\lambda}\left[d_{VH}(p - p_R)\cos(\phi_i[l])\sin(\theta_i[l]) + d_{VV}(q - q_R)\sin(\phi_i[l])\right]\right]$$

(2.25)

where $\lambda = c/f_0$ is the wavelength associated with the start frequency (see eq. (1.3)) and $d_{VH}$ ($d_{VV}$) is the distance between two adjacent horizontal (vertical) RVAs. Consequently, for a given *l*, the rate of the phase variations observed in the complex amplitudes $\{C_i[p, q, l]\}$ as we move horizontally along the considered virtual receive array is proportional to the quantity

(2.26)

$$F_{H,i}[l] \triangleq \frac{2d_{VH}}{\lambda}\cos(\phi_i[l])\sin(\theta_i[l]),$$

whereas the rate of the phase variations observed in the same amplitudes as we move vertically along the same array is proportional to

(2.27)

$$F_{V,i}[l] \triangleq \frac{2d_{VV}}{\lambda}\sin(\phi_i[l]).$$

The quantities $F_{H,i}[l]$ and $F_{V,i}[l]$ can be interpreted as the normalized horizontal spatial frequency and the normalized vertical spatial frequency characterizing the *i*-th target detected in the *l*-th frequency bin; if they are known, the elevation and the azimuth of the *i*-th target can be evaluated as

(2.28)

$$\phi_i[l] = \arcsin\left(\frac{\lambda}{2d_{VV}}F_{V,i}[l]\right)$$

and

(2.29)

$$\theta_i[l] = \arcsin\left(\frac{\lambda}{2d_{VH}\cos(\phi_i[l])}F_{H,i}[l]\right),$$

respectively. In principle, the horizontal and vertical spatial frequencies can be detected by first computing a 2D DFT of the matrix **X**[*l*] (2.24) and, then, by looking for the local maxima of the absolute values of the elements of the resulting 2D matrix; note that the matrix **X**[*l*] can be also zero-padded before computing its 2D FFT to improve spectral resolution. In the STDAEC algorithm, instead, 2D processing is avoided by alternating vertical and horizontal 1D DFT processing; consequently, relevant spatial frequencies are estimated by searching for the peaks of 1D amplitude spectra (in other words, an AM approach is adopted). Moreover, in the STDAEC algorithm, the following two additional techniques are exploited:

*a) Serial target cancellation* - This technique is conceptually similar to the cancellation strategy exploited by the STDREC algorithm in **T2** and allows to detect multiple targets in the same frequency bin and, in particular, to identify targets having similar spatial coordinates. It is important to point out that the frequencies associated with distinct targets detected in the *I*-th frequency bin do not necessarily belongs to that bin; in fact, they can belong to adjacent bins, so that the tails of their spectra are observed in the analysed frequency bin. This problem originates from the fact that, generally speaking, the *contribution of a point target* to *the spectrum computed on each* RVA *is not a line,* unless the associated frequency is exactly a multiple of the DFT frequency $f_{DFT}$ (2.11); consequently, such a contribution is spread over multiple adjacent frequency bins (i.e., spectral tails are observed).

*b) Spatial folding* - As already stated above, the frequency associated with a target detected in the *I*-th frequency bin does not necessarily fall exactly in that bin. Folding is employed to get a more accurate estimate of the frequency associated with a given target and is based on the following idea. Once the horizontal and the vertical spatial frequencies associated with a target detected in the *I*-th frequency bin have been estimated (see eqs. (2.26) and (2.27)), the spectra **{X($p$, $q$)}** computed for all the RVAs can be combined *in a constructive fashion* by

1) taking a *reference* RVA (identified by **($p$, $q$) = ($p_R$, $q_R$);** see Figure 9), and compensating for the phase differences, estimated for that target, between the reference RVA and other RVAs, or
2) taking a *reference* ULA and compensating for the phase differences, estimated for that target, between the reference ULA and other ULAs *parallel* to the reference ULA.

In case 1), folding generates a single *folded spectrum* and has the beneficial effects of a) averaging the effects of the noise affecting different RVAs and b) combining in an unconstructive fashion the contributions of all the targets different from the one which the employed spatial frequencies refer to. For this reason, in analysing the amplitude of the folded spectrum, a well defined peak in its amplitude is expected in *I*-th frequency bin or in a bin close to it. However, if this does not occur, the detected target is actually a false target (i.e., a *ghost target*). If a peak exists, its position allows to compute a refined estimate of the frequency (and, consequently, of the range) characterizing the target for which folding has been accomplished.

In case 2), folding generates as many *folded spectra* as the number of antennas of the reference ULA.

In the remaining part of this document, when folding is used, the following terminology is adopted:

*Vertical folding* - This refers to the case in which folding involves a reference *horizontal* ULA (HULA) on which other HULAs are folded.

*Overall folding* - This refers to the case in which folding involves all the spectra **{X($p$, $q$)},** i.e. the overall URA (a single folded spectrum is generated in this case).

Note that, in all these cases, the *whole* virtual receive array or *a subset of it* can be used. The exploitation of a subset of the available RVAs is motivated by the fact that, in practice, in computing folded spectra, the *estimates* $\hat{F}_{H,i}[I]$ and $\hat{F}_{V,i}[I]$ of the frequencies $F_{H,i}[I]$ and $F_{V,i}[I]$, respectively, are employed and that *estimation errors* may substantially affect the quality of the phase compensation factors computed for the antennas that are *farther* from the reference antenna or the reference horizontal/vertical ULA.

The STDAEC algorithm consists of three steps (its *r*-th step is denoted STDAEC-Sr in the following); the processing accomplished within each of them is sketched below for the *I*-th frequency bin (with *I* = **0, 1, ..., $L_b$ - 1).** Moreover, the STDAEC algorithm is initialised by

1) Setting the iteration index *i* to 1.

2) Setting

$$\mathbf{X}^{(0)}[l] \triangleq \mathbf{X}[l]. \qquad (2.30)$$

3) Selecting a reference VULA, consisting of $N_{VULA}$ adjacent and vertically aligned RVAs (with $N_{VULA} \leq N_{VV}$), within the virtual receive array; in the following, we assume, without any loss of generality, that the reference VULA includes the reference antenna and, consequently, is identified by $q = q_I, q_I + 1, ..., q_F,$ with $q_I \leq q_R \leq q_F$ and $p = p_R$, as illustrated in Figure 10; note that $N_{VULA} = q_F - q_I + 1.$

4) Selecting a *reference* HULA, consisting of $N_{HULA}$ adjacent and *horizontally aligned* RVAs; in the following, we assume, without any loss of generality, that the reference HULA is the horizontal ULA containing the reference antenna and, consequently, is identified by $q = q_R$ and $p = p_I, p_I + 1, ..., p_F,$ with $p_I \leq p_R \leq p_F$, as illustrated in Figure 10; note that $N_{HULA} = p_F - p_I + 1.$

5) Selecting a set of HULAs, different from the reference HULA and having the same size of it; in the following, we assume, without any loss of generality, that these HULAs, called *vertically folded* HULAs, correspond to

$$q = q_I^{(VF)}, \quad q_I^{(VF)} + 1, \ldots, q_R - 1, q_R + 1, \ldots, q_F^{(VF)}, \text{ with } q_I^{(VF)} \leq q_R \leq q_F^{(VF)}, \text{ as illustrated in}$$

Figure 11; note that the overall number HULAs involved in vertical folding is $N_{HULA}^{(VF)} = q_F^{(VF)} - q_I^{(VF)} + 1$.

In summary, the selection (see Step 9 of Figure 27) includes:

- said optional Reference VULA consists of a sub-set of adjacent and vertically aligned virtual antennas,

- said Reference HULA consists of a sub-set of adjacent and horizontally aligned virtual antennas,

- each HULA of said optional sub-set of HULAs, different from the reference HULA, has the same size of the reference HULA.

Then, the STDAEC algorithm starts executing its iterations. Within its i-th iteration, it accomplishes the three steps described below.

**STDAEC-S1)** Detection of a new target and estimation of its angular parameters - In this step, the $N_{VH} \times N_{VV}$ matrix

$$\mathbf{X}^{(i)}[l] \triangleq \left[ X_l^{(i)}[p, q] \right], \qquad (2.31)$$

is processed to detect the strongest target contributing to it, and to estimate the angular parameters ($\theta_i[l], \phi_i[l]$) and the complex amplitude $C_i[l]$ associated with it (this target represents the *i*-th one detected in the considered frequency bin, since (*i* - 1) targets have been detected in the previous recursions). The processing accomplished within this step is based on a novel iterative detection and estimation algorithm called single target detection and angular estimation (STDAE) and whose detailed description is provided in Paragraph 4.1; this algorithm consists in the five steps described below (its *r*-th step is denoted STDAE-S*r* in the following). If the STDAE algorithm is used for 2D imaging, the first three steps (i.e., STDAE-S1 to STDAE-S3) have not to be performed; therefore, the first step to be carried out is STDAE-S4. Moreover, the matrix $\mathbf{X}^{(i)}[l]$ (2.31) is replaced with the $N_{VH}$-dimensional vector

$$\mathbf{X}^{(i)}[l] \triangleq \left[ X_l^{(i)}[p] \right], \qquad (2.32)$$

collecting the spectral information available on the whole virtual receive array and referring to the *l*-th frequency only.

In summary, said estimation (see Step 10.1 of Figure 29) includes a preliminary step (Step 10.1.0) including:

a) setting the iteration index **i** to **1,**

b) defining a matrix collecting said spectral information ($\overline{\mathbf{X}}_0^{(v)}$) available for each of said virtual antennas and referring to the considered frequency bin only,

optional c) extracting a vector, referring to said Reference VULA only, from said matrix.

**STDAE-S1)** *FFT processing on the reference VULA* - The portion of spectral information referring to the reference VULA selected in the initialization is extracted from the matrix $\mathbf{X}^{(i)}[l]$ and stored in the $N_{VULA}$-dimensional vector

$$\mathbf{X}_{\text{VULA}}^{(i)}[l] = \left[ X_{\text{VULA},0}^{(i)}[l], X_{\text{VULA},1}^{(i)}[l], \ldots, X_{\text{VULA},N_{VULA}-1}^{(i)}[l] \right]^T \qquad (2.33)$$

$$\triangleq \left[ X_l^{(i)}[p_R, q_I], X_l^{(i)}[p_R, q_I + 1], \ldots, X_l^{(i)}[p_R, q_F] \right]^T.$$

Then, the vector

$$\mathbf{S}_{\mathrm{VULA},k}^{(i)}[l] \triangleq \left[ S_{k,0}^{(i)}[l], S_{k,1}^{(i)}[l], \dots, S_{k,N_{VULA}-1}^{(i)}[l] \right]^{T}, \qquad (2.34)$$

is computed and zero-padded to produce the $\overline{N}_0$-dimensional vector

$$\overline{\mathbf{S}}_{\mathrm{VULA},k}^{(i)}[l] = \left[ \left( \mathbf{S}_{VULA,k}^{(i)}[l] \right)^{T} \ \mathbf{0}_{(\overline{M}-1)N_{VULA}}^{T} \right]^{T}, \qquad (2.35)$$

with $k = 0,1,2$ and 3; here,

$$S_{k,p}^{(i)}[l] \triangleq p^{k} \ X_{VULA,p}^{(i)}[l] = p^{k} \ X_{l}^{(i)}[p_{R}, q_{I} + p] \qquad (2.36)$$

with $p=0, 1, \dots, N_{VULA} - 1$, $\overline{M}$ is a positive integer (dubbed oversampling factor) and

$$\overline{N}_0 \triangleq \overline{M} \cdot N_{VULA}. \qquad (2.37)$$

Finally, the vector

$$\mathbf{s}_{\mathrm{VULA},k}^{(i)}[l] = \left[ s_{k,0}^{(i)}[l], s_{k,1}^{(i)}[l], \dots, s_{k,\overline{N}_0-1}^{(i)}[l] \right]^{T} \triangleq \mathrm{DFT}_{\overline{N}_0}\left[ \overline{\mathbf{S}}_{\mathrm{VULA},k}^{(i)}[l] \right], \qquad (2.38)$$

is computed for $k = 0,1,2$ and 3. More specifically, in the following we assume that

$$s_{k,m}^{(i)}[l] \triangleq \frac{1}{N_{VULA}} \sum_{p=0}^{N_{VULA}-1} S_{k,p}^{(i)}[l] \exp\left( -j \frac{2\pi pm}{\overline{N}_0} \right), \qquad (2.39)$$

with $m = 0, 1, \dots, \overline{N}_0 - 1$.

It is important to point out that:

a) Each of the four vectors $\{s_{\mathrm{VULA},k}^{(i)}[l]; \ k = 0, \ 1, \ 2, \ 3\}$ can be computed by executing a $\overline{N}_0$-th order FFT.

b) On the one hand, the vector $\mathbf{s}_{\mathrm{VULA},0}^{(i)}[l]$ collects $\overline{N}_0$ equally spaced samples of the spectrum of the sequence $\{X_{\mathrm{VULA},p}^{(i)}; \ p = 0, \ 1, \ \dots, \ N_{VULA} - 1\}$ (see eq. (2.36)). On the other hand, the $k$-th vector $\mathbf{s}_{\mathrm{VULA},k}^{(i)}[l]$, with $k = 1, 2$ and $3$, collects, up to a scale factor, $N_0$ equally spaced samples of the k-th order derivative of the same spectrum.

**STDAE-S2)** Single angle estimation - The $\overline{N}_0$-dimensional vectors $\{s_{\mathrm{VULA},k}^{(i)}[l]; \ k = 0, \ 1, \ 2, \ 3\}$ are processed to detect the *i*-th (strongest target) appearing in *l*-th frequency bin and estimate its angular coordinates (this target represents the *i*-th one detected in the considered frequency bin, since *(i - 1)* targets have been detected in the previous iterations). Note that, generally speaking, the normalised vertical frequency $F_{V,i}[l]$ is not a multiple of the fundamental frequency $1/\overline{N}_0$ associated with the FFT processing executed in **STDAE-S1;** for this reason, it can be expressed as

$$F_{V,i}[l] = \beta_{V,i}[l]\frac{1}{\overline{N}_0} + \delta_{V,i}[l]\frac{1}{\overline{N}_0}, \qquad (2.40)$$

where $\beta_{V,i}[l]$ is an integer belonging to the set **{0, 1, ..., $\overline{N}_0$ - 1}** and $\delta_{V,i}[l]$ is a real quantity, such that

$$\begin{cases} 0 \le \delta_{V,i}[l] \le 0.5 & \text{if } \beta_{V,i}[l] = 0 \\ -0.5 < \delta_{V,i}[l] \le 0 & \text{if } \beta_{V,i}[l] = N_0 - 1. \\ -0.5 < \delta_{V,i}[l] \le 0.5 & \text{otherwise} \end{cases} \qquad (2.41)$$

The processing accomplished in this step is executed by a novel estimation algorithm, dubbed complex single frequency estimator (CSFE) and described in detail in Paragraph 4.1.3. This represents the most important part of the STDAE algorithm, since it computes the estimates $\hat{A}_{V,i}[l]$, $\hat{\beta}_{V,i}[l]$, $\hat{\delta}_{V,i}[l]$ and $\hat{F}_{V,i}[l]$ of the parameters $A_i[l]$, $\beta_{V,i}[l]$, $\delta_{V,i}[l]$ and $F_{V,i}[l]$, respectively, on the basis of the set $\{\mathbf{s}_{\text{VULA},k}^{(i)}[l]; \ k = 0, \ 1, \ 2, \ 3\}$. It is worth noting that

$$\hat{F}_{V,i}[l] = \hat{\beta}_{V,i}[l]\frac{1}{\overline{N}_0} + \hat{\delta}_{V,i}[l]\frac{1}{\overline{N}_0}. \qquad (2.42)$$

Note that the quantity $\hat{A}_{V,i}[l]$ is not exploited in the following since, it represents a preliminary estimate of $A_i[l]$.
In summary, the method for the estimation of the vertical spatial frequency (see Step 10.1.2 of Figure 29) can be described as follows (see Steps 10.1.2.1.0 - 10.1.2.1.2 of Figure 30):

- (Step 10.1.2.1.0) representation of a target vertical spatial frequency **($F_V$),** as sum of a main portion **($\beta_V F_{DFT}$)** and a residual portion **($\delta_V F_{DFT}$),** where $F_{\text{DFT}} \triangleq 1/\overline{N}_0$ , where $\overline{N}_0$ is the FFT order, wherein said main portion is determined by searching the index **($\hat{\beta}_V$)** of the vector element $\overline{\mathbf{s}}_{\text{VULA},0,\hat{\beta}V}$ corresponding to the maximum absolute value of the same vector $\overline{\mathbf{s}}_{\text{VULA},0}$ and said residual frequency computation is optional and can be found through an iterative procedure together with the corresponding target complex amplitude $A \triangleq a \exp(j\psi)$ , where **a** is said target amplitude and $\psi$ is said target phase.
- (Step 10.1.2.1.1) Said iterative procedure includes a preliminary initialization comprising:

  setting the iteration index **i** to **1,** the initial estimate of **A** equal to said vector element **($\overline{\mathbf{s}}_{\text{VULA},0,\hat{\beta}V}$),** the initial estimate of $\Delta_{\text{V}} \triangleq 2\pi\delta_V F_{\text{DFT}}$ to zero and the initial estimate of $F_V$ to said main portion (**$\hat{\beta}_V F_{DFT}$**); then iteratively

- (Step 10.1.2.1.2) the i-th iteration is fed by the estimates of $\Delta_V$, $F_V$ and **A** computed in the previous iteration, to generate new estimates of $\Delta_V$, $F_V$ and **A,** for a predetermined number of iterations, wherein each iteration includes:

  a) a first step where the residual $\hat{\Delta}_V$ is calculated solving the first order equation $b_{\hat{\beta}}\tilde{\Delta}_V + c_{\hat{\beta}} = \mathbf{0}$ OR the second order equation $a_{\hat{\beta}}\tilde{\Delta}_V^2 + b_{\hat{\beta}}\tilde{\Delta}_V + c_{\hat{\beta}} = 0$ in the variable $\tilde{\Delta}_V$ with:

  $$a_{\hat{\beta}} \triangleq \Im\left\{\hat{A}^* \overline{s}_{\text{VULA},3,\hat{\beta}_V}\right\},$$

  $$b_{\hat{\beta}} \triangleq \Re\left\{\hat{A}^* \overline{s}_{\text{VULA},2,\hat{\beta}_V}\right\},$$

$$c_{\widehat{\beta}} \triangleq -\mathfrak{I}\left\{\widehat{A}^{*}\,\overline{s}_{\mathrm{VULA},1,\widehat{\beta}_V}\right\},$$

where $\mathfrak{R}\{x\}$ denotes the real part and $\mathfrak{I}\{x\}$ denotes the imaginary part of the complex quantity $x$; discarding one of the two solutions, which does not satisfy the inequalities:

$$\begin{cases} 0 \leq \widetilde{\Delta}_V \leq \pi F_{\mathrm{DFT}} & \text{if } \widehat{\beta}_V = 0 \\ -\pi F_{\mathrm{DFT}} < \widetilde{\Delta}_V \leq \pi F_{\mathrm{DFT}} & \text{otherwise} \end{cases}$$

if said second order equation is solved; then the new estimate of $F_V$ is obtained by adding said residual ($\widehat{\Delta}_V\,F_{\mathrm{DFT}}$) to said main portion ($\widehat{\beta}_V\,F_{\mathrm{DFT}}$);

b) a second step wherein said new estimate of $F_V$ is employed to compute the new estimate of $A$ as $\widehat{A} = \overline{X}_{\mathrm{int}}(\widehat{F}_V)$ and $\overline{X}_{\mathrm{int}}(\widehat{F}_V)$ is generated by interpolating the elements of said vector $\overline{M}s_{\mathrm{VULA},0}$ where $\overline{M}$ is said oversampling factor employed in said FFT calculations.

The above mentioned Steps 10.1.2.1.1 - 10.1.2.1.2 of Figure 30 can be replaced by an alternative method including (see Steps 10.1.2.2.1 - 10.1.2.2.2 of Figure 31):

-    (Step 10.1.2.2.1) Said iterative procedure includes a preliminary initialization comprising:

a) setting the iteration index **i** to **1,** the initial estimate of **A** equal to said vector element ($\overline{s}_{\mathrm{VULA},0,\widehat{\beta}_V}$), the initial estimate of $\Delta_V \triangleq 2\pi\delta_V\,F_{\mathrm{DFT}}$ to zero and the initial estimate of $F_V$ to said main portion ($\widehat{\beta}_V\,F_{\mathrm{DFT}}$);

b) computing the real quantity $\rho \triangleq F_V/F_{\mathrm{DFT}}$;

then iteratively

-    (Step 10.1.2.2.2) the i-th iteration is fed by the estimates of $\Delta_V$, $F_V$, **A** and the real quantity ρ computed in the previous iteration, to generate new estimates of $\Delta_V$, $F_V$, **A** and ρ, for a predetermined number of iterations, wherein each iteration includes:

a) a first step where the residual $\widehat{\Delta}_V$ is calculated solving the first order equation $b_{\widehat{\beta}}\widetilde{\Delta}_V + c_{\widehat{\beta}} = 0$ OR the second order equation $a_{\widehat{\beta}}\widetilde{\Delta}_V^2 + b_{\widehat{\beta}}\widetilde{\Delta}_V + c_{\widehat{\beta}} = 0$ in the variable $\widetilde{\Delta}_V$ with:

$$a_{\widehat{\rho}} \triangleq \mathfrak{I}\left\{\widehat{A}^{*}\overline{s}_{\mathrm{VULA},3,\widehat{\rho}}\right\},$$

$$b_{\widehat{\rho}} \triangleq \mathfrak{R}\left\{\widehat{A}^{*}\overline{s}_{\mathrm{VULA},2,\widehat{\rho}}\right\},$$

$$c_{\widehat{\rho}} \triangleq -\mathfrak{I}\left\{\widehat{A}^{*}\overline{s}_{\mathrm{VULA},1,\widehat{\rho}}\right\},$$

where $\mathfrak{R}\{x\}$ denotes the real part, $\mathfrak{I}\{x\}$ denotes the imaginary part of the complex quantity $x$ and $\{\overline{s}_{\mathrm{VULA},k,\widehat{\rho}};\,k = 1,2,3\}$ is computed as:

$$\overline{s}_{\mathrm{VULA},k,\widehat{\rho}} \triangleq \frac{1}{\overline{N}_0}\sum_{n=0}^{N-1} n^k\,\overline{X}_{0,n}^{(\mathrm{VULA})}\,\exp\left(-j\frac{2\pi n\widehat{\rho}}{N_0}\right)$$

where $\overline{X}_{0,n}^{(\mathrm{VULA})}$ is the **n**-th element of the said sequence collecting the samples of said spectrum ($\overline{X}_0$) referred to said Reference VULA in the considered frequency bin; said coefficients ($\{\overline{s}_{\mathrm{VULA},k,\widehat{\rho}};\,k = 1,2,3\}$) can be also computed by interpolating the elements of said spectrum ($\overline{s}_{\mathrm{VULA},k}$); discarding one of the two solutions, which does not satisfy the inequalities:

$$\begin{cases} 0 \leq \widetilde{\Delta}_V \leq \pi F_{\text{DFT}} & \text{if } \hat{\beta}_V = 0 \\ -\pi F_{\text{DFT}} < \widetilde{\Delta}_V \leq \pi F_{\text{DFT}} & \text{otherwise} \end{cases}$$

if said second order equation is solved; then the new estimate of $\boldsymbol{F_V}$ is obtained by adding said residual ($\hat{\Delta}_{\boldsymbol{V}} \boldsymbol{F_{\text{DFT}}}$) to said estimate of $\boldsymbol{F_V}$;

b) a second step wherein the new estimate of $\rho$ is computed by dividing said new estimate of $\boldsymbol{F_V}$ by $\boldsymbol{F_{\text{DFT}}}$;

c) a third step wherein said new estimate of $\boldsymbol{F_V}$ is employed to compute the new estimate of $\boldsymbol{A}$ as $\hat{\boldsymbol{A}} = \overline{\boldsymbol{X}}_{\text{int}}(\hat{\boldsymbol{F}}_{\boldsymbol{V}})$ and $\overline{\boldsymbol{X}}_{\text{int}}(\hat{\boldsymbol{F}}_{\boldsymbol{V}})$ is generated by interpolating the elements of said vector $\overline{\boldsymbol{M}}\boldsymbol{s}_{\text{VULA},0}$ where $\overline{\boldsymbol{M}}$ is said oversampling factor employed in said FFT calculations.

**STDAE-S3)** *Vertical folding* - The estimate $\hat{F}_{V,i}[l]$ of the normalized vertical frequency $\boldsymbol{F_{V,i}}[l]$ (2.40) is employed to compensate for the phase difference between each of the HULAs to be folded vertically and the reference HULA (i.e., for the phase differences along the *vertical* direction), so that all the data of all these HULAs can be combined (i.e., summed) in a constructive fashion. In practice, first, the *phase rotation factor*

$$R_i^{(\text{VF})}[l, q] \triangleq \left[\exp\left(-j\Delta\psi_i^{(\text{VF})}[l]\right)\right]^{q - q_R}, \qquad (2.43)$$

with

$$\Delta\psi_i^{(\text{VF})}[l] \triangleq \frac{2\pi}{\lambda} \hat{F}_{V,i}[l], \qquad (2.44)$$

is computed for the q-th HULA (with $q = q_I^{(\text{VF})}, \quad q_I^{(\text{VF})} + 1, \quad ..., \quad q_R - 1, \quad q_R + 1, \quad ..., \quad q_F^{(\text{VF})}$). Then, vertical folding is accomplished by computing the $\boldsymbol{N_{HULA}}$-dimensional vector

$$\mathbf{X}_i^{(\text{VF})}[l] = \mathbf{X}^{(i)}[l, q_R] + \sum_{\substack{q = q_I^{(\text{VF})} \\ q \neq q_R}}^{q_F^{(\text{VF})}} \mathbf{X}^{(i)}[l, q] R_i^{(\text{VF})}[l, q], \qquad (2.45)$$

that represents a vertically folded spectrum; here,

$$\mathbf{X}^{(i)}[l, q] \triangleq \left[X_l^{(i)}[p_I, q], X_l^{(i)}[p_I + 1, q], \dots, X_l^{(i)}[p_F, q]\right]^T, \qquad (2.46)$$

is $\boldsymbol{N_{HULA}}$-dimensional row vector extracted from the q-th row of the matrix $\mathbf{X}^{(i)}[l]$ (2.31).

**STDAE-S4)** *FFT processing* and horizontal frequency estimation - The processing accomplished in this step is very similar to that carried out in **STDAE-S1** and **STDAE-S2**. In fact, the only difference is represented by the fact that the $\boldsymbol{N_{VULA}}$-dimensional vector $\mathbf{X}_{\text{VULA}}^{(i)}[l]$ (2.33) is replaced by the $\boldsymbol{N_{HULA}}$-dimensional vector $\mathbf{X}_i^{(\text{VF})}[l]$ (2.45) generated in the previous step if the STDAE algorithm is used for 3D imaging and by the vector $\mathbf{X}^{(i)}[l]$ (2.32) if the STDAE algorithm is used for 2D imaging. Therefore, in this case, the CSFE is exploited to estimate the horizontal frequency $\boldsymbol{F_{H,i}}[l]$ and, again, the complex amplitude $\boldsymbol{A_i}[l]$ associated with the i-th target. Note that, generally speaking, the frequency $\boldsymbol{F_{H,i}}[l]$ is not a multiple of the fundamental frequency $\boldsymbol{1/\overline{N}_0}$ characterizing the FFT processing executed in **STDAE-S1;** for this reason, it can be expressed

$$(2.47)$$

$$F_{H,i}[l] = \beta_{H,i}[l]\frac{1}{\overline{N}_0} + \delta_{H,i}[l]\frac{1}{\overline{N}_0},$$

where $\beta_{H,i}[l]$ is an integer belonging to the set {0, 1, ..., $\overline{N}_0$ - 1} and $\Delta_{H,i}[l]$ is a real quantity, such that

$$\begin{cases} 0 \leq \delta_{H,i}[l] \leq 0.5 & \text{for } \beta_{H,i}[l] = 0 \\ -0.5 < \delta_{H,i}[l] \leq 0 & \text{for } \beta_{H,i}[l] = N_0 - 1. \\ -0.5 < \delta_{H,i}[l] \leq 0.5 & \text{otherwise} \end{cases} \qquad (2.48)$$

The CSFE computes the estimates $\hat{A}_{H,i}[l]$, $\hat{\beta}_{H,i}[l]$, $\hat{\delta}_{H,i}[l]$ and $\hat{F}_{H,i}[l]$ of the parameters $A_i[l]$, $\beta_{H,i}[l]$, $\delta_{H,i}[l]$ and $F_{H,i}[l]$ respectively; the estimate $\hat{F}_{H,i}[l]$ is evaluated as

$$(2.49)$$

$$\widehat{F}_{H,i}[l] = \widehat{\beta}_{H,i}[l]\frac{1}{\overline{N}_0} + \widehat{\delta}_{H,i}[l]\frac{1}{\overline{N}_0}.$$

Note that: a) the quantity $\hat{A}_{H,i}[l]$ is not exploited in the following since, it represents a preliminary estimate of $A_i[l]$; b) the estimates $\hat{A}_{V,i}[l]$ and $\hat{A}_{H,i}[l]$ can be significantly different if multiple targets having similar horizontal frequencies or similar vertical frequencies contribute to the considered frequency bin.

In summary, the method for the estimation of the horizontal spatial frequency (see Step 10.1.5 of Figure 29) can be described as follows (see Steps 10.1.5.1.0 - 10.1.5.1.2 of Figure 32):

- (Step 10.1.5.1.0) representation of a target horizontal spatial frequency (**F_H**), as sum of a main portion ($\beta_\mathbf{H}$ **F_DFT**) and a residual portion ($\delta_\mathbf{H}$ **F_DFT**), where $F_{\text{DFT}} \triangleq 1/\overline{N}_0$ , where $\overline{N}_0$ is the FFT order, wherein said main portion is determined by searching the index ($\hat{\beta}_\mathbf{H}$) of the vector element $\mathbf{s}_{\text{HULA},0,\hat{\beta}_H}$ corresponding to the maximum absolute value of the same vector $\mathbf{s}_{\text{HULA},0}$ and said residual frequency computation is optional and can be found through an iterative procedure together with the corresponding target complex amplitude $A \triangleq a\exp(j\psi)$ , where $a$ is said target amplitude and $\psi$ is said target phase.

- (Step 10.1.5.1.1) Said iterative procedure includes a preliminary initialization comprising:

    setting the iteration index **i** to **1,** the initial estimate of A equal to said vector element ($\overline{\mathbf{s}}_{\text{HULA},0,\hat{\beta}_H}$), the initial estimate of $\Delta_{\text{H}} \triangleq 2\pi\delta_{\text{H}} F_{\text{DFT}}$ to zero and the initial estimate of **F_H** to said main portion ($\hat{\beta}_\mathbf{H}$ **F_DFT**);

    then iteratively

- (Step 10.1.5.1.2) the **i**-th iteration is fed by the estimates of $\Delta_\mathbf{H}$, **F_H** and **A** computed in the previous iteration, to generate new estimates of $\Delta_\mathbf{H}$, **F_H** and **A**, for a predetermined number of iterations, wherein each iteration includes:

    a) a first step where the residual $\hat{\Delta}_\mathbf{H}$ is calculated solving the first order equation $b_{\hat{\beta}}\tilde{\Delta}_\mathbf{H} + c_{\hat{\beta}} = \mathbf{0}$ OR the second order equation $a_{\hat{\beta}}\tilde{\Delta}_{\text{H}}^2 + b_{\hat{\beta}}\tilde{\Delta}_{\text{H}} + c_{\hat{\beta}} = 0$ in the variable $\tilde{\Delta}_\mathbf{H}$ with

    $$a_{\hat{\beta}} \triangleq \Im\left\{\widehat{A}^* \overline{s}_{\text{HULA},3,\hat{\beta}_H}\right\},$$

    $$b_{\hat{\beta}} \triangleq \Re\left\{\widehat{A}^* \overline{s}_{\text{HULA},2,\hat{\beta}_H}\right\},$$

    $$c_{\hat{\beta}} \triangleq -\Im\left\{\widehat{A}^* \overline{s}_{\text{HULA},1,\hat{\beta}_H}\right\},$$

where $\Re\{x\}$ denotes the real part and $\widetilde{\Im}\{x\}$ denotes the imaginary part of the complex quantity $x$; discarding one of the two solutions, which does not satisfy the inequalities:

$$\begin{cases} 0 \le \widetilde{\Delta}_{\mathrm{H}} \le \pi F_{\mathrm{DFT}} & \text{if } \hat{\beta}_{\mathrm{H}} = 0 \\ -\pi F_{\mathrm{DFT}} < \widetilde{\Delta}_{\mathrm{H}} \le \pi F_{\mathrm{DFT}} & \text{otherwise} \end{cases}.$$

if said second order equation is solved; then the new estimate of $F_{\mathbf{H}}$ is obtained by adding said residual ($\hat{\Delta}_{\mathbf{H}} F_{\mathbf{DFT}}$) to said main portion ($\hat{\beta}_{\mathbf{H}} F_{\mathbf{DFT}}$);

b) a second step wherein said new estimate of $F_{\mathbf{H}}$ is employed to compute the new estimate of $A$ as $\hat{A} = \overline{X}_{\mathrm{int}}(\hat{F}_{\mathbf{H}})$ and $\overline{X}_{\mathrm{int}}(\hat{F}_{\mathbf{H}})$ is generated by interpolating the elements of said vector $\overline{M}s_{\mathrm{HULA,0}}$ where $\overline{M}$ is said oversampling factor employed in said FFT calculations.

The above mentioned Steps 10.1.5.1.1 - 10.1.5.1.2 of Figure 32 can be replaced by an alternative method including (see Steps 10.1.5.2.1 - 10.1.5.2.2 of Figure 33):

- (Step 10.1.5.2.1) said iterative procedure includes a preliminary initialization comprising:

    a) setting the iteration index $\mathbf{i}$ to $\mathbf{1}$, the initial estimate of $A$ equal to said vector element ($\overline{s}_{\mathbf{HULA,0},\hat{\beta}_{\mathbf{H}}}$), the initial estimate of $\Delta_{\mathrm{H}} \triangleq 2\pi\delta_{\mathrm{H}} F_{\mathrm{DFT}}$ to zero and the initial estimate of $F_{\mathbf{H}}$ to said main portion ($\hat{\beta}_{\mathbf{H}} F_{\mathbf{DFT}}$);

    b) computing the real quantity $\rho \triangleq F_{\mathrm{H}}/F_{\mathrm{DFT}}$;

then iteratively

- (Step 10.1.5.2.2) the i-th iteration is fed by the estimates of $\Delta_{\mathbf{H}}, F_{\mathbf{H}}, A$ and the real quantity $\rho$ computed in the previous iteration, to generate new estimates of $\Delta_{\mathbf{H}}, F_{\mathbf{H}}, A$ and $\rho$, for a predetermined number of iterations, wherein each iteration includes

    a) a first step where the residual $\hat{\Delta}_{\mathbf{H}}$ is calculated solving the first order equation $b_{\hat{\beta}}\widetilde{\Delta}_{\mathbf{H}} + c_{\hat{\beta}} = 0$ OR the second order equation $a_{\hat{\beta}}\widetilde{\Delta}_{\mathrm{H}}^2 + b_{\hat{\beta}}\widetilde{\Delta}_{\mathrm{H}} + c_{\hat{\beta}} = 0$ in the variable $\widetilde{\Delta}_{\mathbf{H}}$ with:

$$a_{\hat{\rho}} \triangleq \Im\{\widehat{A}^*\overline{s}_{\mathrm{HULA,3},\hat{\rho}}\},$$

$$b_{\hat{\rho}} \triangleq \Re\{\widehat{A}^*\overline{s}_{\mathrm{HULA,2},\hat{\rho}}\},$$

$$c_{\hat{\rho}} \triangleq -\Im\{\widehat{A}^*\overline{s}_{\mathrm{HULA,1},\hat{\rho}}\},$$

where $\Re\{x\}$ denotes the real part, $\Im\{x\}$ denotes the imaginary part of the complex quantity $x$ and $\{\overline{s}_{\mathbf{HULA},k,\hat{\rho}}; \, k = \mathbf{1,2,3}\}$ is computed as:

$$\overline{s}_{\mathrm{HULA},k,\hat{\rho}} \triangleq \frac{1}{\overline{N}_0} \sum_{n=0}^{N-1} n^k \, \overline{X}_{0,n}^{(\mathrm{HULA})} \exp\left(-j\frac{2\pi n\hat{\rho}}{N_0}\right)$$

where $\overline{X}_{0,n}^{(\mathrm{HULA})}$ is the $\mathbf{n}$-th element of the said sequence collecting the samples of said vertically folded spectrum if said optional steps (Step 10.1.1 - Step 10.1.3) are carried out and of the sequence collecting the samples of said spectrum ($\overline{X}_0$) referred to said Reference HULA in the considered frequency bin if said optional steps are not carried out; said coefficients ($\{\overline{s}_{\mathbf{HULA},k,\hat{\rho}}; \, k = \mathbf{1,2,3}\}$) can be also computed by interpolating the elements of said spectrum ($\overline{s}_{\mathrm{HULA},k}$); discarding one of the two solutions, which does not satisfy the inequalities:

$$\begin{cases} 0 \leq \widetilde{\Delta}_{\mathrm{H}} \leq \pi \mathrm{F}_{\mathrm{DFT}} & \text{if } \widehat{\beta}_{\mathrm{H}} = 0 \\ -\pi \mathrm{F}_{\mathrm{DFT}} < \widetilde{\Delta}_{\mathrm{H}} \leq \pi \mathrm{F}_{\mathrm{DFT}} & \text{otherwise} \end{cases}.$$

if said second order equation is solved; then the new estimate of $F_H$ is obtained by adding said residual ($\widehat{\Delta}_H F_{DFT}$) to said estimate of $F_H$;

b) a second step wherein the new estimate of $\rho$ is computed by dividing said new estimate of $F_H$ by $F_{DFT}$;

c) a third step wherein said new estimate of $F_H$ is employed to compute the new estimate of $A$ as $\hat{A} = \overline{X}_{int}(\hat{F}_H)$ and $\overline{X}_{int}(\hat{F}_H)$ is generated by interpolating the elements of said vector $\overline{M}s_{HULA,0}$ where $\overline{M}$ is said oversampling factor employed in said FFT calculations.

STDAE-S5) *Overall folding and frequency/amplitude estimation* - In this step, the angular information (i.e., the frequencies $\hat{F}_{V,i}[l]$ (2.42) and $\hat{F}_{H,i}[l]$ (2.49)) computed in the previous step are exploited to apply folding to the whole receive antenna array or to a portion of it; this step involves the whole spectrum computed on the selected RVAs. If the whole receive antenna array is exploited, overall folding requires the computation of the $N_0$-dimensional vectors

$$\mathbf{X}_{m,\mathrm{OF}}[l] \triangleq \sum_{p=0}^{N_{VH}-1} \sum_{q=0}^{N_{VV}-1} \mathbf{X}_m[p,q]\, R_i^{(HV)}[l,p,q], \qquad (2.50)$$

with $m = 0, 1, 2$, where

$$R_i^{(\mathrm{HV})}[l,p,q] \triangleq R_i^{(\mathrm{VF})}[l,q]\, R_i^{(\mathrm{HF})}[l,p] \qquad (2.51)$$

is a phase rotation factor, $R_i^{(\mathrm{VF})}[l,q]$ is expressed by eq. (2.43),

$$R_i^{(\mathrm{HF})}[l,p] \triangleq \left[\exp\left(-j\Delta\psi_i^{(\mathrm{HF})}[l]\right)\right]^{p-p_R} \qquad (2.52)$$

and

$$\Delta\psi_i^{(\mathrm{HF})}[l] \triangleq \frac{2\pi}{\lambda}\widehat{F}_{H,i}[l]; \qquad (2.53)$$

note that $R_i^{(HV)}[l,p,q]$ if $p = p_R$ and $q = q_R$. If the sequence of the absolute value of the elements of the vector $\mathbf{X}_{0,OF}[l]$ (2.50) is analysed, a relative maximum (i.e., a peak) is expected in the $\hat{\alpha}_I$-th frequency bin or in a bin close to it; if this peak is really visible, the SFE algorithm is run to estimate, on the basis of the vectors $\mathbf{X}_{0,OF}[l]$, $\mathbf{X}_{1,OF}[l]$ and $\mathbf{X}_{2,OF}[l]$ (see eq. (2.50)), the final estimates

$$\widehat{f}_i[l] = \widehat{\alpha}_i[l]f_{\mathrm{DFT}} + \widehat{\delta}_i[l]f_{\mathrm{DFT}}, \qquad (2.54)$$

and $\hat{A}_i[l]$ of the parameters $f_i[l]$ and $A_i[l]$ characterizing the $i$-th target detected in the $l$-th frequency bin. Note that the integer part $\hat{\alpha}_i[l]$ of the frequency $\hat{f}_i[l]$ does not necessarily coincide with $\hat{\alpha}_I$ (see eq. (2.54)); however, if it differs, it is close to $\hat{\alpha}_I$. In the last case, if the quantity $\hat{\alpha}_i[l]$ appears in one of the couples of set $\mathcal{S}_b$ (2.23), it is discarded. Otherwise, the new couple

$$\left( \widehat{\alpha}_i\,[l], E_{b,L_b} \right),$$

(2.55)

where

$$E_{b,L_b} = \left| \widehat{A}_i\,[l] \right|^2,$$

(2.56)

is added to the set $\mathcal{S}_b$ and the number of its elements (denoted $\boldsymbol{L_b}$) is increased by one. This means that the STDAEC algorithm has to be run on this additional bin too. It is worth noting that if the STDAE algorithm is used for 2D imaging only, the frequency $\hat{F}_{V,i}[l]$ (2.42) is not available and, therefore, it is not employed in the overall folding.

In summary, the above method can be described as follows:

said optional estimate of the vertical spatial frequency ($\boldsymbol{F_V}$) and said estimate of the horizontal spatial frequency ($\boldsymbol{F_H}$) are employed to compute the phase difference between said reference antenna and said virtual antennas of said optional sub-set of HULAs to be used in said constructive combination (see Step 10.1.6 of Figure 29) to compute said overall folded spectrum ($\overline{\boldsymbol{X}}_{OF,0}$) and its first three derivatives ($\{\overline{\boldsymbol{X}}_{OF,k}; \boldsymbol{k = 1, 2, 3}\}$) by combining the spectral contributions referred to said sub-set of virtual antennas. Said checking (see Step 10.1.6 of Figure 29) is performed on the absolute value of said overall folded spectrum ($\overline{\boldsymbol{X}}_{OF,0}$).

In summary, the method for the refinement (see Step 10.1.6 of Figure 29) can be described as follows (see Steps 10.1.6.1.0 - 10.1.6.1.2 of Figure 34):

- (Step 10.1.6.1.0) representation of a target normalized frequency $F \triangleq f/f_s$ , where $\boldsymbol{f_s}$ is the sampling frequency, as sum of a main portion ($\alpha\,\boldsymbol{F_{DFT}}$) and a residual portion ($\delta\,\boldsymbol{F_{DFT}}$), where $F_{\mathrm{DFT}} \triangleq$ $\boldsymbol{1/N_0}$, where $\boldsymbol{N_0}$ is the FFT order, wherein said main portion is determined by searching the index ($\hat{\alpha}$) of the vector element $\overline{\boldsymbol{X}}_{OF,0,\hat{\alpha}}$ corresponding to the element of the vector $\overline{\boldsymbol{X}}_{OF,0}$ having the maximum absolute value and said residual frequency is found through an iterative procedure together with the corresponding target complex amplitude $A \triangleq a\,\exp(j\psi)$ , where $\boldsymbol{a}$ is said target amplitude and $\psi$ is said target phase;

- (Step 10.1.6.1.1) Said iterative procedure includes a preliminary initialization comprising:

setting the iteration index $\boldsymbol{i}$ to $\boldsymbol{1}$, the initial estimate of $\boldsymbol{A}$ equal to said vector element ($\overline{X}_{OF,0,\hat{\alpha}}$), the initial estimate of $\Delta \triangleq 2\pi\delta\,F_{\mathrm{DFT}}$ to zero and the initial estimate of $\boldsymbol{F}$ to said main portion ($\hat{\alpha}\,\boldsymbol{F_{DFT}}$);

then iteratively

- (Step 10.1.6.1.2) the $\boldsymbol{i}$-th iteration is fed by the estimates of $\Delta$, $\boldsymbol{F}$ and $\boldsymbol{A}$ computed in the previous iteration, to generate new estimates of $\Delta$, $\boldsymbol{F}$ and $\boldsymbol{A}$, for a predetermined number of iterations, wherein each iteration includes

a) a first step where the residual $\hat{\Delta}$ is calculated solving the first order equation $\boldsymbol{b}_{\hat{\alpha}}\tilde{\Delta} + \boldsymbol{c}_{\hat{\alpha}} = \boldsymbol{0}$ OR the second order equation $\boldsymbol{a}_{\hat{\alpha}}\tilde{\Delta}^2 + \boldsymbol{b}_{\hat{\alpha}}\tilde{\Delta} + \boldsymbol{c}_{\hat{\alpha}} = \boldsymbol{0}$ in the variable $\tilde{\Delta}$ with:

$$a_{\hat{\alpha}} \triangleq \Im\left\{ \widehat{A}^*\,\overline{X}_{OF,3,\hat{\alpha}} \right\},$$

$$b_{\hat{\alpha}} \triangleq \Re\left\{ \widehat{A}^*\,\overline{X}_{OF,2,\hat{\alpha}} \right\},$$

$$c_{\hat{\alpha}} \triangleq -\Im\left\{ \widehat{A}^*\,\overline{X}_{OF,1,\hat{\alpha}} \right\},$$

where $\Re\{\boldsymbol{x}\}$ denotes the real part and $\Im\{\boldsymbol{x}\}$ denotes the imaginary part of the complex quantity $\boldsymbol{x}$; discarding one of the two solutions, which does not satisfy the inequalities:

$$\begin{cases} 0 \leq \widetilde{\Delta} \leq \pi F_{\mathrm{DFT}} & \text{if } \widehat{\alpha} = 0 \\ -\pi F_{\mathrm{DFT}} < \widetilde{\Delta} \leq \pi F_{\mathrm{DFT}} & \text{otherwise} \end{cases}.$$

if said second order equation is solved; then the new estimate of $F$ is obtained by adding said residual ($\widehat{\Delta}\, F_{\mathbf{DFT}}$) to said main portion ($\widehat{\alpha}\, F_{\mathbf{DFT}}$);

b) a second step wherein said new estimate of F is employed to compute the new estimate of $A$ as $\widehat{A} = \overline{X}_{int}(\widehat{F})$ and $\overline{X}_{int}(\widehat{F})$ is generated by interpolating the elements of said vector $M\overline{X}_{OF,0}$ where $M$ is said oversampling factor employed in said FFT calculations.

The above mentioned Steps 10.1.6.1.1 - 10.1.6.1.2 of Figure 34 can be replaced by an alternative method including (see Steps 10.1.6.2.1 - 10.1.6.2.2 of Figure 35):

- (Step 10.1.6.2.1) Said iterative procedure includes a preliminary initialization comprising:

    a) setting the iteration index $i$ to $1$, the initial estimate of $A$ equal to said vector element ($\overline{X}_{OF,0,\hat{\alpha}}$), the initial estimate of $\Delta \triangleq 2\pi\delta\, F_{\mathrm{DFT}}$ to zero and the initial estimate of $F$ to said main portion ($\widehat{\alpha}\, F_{\mathbf{DFT}}$);

    b) computing the real quantity $\rho \triangleq F/F_{\mathrm{DFT}}$;

    then iteratively

- (Step 10.1.6.2.2) the $i$-th iteration is fed by the estimates of $\Delta$, $F$ and $A$ and the real quantity $\rho$ computed in the previous iteration, to generate new estimates of $\Delta$, $F$, $A$ and $\rho$, for a predetermined number of iterations, wherein each iteration includes:

    a) a first step where the residual $\widehat{\Delta}$ is calculated solving the first order equation $b_{\hat{\alpha}}\widetilde{\Delta} + c_{\hat{\alpha}} = 0$ OR the second order equation $a_{\hat{\alpha}}\widetilde{\Delta}^2 + b_{\hat{\alpha}}\widetilde{\Delta} + c_{\hat{\alpha}} = 0$ in the variable $\widetilde{\Delta}$ with:

$$a_{\hat{\rho}} \triangleq \Im\left\{\widehat{A}^* \overline{X}_{OF,3,\hat{\rho}}\right\},$$

$$b_{\hat{\rho}} \triangleq \Re\left\{\widehat{A}^* \overline{X}_{OF,2,\hat{\rho}}\right\},$$

$$c_{\hat{\rho}} \triangleq -\Im\left\{\widehat{A}^* \overline{X}_{OF,1,\hat{\rho}}\right\},$$

    where $\Re\{x\}$ denotes the real part, $\Im\{x\}$ denotes the imaginary part of the complex quantity $x$ and $\{\overline{X}_{OF,k,\hat{\rho}};\ k = 1,2,3\}$ is computed by interpolating the elements of said overall folded spectrum ($\overline{X}_{OF,k}$); discarding one of the two solutions, which does not satisfy the inequalities:

$$\begin{cases} 0 \leq \widetilde{\Delta} \leq \pi F_{\mathrm{DFT}} & \text{if } \widehat{\alpha} = 0 \\ -\pi F_{\mathrm{DFT}} < \widetilde{\Delta} \leq \pi F_{\mathrm{DFT}} & \text{otherwise} \end{cases}.$$

    if said second order equation is solved; then the new estimate of $F$ is obtained by adding said residual ($\widehat{\Delta}\, F_{\mathbf{DFT}}$) to said estimate of $F$;

    b) a second step wherein the new estimate of $\rho$ is computed by dividing said new estimate of $F$ by $F_{\mathbf{DFT}}$;

    c) a third step wherein said new estimate of $F$ is employed to compute the new estimate of $A$ as $\widehat{A} = \overline{X}_{int}(\widehat{F})$ and $\overline{X}_{int}(\widehat{F})$ is generated by interpolating the elements of said vector $M\overline{X}_{OF,0}$ where $M$ is said oversampling factor employed in said FFT calculations.

**STDAEC-S2)** *Target cancellation* - The contribution $\mathbf{C}_{X_0}^{(i)}[l]$, given by the *i*-th target detected in the *l*-th frequency bin, to the vector $\mathbf{X}^{(i)}[l]$ (2.31) is computed (see eqs. (4.230)-(4.231)) and is cancelled. Cancellation consists in the computation of the new *residual* vector

$$\mathbf{X}^{(i+1)}[l] \triangleq \mathbf{X}^{(i)}[l] - \mathbf{C}_{X_0}^{(i)}[l]. \tag{2.57}$$

In summary, the above method can be described as follows:
said cancellation (see Step 10.2 of Figure 29) includes the computation and substraction of the contribution given by said dominant point target to the spectral contribution reffered to said considered frequency bin to generate a new residual of the spectrum and of the corresponding derivates.

STDAEC-S3) Residual energy test - The energy

$$E^{(i+1)}[l] \triangleq \left\| \mathbf{X}^{(i+1)}[l] \right\|^2 = \sum_{p=0}^{N_{VH}-1} \sum_{q=0}^{N_{VV}-1} \left| X_l^{(i+1)}[p, q] \right|^2 \tag{2.58}$$

of the residual spectrum vector $\mathbf{X}^{(i+1)}[l]$ (2.57) is compared with the positive threshold $T_{\mathbf{STDAEC}}$ (which may exhibit an angle dependence). If this energy is below the threshold, the STDAEC algorithm stops; otherwise, the recursion index *i* is increased by one and a new iteration is started by going back to **STDAEC-S1.**

If *D[l]* iterations are accomplished by the STDAEC algorithm operating on the $\hat{\alpha}_r$-th frequency bin, no more than *D[l]* distinct targets are identified in that bin (*D[l]* targets are found if none of them is deemed to be a ghost target). All the target information acquired from the $\hat{\alpha}_r$-th frequency bin are collected in the set

$$\mathcal{T}_l \triangleq \left\{ \left( \widehat{A}_i[l], \widehat{f}_i[l], \widehat{\alpha}_i[l], \widehat{F}_{V,i}[l], \widehat{F}_{H,i}[l] \right); i = 0,1,\ldots,D[l] - 1 \right\}, \tag{2.59}$$

with *l = 0, 1, ..., $L_b$ - 1*. Note that, as already mentioned for the STDREC algorithm, the STDAEC algorithm can be easily extended in a way that multiple angles are detected and estimated in parallel. This means that multiple instances of the CSFE algorithm are run in parallel.

**T3-S2)** *Evaluation of spatial coordinates and generation of the overall image* - This task aims at: a) computing the spatial coordinates of all the targets on the basis of the spatial information generated by the $L_b$ STDAEC algorithms and collected in the $L_b$ sets $\{\mathcal{T}_l\}$ (see eq. (2.59)); b) generating the overall image of the propagation scenario. More specifically, the estimates of the range, of the elevation and of the azimuth of the i-th target detected in the $\hat{\alpha}_r$-th frequency bin are computed as (see eqs. (1.7)-(1.9) and (2.28)-(2.29))

$$\widehat{R}_i[l] = \frac{c}{2\mu} \widehat{f}_i[l], \tag{2.60}$$

$$\widehat{\phi}_i[l] = \arcsin\left( \frac{\lambda}{2d_{VV}} \widehat{F}_{V,i}[l] \right) \tag{2.61}$$

and

$$\widehat{\theta}_i[l] = \arcsin\left( \frac{\lambda}{2d_{VH}\cos(\widehat{\phi}_i[l])} \widehat{F}_{H,i}[l] \right), \tag{2.62}$$

respectively. Finally, these information are fused to generate the overall set

$$\mathcal{I}_t \triangleq \left\{ \left( \widehat{R}_l, \widehat{\theta}_l, \widehat{\phi}_l, \left| \widehat{A}_l \right| \right); l = 0,1, \dots, \widehat{L} - 1 \right\}, \qquad (2.63)$$

describing the generated radar image, which, generally speaking, is a cloud of $\widehat{L}$ points. The set $\mathcal{I}_t$ results from the union of all the sets $\left\{ \mathcal{I}_t^{(l)} \right\}$, where

$$\mathcal{I}_t^{(l)} \triangleq \left\{ \left( \widehat{R}_i[l], \widehat{\theta}_i[l], \widehat{\phi}_i[l], \left| \widehat{A}_i[l] \right| \right); i = 0,1, \dots, D[l] - 1 \right\}, \qquad (2.64)$$

with $l$ = 0, 1, ..., $L_b$ - 1.

It is worth stressing that if the STDAE algorithm is used for 2D imaging only, the frequency $\widehat{F}_{V,i}[l]$ (2.42) is not available and, therefore, it is not included in the set $\mathcal{T}_l$ (2.59) and, as a consequence, the elevation angle $\widehat{\phi}_i[l]$ (2.61) can not be estimated.

In summary, the method for the evaluation of the spatial coordinates can be summarized as follows:

if the optional steps (Step 10.1.1 - Step 10.1.3 of Figure 29) are carried out, said computation (see Step 11 of Figure 27) includes the computation of the range ($\widehat{\mathbf{R}}$), the elevation ($\widehat{\phi}$) and the azimuth ($\widehat{\theta}$) as:

$$\widehat{R} = \frac{c}{2\mu} \widehat{F} f_s,$$

$$\widehat{\phi} = \arcsin\left( \frac{\lambda}{2 d_{VV}} \widehat{F}_V \right)$$

and

$$\widehat{\theta} = \arcsin\left( \frac{\lambda}{2 d_{VH} \cos(\widehat{\phi})} \widehat{F}_H \right)$$

respectively, and, if the optional steps (Step 10.1.1 - Step 10.1.3 of Figure 29) are not carried out, said computation (see Step 11 of Figure 27) includes the computation of the range ($\widehat{\mathbf{R}}$) and the azimuth ($\widehat{\theta}$) as:

$$\widehat{R} = \frac{c}{2\mu} \widehat{F} f_s$$

and

$$\widehat{\theta} = \arcsin\left( \frac{\lambda}{2 d_{VH}} \widehat{F}_H \right)$$

respectively, here, $\mu$ is the radar chirp rate, c is the speed of light, $\lambda$ is the radar wavelength, $\mathbf{d_{VV}}$ is the distance between two adjacent virtual antennas of said VULAs and $d_{VH}$ is the distance between two adjacent virtual antennas of said HULAs.

### 2.2.2. Embodiment #2

The processing accomplished in the second embodiment of the proposed method is described by the block diagram illustrated in Figure 12 and can be divided in three tasks, each associated with one of the blocks appearing in that figure (the $i$-th task is denoted T$i$ in the following). In all these tasks, a single array snapshot is processed. The first two tasks of this embodiment (namely, those concerning FFT processing and RPE) coincide with that of the first embodiment. For this reason, in the remaining part of this paragraph, the third task only is sketched; additional details about the algorithms employed in this task are provided in Paragraph 4.2.

In the third task of this embodiment, spatial estimation is accomplished *serially* i.e., *on a bin-by-bin basis;* moreover, the identified frequency bins are analysed in an ordered way and, more precisely, according to decreasing energies; in the following we assume, for simplicity, that the bins in the set $\mathcal{S}_b$ (2.23) have been ordered according to decreasing energies, so that

$$E_{b,l} \geq E_{b,l-1} \qquad (2.65)$$

for $l$ = 0,1, ... , $L_b$ - 1.

In summary, for the second embodiment, said acquisition (see Step 8 of Figure 27) includes the acquisition of target energy and wherein said execution (see Step 10 of Figure 27) is repeated sequentially over the acquired list, ordered according to said target energy, and wherein said generation of the overall image (Step 11 of Figure 27) is carried out when all the frequency bins have been analyzed.

The SPE is initialised by setting

$$\mathbf{X}_{m,v}^{(0)} \triangleq \mathbf{X}_{m,v}, \qquad (2.66)$$

with $m$ = 0,1,2 and the bin index $l$ to $\mathbf{0}$. Then, $L_b$ consecutive iterations are run. In the $l$-th iteration, the STDAEC algorithm is run to a) estimate, on the basis of the $N_{VH} \times N_{VV}$ matrix

$$\mathbf{X}^{(i)}[l] \triangleq \left[ X_l^{(i)}[p,q] \right], \qquad (2.67)$$

the angular parameters of the $\overline{D}[l]$ distinct targets contributing to that bin. A refined estimate of the range for all the targets detected in the considered frequency bin is computed on the basis of set of triads $\{(\mathbf{X}_{0,v}^{(l)}, \quad \mathbf{X}_{1,v}^{(l)}, \quad \mathbf{X}_{2,v}^{(l)})\}$. Then, the estimates of the range and of the angular parameters of the $\overline{D}[l]$ detected targets are: a) made available at the output of the SPE; b) processed by another algorithm, called single bin cancellation (SBC). The SBC algorithm estimates the contributions $\{(\mathbf{C}_{X_0,v}^{(l)}, \mathbf{C}_{X_1,v}^{(l)}, \mathbf{C}_{X_2,v}^{(l)})\}$ of these targets (i.e., of the $l$-th frequency bin) to the set of triads $\{(\mathbf{X}_{0,v}^{(l)}, \quad \mathbf{X}_{1,v}^{(l)}, \quad \mathbf{X}_{2,v}^{(l)})\}$ (see eqs. (4.11)-(4.13)) and cancels it. Cancellation consists in the computation of the new residual triad

$$\mathbf{X}_{m,v}^{(l+1)} \triangleq \mathbf{X}_{m,v}^{(l)} - \mathbf{C}_{X_m,v}^{(l)}, \qquad (2.68)$$

with $m$ = 0, 1, 2 and $v$ = 0, 1, ..., $N_{VR}$ - 1. Finally, if $l$ < $L_b$ - 1, $l$ is increased by one and a new iteration is started; otherwise, if $l$ = $L_b$ - 1, processing is over. A similar adaptation for 2D imaging can be derived also for the second embodiment since it is based on the same algorithms adopted in the first one.

In summary, the above method can be described as follows:
said cancellation (see Step 10.2 of Figure 29) includes the computation and subtraction of the contribution given by said dominant point target to said spectrum ( $\overline{\mathbf{X}}_0^{(v)}$ ) and to the corresponding derivatives to generate a new residual of the spectrum and of the corresponding derivatives.

## 2.3. SFCW radar system

The two embodiments described above for a FMCW radar system can be easily adapted to the case of a SFCW radar system.

In summary, in the present invention is presented a method for the detection of targets through a MIMO SFCW radar equipped with a plurality of transmitting (TX) and receiving (RX) antennas, wherein each couple of said TX and RX antennas is replaced with the equivalent virtual antenna; said MIMO SFCW radar is arranged to generate complex signals in response to a propagation scenario including a plurality of point targets; said method includes (see Steps 1 - 6 of Figure 36):

- (Step 1: IFFT processing) estimation of the impulse response ( $\overline{\mathbf{X}}_0^{(v)}$ ) characterizing the communication channel associated with the said equivalent virtual antenna and its first $N_{FFT}$ - **1** derivatives ( $\{\overline{\mathbf{X}}_k^{(v)}; \ k = 1, \ldots, N_{FFT} - 1\}$ ) with $N_{FFT}$ = **4,** for each of said virtual antennas through IFFT calculation, with an oversampling factor (**M**),
- (Step 2: RVA selection) acquisition of a sub-set of a number ($N_A$) of virtual antennas impulse response and of the corresponding derivatives,
Recursive execution of
- (Step 3: STDREC-S1) calculation of an estimate of the parameters of the most dominant point target, including phase (**ψ**), amplitude (**a**) and delay (**τ**) for each of said virtual antennas of said sub-set on the basis of said impulse response, and its derivatives, through $N_{FFT}$ - **1** IFFTs for each of said virtual antennas of said sub-set,
- (Step 4: STDREC-S2) cancellation of said most dominant point target and computation of a residual impulse response,
- (Step 5: STDREC-S3) computation of an energy of said residual impulse response and return to (Step 3) until said energy is over a predetermined threshold (**$T_{STDREC}$**), otherwise
- (Step 6) computation of an average energy and fusion of ranges information of said point targets detected by said number of virtual antennas to list said point targets according to said average energy in a decreasing order.

### 2.3.1. Embodiment #1

In this paragraph we analyse the main changes that need to be introduced in the embodiment #1 to adapt it to a MIMO SFCW radar system. As far as **T1** is concerned, the only required change is represented by the replacement of: a) the vector $\mathbf{r}_V$ (1.6) with the vector $\mathbf{x}_v$ (1.22); b) each FFT with an inverse FFT (IFFT). This means that the spectra $\{\mathbf{X}_{0,v}, \mathbf{X}_{1,v}, \mathbf{X}_{2,v}; v = 0, 1, \ldots, N_{VR} - 1\}$ computed in T1 (now called **IFFT processing**) provide time domain information and, in particular, information about the impulse responses of the communication channels associated with all the available RVAs. For this reason, frequency bins are replaced by bins in the time domain; such bins are called delay bins in the remaining part of this document.

The changes to be made in **T2** concern its second step (i.e., the STDREC algorithm), since the noisy measurements processed in this step are always complex (see eqs. (1.22)-(1.23)); the new structure of this step is summarized below.

**T2-S2)** *Target detection and range estimation* - In this step, that aims at detecting the most relevant targets on *each* of the $N_A$ antennas, a minor change is required in the cancellation procedure with respect to its counterpart employed in the MIMO FMCW radar system. This is due to the fact that, as already stated above, the noisy measurements processed in a MIMO SFCW radar system are always represented by *complex* (frequency-domain) sequences.

The initialization of the STDREC algorithm remains unchanged: the vectors $\mathbf{X}_{0,v_k}^{(0)}$, $\mathbf{X}_{1,v_k}^{(0)}$ and $\mathbf{X}_{2,v_k}^{(0)}$ are defined on the basis of eq. (2.10) (with **k = 0, 1, ..., $N_A$ - 1).** In its i-th iteration, this algorithm accomplishes the three steps described below (these are denoted STDREC-S**p** in the following, with **p = 1, 2** and 3) .

**STDREC-S1)** *Detection of a new target and estimation of its parameters* - In this step, the delay $\tau_{v_k}^{(i)}$ and the complex amplitude $A_{v_k}^{(i)}$ associated with the i-th target are estimated. Note that, generally speaking, the delay $\tau_{v_k}^{(i)}$ is not a multiple of of the *fundamental delay*

$$\tau_{\mathrm{IDFT}} = \frac{1}{N_0 \, \Delta f} \qquad (2.69)$$

characterizing the output of the IFFT processing executed in task **T1;** for this reason, it can be expressed as

$$\tau_{v_k}^{(i)} = \alpha_{v_k}^{(i)} \tau_{\mathrm{IDFT}} + \delta_{v_k}^{(i)} \tau_{\mathrm{IDFT}}, \qquad (2.70)$$

where $\alpha_{v_k}^{(i)}$ is an integer parameter belonging to the set {0, 1, ..., $N_0$ - 1} and $\delta_{v_k}^{(i)}$ is a real parameter, such that the conditions expressed by eq. (2.13) are satisfied. The processing accomplished in this step is executed by an algorithm dubbed complex single delay estimator (CSDE) in the following (see Paragraph 4.1.4); this computes the estimates $\widehat{h}_{v_k}^{(i)}$, $\widehat{\alpha}_{v_k}^{(i)}$, $\widehat{\delta}_{v_k}^{(i)}$ and

$$\widehat{\tau}_{v_k}^{(i)} = \widehat{\alpha}_{v_k}^{(i)} \tau_{\mathrm{IDFT}} + \widehat{\delta}_{v_k}^{(i)} \tau_{\mathrm{IDFT}} \qquad (2.71)$$

of the parameters $h_{v_k}^{(i)}$, $\alpha_{v_k}^{(i)}$, $\delta_{v_k}^{(i)}$ and $\tau_{v_k}^{(i)}$, respectively, on the basis of the triad $(\mathbf{X}_{0,v_k}^{(i)},\ \mathbf{X}_{1,v_k}^{(i)},\ \mathbf{X}_{2,v_k}^{(i)})$.

In summary, the above method can be described as follows:
when a base-band signal made available by said radar is complex with in phase and quadrature components, Step 3 of Figure 36 includes (see Steps 3.5.0 - 3.5.2 of Figure 37):

- (Step 3.5.0) representation of a target normalized delay $T \triangleq \tau \Delta f$, where $\Delta f$ is the frequency step size of the employed radar, as sum of a main portion ($\alpha F_{\mathbf{IDFT}}$) and a residual portion ($\delta F_{\mathbf{IDFT}}$), where $F_{\mathrm{IDFT}} \triangleq 1/N_0$, where $N_0$ is the IFFT order, wherein said main portion is determined by searching the index ($\hat{\alpha}$) of the vector element $\overline{X}_{0,\hat{\alpha}}^{(v)}$ corresponding to the maximum absolute value of the same vector $\overline{\mathbf{X}}_0^{(v)}$ and said residual portion is found through an iterative procedure together with the corresponding target complex amplitude $A \triangleq a \exp(-j\psi)$, where $a$ is said target amplitude and $\psi$ is said target phase.

- (Step 3.5.1) Said iterative procedure includes a preliminary initialization comprising:

  setting the iteration index $i$ to 1, the initial estimate of $A$ equal to said vector element ( $\overline{X}_{0,\hat{\alpha}}^{(v)}$ ), the initial estimate of $\Delta \triangleq 2\pi\delta F_{\mathbf{IDFT}}$ to zero and the initial estimate of $T$ to said main portion ($\hat{\alpha} F_{\mathbf{IDFT}}$);

  then iteratively

- (Step 3.5.2) the $i$-th iteration is fed by the estimates of $\Delta$, $T$ and $A$ computed in the previous iteration, to generate new estimates of $\Delta$, $T$ and $A$, for a predetermined number of iterations, wherein each iteration includes

  a) a first step where the residual $\hat{\Delta}$ is calculated solving the first order equation $b_{\hat{\alpha}}\tilde{\Delta} + c_{\hat{\alpha}} = 0$ OR the second order equation $a_{\hat{\alpha}}\tilde{\Delta}^2 + b_{\hat{\alpha}}\tilde{\Delta} + c_{\hat{\alpha}} = 0$ in the variable $\tilde{\Delta}$ with:

$$a_{\hat{\alpha}} \triangleq \Im\left\{\widehat{A}^* \overline{X}_{3,\hat{\alpha}}^{(v)}\right\},$$

$$b_{\hat{\alpha}} \triangleq -\Re\left\{\widehat{A}^* \overline{X}_{2,\hat{\alpha}}^{(v)}\right\},$$

$$c_{\hat{\alpha}} \triangleq -\Im\left\{\widehat{A}^* \overline{X}_{1,\hat{\alpha}}^{(v)}\right\},$$

where $\Re\{x\}$ denotes the real part and $\widetilde{\Im}\{x\}$ denotes the imaginary part of the complex quantity x; discarding one of the two solutions, which does not satisfy the inequalities:

$$\begin{cases} 0 \le \widetilde{\Delta} \le \pi F_{\mathrm{IDFT}} & \text{if } \widehat{\alpha} = 0 \\ -\pi F_{\mathrm{IDFT}} < \widetilde{\Delta} \le \pi F_{\mathrm{IDFT}} & \text{otherwise} \end{cases}$$

if said second order equation is solved; then the new estimate of *T* is obtained by adding said residual ($\hat{\Delta}$ *F*<sub>IDFT</sub>) to said main portion ($\hat{\alpha}$ *F*<sub>IDFT</sub>);

b) a second step wherein said new estimate of *T* is employed to compute the new estimate of *A* as $\hat{A} = \overline{X}_{int}(\hat{T})$ and $\overline{X}_{int}(\hat{T})$ is generated by interpolating the elements of said vector $M\overline{\mathbf{X}}_0^{(v)}$ where *M* is said oversampling factor employed in said IFFT calculation.

The above mentioned Steps 3.5.1 and 3.5.2 of Figure 37 can be replaced by an alternative method including (see Steps 3.6.1 - 3.6.2 of Figure 38):

- (Step 3.6.1) Said iterative procedure includes a preliminary initialization comprising:

   a) setting the iteration index *i* to 1, the initial estimate of *A* equal to said vector element $\overline{X}_{0,\widehat{\alpha}}^{(v)}$, the initial estimate of $\Delta \triangleq 2\pi\delta$ *F*<sub>IDFT</sub> to zero and the initial estimate of *T* to said main portion ($\hat{\alpha}$ *F*<sub>IDFT</sub>);

   b) computing the real quantity $\rho \triangleq T/F_{\mathrm{IDFT}}$;

then iteratively
- (Step 3.6.2) the *i*-th iteration is fed by the estimates of Δ, *T*, *A* and the real quantity $\rho$ computed in the previous iteration, to generate new estimates of Δ, *T*, *A* and $\rho$, for a predetermined number of iterations, wherein each iteration includes:

   a) a first step where the residual $\hat{\Delta}$ is calculated solving the first order equation $b_{\widehat{\alpha}}\widetilde{\Delta} + c_{\widehat{\alpha}} = 0$ OR the second order equation $a_{\widehat{\alpha}}\widetilde{\Delta}^2 + b_{\widehat{\alpha}}\widetilde{\Delta} + c_{\widehat{\alpha}} = 0$ in the variable $\widetilde{\Delta}$ with:

$$a_{\widehat{\rho}} \triangleq \Im\left\{\widehat{A}^* \overline{X}_{3,\widehat{\rho}}^{(v)}\right\},$$

$$b_{\widehat{\rho}} \triangleq -\Re\left\{\widehat{A}^* \overline{X}_{2,\widehat{\rho}}^{(v)}\right\},$$

$$c_{\widehat{\rho}} \triangleq -\Im\left\{\widehat{A}^* \overline{X}_{1,\widehat{\rho}}^{(v)}\right\},$$

where $\Re\{x\}$ denotes the real part, $\Im\{x\}$ denotes the imaginary part of the complex quantity *x* and $\{\overline{X}_{k,\widehat{\rho}}^{(v)}; k = 1,2,3\}$ is computed as:

$$\overline{X}_{k,\widehat{\rho}}^{(v)} \triangleq \frac{1}{N_0} \sum_{n=0}^{N-1} n^k x_{c,n}^{(v)} \exp\left(j \frac{2\pi n\widehat{\rho}}{N_0}\right)$$

where $x_{c,n}^{(v)}$ is the *n*-th element of the said complex base-band signal acquired on the *v*-th antenna; said coefficients ($\{\overline{X}_{k,\widehat{\rho}}^{(v)}; k = $ **1,2,3**}) can be also computed by interpolating the samples of said impulse response ($\overline{\mathbf{X}}_k^{(v)}$); discarding one of the two solutions, which does not satisfy the inequalities:

$$\begin{cases} 0 \le \widetilde{\Delta} \le \pi F_{\mathrm{IDFT}} & \text{if } \hat{\alpha} = 0 \\ -\pi F_{\mathrm{IDFT}} < \widetilde{\Delta} \le \pi F_{\mathrm{IDFT}} & \text{otherwise} \end{cases}$$

if said second order equation is solved; then the new estimate of $T$ is obtained by adding said residual ($\hat{\Delta} F_{\mathrm{IDFT}}$) to said estimate of $T$;

b) a second step wherein the new estimate of $\rho$ is computed by dividing said new estimate of $T$ by $F_{\mathrm{IDFT}}$;

c) a third step wherein said new estimate of $T$ is employed to compute the new estimate of $A$ as $\hat{A} = \overline{X}_{int}(\hat{T})$ and $\overline{X}_{int}$ ($\hat{T}$) is generated by interpolating the elements of said vector $M\overline{\mathbf{X}}_0^{(v)}$ where $M$ is said oversampling factor employed in said IFFT calculations.

**STDREC-S2)** *Cancellation of the new target* - The contributions ( $\mathbf{C}_{X_0,v_k}^{(i)}$ , $\mathbf{C}_{X_1,v_k}^{(i)}$ , $\mathbf{C}_{X_2,v_k}^{(i)}$ given by the i-th (i.e., by the last) target detected on the $v_k$-th RVA to the triad $(\mathbf{X}_{0,v_k}^{(i)}$ , $\mathbf{X}_{1,v_k}^{(i)}$ , $\mathbf{X}_{2,v_k}^{(i)})$ , are computed on the basis of eqs. (4.214)-(4.216) (see Paragraph 4.1.6). Therefore, the cancellation procedure consists again in the computation of the new *residual* triad on the basis of eq. (2.15).

In summary, the above method can be summarized by considering that said cancellation, see Step 4 of Figure 36, includes the computation and subtraction of the contribution given by said dominant target to said impulse response ( $\overline{\mathbf{X}}_0^{(v)}$ ) and to the corresponding derivatives to compute a residual of the impulse response and of the corresponding derivatives.

**STDREC-S3)** Computation of the residual energy in the time domain - The energy

$$E_{v_k}^{(i+1)} \triangleq \left\| \mathbf{X}_{0,v_k}^{(i+1)} \right\|^2 = \sum_{p=0}^{N_0-1} \left| X_{0,v_k,p}^{(i+1)} \right|^2 \qquad (2.72)$$

of the residual time-domain vector $\mathbf{X}_{0,v_k}^{(i+1)}$ is computed and compared with the positive threshold $T_{\mathrm{STDREC}}$. If this energy is below the threshold, the STDREC algorithm stops and $L_k = i$ relevant targets are detected on the $v_k$-th RVA; otherwise, the recursion index $i$ is increased by one and a new recursion is started (i.e., we go back to **STDREC-S1)**. Moreover, the following interpretation for the processing accomplished by the STDREC on the $v_k$-th RVA can be given. The vector $\mathbf{X}_{0,v_k}$ can be seen as a collection of noisy information referring to $N_0$ distinct delay bins (i.e., to $N_0$ distinct range bins) and is usually dense in the presence of multiple extended targets. The STDREC allows to extract a discrete delay (i.e., range) profile from the vector $\mathbf{X}_{0,v_k}$; such a profile is usually sparse.

**T2-S3)** *Range information fusion* - In this case, the set $\mathcal{A}_b$ (see eq. (2.17)) collects $L_b$ relevant time bins $\{\hat{\alpha}_l; l = 0, 1, ..., L_b$ -1}, whereas the set $\varepsilon_b$ contains the associated energies (see eq. (2.18)). The average energy associated with the $\hat{\alpha}_l$-th bin (with $l = 0, 1, ..., L_b$ - 1 ) is

$$E_{b,l} = \frac{1}{N_{b,l}} \sum_{k=0}^{N_A-1} \sum_{i=0}^{L_k-1} \left| A_{v_k}^{(i)} \right|^2 \delta\left[ \hat{\alpha}_{v_k}^{(i)} - \hat{\alpha}_l \right], \qquad (2.73)$$

where $N_{b,l}$ is defined by eq. (2.22). The final output of the information fusion is represented by the set $\mathcal{S}_b$ (2.23). Note that the cardinality $L_b$ of the last set represents a preliminary estimate of the overall number of targets.

In summary, the above fusion step (see Step 6 of Figure 36) can be described as follows (see Steps 6.1 - 6.2 of Figure 26):

-  (Step 6.1) fusion of the information provided by a number ($N_A$) of sub-sets collecting all the discretized ranges, named delay bins, of said plurality of targets detected on each virtual antenna, to generate the overall set made of said delay bins that appear at least once in said sub-sets.

- (Step 6.2) Method further comprising targets energies estimation and fusion thereof, wherein fusion of said target energies includes collecting the energies associated with all the delay bins of said sub-sets to compute the average energy associated with a given delay bin of said overall set by summing up the square of the absolute value of all the complex amplitudes corresponding to said delay bin for all said virtual antennas and dividing it by the overall number of antennas that contribute to the computed average energy.

According to another aspect of the present invention, it is herewith disclosed a method, which is per se inventive, for the estimation of the angles here called SPE.

It should be clear that the SPE can be implemented independently from the RPE. Indeed, the RPE represents an inventive method for the estimation of ranges, but, in the implementation of the SPE any known method, such as the periodogram method, for the estimation of the ranges can be implemented to feed the SPE.

In the same manner, RPE can be implemented independently from SPE, being possible to estimate angles from the ranges estimated by RPE, using known techniques, such as 2D IFFT processing over the whole receive array.

Of course, the implementation of both RPE and SPE in succession as disclosed on Figure 5 represents the best solution.

In summary, in the present invention is presented a method for estimating the angular coordinates of point targets whose range has been estimated through a MIMO SFCW radar equipped with a plurality of transmitting (TX) and receiving (RX) antennas, wherein each couple of said TX and RX antennas is replaced with the equivalent virtual antenna; said virtual antennas form a virtual array composed by one or multiple horizontal uniform linear arrays (HULAs) and, optionally, one or multiple vertical uniform linear arrays (VULAs); said MIMO SFCW radar is arranged to generate complex signals in response to a propagation scenario including a plurality of point targets; said method includes (see Steps 7 - 11 of Figure 27):

- (Step 7) acquisition of an impulse response ($\overline{\mathbf{X}}_0^{(v)}$) characterizing the communication channel associated with the said equivalent virtual antenna and its first $N_{FFT}$ **- 1** derivatives ($\{\overline{\mathbf{X}}_k^{(v)};\ k = 1,\ldots,N_{FFT} - 1\}$) with $N_{FFT}$ **= 4,** for each of said virtual antennas,

- (Step 8) acquisition of a list of a predetermined number of discretized ranges, named delay bins, of said previously detected point targets,

- (Step 9) selection of a reference antenna, an optional reference vertical uniform linear array, named Reference VULA, a reference horizontal uniform linear array, named Reference HULA, and, optionally, at least a sub-set with a number of said horizontal uniform linear arrays (HULAs) different from the Reference HULA,

- (Step 10 [STDAEC]) sequential execution for each of said delay bins; said execution includes:

- (Step 10.1 [STDAEC-S1]) estimation of the horizontal spatial delay and complex amplitude of the most dominant point target and optional estimation of the vertical spatial delay; said estimation includes:

- optional (Step 10.1.1 [STDAE-S1]) computation of the spectrum ($\overline{\mathbf{s}}_{VULA,0}$) of the sequence collecting the samples of said impulse response ($\overline{\mathbf{X}}_0$) referred to said Reference VULA in the considered delay bin and its first **3** derivatives ($\{\overline{\mathbf{s}}_{VULA,k};\ \boldsymbol{k = 1, 2, 3}\}$) through IFFT calculation with an oversampling factor ($\overline{M}$),

- optional (Step 10.1.2 [STDAE-S2]) estimation of said vertical spatial delay,

- optional (Step 10.1.3 [STDAE-S3]) combination of the spectra associated with the Reference HULA and said sub-set of HULAs, after compensating for the phase differences between the Reference HULA and said sub-set of HULAs employing said estimate of the vertical spatial delay ($\boldsymbol{T_V}$); said superposition, named vertical folding, generates a vertically folded impulse response,

- (Step 10.1.4 [STDAE-S4]) computation of the spectrum ($\overline{\mathbf{s}}_{HULA,0}$) and its first three derivatives ($\{\overline{\mathbf{s}}_{HULA,k};\ \boldsymbol{k = 1, 2, 3}\}$) of the sequence collecting the samples of said impulse response ($\overline{\mathbf{X}}_0$) referred to said Reference HULA in the considered delay bin, and optionally said spectrum is referred to said vertically folded impulse response if said optional steps (Step 10.1.1 - Step 10.1.3) are carried out; said computations are carried out through IFFT calculation with an oversampling factor ($\overline{M}$),

- (Step 10.1.5 [STDAE-S4]) estimation of said horizontal spatial delay,

- (Step 10.1.6 [STDAE-S5]) <u>checking</u> whether combination of the impulse responses associated with said virtual antennas of said Reference HULA, after compensating for their phase differences on the basis of said estimated horizontal delay and of said estimated vertical delay, generates an amplitude peak in the resulting impulse response, named overall folded impulse response, wherein the impulse responses are associated with said virtual antennas of said sub-set of HULAs if said optional steps (Step 10.1.1 - Step 10.1.3) are carried out; and when the checking is positive execution of the following steps:

  - (Step 10.1.7) refinement of said range and complex amplitude of said most dominant point target;

  - optional (Step 10.1.8 [DEEPLEARNING]) compensation for the amplitude distortion due to the non-uniform response of the antenna array for each of said virtual antennas on the basis of said refined complex amplitude (Step 10.1.7), said estimated horizontal delay and of said optionally estimated vertical delay employing a deep neural network to compute a new estimate of said complex amplitude for each of said virtual antennas,

- (Step 10.2 [STDAEC-S2]) cancellation of said most dominant point target,

  - (Step 10.3 [STDAEC-S3]) calculation of a residual energy in the considered delay bin and its comparison with a predetermined threshold ($T_{STDAEC}$), and checking whether said residual energy exceeds said predetermined threshold and, if so, return to said optional computation of the spectrum (Step 10.1.1) if the optional steps are executed or to computation of the spectrum (Step 10.1.4) if the optional steps are not executed, otherwise go to computation of the spatial coordinates (Step 11)

otherwise, in negative case of said checking (Step 10.1.6) execution of the following steps:

- (Step 10.4) updating of said acquired list of said delay bins and return to Step 10 for a further delay bin or exit when all delay bins are examined,
  wherein said execution (Step 10) ends when all the delay bins have been analyzed, then

- (Step 11) computation of the spatial coordinates of all the point targets belonging to all the delay bins on the basis of said spatial delays and said complex amplitude and generation of an overall image of the propagation scenario.

Said execution (see Step 10 of Figure 27) for the first embodiment is carried out by running multiple parallel processes whose number is equal to the number of said delay bins of said acquired list and said generation of the overall image (Step 11 of Figure 27) is carried out when all parallel processes have been executed.

The processing accomplished in **T3** (i.e., by the SPE) has the same structure and interpretation as that illustrated for the FMCW radar system since it aims at estimating the angular parameters of the targets on the basis of the discrete range profile computed in **T2**. However, frequency bins are now replaced by delay bins and, consequently, the normalised horizontal and vertical frequencies $F_{H,i}$ and $F_{V,i}$ by the normalised horizontal and vertical delays $T_{H,i}$ and $T_{V,i}$, respectively. Note also that, in step **T3-S1,** the matrix $\mathbf{X}[l]$ is still defined on the basis of eq. (2.24), but the complex amplitude $A_i[p,q,l]$ appearing in eq. (2.25) is replaced by (see eqs. (1.7) and (1.23)-(1.24)):

$$
\begin{aligned}
&A_i[p, q, l] \\
&= A_i[l]\exp\left[-j\frac{4\pi}{\lambda}[d_{VH}(p - p_R)\cos(\phi_i[l])\sin(\theta_i[l]) + d_{VV}(q - q_R)\sin(\phi\right.
\end{aligned}
$$

(2.74)

where $A_i[l]$ is the complex amplitude observed for the $i$-th target in the $l$-th time bin on the reference RVA. This equation leads to some important differences in the formulas employed by the STDAE algorithm in the estimation of the parameters $(\theta_i[l],\phi_i[l],\tau_i[l],A_i[l])$ (see **STDAEC-S1**) with respect to the case of a MIMO FMCW radar system.

In summary, the above mentioned acquisition (see Step 8 of Figure 27) includes (see Steps 8.1 - 8.2 of Figure 28):

- (Step 8.1) acquisition of a list of a predetermined number of discretized ranges of said plurality of targets by selecting the indices of distinct delay bins where at least one point target is detected.

- (Step 8.2) Method further comprising the acquisition of a list of a predetermined number of targets energy corresponding to said discretized ranges.

In summary, similarly as the FMCW radar system, the selection (see Step 9 of Figure 27) includes:

- said optional Reference VULA consists of a sub-set of adjacent and vertically aligned virtual antennas,
- said Reference HULA consists of a sub-set of adjacent and horizontally aligned virtual antennas,
- each HULA of said optional sub-set of HULAs, different from the reference HULA, has the same size of the reference HULA.

In summary, similarly as the FMCW radar system, said estimation (see Step 10.1 of Figure 29) includes a preliminary step (Step 10.1.0) including:

a) setting the iteration index i to 1,

b) defining a matrix collecting the samples of the said impulse response ( $\overline{\mathbf{X}}_0^{(v)}$ ) available for each of said virtual antennas and corresponding to the considered delay bin only,

optional c) extracting a vector, referring to said Reference VULA only, from said matrix.

**STDAE-S1)** *IFFT processing on the reference VULA* - In this step, the vector

$$\mathbf{s}_{\text{VULA},k}^{(i)}[l] = \left[ s_{k,0}^{(i)}[l], s_{k,1}^{(i)}[l], \ldots, s_{k,\overline{N}_0 - 1}^{(i)}[l] \right]^T \triangleq \text{IDFT}_{\overline{N}_0}\left[ \overline{\mathbf{s}}_{\text{VULA},k}^{(i)}[l] \right], \qquad (2.75)$$

is evaluated for *k* = 0,1,2 and 3; note that

$$s_{k,m}^{(i)}[l] \triangleq \frac{\overline{N}_0}{N_{VULA}} \sum_{p=0}^{N_{VULA}-1} S_{k,p}^{(i)}[l] \exp\left( j \frac{2\pi p m}{\overline{N}_0} \right), \qquad (2.76)$$

with *m* = 0, 1, ..., $\overline{N}_0$ - 1, and that the quantity $S_{k,p}^{(i)}[l]$ is defined by eq. (2.34).

**STDAE-S2)** *Single angle estimation* - A representation similar to that expressed by eq. (2.40) for the vertical frequency $F_{V,i}[l]$ can be adopted for normalised vertical delay $T_{V,i}[l]$; in this case, the quantities $\beta_{V,i}[l]$ and $\Delta_{V,i}[l]$ are computed by the CSDE algorithm (see Paragraph 4.1.4).

In summary, the method for the estimation of the vertical spatial frequency (see Step 10.1.2 of Figure 29) can be described as follows (see Steps 10.1.2.1.0 - 10.1.2.1.2 of Figure 39):

- (Step 10.1.2.1.0) representation of a target vertical spatial delay ($T_V$), as sum of a main portion ($\beta_V F_{\text{IDFT}}$) and a residual portion ($\delta_V F_{\text{IDFT}}$), where $F_{\text{IDFT}} \triangleq 1/\overline{N}_0$ , where $\overline{N}_0$ is the IFFT order, wherein said main portion is determined by searching the index ($\hat{\beta}_V$) of the vector element $\overline{s}_{\text{VULA},0,\hat{\beta}_v}$ corresponding to the maximum absolute value of the elements of the vector $\overline{s}_{\text{VULA},0}$ and said residual delay computation is optional and can be found through an iterative procedure together with the corresponding target complex amplitude $A \triangleq a \exp(-j\psi)$ , where *a* is said target amplitude and $\psi$ is said target phase.

- (Step 10.1.2.1.1) Said iterative procedure includes a preliminary initialization comprising:

  setting the iteration index i to 1, the initial estimate of A equal to said vector element ($\overline{s}_{\text{VULA},0,\hat{\beta}_v}$), the initial estimate of $\Delta_V \triangleq 2\pi\delta_V F_{\text{IDFT}}$ to zero and the initial estimate of $T_V$ to said main portion ($\hat{\beta}_V F_{\text{IDFT}}$);

  then iteratively

- (Step 10.1.2.1.2) the i-th iteration is fed by the estimates of $\Delta_V$, $T_V$ and A computed in the previous iteration, to generate

new estimates of $\Delta_V$, $T_V$ and A, for a predetermined number of iterations, wherein each iteration includes:

a) a first step where the residual $\hat{\Delta}_V$ is calculated solving the first order equation $b_{\hat{\beta}}\tilde{\Delta}_V + c_{\hat{\beta}} = 0$ OR the second order equation $a_{\hat{\beta}}\tilde{\Delta}_V^2 + b_{\hat{\beta}}\tilde{\Delta}_V + c_{\hat{\beta}} = 0$ in the variable $\tilde{\Delta}_V$ with:

$$a_{\hat{\beta}} \triangleq \mathfrak{I}\left\{\hat{A}^* \bar{s}_{\text{VULA},3,\hat{\beta}_V}\right\},$$

$$b_{\hat{\beta}} \triangleq -\mathfrak{R}\left\{\hat{A}^* \bar{s}_{\text{VULA},2,\hat{\beta}_V}\right\},$$

$$c_{\hat{\beta}} \triangleq -\mathfrak{I}\left\{\hat{A}^* \bar{s}_{\text{VULA},1,\hat{\beta}_V}\right\},$$

where $\mathfrak{R}\{x\}$ denotes the real part and $\mathfrak{I}\{x\}$ denotes the imaginary part of the complex quantity $x$; discarding one of the two solutions, which does not satisfy the inequalities:

$$\begin{cases} 0 \leq \tilde{\Delta}_V \leq \pi F_{\text{IDFT}} & \text{if } \hat{\beta}_V = 0 \\ -\pi F_{\text{IDFT}} < \tilde{\Delta}_V \leq \pi F_{\text{IDFT}} & \text{otherwise} \end{cases}$$

if said second order equation is solved; then the new estimate of $T_V$ is obtained by adding said residual ($\hat{\Delta}_V F_{\text{IDFT}}$) to said main portion ($\hat{\beta}_V F_{\text{IDFT}}$);
b) a second step wherein said new estimate of $T_V$ is employed to compute the new estimate of A as $\hat{A} = \bar{X}_{\text{int}}(\hat{T}_V)$ and $\bar{X}_{\text{int}}(\hat{T}_V)$ is generated by interpolating the elements of said vector $\overline{M}\mathbf{s}_{\text{VULA},0}$ where $\overline{M}$ is said oversampling factor employed in said IFFT calculations.

The above mentioned Steps 10.1.2.1.1 - 10.1.2.1.2 of Figure 39 can be replaced by an alternative method including (see Steps 10.1.2.2.1 - 10.1.2.2.2 of Figure 40):

- (Step 10.1.2.2.1) said iterative procedure includes a preliminary initialization (Step 10.1.2.2.1) comprising:

a) setting the iteration index i to 1, the initial estimate of A equal to said vector element ($\bar{s}_{\text{VULA},0,\hat{\beta}_V}$), the initial estimate of $\Delta_V \triangleq 2\pi\delta_V F_{\text{IDFT}}$ to zero and the initial estimate of $T_V$ to said main portion ($\hat{\beta}_V F_{\text{IDFT}}$);
b) computing the real quantity $\rho \triangleq T_V/F_{\text{IDFT}}$ ;

then iteratively
- (Step 10.1.2.2.2) the i-th iteration is fed by the estimates of $\Delta_V$, $T_V$, A and the real quantity $\rho$ computed in the previous iteration, to generate new estimates of $\Delta_V$, $T_V$, A and $\rho$, for a predetermined number of iterations, wherein each iteration includes

a) a first step where the residual $\hat{\Delta}_V$ is calculated solving the first order equation $b_{\hat{\rho}}\tilde{\Delta}_V + c_{\hat{\rho}} = 0$ OR the second order equation $a_{\hat{\rho}}\tilde{\Delta}_V^2 + b_{\hat{\rho}}\tilde{\Delta}_V + c_{\hat{\rho}} = 0$ in the variable $\tilde{\Delta}_V$ with

$$a_{\hat{\rho}} \triangleq \mathfrak{I}\left\{\hat{A}^*\bar{s}_{\text{VULA},3,\hat{\rho}}\right\},$$

$$b_{\hat{\rho}} \triangleq -\mathfrak{R}\left\{\hat{A}^*\bar{s}_{\text{VULA},2,\hat{\rho}}\right\},$$

$$c_{\hat{\rho}} \triangleq -\mathfrak{I}\left\{\hat{A}^*\bar{s}_{\text{VULA},1,\hat{\rho}}\right\},$$

where $\Re\{x\}$ denotes the real part, $\Im\{x\}$ denotes the imaginary part of the complex quantity $x$ and $\{\bar{s}_{VULA,k,\hat{\rho}}; k = 1,2,3\}$ is computed as:

$$\bar{s}_{VULA,k,\hat{\rho}} \triangleq \frac{1}{\bar{N}_0} \sum_{n=0}^{N-1} n^k \, \bar{X}_{0,n}^{(VULA)} \exp\left(j\frac{2\pi n\hat{\rho}}{N_0}\right)$$

where $\bar{X}_{0,n}^{(VULA)}$ is the $n$-th element of the said sequence collecting the samples of said impulse response ($\bar{X}_0$) referred to said Reference VULA in the considered frequency bin; said coefficients ($\{\bar{s}_{VULA,k,\hat{\rho}}; k = 1,2,3\}$) can be also computed by interpolating the samples of said spectrum ($\bar{s}_{VULA,k}$); discarding one of the two solutions, which does not satisfy the inequalities:

$$\begin{cases} 0 \leq \widetilde{\Delta}_V \leq \pi F_{IDFT} & \text{if } \hat{\beta}_V = 0 \\ -\pi F_{IDFT} < \widetilde{\Delta}_V \leq \pi F_{IDFT} & \text{otherwise} \end{cases}$$

if said second order equation is solved; then the new estimate of $T_V$ is obtained by adding said residual ($\hat{\Delta}_V F_{IDFT}$) to said estimate of $T_V$;

b) a second step wherein the new estimate of $\rho$ is computed by dividing said new estimate of $T_V$ by $F_{IDFT}$;

c) a third step wherein said new estimate of $T_V$ is employed to compute the new estimate of $A$ as $\hat{A} = \bar{X}_{int}(\hat{T}_V)$ and $\bar{X}_{int}(\hat{T}_V)$ is generated by interpolating the elements of said vector $\bar{M}s_{VULA,0}$ where $\bar{M}$ is said oversampling factor employed in said IFFT calculations.

**STDAE-S3)** *Vertical folding* - Vertical folding is employed to compensate for the phase differences between the considered HULAs. However, the *phase rotation factor* appearing in eq. (2.45) is computed as

$$R_i^{(VF)}[l, q] \triangleq \left[\exp\left(j\Delta\psi_i^{(VF)}[l]\right)\right]^{q-q_R}, \qquad (2.77)$$

where

$$\Delta\psi_i^{(VF)}[l] \triangleq \frac{2\pi}{\lambda} \hat{T}_{V,i}[l] \qquad (2.78)$$

and $\hat{T}_{V,i}[l]$ is an estimate of the normalized vertical delay $T_{V,i}[l]$ (evaluated in **STDAE-S2**).

**STDAE-S4)** *IFFT processing and horizontal delay estimation* - In this step, the CSDE algorithm is exploited to compute the estimates $\hat{T}_{H,i}[l]$ and $\hat{A}_i[l]$ of the normalized horizontal delay $T_{H,i}[l]$ and of the complex amplitude $h_i[l]$, respectively; both are associated with the i-th target. A similar representation as that expressed by eq. (2.47) can be adopted for the delay $T_{H,i}[l]$; the quantities $\beta_{H,i}[l]$ and $\Delta_{H,i}[l]$ are estimated by the CSDE (see Paragraph 4.1.4).

In summary, the method for the estimation of the horizontal spatial frequency (see Step 10.1.5 of Figure 29) can be described as follows (see Steps 10.1.5.1.0 - 10.1.5.1.2 of Figure 41):

- (Step 10.1.5.1.0) representation of a target horizontal spatial delay ($T_H$), as sum of a main portion ($\beta_H F_{IDFT}$) and a residual portion ($\delta_H F_{IDFT}$), where $F_{IDFT} \triangleq 1/\bar{N}_0$, where $\bar{N}_0$ is the IFFT order, wherein said main portion is determined by searching the index ($\hat{\beta}_H$) of the vector element $\bar{s}_{HULA,0,\hat{\beta}H}$ corresponding to the maximum absolute value of the elements of the vector $\bar{s}_{HULA,0}$ and said residual delay computation is optional and can be found through an iterative procedure together with the corresponding target complex amplitude $A \triangleq a \exp(-j\psi)$, where $a$ is said target amplitude and $\psi$ is said target phase.

- (Step 10.1.5.1.1) Said iterative procedure includes a preliminary initialization comprising:

setting the iteration index i to 1, the initial estimate of A equal to said vector element $(\overline{s}_{HULA,0,\hat{\beta}_H})$, the initial estimate of

$$\Delta_H \triangleq 2\pi\delta_H \, F_{IDFT}$$ to zero and the initial estimate of $T_H$ to said main portion $(\hat{\beta}_H \, F_{IDFT})$; then iteratively

- (Step 10.1.5.1.2) the i-th iteration is fed by the estimates of $\Delta_H$, $T_H$ and A computed in the previous iteration, to generate new estimates of $\Delta_H$, $T_H$ and A, for a predetermined number of iterations, wherein each iteration includes:

a) a first step where the residual $\hat{\Delta}_H$ is calculated solving the first order equation $b_{\hat{\beta}}\tilde{\Delta}_H + c_{\hat{\beta}} = 0$ OR the second order equation $$a_{\hat{\beta}}\tilde{\Delta}_H^2 + b_{\hat{\beta}}\tilde{\Delta}_H + c_{\hat{\beta}} = 0$$ in the variable $\tilde{\Delta}_H$ with

$$a_{\hat{\beta}} \triangleq \Im\left\{\hat{A}^* \, \overline{s}_{HULA,3,\hat{\beta}_H}\right\},$$

$$b_{\hat{\beta}} \triangleq -\Re\left\{\hat{A}^* \, \overline{s}_{HULA,2,\hat{\beta}_H}\right\},$$

$$c_{\hat{\beta}} \triangleq -\Im\left\{\hat{A}^* \, \overline{s}_{HULA,1,\hat{\beta}_H}\right\},$$

where $\Re\{x\}$ denotes the real part and $\Im\{x\}$ denotes the imaginary part of the complex quantity $x$; discarding one of the two solutions, which does not satisfy the inequalities:

$$\begin{cases} 0 \leq \tilde{\Delta}_H \leq \pi F_{IDFT} & \text{if } \hat{\beta}_H = 0 \\ -\pi F_{IDFT} < \tilde{\Delta}_H \leq \pi F_{IDFT} & \text{otherwise} \end{cases}$$

if said second order equation is solved; then the new estimate of $T_H$ is obtained by adding said residual $(\hat{\Delta}_H \, F_{IDFT})$ to said main portion $(\hat{\beta}_H \, F_{IDFT})$;

b) a second step wherein said new estimate of $T_H$ is employed to compute the new estimate of $A$ as $\hat{A} = \overline{X}_{int}(\hat{T}_H)$ and $\overline{X}_{int}(\hat{T}_H)$ is generated by interpolating the elements of said vector $\overline{M}s_{HULA,0}$ where $\overline{M}$ is said oversampling factor employed in said IFFT calculations.

The above mentioned Steps 10.1.5.1.1 - 10.1.5.1.2 of Figure 41 can be replaced by an alternative method including (see Steps 10.1.5.2.1 - 10.1.5.2.2 of Figure 42):

- (Step 10.1.5.2.1) said iterative procedure includes a preliminary initialization including:

a) setting the iteration index i to 1, the initial estimate of A equal to said vector element $(\overline{s}_{HULA,0,\hat{\beta}_H})$, the initial estimate of $$\Delta_H \triangleq 2\pi\delta_H \, F_{IDFT}$$ to zero and the initial estimate of $T_H$ to said main portion $(\beta_H \, F_{IDFT})$;

b) computing the real quantity $\rho \triangleq T_H/F_{IDFT}$ ;

then iteratively

- (Step 10.1.5.2.2) the i-th iteration is fed by the estimates of $\Delta_H$, $T_H$, A and the real quantity $\rho$ computed in the previous iteration, to generate new estimates of $\Delta_H$, $T_H$, A and $\rho$, for a predetermined number of iterations, wherein each iteration includes

a) a first step where the residual $\hat{\Delta}_H$ is calculated solving the first order equation $b_{\hat{\beta}}\tilde{\Delta}_H + c_{\hat{\beta}} = 0$ OR the second order

equation $a_{\widehat{\beta}}\widetilde{\Delta}_H^2 + b_{\widehat{\beta}}\widetilde{\Delta}_H + c_{\widehat{\beta}} = 0$ in the variable $\widetilde{\Delta}_H$ with

$$a_{\widehat{\rho}} \triangleq \Im\{\widehat{A}^*\overline{s}_{HULA,3,\widehat{\rho}}\},$$

$$b_{\widehat{\rho}} \triangleq -\Re\{\widehat{A}^*\overline{s}_{HULA,2,\widehat{\rho}}\},$$

$$c_{\widehat{\rho}} \triangleq -\Im\{\widehat{A}^*\overline{s}_{HULA,1,\widehat{\rho}}\},$$

where $\{x\}$ denotes the real part, $\{x\}$ denotes the imaginary part of the complex quantity $x$ and $\{\overline{s}_{HULA,k,\widehat{\rho}}; k = 1,2,3\}$ is computed as:

$$\overline{s}_{HULA,k,\widehat{\rho}} \triangleq \frac{1}{\overline{N}_0}\sum_{n=0}^{N-1} n^k\, \overline{X}_{0,n}^{(HULA)} \exp\left(j\frac{2\pi n\widehat{\rho}}{N_0}\right)$$

where $\overline{X}_{0,n}^{(HULA)}$ is the $n$-th element of the said sequence collecting the samples of said vertically folded impulse if said optional steps (Step 10.1.1 - Step 10.1.3) are carried out and of the sequence collecting the samples of said impulse response ($\overline{X}_0$) referred to said Reference HULA in the considered delay bin if said optional steps are not carried out; said coefficients ($\{\overline{s}_{HULA,k,\widehat{\rho}}; k = 1,2,3\}$) can be also computed by interpolating the elements of said spectrum ($\overline{s}_{HULA,k}$); discarding one of the two solutions, which does not satisfy the inequalities:

$$\begin{cases} 0 \leq \widetilde{\Delta}_H \leq \pi F_{IDFT} & \text{if } \widehat{\beta}_H = 0 \\ -\pi F_{IDFT} < \widetilde{\Delta}_H \leq \pi F_{IDFT} & \text{otherwise} \end{cases}$$

if said second order equation is solved; then the new estimate of $T_H$ is obtained by adding said residual ($\widehat{\Delta}_H F_{IDFT}$) to said estimate of $T_H$;

b) a second step wherein the new estimate of $\rho$ is computed dividing said new estimate of $T_H$ by $F_{IDFT}$;

c) a third step wherein said new estimate of $T_H$ is employed to compute the new estimate of $A$ as $\widehat{A} = \overline{X}_{int}(\widehat{T}_H)$ and $\overline{X}_{int}(\widehat{T}_H)$ is generated by interpolating the elements of said vector $\overline{M}s_{HULA,0}$ where $\overline{M}$ is said oversampling factor employed in said IFFT calculations.

STDAE-S5) *Overall folding and delay/amplitude estimation* - In this step, the angular information (i.e., the spatial delays $\widehat{T}_{V,i}[l]$ and $\widehat{T}_{H,i}[l]$) computed in the previous steps are exploited to apply folding to the whole receive antenna array or to a portion of it. Similarly as the case of a MIMO FMCW radar, overall folding requires the computation of the $N_0$-dimensional vectors $\mathbf{X}_{0,OF}[l]$, $\mathbf{X}_{1,OF}[l]$ and $\mathbf{X}_{2,OF}[l]$ (see eq. (2.50)); the horizontal phase variation $R_i^{(HF)}[l,p]$ appearing on the RHS of eq. (2.51) is defined as:

(2.79)

$$R_i^{(HF)}[l,p] \triangleq \left[\exp\left(j\Delta\psi_i^{(HF)}[l]\right)\right]^{p-p_R},$$

where

(2.80)

$$\Delta\psi_i^{(HF)}[l] \triangleq \frac{2\pi}{\lambda}\widehat{T}_{H,i}[l].$$

If a peak is detected in the sequence of the absolute values of the elements of the vector $\mathbf{X}_{0,OF}[l]$, the CSDE algorithm is run to estimate, on the basis of the vectors $\mathbf{X}_{0,OF}[l]$, $\mathbf{X}_{1,OF}[l]$ and $\mathbf{X}_{2,OF}[l]$, the final estimates $\widehat{\tau}_i[l]$ and $\widehat{A}_i[l]$ of the parameters $\tau_i[l]$ and $A_i[l]$ characterizing the $i$-th target detected in the $l$-th delay bin. Then, if the estimated delay $\widehat{\tau}_i[l]$ (see eq. (2.70)) is close

to $\hat{a}_l$ and the quantity $\hat{a}_i[l]$ appears in one of the couples of set $\mathcal{S}_b$ (2.23), it is discarded. Otherwise, the new couple ($\hat{\alpha}_i$ [l],$E_{b,L_b}$) (see eq. (2.55)) is added to the set $\mathcal{S}_b$ and the number of its elements (denoted by $L_b$) is increased by one.

In summary, the above method can be described as follows:

said optional estimate of the vertical spatial delay ($T_V$) and said estimate of the horizontal spatial delay ($T_H$) are employed to compute the phase difference between said reference antenna and said virtual antennas of said optional sub-set of HULAs to be used in said constructive combination (Step 10.1.6 of Figure 29) to compute said overall folded impulse response ($\overline{\mathbf{X}}_{OF,0}$) and its first three derivatives ($\{\overline{\mathbf{X}}_{OF,k}; k = 1,2,3\}$) by combining the impulse reponse contributions referred to said sub-set of virtual antennas. Said checking (see Step 10.1.6 of Figure 29) is performed on the absolute value of said folded impulse response ($\overline{\mathbf{X}}_{OF,0}$).

In summary, the method for the refinement (see Step 10.1.6 of Figure 29) can be described as follows (see Steps 10.1.6.1.0 - 10.1.6.1.2 of Figure 43):

- (Step 10.1.6.1.0) representation of a target normalized delay $T \triangleq \tau\,\Delta f$ , where $\Delta f$ is the frequency step size of the employed radar, as sum of a main portion ($\alpha\,F_{\text{IDFT}}$) and a residual portion ($\delta\,F_{\text{IDFT}}$), where $F_{\text{IDFT}} \triangleq 1/N_0$ , where $N_0$ is the IFFT order, wherein said main portion is determined by searching the index ($\hat{\alpha}$) of the vector element $\overline{X}_{OF,0,\hat{\alpha}}$ corresponding to the maximum absolute value of the elements of the vector $\overline{\mathbf{X}}_{OF,0}$ and said residual delay is found through an iterative procedure together with the corresponding target complex amplitude $A \triangleq a\exp(-j\psi)$ , where $a$ is said target amplitude and $\psi$ is said target phase;

- (Step 10.1.6.1.1) Said iterative procedure includes a preliminary initialization comprising:

  setting the iteration index $i$ to 1, the initial estimate of $A$ equal to said vector element ($\overline{X}_{OF,0,\hat{\alpha}}$), the initial estimate of $\Delta \triangleq 2\pi\delta\,F_{\text{IDFT}}$ to zero and the initial estimate of $T$ to said main portion ($\hat{\alpha}\,F_{\text{IDFT}}$); then iteratively

- (Step 10.1.6.1.2) the $i$-th iteration is fed by the estimates of $\Delta$, $T$ and $A$ computed in the previous iteration, to generate new estimates of $\Delta$, $T$ and $A$, for a predetermined number of iterations, wherein each iteration includes:

  a) a first step where the residual $\hat{\Delta}$ is calculated solving the first order equation $b_{\alpha}\tilde{\Delta} + c_{\hat{\alpha}} = 0$ OR the second order equation $a_{\alpha}\tilde{\Delta}^2 + b_{\alpha}\tilde{\Delta} + c_{\hat{\alpha}} = 0$ in the variable $\tilde{\Delta}$ with

  $$a_{\hat{\alpha}} \triangleq \Im\left\{\widehat{A}^{*}\,\overline{X}_{OF,3,\hat{\alpha}}\right\},$$

  $$b_{\hat{\alpha}} \triangleq -\Re\left\{\widehat{A}^{*}\,\overline{X}_{OF,2,\hat{\alpha}}\right\},$$

  $$c_{\hat{\alpha}} \triangleq -\Im\left\{\widehat{A}^{*}\,\overline{X}_{OF,1,\hat{\alpha}}\right\},$$

  where $\Re\{x\}$ denotes the real part and $\Im\{x\}$ denotes the imaginary part of the complex quantity $x$; discarding one of the two solutions, which does not satisfy the inequalities:

  $$\begin{cases} 0 \le \widetilde{\Delta} \le \pi F_{\text{IDFT}} & \text{if } \widehat{\alpha} = 0 \\ -\pi F_{\text{IDFT}} < \widetilde{\Delta} \le \pi F_{\text{IDFT}} & \text{otherwise} \end{cases}$$

  if said second order equation is solved; then the new estimate of $T$ is obtained by adding said residual ($\hat{\Delta}\,F_{\text{IDFT}}$) to said main portion ($\hat{\alpha}F_{\text{IDFT}}$);

  b) a second step wherein said new estimate of $T$ is employed to compute the new estimate of $A$ as $A = \overline{X}_{int}(\hat{T})$ and $\overline{X}_{int}(\hat{T})$ is generated by interpolating the elements of said vector $M\overline{\mathbf{X}}_{OF,0}$ where $M$ is said oversampling factor employed in said IFFT calculations.

The above mentioned Steps 10.1.6.1.1 - 10.1.6.1.2 of Figure 43 can be replaced by an alternative method including (see Steps 10.1.6.2.1 - 10.1.6.2.2 of Figure 44):

- (Step 10.1.6.2.1) Said iterative procedure includes a preliminary initialization including:

    a) setting the iteration index $i$ to 1, the initial estimate of $A$ equal to said vector element ($\overline{X}_{OF,0,\hat{\alpha}}$), the initial estimate of $\Delta \triangleq 2\pi\delta F_{\text{IDFT}}$ to zero and the initial estimate of $T$ to said main portion ($\hat{\alpha} F_{\text{IDFT}}$);

    b) computing the real quantity $\rho \triangleq T/F_{\text{IDFT}}$;

then iteratively

- (Step 10.1.6.2.2) the i-th iteration is fed by the estimates of $\Delta$, $T$ and $A$ and the real quantity $\rho$ computed in the previous iteration, to generate new estimates of $\Delta$, $T$, $A$ and $\rho$, for a predetermined number of iterations, wherein each iteration includes

    a) a first step where the residual $\hat{\Delta}$ is calculated solving the first order equation $b_{\hat{\alpha}}\tilde{\Delta} + c_{\hat{\alpha}} = 0$ OR the second order equation $a_{\hat{\alpha}}\tilde{\Delta}^2 + b_{\hat{\alpha}}\tilde{\Delta} + c_{\hat{\alpha}} = 0$ in the variable $\tilde{\Delta}$ with

$$a_{\hat{\rho}} \triangleq \Im\left\{\widehat{A}^* \overline{X}_{OF,3,\hat{\rho}}\right\},$$

$$b_{\hat{\rho}} \triangleq -\Re\left\{\widehat{A}^* \overline{X}_{OF,2,\hat{\rho}}\right\},$$

$$c_{\hat{\rho}} \triangleq -\Im\left\{\widehat{A}^* \overline{X}_{OF,1,\hat{\rho}}\right\},$$

where $\Re\{x\}$ denotes the real part, $\Im\{x\}$ denotes the imaginary part of the complex quantity $x$ {$\overline{X}_{OF,k,\hat{\rho}}$; $k = 1,2,3$} is computed by interpolating the elements of said overall folded impulse response ($\overline{\mathbf{X}}_{OF,k}$); discarding one of the two solutions, which does not satisfy the inequalities:

$$\begin{cases} 0 \le \widetilde{\Delta} \le \pi F_{\text{IDFT}} & \text{if } \hat{\alpha} = 0 \\ -\pi F_{\text{IDFT}} < \widetilde{\Delta} \le \pi F_{\text{IDFT}} & \text{otherwise} \end{cases}.$$

if said second order equation is solved; then the new estimate of $T$ is obtained by adding said residual ($\hat{\Delta} F_{\text{IDFT}}$) to said estimate of $T$;

b) a second step wherein the new estimate of $\rho$ is computed dividing said new estimate of $T$ by $F_{\text{IDFT}}$;

c) a third step wherein said new estimate of $T$ is employed to compute the new estimate of $A$ as $\hat{A} = \overline{X}_{int}(\hat{T})$ and $\overline{X}_{int}(\hat{T})$ is generated by interpolating the elements of said vector $M\overline{\mathbf{X}}_{OF,0}$ where $M$ is said oversampling factor employed in said IFFT calculations. **STDAEC-S2)** *Target cancellation* - The contribution $\mathbf{C}_{X_0}^{(i)}[l]$, given by the i-th target detected in the $l$-th time bin, to the vector $\mathbf{X}^{(i)}[l]$ is computed by means of eq. (4.223) (see Paragraph 4.1.6) and is cancelled from $\mathbf{X}^{(i)}[l]$. Cancellation consists in the evaluation of the new residual according to eq. (2.57).

In summary, the above method can be described as follows:

said cancellation (see Step 10.2 of Figure 29) includes the computation and subtraction of the contribution given by said dominant point target to the impulse response contribution referred to said considered delay bin to generate a new residual of the impulse response and of the corresponding derivatives.

**STDAEC-S3)** *Residual energy test* - In this step, the energy $E^{(i+1)}[l]$ of the residual $\mathbf{X}^{(i+1)}[l]$ evaluated in the previous step is computed on the basis of eq. (2.58)) and is compared with a positive threshold; if this energy is below this threshold, the STDAEC algorithm stops, otherwise the recursion index *i* is increased by one and a new iteration is started by going back to **STDAEC-S1.**

All the target information acquired from the $\hat{\alpha}_f$-th frequency bin are collected in the set

$$\mathcal{T}_l \triangleq \left\{\left(\hat{A}_i[l], \hat{\tau}_i[l], \hat{\alpha}_i[l], \hat{T}_{V,i}[l], \hat{T}_{H,i}[l]\right); i = 0,1,\dots,D[l] - 1\right\} \tag{2.81}$$

with *l* = 0, 1, ..., $L_b$ - 1 (it is assumed that *D[l]* targets have been detected in that bin). In **T3-S2)** the evaluation of spatial coordinates ($\hat{R}_i[l], \hat{\phi}_i[l], \hat{\theta}_i[l]$) is accomplished in the same way as in the FMCW case, i.e. on the basis of eqs. (2.60)-(2.62). Finally, the available information are merged to generate the overall set $\mathcal{I}_t$ (2.63), which, generally speaking, can be represented as a cloud of $\hat{L}$ points; note that $\mathcal{I}_t$ results of the union of the sets $\left\{\mathcal{I}_t^{(l)}\right\}$ and that the set $\mathcal{I}_t^{(l)}$ is still defined by eq. (2.100).

In summary, the method for the evaluation of the spatial coordinates can be summarized as follows: if the optional steps (Step 10.1.1 - Step 10.1.3 of Figure 29) are carried out, said computation (Step 11 of Figure 27) includes the computation of the range ($\hat{R}$), the elevation ($\hat{\phi}$) and the azimuth ($\hat{\theta}$) as:

$$\hat{R} = \frac{c}{2}\frac{\hat{T}}{\Delta f},$$

$$\hat{\phi} = \arcsin\left(\frac{\lambda}{2d_{VV}}\hat{T}_V\right)$$

and

$$\hat{\theta} = \arcsin\left(\frac{\lambda}{2d_{VH}\cos(\hat{\phi})}\hat{T}_H\right)$$

respectively, and, if the optional steps (Step 10.1.1 - Step 10.1.3 of Figure 29) are not carried out, said computation (see Step 11 of Figure 27) includes the computation of the range ($\hat{R}$) and the azimuth ($\hat{\theta}$) as:

$$\hat{R} = \frac{c}{2}\frac{\hat{T}}{\Delta f}$$

and

$$\hat{\theta} = \arcsin\left(\frac{\lambda}{2d_{VH}}\hat{T}_H\right)$$

respectively, here, Δ*f* is the frequency step size of the employed radar, *c* is the speed of light, $\lambda$ is the radar wavelength, $d_{VV}$ is the distance between two adjacent virtual antennas of said VULAs and $d_{VH}$ is the distance between two adjacent virtual antennas of said HULAs.

### 2.3.2. Embodiment #2

The processing accomplished in the second embodiment of the proposed method and described by the block diagram illustrated in Figure 12 can be easily adapted to a MIMO SFCW radar system; most of the required changes are the same as those illustrated in the previous paragraph for the embodiment #1. In particular, the vector $\mathbf{r}_V$ (1.6) is replaced by the vector $\mathbf{x}_V$ (1.22), the FFT operation by the IFFT operation, frequency bins by delay bins in the STDREC and STDAEC algorithms (and, consequently, the spatial frequencies $F_{V,i}[l]$ and $F_{H,i}[l]$ by the normalised delays $T_{V,i}[l]$ and $T_{H,i}[l]$,

respectively) and the estimation of the complex amplitude $A_i[p,l]$ observed on the $p$-th RVA by the estimation of the complex gain $A_i[p,l]$ (see Paragraph 2.3.1. Embodiment #1). Another important change concerns the SBC procedure and, in particular, the evaluation of the triad $\left(\mathbf{C}_{X_0,v}^{(l)}, \mathbf{C}_{X_1,v}^{(l)}, \mathbf{C}_{X_2,v}^{(l)}\right)$ appearing in eq. (2.68). In fact, the computation of these vectors is based on eqs. (4.238)-(4.240) (see Paragraph 4.2.2), that are different from eqs. (4.232)-(4.234) employed in a MIMO FMCW radar system. Concerning 2D imaging, a similar adaptation can be derived also for a SFCW radar system for both embodiments.

In summary, as in the FMCW radar system, for the second embodiment, said acquisition (see Step 8 of Figure 27) includes the acquisition of target energy and wherein said execution (see Step 10 of Figure 27) is repeated sequentially over the acquired list, ordered according to said target energy, and wherein said generation of the overall image (Step 11 of Figure 27) is carried out when all the delay bins have been analyzed. Said cancellation (see Step 10.2 of Figure 29) includes the computation and subtraction of the contribution given by said dominant point target to said impulse response ($\overline{\mathbf{X}}_0^{(v)}$) and to the corresponding derivatives to generate a new residual of the impulse response and of the corresponding derivatives.

### 3. Some technical issues

In this section, some technical problems investigated in the implementation of our method on real radar devices are illustrated and the technical solutions we have developed are described.

### 3.1. Unequal response of the receive antenna array

In the derivation of the two embodiments described in Paragraph 2.2.1. Embodiment #1 and in Paragraph 2.2.2. Embodiment #2, both for 3D and 2D imaging, it is always assumed that the model of the signal received on the $v$-th RVA is expressed by eq. (1.11) (the same assumption is also made for the SFCW radar system; e.g., see eq. (1.23)). This model holds if the amplitudes $\{a_l\}$ of the $L$ overlapped oscillations do not change from antenna to antenna. Our experiments accomplished on commercial colocated radar devices have evidenced that: a) such amplitudes are not constant across the whole array; b) their differences are influenced by the azimuth and the elevation of each target. This may originate from the differences in the multiple receive chains employed in each MIMO device and the mismatches in the receive antenna patterns. This problem, that affects the data collected through both FMCW and SFCW radar systems, can be mitigated by enriching the physical array with a set of surrounding passive antennas; in this case, the array is artificially extended with new antennas along all its sides, so that the behavior of all its active antennas becomes more uniform.

In principle, this phenomenon can be accounted in our study for by including its effects in our received signal model. For instance, the real signal model (3.1) developed for an FMCW radar system can be modified as

$$ r_v(t) = \sum_{l=0}^{L-1} \alpha_v\left(\theta_l, \phi_l\right) a_l \cos(2\pi f_{v,l}\, t + \psi_{v,l}) + w_v(t), \qquad (3.2) $$

where $\alpha_v(\theta,\phi)$ is an attenuation factor depending on the angular coordinates of the $l$-th target and $v$ indicates the virtual element associated with the pair $(p,q)$ of physical antennas. Consequently, the complex amplitude associated with the $l$-th target detectable on the $v$-th RVA becomes (see eq. (1.18))

$$ C_{v,l}(\theta_l, \phi_l) \triangleq \frac{1}{2} a_l\, \alpha_v\left(\theta_l, \phi_l\right)\exp\left(j\psi_{v,l}\right) \qquad (3.3) $$

Ignoring the presence of the factor $\alpha_v(\theta_l,\phi_l)$ in the algorithms developed in this document has the following implications:

a) An error is introduced by the STDAEC algorithm in the cancellation procedure (see its task 3, step 1) of the embodiment #1. Note, in particular, that the estimate $\hat{C}_i[l]$, referring to the $i$-th target detected in the $\hat{\alpha}_r$-th bin and generated by the STDAE technique in its step 5, is computed *after* the overall spatial folding; consequently, its absolute value represents a sort of spatial average computed over all the involved RVAs. Moreover, only the phase variations of this complex gain are accounted for in the computation of the contribution $\mathbf{C}_X^{(i)}[l]$ of this target to the

matrix $\mathbf{X}^{(i)}[l]$ (see eqs. (4.230)-(4.231)). Similar comments apply to the STDAEC technique illustrated in Paragraph 2.4. Adaptation to 2D Imaging for the case of 2D imaging (see eq. (2.98)).

b) An error in the cancellation procedure is introduced by the SBC algorithm in task 3 of the embodiment #2. In fact, in the computation of the vectors $\mathbf{C}_{X_0,v}^{(l)}$, $\mathbf{C}_{X_1,v}^{(l)}$ and $\mathbf{C}_{X_2,v}^{(l)}$ appearing in eq. (2.68), the variations in the absolute value of the complex gain $C_i[l]$ are not accounted for (see eqs. (4.232)-(4.234)).

In principle, if the functions $\{\alpha_v(\theta,\phi)\}$ were known for all the RVAs, their effect could be compensated for *after* evaluating the estimates $(\hat{\theta}_i, \hat{\phi}_i)$ of the angular coordinates of the $i$-th target; in fact, this result could be achieved by replacing the estimate $\hat{C}_i[l]$ of the complex gain $C_i[l]$ with

$$\widehat{C}_i[v,l] \triangleq \widehat{C}_i[l] \, \alpha_v(\widehat{\theta}_i, \widehat{\phi}_i). \qquad (3.4)$$

in the evaluation of the term $\mathbf{C}_X^{(i)}[l]$ appearing in eqs. (4.230)-(4.231) (see **STDAEC-S2** in Paragraph 4.1). Estimating the function $\alpha_v(\theta,\varphi)$, however, is a time consuming task, since it requires a proper measurement setup and an anechoic chamber. For this reason, the alternative method we propose for compensating for the spatial amplitude distortion introduced by the radar array in the absence of any prior knowledge about the function $\alpha_v(\theta,\varphi)$ is based on the exploitation of *deep learning techniques* (see "C. M. Bishop, Pattern Recognition and Machine Learning, ser. Information Science and Statistics. New York, NY: Springer, 2006.") in the SPE and on the adoption of a *data-driven approach* (see "0. Simeone, "A very brief introduction to machine learning with applications to communication systems," IEEE Transactions on Cognitive Communications and Networking, vol. 4, no. 4, pp. 648-664, 2018." and "N. Shlezinger, R. Fu, and Y. C. Eldar, "Deep soft interference cancellation for mimo detection," in ICASSP 2020 - 2020 IEEE International Conference on Acoustics, Speech and Signal Processing (ICASSP), 2020, pp. 8881-8885."). Our approach is motivated by the fact that:

a) Deep learning techniques can be employed to approximate complicated functions, that do not lend themselves to a simple parametric representation and without requiring particular expertise in data pre-processing.

b) The data-driven approach allows to train different models on the basis of data collected in a real scenario or synthetically generated, without prior knowledge about the parametric representation of the considered problem. The training procedure is important, because, through it, the involved network acquires the ability to generate a correct prediction on the basis of never seen data available at its input.

If the proposed method is adopted in the embodiment #1 and a MIMO FMCW radar system is considered, the block diagram illustrated in is replaced by that shown in Figure 15. As it can be easily inferred from comparing the first figure with the second one, the STDAEC block is replaced by a new block, that implements a new algorithm, called *deep* STDAEC (DSTDAEC). The initialization procedure of the DSTAEC is the same of the STDAEC and consists in:

1) Setting the iteration index $i$ to 1.

2) Setting

$$\mathbf{X}^{(0)}[l] \triangleq \mathbf{X}[l]. \qquad (3.5)$$

3) Selecting a *reference* antenna, identified by $p = p_R$;

4) Selecting a *reference* HULA, consisting of $N_{HULA}$ adjacent and *horizontally aligned* RVAs; in the following, we assume, without any loss of generality, that the reference HULA includes the reference antenna and, consequently, is identified by $p = p_I, p_I + 1, ..., p_F$, with $0 \leq p_I \leq p_R \leq p_F \leq N_{EL} - 1$; note that $N_{HULA} = p_F - p_I + 1$.

The DSTDAEC algorithm consists of three steps (its $r$-th step is denoted DSTDAEC-S$r$ in the following) and the processing accomplished within each of them is sketched below for the $l$-th frequency bin (with $l = 0, 1, ..., L_b - 1$).
**DSTDAEC-S1)** *Detection of a new target and estimation of its angular parameters* - This step is identical to the first step of the STDAEC technique. Therefore, the $N_{VH} \times N_{VV}$ matrix $\mathbf{X}^{(i)}[l]$ (see eq. (2.31)) is processed to detect the *strongest* target (i.e., the $i$-th target) contributing to the $l$-th frequency bin and to estimate its parameters $(\theta_i[l], \phi_i[l], f_i[l], A_i[l])$.

Moreover, the processing accomplished within this step is based on the STDAE algorithm, whose detailed description is provided in Paragraph 2.2.1. Embodiment #1.

**DSTDAEC-S2)** *Estimation of the distorted amplitudes* - In this step, a *deep neural network* is employed to *predict* the absolute value[2] of $\tilde{C}_i[v,l]$ (i.e., to predict a new estimate $|\tilde{C}_i[v,l]|$ of $|\hat{C}_i[v,l]|$; see eq. (3.4)) on the basis of the absolute value of the amplitude $\hat{C}_i[l]$ (estimated in **STDAE-S5**). This network is designed to solve a *regression* problem through a *supervised learning* approach. Network training is based on the dataset

$$\mathcal{D} = \{(\widehat{\boldsymbol{\Lambda}}_q, \widetilde{\boldsymbol{\Lambda}}_q); \quad q = 1,2,\ldots,N_t\}, \tag{3.6}$$

collecting $N_t$ distinct points; here,

$$\widehat{\boldsymbol{\Lambda}}_q = \left[|\widehat{C}_i[1,l]|, |\widehat{C}_i[2,l]|, \ldots, |\widehat{C}_i[N_{VR},l]|\right]^T \tag{3.7}$$

and

$$\widetilde{\boldsymbol{\Lambda}}_q = \left[|\widetilde{C}_i[1,l]|, |\widetilde{C}_i[2,l]|, \ldots, |\widetilde{C}_i[N_{VR},l]|\right]^T \tag{3.8}$$

are $N_{VR}$-dimensional vectors representing the *input* of the network and its *response,* respectively, in the $q$-th trial. In network training, the following assumptions are made: a) the vectors $\tilde{\Lambda}q$ and $\hat{\Lambda}_q$ are known for any $q$; b) in the $q$-trial, the radar system observes a *single point target* and the target is detected in the frequency bin $\hat{b}_l$. It is important to note that:

a) The evaluation of the elements $\{\hat{C}_i[v,l] = \hat{C}_i[p,q,l]\}$ of the vector in vector $\hat{\Lambda}_q$ (3.7) is based on eq. (2.25) and on the estimate $\hat{C}_i[l]$ computed in **STDAE-S5;** for this reason we have that

$$\left|\widehat{C}_i[1,l]\right| = \left|\widehat{C}_i[2,l]\right| = \ldots = \left|\widehat{C}_i[N_{VR},l]\right| = \left|\widehat{C}_i[l]\right|. \tag{3.9}$$

b) If the vector $\tilde{\Lambda}_q$ (3.8) is known, an estimate $|\check{C}_i[l]|$ of the absolute value of $C_i[l]$ can be also computed as

$$|\check{C}_i[l]| = N_{VR}^{-1} \sum_{v=1}^{N_{VR}} |\widetilde{C}_i[v,l]|. \tag{3.10}$$

[2] The network is used for *amplitude prediction,* since we assume that the antenna array of a MIMO radar introduces an amplitude distortion only.

The architecture proposed for the deep neural network and illustrated in Figure 16 has been inspired by that of *feed-forward* neural networks (see Chapter 5 of "C. M. Bishop, Pattern Recognition and Machine Learning, ser. Information Science and Statistics. New York, NY: Springer, 2006."). This architecture is characterized by input and output layers of the same size ($N_{VR}$) and *K hidden layers.* Each layer is composed by neurons and each neuron provides a non-linear combination of its inputs to the next layer. The amount of layers and neurons in the network are hyperparameters that they can be freely chosen, so that the *weights* and *bias* in each neuron can be optimized. Note, however, that the size of each layer decreases from the input layer to the output layer (see "A. Romero, N. Ballas, S. E. Kahou, A. Chassang, C. Gatta, and Y. Bengio, "Fitnets: Hints for thin deep nets," 2014."). During training, the network has the ability to tune its parameters in order to learn a compressed representation of the input data, so generating an estimate of the amplitude distortion $\alpha_v(\theta,\phi)$.

**DSTDAEC-S3)** *Target cancellation* - In this step, the contribution $\mathbf{C}_X^{(i)}[l]$, given by the *i*-th target detected in the *l*-th frequency bin, to the matrix $\mathbf{X}^{(i)}[l]$ (2.31) is computed. Eqs. (4.230)-(4.231) can be still exploited; however, eq. (4.231) is modified as

$$\mathbf{C}_X^{(i)}[l]$$

$$= |\widetilde{C}_i[p,q,l]| \exp^{\angle \hat{C}_i[l]} \exp\{j2\pi[(p-p_R)\widehat{F}_{H,i}[l] + (q$$

$$- q_R)\widehat{F}_{V,i}[l]]\} \qquad (3.11)$$

where $|\bar{C}_i[p,q,l]| = |\bar{C}_i[v,l]|$ and $|\bar{C}_i[v,l]|$ is predicted by the employed neural network. Then, cancellation is accomplished by computing the new *residual* vector $\mathbf{X}^{(i+1)}[l]$ on the basis of eq. (2.57).

**DSTDAEC-S4)** *Residual energy test* - The energy $E^{(i+1)}[l]$ (2.58) of the residual spectrum vector $\mathbf{X}^{(i+1)}[l]$ (2.57) (see **STDAEC-S3**) is compared with the positive threshold $T_{\text{STDAEC}}$. If this energy is below the threshold, the DSTDAEC algorithm stops; otherwise, the recursion index $i$ is increased by one and a new iteration is started by going back to **DSTDAEC-S1.**

All the target information referring to the $\hat{a}_f$-th frequency bin are collected in the set $\mathcal{T}_l$ (2.59); note that the quantity $|\hat{C}_i[l]|$ appearing in the RHS of the definition (2.59) is replaced by $|\check{C}_i[l]|$ (3.10).

The method for amplitude compensation illustrated for the embodiment #1 can be easily adapted to the embodiment #2 (see Figure 12). In this case, the STDAEC technique is replaced by the DSTDAEC technique. Moreover, the SBC procedure is still based on eq. (2.68); however, in the computation of the vectors $\mathbf{C}_{X_0,v}^{(l)}$, $\mathbf{C}_{X_1,v}^{(l)}$ and $\mathbf{C}_{X_2,v}^{(l)}$ on the basis of eqs. (4.200)-(4.202), the dependence of the absolute value of the quantity $\widehat{C}_v^{(i)} = \widetilde{C}_i[v,l]$ on the antenna index $v$ has to be taken into account.

In summary, the above methods for a MIMO FMCW radar can be described as follows:

said compensation of the amplitude distortion (see Step 10.1.7 of Figure 29) is carried out employing a deep neural network designed to solve a regression problem through a supervised learning approach wherein network training is based on a dataset collecting the amplitude of a number of said point targets; the compensation of the complex amplitude is carried out by multiplying said refined estimate of the complex amplitude (see Step 10.1.6 of Figure 29) by said estimated amplitude distortion for each of said virtual antennas.

If said compensation of the amplitude distortion (see Step 10.1.7 of Figure 29) is carried out, said computation of the contribution given by said dominant target (see Step 10.2 of Figure 29) takes into account the said amplitude distortion computed for each of said virtual antennas.

In summary, the above methods for a MIMO SFCW radar can be described as follows:

said compensation of the amplitude distortion (see Step 10.1.7 of Figure 29) is carried out employing a deep neural network designed to solve a regression problem through a supervised learning approach wherein network training is based on a dataset collecting the amplitude of a number of said point targets; the compensation of the complex amplitude is carried out by multiplying said refined estimate of the complex amplitude (see Step 10.1.6 of Figure 29) by said estimated amplitude distortion for each of said virtual antennas.

If said compensation of the amplitude distortion (see Step 10.1.7 of Figure 29) is carried out, said computation of the contribution given by said dominant target (see Step 10.2 of Figure 29) takes into account said amplitude distortion computed for each of said virtual antennas.

### 3.2. Adaptation to different array shapes

In the description of the algorithms employed in the two embodiments of the proposed method, a URA has been always assumed until now; however, these algorithms can be easily adapted to different shapes of the receive array. For instance, in our experimental work, a colocated MIMO radar equipped with the physical array shown in Figure 13 has been used; the corresponding virtual receive array is shown in Figure 14. The first two processing tasks of our embodiments are carried out on an antenna-by-antenna basis; therefore, they do not depend on the array shape. For this reason, in the remaining part of this paragraph, we concentrate on the third task only. As far the initialisation procedure is concerned, the following consideration can be made:

1) The array structure illustrated in Figure 14 can be treated as an URA if its gaps are zero-padded.

2) The reference VULA has been selected in a way to maximize the number of non-zero vertically aligned RVAs and, consequently, the number of RVAs contributing to the estimation of the elevation angle, as illustrated in Figure 14.

3) The reference HULA has been selected in the middle of the antenna array; this mitigates the effects of the errors affecting the estimate of normalized vertical frequency in the vertical folding procedure; in fact, such errors may have a significant impact on the contributions of the HULAs that are farther from the reference HULA (see eq. (2.43)).

As far as the STDAE algorithm is concerned, the array structure illustrated in Figure 14 influences the vertical folding procedure since it involves VULAs of different sizes. More specifically, in the $i$-th iteration of the STDAEC algorithm vertical folding is accomplished by computing the $N_{HULA}$-dimensional vector (see the definition (2.31) and **STDAE-S3**)

$$\mathbf{X}_i^{(\mathrm{VF})}[l] = \left[ X_i^{(\mathrm{VF})}[p_I, l], X_l^{(i)}[p_I + 1, l], \dots, X_l^{(i)}[p_F, l] \right]^T \qquad (3.12)$$

where

$$X_i^{(\mathrm{VF})}[p, l] = \frac{1}{N_V[p]} \left[ X_l^{(i)}[p, q_R] + \sum_{\substack{q=q_I[p] \\ q \neq q_R}}^{q_F[p]} X_l^{(i)}[p, q]\, R_i^{(\mathrm{VF})}[l, q] \right], \qquad (3.13)$$

with $p = p_I, p_I + 1, \dots, p_F$; here, $R_i^{(\mathrm{VF})}[l, q]$ is expressed by eq. (2.43) and $N_V[p]$ is the overall number of RVAs contained in the $p$-th VULA.

### 3.3. Antenna Coupling

In our description of the SFE, the CSFE and the CSDE algorithms, it has been always assumed that the minimum frequency of the useful component contained in the observed data sequence can be arbitrarily small. This is not always true. For instance, in commercial colocated FMCW MIMO radar systems, a strong interference is observed in the lower portion of the spectrum computed on all the receive antennas. This is due to the electromagnetic coupling that originates from the small distance between adjacent transmit and receive antennas (see "S. Sun, A. P. Petropulu, and H. V. Poor, "MIMO Radar for Advanced Driver-Assistance Systems and Autonomous Driving: Advantages and Challenges," IEEE Signal Processing Magazine, vol. 37, no. 4, pp. 98-117, Jul. 2020."). Because of this interference, any target whose range is below a certain threshold cannot be detected in a reliable fashion. This phenomenon is called mutual coupling (see "C. M. Schmid, S. Schuster, R. Feger, and A. Stelzer, "On the Effects of Calibration Errors and Mutual Coupling on the Beam Pattern of an Antenna Array," IEEE Transactions on Antennas and Propagation, vol. 61, no. 8, pp. 4063-4072, Aug. 2013."). As far as we know, various methods based on calibration measurements have been proposed to solve this problem (see "C. M. Schmid, C. Pfeffer, R. Feger, and A. Stelzer, "An FMCW MIMO radar calibration and mutual coupling compensation approach," in 2013 European Radar Conference, Oct. 2013, pp. 13-16.").

### 4. Detailed Description of the Algorithms Employed in the Proposed Embodiments

In this section, various mathematical details about the algorithms employed in the two embodiments illustrated in the previous section are provided. We first focus on the algorithms introduced in our description of the first embodiment. Then, we briefly show some mathematical results exploited in the second embodiment only.

### 4.1. Embodiment #1

Since a full description of the processing accomplished in task #1 (**T1**) of the first embodiment has been provided in the previous section, in this paragraph we comment on the RVA selection accomplished in task #2 (**T2**) and provide a detailed description of the SFE (**T2-S2**), of the CSFE (**T2-S2** and **T3-S1**), of the CSDE (**T2-S2** and **T2-S3**) and of the target cancellation procedures employed in task #2, step 2 (**T2-S3**) and in task #3, step 1 (**T3-S1**).

### 4.1.1. RVA selection

The first step of **T2** aims at selecting $N_A$ distinct RVAs within the set of the $N_{VR}$ available RVAs. The algorithm adopted in our computer simulations consists in randomly extracting $N_A$ distinct integers from the set $\{0, 1, \dots, N_{VR} - 1\}$; these integers identify the selected antennas. It is important to note that, generally speaking, the exploitation of a subset of the available antennas is motivated by the need of reducing the computational effort required by **T2** as much as possible.

Moreover, even if a deterministic selection of $N_A$ antennas is possible, this should be avoided since, when multiple consecutive snapshots are processed to generate indipendent images, the radar system can benefit from antenna diversity by changing the subset of $N_A$ antennas from snapshot to snapshot in a random fashion. Of course, this algorithm is not employed if $N_A = \boldsymbol{N_{VR}}$.

### 4.1.2. Single frequency estimator

The algorithm executed by the SFE processes the real time-domain vectors

$$\mathbf{x_0} \triangleq \left[ x_{0,0}, x_{0,1}, \ldots, x_{0,N-1} \right]^T \tag{4.1}$$

$$\mathbf{x_1} \triangleq \left[ x_{1,0}, x_{1,1}, \ldots, x_{1,N-1} \right]^T \tag{4.2}$$

and

$$\mathbf{x_2} \triangleq \left[ x_{2,0}, x_{2,1}, \ldots, x_{2,N-1} \right]^T, \tag{4.3}$$

where $\{x_{0,n}\}$ is the sequence of available noisy measurements,

$$x_{m,n} \triangleq n^m \cdot x_{0,n}, \tag{4.4}$$

with $m = 1,2$ and $n = 0,1,\ldots,N-1$. This algorithm is derived under the assumption that the $n$-th element of the vector $\mathbf{x_0}$ (4.1) can be expressed as

$$x_{0,n} = a\cos(2\pi f_x\, nT_s + \psi) + w_n, \tag{4.5}$$

with $n = 0,1,\ldots,N-1$. Based on the vectors $\mathbf{x_0}$ (4.1), $\mathbf{x_1}$ (4.2) and $\mathbf{x_2}$ (4.3), the SFE computes an estimate $\hat{f}_x$ of the frequency $f_x$ and an estimate $\hat{C}$ of the complex amplitude

$$C \triangleq \frac{1}{2} a\exp(j\psi) \tag{4.6}$$

characterizing the sinusoid contained in the sequence $\{x_{0,n}\}$.

The algorithm executed by the SFE operates as follows. The vectors $\mathbf{x_0}$ (4.1), $\mathbf{x_1}$ (4.2) and $\mathbf{x_2}$ (4.3) are zero padded by appending $(M-1)N$ zeros to each of them, where $M$ is a integer parameter; this results in the $MN$-dimensional vectors

$$\mathbf{x}_{0,\mathrm{ZP}} = \left[ \mathbf{x}_0^T\ \mathbf{0}_{(M-1)N}^T \right]^T. \tag{4.7}$$

$$\mathbf{x}_{1,\mathrm{ZP}} = \left[ \mathbf{x}_1^T\ \mathbf{0}_{(M-1)N}^T \right]^T \tag{4.8}$$

and

$$\mathbf{x}_{2,\mathrm{ZP}} = \left[ \mathbf{x}_2^T\ \mathbf{0}_{(M-1)N}^T \right]^T. \tag{4.9}$$

These vectors undergo DFT processing of order

$$N_0 \triangleq MN;$$

(4.10)

this produces the $N_0$-dimensional vectors

$$\overline{\mathbf{X}}_0 = \left[ \overline{X}_{0,0}, \overline{X}_{0,1}, \ldots, \overline{X}_{0,N_0-1} \right]^T,$$

(4.11)

$$\overline{\mathbf{X}}_1 = \left[ \overline{X}_{1,0}, \overline{X}_{1,1}, \ldots, \overline{X}_{1,N_0-1} \right]^T,$$

(4.12)

and

$$\overline{\mathbf{X}}_2 = \left[ \overline{X}_{2,0}, \overline{X}_{2,1}, \ldots, \overline{X}_{2,N_0-1} \right]^T,$$

(4.13)

respectively. Then, the vectors $\overline{\mathbf{X}}_0$ (4.11), $\overline{\mathbf{X}}_1$ (4.12) and $\overline{\mathbf{X}}_2$ (4.13) are processed to compute the estimates $\hat{f}_x$ and $\hat{C}$. It is important to point out that, on the one hand, the algorithm employed for estimating $f_x$ relies on the observation that this frequency can be always expressed as

$$f_x = \alpha_x f_{\mathrm{DFT}} + \delta_x f_{\mathrm{DFT}},$$

(4.14)

where

$$f_{\mathrm{DFT}} \triangleq \frac{f_s}{N_0},$$

(4.15)

$\alpha_x$ is the index of the frequency bin and $\delta_x$ is a residual such that

$$\begin{cases} 0 \le \delta_x \le 0.5 & \text{if } \alpha_x = 0 \\ -0.5 < \delta_x \le 0 & \text{if } \alpha_x = N_0 - 1. \\ -0.5 < \delta_x \le 0.5 & \text{otherwise} \end{cases}$$

(4.16)

For this reason, estimating the frequency $f_x$ is equivalent to computing the estimates $\hat{\alpha}_x$ and $\hat{\delta}_x$ of $\alpha_x$ and $\delta_x$, respectively. Note also that the representation (4.14) can be also rewritten as

$$2\pi F_x = \frac{2\pi}{N_0} \alpha_x + \Delta_x$$

(4.17)

where $F_x \triangleq f_x T_s$ and

$$\Delta_x \triangleq \frac{2\pi}{N_0} \delta_x,$$

(4.18)

with (see eq. (4.16))

$$\begin{cases} 0 \leq \Delta_x \leq \dfrac{\pi}{N_0} & \text{if } \alpha_x = 0 \\[2ex] -\dfrac{\pi}{N_0} < \Delta_x \leq 0 & \text{if } \alpha_x = N_0 - 1. \\[2ex] -\dfrac{\pi}{N_0} < \Delta_x \leq \dfrac{\pi}{N_0} & \text{otherwise} \end{cases} \qquad (4.19)$$

or, equivalently,

$$\begin{cases} 0 \leq N\Delta_x \leq \dfrac{\pi}{M} & \text{if } \alpha_x = 0 \\[2ex] -\dfrac{\pi}{M} < N\Delta_x \leq 0 & \text{if } \alpha_x = N_0 - 1. \\[2ex] -\dfrac{\pi}{M} < N\Delta_x \leq \dfrac{\pi}{M} & \text{otherwise} \end{cases} \qquad (4.20)$$

Consequently, the range which the parameter $\Delta_x$ (i.e., $\delta_x$) belongs to can be made arbitrarily small by selecting $N_0$ (that is, $M$) large enough (say, $M \gtrsim 10$).

On the other hand, the algorithm devised for the estimation of the parameter $C$ (4.6) relies on the fact that: a) in the absence of noise,

$$C = \frac{1}{N}\overline{X}_0(f_x) \qquad (4.21)$$

where

$$\overline{X}_0(f) \triangleq \sum_{n=0}^{N-1} x_{0,n} \exp(-j2\pi n f T_s), \qquad (4.22)$$

is the Fourier transform of the sequence $\{x_{0,n}\}$; b) since (see eq. (2.9))

$$\overline{X}_{0,k} = \frac{N}{N_0}\overline{X}_0(f_k) = \frac{1}{M}\overline{X}_0(f_k), \qquad (4.23)$$

or, equivalently,

$$\overline{X}_0(f_k) = M\,\overline{X}_{0,k} \qquad (4.24)$$

where

$$f_k = \frac{k}{N_0 T_s} \qquad (4.25)$$

for $k = 0, 1, ..., N_0 - 1$, the vector

$$\overline{\mathbf{X}}_s \triangleq M\,\overline{\mathbf{X}}_0, \qquad (4.26)$$

collects $N_0$ uniformly spaced samples of the function $\overline{X}_0(f)$ (4.22). For this reason, an approximate value of $\overline{X}_0(f_x)$ at a

frequency $f_x$ different from a multiple of $1/(N_0 T_s)$ can be computed by interpolating the elements of the vector $\overline{\mathbf{X}}_s$ (4.27). In our computer simulations, the barycentric interpolation described in "J. Selva, "Efficient Wideband DOA Estimation Through Function Evaluation Techniques," IEEE Trans. Sig. Proc., vol. 66, no. 12, pp. 3112-3123, June 2018." has been used; however, the use of other interpolation schemes is also possible.

The SFE computes the estimates $\hat{\alpha}_x$, $\hat{\delta}_x$ and $\hat{C}$ as follows. First of all, the estimate $\hat{\alpha}_x$ is evaluated by means of the *periodogram method* (e.g., see "J. G. Proakis and D. G. Manolakis, Digital Signal processing: Principles, Algorithms and Applications.

Third Edition. New York, Ny: Prentice Hall, New York, 1993."), i.e. as

$$\widehat{\alpha}_x = \arg\max_{\widetilde{\alpha}\in\{0,1,\ldots,N_0/2\}} \left|\overline{X}_{0,\widetilde{\alpha}}\right|. \tag{4.28}$$

Then, an iterative algorithm is employed to generate the estimates $\hat{\delta}_x$ and $\hat{C}$. The i-th iteration is fed by the estimates $\widehat{\Delta}_x^{(i-1)}$, $\widehat{f}_x^{(i-1)}$ and $\hat{C}^{(i-1)}$ of $\Delta_x$, $f_x$ and $C$, respectively, and generates the new estimates $\widehat{\Delta}_x^{(i)}$, $f_x^{(i)}$ and $\hat{C}^{(i)}$. The algorithm is initialised by setting the iteration index $i$ to 1,

$$\widehat{C}^{(0)} = \overline{X}_{0,\widehat{\alpha}_x} \tag{4.29}$$

and by computing the complex coefficients $K_1(2\hat{\alpha}_x)$, $K_2(2\hat{\alpha}_x)$ and $K_3(2\hat{\alpha}_x)$ where

$$K_p(x) \triangleq \frac{1}{N}\sum_{n=0}^{N-1} n^p \exp\left(-j\frac{2\pi n x}{N_0}\right). \tag{4.30}$$

In its *i*-th iteration (with $i = 1,2,\ldots,N_{\text{SFE}}$, where $N_{\text{SFE}}$ is the overall number of iterations), it accomplishes the two steps described below.

1) The equation

$$a_{\widehat{\alpha}_x}^{(i)} \left(\widetilde{\Delta}_x^{(i)}\right)^2 + b_{\widehat{\alpha}_x}^{(i)} \widetilde{\Delta}_x^{(i)} + c_{\widehat{\alpha}_x}^{(i)} = 0 \tag{4.31}$$

or the equation

$$b_{\widehat{\alpha}_x}^{(i)} \widetilde{\Delta}_x^{(i)} + c_{\widehat{\alpha}_x}^{(i)} = 0 \tag{4.32}$$

in the variable $\Delta_x$ are solved; here,

$$a_{\widehat{\alpha}_x}^{(i)} \triangleq 2\Im\left\{\left(\left(\widehat{C}^{(i-1)}\right)^*\right)^2 K_3(2\hat{\alpha}_x)\right\}, \tag{4.33}$$

$$b_{\widehat{\alpha}_x}^{(i)} \triangleq -\Re\left\{\left(\widehat{C}^{(i-1)}\right)^* \overline{X}_{2,\widehat{\alpha}_x}\right\} + 2\Re\left\{\left(\left(\widehat{C}^{(i-1)}\right)^*\right)^2 K_2(2\hat{\alpha}_x)\right\}, \tag{4.34}$$

$$c_{\widehat{\alpha}_x}^{(i)} \triangleq \Im\left\{\left(\widehat{C}^{(i-1)}\right)^* \overline{X}_{1,\widehat{\alpha}_x}\right\} - \Im\left\{\left(\left(\widehat{C}^{(i-1)}\right)^*\right)^2 K_1(2\,\widehat{\alpha}_x)\right\}. \tag{4.35}$$

If eq. (4.31) is solved, one of its two solutions can be easily discarded, since it does not satisfy the inequalities (4.19).

The solution of eq. (4.32) (or the selected solution of eq. (4.31)) represents $\widehat{\Delta}_x^{(i)}$; for this, reason, it is used to compute the new estimate (see eq. (4.14) and the definition (4.18))

$$\widehat{f}_x^{(i)} = \frac{\widehat{\alpha}_x}{N_0 T_s} + \frac{\widehat{\Delta}_x^{(i)}}{2\pi T_s} \tag{4.36}$$

of $f_x$.

2) The estimate $\widehat{f}_x^{(i)}$ (4.36) is employed to compute the new estimate $\widehat{C}^{(i)} \triangleq \widehat{C}_R^{(i)} + j\,\widehat{C}_I^{(i)}$ of $C$ as

$$\widehat{C}^{(i)} = \frac{\overline{X}_{\text{int}}\left(\widehat{F}_x^{(i)}\right) - \overline{X}_{\text{int}}^*\left(\widehat{F}_x^{(i)}\right) g\left(\widehat{F}_x^{(i)}\right)}{1 - \left|g\left(\widehat{F}_x^{(i)}\right)\right|^2} \tag{4.37}$$

where $\widehat{F}_x^{(i)} \triangleq \widehat{f}_x^{(i)} T_s$ and $\overline{X}_{\text{int}}\left(\widehat{F}_x^{(i)}\right)$ is generated by interpolating the elements of the vector $\overline{X}_s$ (4.26).

It important to point out that:

a) The coefficients $K_1(x)$, $K_2(x)$ and $K_3(x)$ employed in eqs. (4.33)-(4.35) can be computed for any $x \in \{0, 1, ..., N_0 - 1\}$ and stored in a memory.
b) Eq. (4.32) is simpler to solve than eq. (4.31), but is expected to provide a less accurate estimate of $\Delta_x$. If eq. (4.31) is used, the solution

$$\widehat{\Delta}_x^{(i)} = -\frac{b_{\widehat{\alpha}_x}^{(i)} + \sqrt{\left(b_{\widehat{\alpha}_x}^{(i)}\right)^2 - 4\,a_{\widehat{\alpha}_x}^{(i)}\,c_{\widehat{\alpha}_x}^{(i)}}}{2\,a_{\widehat{\alpha}_x}^{(i)}} \tag{4.38}$$

is selected. In our simulation results illustrated in Section 6, eq. (4.32) has been employed.
c) The SFE can be exploited even if the sinusoid appearing in the RHS of eq. (4.105) is replaced by a sum of L sinusoids, characterized by distinct frequencies (see eq. (1.12)). In this case, one of the L sinusoids is considered as the useful component of the processed sequence and the remaining ones as part of the noise affecting it. Note that, in this case, the SFE estimates the parameters of the sinusoid generating the highest peak in the amplitude spectrum of the noisy sequence $\{x_{0,n}\}$ and the quality of its estimates is affected by both the amplitudes and the frequencies of the other (L - 1) sinusoids.
d) The SFE algorithm can be easily extended in a way that *multiple frequencies* are detected and estimated in parallel; the approach to be followed is the same as that illustrated in Sec. IV of "J. Selva, "ML Estimation and Detection of Multiple Frequencies Through Periodogram Estimate Refinement," IEEE Sig. Proc. Lett., vol. 24, no. 3, pp. 249-253, 2017.". Note that, in this case, the frequencies are searched for by setting a proper threshold and verifying that the frequency spacing between frequencies is large enough (so that appreciable mutual interference is avoided). Moreover, a proper threshold on the amplitude $|\widehat{C}^{(i)}|$ (i.e., the radar cross section of the target) is set to estimate the parameters of targets with comparable RCS.

An alternative to the SFE is represented by a related estimation algorithm (called single frequency estimator #2, SFE#2) that relies on the same mathematical results as the SFE and has the same structure. However, it is also based on the idea of taking the estimate $\widehat{F}_x^{(i-1)}$ generated in its ($i$ - 1)-th iteration as a coarse estimate of $F$ in the following (i.e., the $i$-th) iteration. The initialization phase of SFE#2 is very similar to that of SFE, the only difference being represented by the fact that the quantity

$$\widehat{\rho}_x^{(0)} = \widehat{F}_x^{(0)} N_0 = \widehat{\alpha}_x \tag{4.39}$$

is also defined. The new estimate $\widehat{\Delta}_x^{(i)}$ of $\Delta_x$ is computed through eq. (4.31) or eq. (4.32); in the evaluation of the coefficients $\left\{a_{\widehat{\alpha}_x}^{(i)}, b_{\widehat{\alpha}_x}^{(i)}, c_{\widehat{\alpha}_x}^{(i)}\right\}$ or $\left\{b_{\widehat{\alpha}_x}^{(i)}, c_{\widehat{\alpha}_x}^{(i)}\right\}$ appearing in the RHS of these equations, the quantities $\{K_p(2\widehat{\alpha}_x); p = 1,2,3\}$ and $\{\overline{X}_{k,\widehat{\alpha}_x}; k = 1,2,3\}$ are replaced by

$$K_p(2\widehat{\rho}_x^{(i-1)}) \triangleq \frac{1}{N} \sum_{n=0}^{N-1} n^p \exp\left(-j\frac{2\pi n 2\widehat{\rho}_x^{(i-1)}}{N_0}\right) \tag{4.40}$$

and

$$X_{k,\widehat{\rho}_x^{(i-1)}} \triangleq \frac{1}{N} \sum_{n=0}^{N-1} n^k x_n \exp\left(-j\frac{2\pi n \widehat{\rho}_x^{(i-1)}}{N_0}\right), \tag{4.41}$$

respectively, for $p$ = 1, 2, 3 and $k$ = 1, 2, 3, where

$$\widehat{\rho}_x^{(i-1)} = \widehat{F}_x^{(i-1)} N_0 . \tag{4.42}$$

Then, the new estimate of the normalised frequency $\widehat{F}_x^{(i)}$ is computed as

$$\widehat{F}_x^{(i)} = \widehat{F}_x^{(i-1)} + \frac{\widehat{\Delta}_x^{(i)}}{2\pi}. \tag{4.43}$$

The new estimate $\widehat{C}^{(i)}$ of $C$ is computed in the same way as in the SFE. It is important to point out that the comments b) to d) also apply to SFE#2 and that:

a) The quantities $\left\{K_p(2\widehat{\rho}_x^{(i-1)}); p = 1,2,3\right\}$ and $\left\{\overline{X}_{k,\widehat{\rho}_x^{(i-1)}}; k = 1,2,3\right\}$ required in the first step of SFE#2 can be computed exactly through eqs. (4.40) and (4.41), respectively. However, they can be also evaluated, in an approximate fashion, at a lower computational cost by interpolating $I$ consecutive elements of the $N_0$-dimensional vector

$$\mathbf{K}_p = \left[\mathrm{K}_p(0), \mathrm{K}_p(1), \ldots, \mathrm{K}_p(N_0 - 1)\right]^T . \tag{4.44}$$

and of the $N_0$-dimensional vector $\mathbf{X}_0$ (4.11), $\mathbf{X}_1$ (4.12) and $\mathbf{X}_2$ (4.13), respectively, where $I$ denotes the adopted interpolation order.

b) the quantity $\widehat{\rho}_x^{(i-1)}$ (4.42) accounts for both the components of $\widehat{F}_x^{(i-1)}$ (i.e., for both the integer $\widehat{\alpha}_x$ and the

residual $\widehat{\Delta}_x^{(i)}$ ) appearing in the RHS of (4.36).

In the remaining part of this paragraph, the equations on which the SFE and SFE#2 previously described are based are illustrated. We consider the signal model expressed by eq. (4.5), i.e.

$$x_n = a\cos(2\pi n f\, T_s + \psi) + w_n \qquad (4.45)$$

and rewrite it as

$$x_n = C\exp(j2\pi n F) + C^*\exp(-j2\pi n F) + w_n, \qquad (4.46)$$

where

$$C \triangleq \frac{1}{2}\,a\exp(j\psi) \qquad (4.47)$$

and

$$F \triangleq f T_s. \qquad (4.48)$$

Our objective is estimating the parameters $C$ and $F$ of the sinusoid contained in the sequence $\{x_n;\, n = 0,1,...,N\text{-}1\}$; if the sequence $\{w_n\}$ can be modelled as white Gaussian noise, optimal estimation of these parameters in the maximum likelihood (ML) sense is obtained by minimizing the *mean square error* (MSE)

$$E(\widetilde{F},\widetilde{C}) \triangleq \frac{1}{N}\sum_{n=0}^{N-1} E_n(\widetilde{F},\widetilde{C}), \qquad (4.49)$$

with respect to the trial parameters $\hat{F}$ and $\tilde{C}$; here,

$$E_n(\widetilde{F},\widetilde{C}) \triangleq \left[x_n - s_n(\widetilde{F},\widetilde{C})\right]^2 \qquad (4.50)$$

is the *square error* between the noisy sample $x_n$ and the sample

$$s_n(\widetilde{F},\widetilde{A}) \triangleq \widetilde{C}\exp(j2\pi n\widetilde{F}) + \widetilde{C}^*\exp(-j2\pi n\widetilde{F}), \qquad (4.51)$$

that represents the useful component of $x_n$ (4.46) under the assumption that $F = \tilde{F}$ and $C = \tilde{C}$. Substituting the RHS of the last equation in the RHS of eq. (4.50) yields

$$
\begin{aligned}
E_n(\widetilde{F},\widetilde{C}) &= \left[x_n - \widetilde{C}\exp(j2\pi n\widetilde{F}) - \widetilde{C}^*\exp(-j2\pi n\widetilde{F})\right]^2 \\
&= x_n^2 + 2\left[\widetilde{C}_R^2 + \widetilde{C}_I^2\right] - 4x_n\left[\widetilde{C}_R\cos(\widetilde{\phi}_n) - \widetilde{C}_I\sin(\widetilde{\phi}_n)\right] \quad (4.52) \\
&\quad + 2\left[\left(\widetilde{C}_R^2 - \widetilde{C}_I^2\right)\cos(2\widetilde{\phi}_n) - 2\widetilde{C}_R\widetilde{C}_I\sin(2\widetilde{\phi}_n)\right],
\end{aligned}
$$

where $\widetilde{C}_R \triangleq \Re\{\widetilde{C}\},\ \widetilde{C}_I \triangleq \Im\{\widetilde{C}\}$ and

$$\widetilde{\phi}_n \triangleq 2\pi n\widetilde{F}. \qquad (4.53)$$

Then, substituting eq. (4.52) in the RHS of (4.49) produces, after some manipulation,

$$E(\widetilde{F},\widetilde{C}) \;=\; E_x + 2\left[\widetilde{C}_R^2 + \widetilde{C}_I^2\right] - 4\left[\widetilde{C}_R\,\overline{X}_R(\widetilde{F}) + \widetilde{C}_I\,\overline{X}_I(\widetilde{F})\right]$$
$$+ 2\left[\left(\widetilde{C}_R^2 - \widetilde{C}_I^2\right)g_R(\widetilde{F}) + 2\,\widetilde{C}_R\,\widetilde{C}_I\,g_I(\widetilde{F})\right], \tag{4.54}$$

where

$$E_x \triangleq \frac{1}{N}\sum_{n=0}^{N-1} x_n^2, \tag{4.55}$$

$$\overline{X}_R(\widetilde{F}) \triangleq \Re\{\overline{X}(\widetilde{F})\}, \quad \overline{X}_I(\widetilde{F}) \triangleq \Im\{\overline{X}(\widetilde{F})\},$$

$$\overline{X}(\widetilde{F}) \;\triangleq\; \frac{1}{N}\sum_{n=0}^{N-1} x_n \exp\!\left(-j\,\widetilde{\phi}_n\right)$$
$$=\; \frac{1}{N}\sum_{n=0}^{N-1} x_n \exp\!\left(-j2\pi n\,\widetilde{F}\right), \tag{4.56}$$

$$g_R(\widetilde{F}) \triangleq \Re\{g(\widetilde{F})\}, \quad g_I(\widetilde{F}) \triangleq \Im\{g(\widetilde{F})\}$$

and

$$g(\widetilde{F}) \;\triangleq\; \frac{1}{N}\sum_{n=0}^{N-1} \exp\!\left(-j2\,\widetilde{\phi}_n\right)$$
$$=\; \frac{1}{N}\sum_{n=0}^{N-1} \exp\!\left(-j4\pi n\,\widetilde{F}\right). \tag{4.57}$$

The *maximum likelihood* (ML) estimates $F_{\mathrm{ML}}$ and $C_{\mathrm{ML}}$ of the $F$ and $C$, respectively, can be computed by solving the optimization problem

$$\{F_{\mathrm{ML}}, C_{\mathrm{ML}}\} = \underset{\widetilde{F},\widetilde{C}}{\arg\min}\, E(\widetilde{F},\widetilde{C}). \tag{4.58}$$

Solving this problem is not easy because of the *nonlinear* dependence of the function $E(\widetilde{F},\widetilde{C})$ (4.54) on $\widetilde{F}$. For this reason, an iterative method, known as *alternating minimization* (AM) is adopted in our work to solve it (e.g., see "I. Ziskind and M. Wax, "Maximum likelihood localization of multiple sources by alternating projection," IEEE Trans. Ac., Speech and Sig. Proc., vol. 36, no. 10, pp. 1553-1560, Oct. 1988."). In practice, this method is initialised by computing a coarse estimate $\hat{C}^{(0)}$ of $C$ and a coarse estimate $\hat{F}^{(0)}$ of $F$ under the assumption that $C = \hat{C}^{(0)}$. Then, an iterative procedure for progressively refining these estimates is executed. At the beginning of the $i$-th iteration (with $i = 1,2,...$), the estimate $\hat{F}^{(i-1)}$ of $F$ evaluated in the previous iteration is available and, based on this, the following new estimates are computed: a) a new estimate (denoted $\hat{C}^{(i)}$) of $C$ conditioned on $F = \hat{F}^{(i-1)}$; b) a new estimate (denoted $\hat{F}^{(i)}$) of $F$ conditioned on $C = \hat{C}^{(i)}$. Developing an algorithm based on this approach requires solving the following two problems: **P1)** the minimization of the function $E(\widetilde{F},\widetilde{C})$ with respect to $\widetilde{C}$ for a given $\widetilde{F}$; **P2)** the minimization of $E(\widetilde{F},\widetilde{C})$ with respect to $\widetilde{F}$ for a given $\widetilde{C}$. Let us focus first on problem **P1.** The minimum of the function $E(\widetilde{F},\widetilde{C})$ (4.54) with respect to $\widetilde{C}$ is the solution of the equations

$$\widetilde{C}_R - \overline{X}_R(\widetilde{F}) + \widetilde{C}_R\,g_R(\widetilde{F}) + \widetilde{C}_I\,g_I(\widetilde{F}) = 0 \tag{4.59}$$

and

$$\widetilde{C}_I - \overline{X}_I(\widetilde{F}) - \widetilde{C}_I\, g_R(\widetilde{F}) + \widetilde{C}_R\, g_I(\widetilde{F}) = 0, \qquad (4.60)$$

that result from computing the partial derivative of $E(\widetilde{F},\widetilde{C})$ with respect to $\widetilde{C}_R$ and $\widetilde{C}_I$, respectively. These equations can be easily rewritten as

$$\left[1 + g_R(\widetilde{F})\right]\widetilde{C}_R + g_I(\widetilde{F})\,\widetilde{C}_I = \overline{X}_R(\widetilde{F}) \qquad (4.61)$$

$$g_I(\widetilde{F})\,\widetilde{C}_R + \left[1 - g_R(\widetilde{F})\right]\widetilde{C}_I = \overline{X}_I(\widetilde{F}) \qquad (4.62)$$

Solving this linear system of equations in the unknowns $\widetilde{C}_R$ and $\widetilde{C}_I$ produces

$$\widehat{C} = \widehat{C}_R + j\,\widehat{C}_I = \frac{\overline{X}(\widehat{F}) - \overline{X}^*(\widehat{F})g(\widehat{F})}{1 - \left|g(\widehat{F})\right|^2}. \qquad (4.63)$$

Therefore, for a given $\widehat{F}$, the function $E(\widetilde{F},\widetilde{C})$ (4.54) is minimized with respect to $\widetilde{C}$ by setting $\widetilde{C} = \widehat{C}$, where $\widehat{C}$ is computed on the basis of eq. (4.63). Note that the last formulas are *exact* and require the evaluation of the two functions $\overline{X}(\widehat{F})$ (4.56) and $g(\widehat{F})$ (4.57). On the one hand, an efficient computation of the function $g(\widehat{F})$ can be accomplished by resorting to the simple and exact formula

$$g(\widetilde{F}) = \frac{1}{N}\sum_{n=0}^{N-1} w^n = \frac{1}{N}\frac{w^N - 1}{w - 1}, \qquad (4.64)$$

with $w = \exp(-j4\pi\widetilde{F})$. On the other hand, the procedure we adopt for the evaluation of $\overline{X}(\widehat{F})$ is approximate, being based on the use of the DFT and of the interpolation technique as described in Paragraph 4.1.2.

Then, let us focus on problem **P2**. Unluckily, no exact solution is available for this problem. The approximate solution we propose is based on: 1) assuming that the variable $\widetilde{F}$ can be expressed as (see eq. (4.17))

$$\widetilde{F} = \frac{\widehat{\alpha}}{N_0} + \frac{\widetilde{\varDelta}}{2\pi}, \qquad (4.65)$$

where $\widehat{\alpha}$ is a known integer and $\widetilde{\varDelta}$ is an unknown quantity satisfying the inequalities (see eq. (4.19))

$$\begin{cases} 0 \le \widetilde{\varDelta} \le \dfrac{\pi}{N_0} & \text{if } \widehat{\alpha} = 0 \\[2mm] -\dfrac{\pi}{N_0} < \widetilde{\varDelta} \le 0 & \text{if } \widehat{\alpha} = N_0 - 1 \\[2mm] -\dfrac{\pi}{N_0} < \widetilde{\varDelta} \le \dfrac{\pi}{N_0} & \text{otherwise} \end{cases} \qquad (4.66)$$

2) approximating the trigonometric functions $\cos(k\widetilde{\phi}_n)$ and $\sin(k\widetilde{\phi}_n)$ appearing in the RHS of eq. (4.52) (with $k = 1$ and 2). More specifically, based on eq. (4.65), the function $E_n(\widetilde{F},\widetilde{C})$ (4.52) is rewritten as

$$E_n(\widetilde{F},\widetilde{C}) \;=\; x_n^2 + 2\left[\widetilde{C}_R^2 + \widetilde{C}_I^2\right] - 4x_n\left[\widetilde{C}_R\cos(\widehat{\theta}_n + n\widetilde{\varDelta}) - \widetilde{C}_I\sin(\widehat{\theta}_n + n\widetilde{\varDelta})\right] \qquad (4.67$$

$$+ 2\left[\left(\widetilde{C}_R^2 - \widetilde{C}_I^2\right)\cos(2\widehat{\theta}_n + 2n\widetilde{\varDelta}) - 2\,\widetilde{C}_R\,\widetilde{C}_I\sin(2\widehat{\theta}_n + 2n\widetilde{\varDelta})\right], \;)$$

where

$$\widehat{\theta}_n \triangleq \frac{2\pi\,\widehat{\alpha}}{N_0}\,n. \qquad\qquad (4.68)$$

Then, eq. (4.67) can be put in the equivalent form

$$
\begin{aligned}
E_n\big(\widetilde{F},\widetilde{C}\big) \;=\;& x_n^2 + 2\Big[\widetilde{C}_R^2 + \widetilde{C}_I^2\Big]\\
& -4\,\widetilde{C}_R\left[x_n\cos(\widehat{\theta}_n)\cos(n\widetilde{\varDelta}) - x_n\sin(\widehat{\theta}_n)\sin(n\widetilde{\varDelta})\right]\\
& +4\,\widetilde{C}_I\left[x_n\sin(\widehat{\theta}_n)\cos(n\widetilde{\varDelta}) + x_n\cos(\widehat{\theta}_n)\sin(n\widetilde{\varDelta})\right] \qquad (4.69)\\
& +2\left(\widetilde{C}_R^2 - \widetilde{C}_I^2\right)\left[\cos(2\,\widehat{\theta}_n)\cos(2n\widetilde{\varDelta}) - \sin(2\,\widehat{\theta}_n)\sin(2n\widetilde{\varDelta})\right]\\
& -4\,\widetilde{C}_R\,\widetilde{C}_I\left[\sin(2\,\widehat{\theta}_n)\cos(2n\widetilde{\varDelta}) + \cos(2\,\widehat{\theta}_n)\sin(2n\widetilde{\varDelta})\right]
\end{aligned}
$$

by exploiting standard trigonometric formulas. Finally, substituting the RHS of eq. (4.69) in that of eq. (4.49) yields

$$
\begin{aligned}
E\big(\widetilde{F},\widetilde{C}\big) \;=\;& E_x + 2\Big[\widetilde{C}_R^2 + \widetilde{C}_I^2\Big]\\
& -4\,\widetilde{C}_R\,\frac{1}{N}\sum_{n=0}^{N-1}\left[x_n\cos(\widehat{\theta}_n)\cos(n\widetilde{\varDelta}) - x_n\sin(\widehat{\theta}_n)\sin(n\widetilde{\varDelta})\right]\\
& +4\,\widetilde{C}_I\,\frac{1}{N}\sum_{n=0}^{N-1}\left[x_n\sin(\widehat{\theta}_n)\cos(n\widetilde{\varDelta}) + x_n\cos(\widehat{\theta}_n)\sin(n\widetilde{\varDelta})\right] \qquad (4.70)\\
& +2\left(\widetilde{C}_R^2 - \widetilde{C}_I^2\right)\frac{1}{N}\sum_{n=0}^{N-1}\left[\cos(2\,\widehat{\theta}_n)\cos(2n\widetilde{\varDelta}) - \sin(2\,\widehat{\theta}_n)\sin(2n\widetilde{\varDelta})\right]\\
& -4\,\widetilde{C}_R\,\widetilde{C}_I\,\frac{1}{N}\sum_{n=0}^{N-1}\left[\sin(2\,\widehat{\theta}_n)\cos(2n\widetilde{\varDelta}) + \cos(2\,\widehat{\theta}_n)\sin(2n\widetilde{\varDelta})\right].
\end{aligned}
$$

The last formula depends on the variable $\widetilde{\varDelta}$ through the nonlinear functions $sin(nq\widetilde{\varDelta})$ and $cos(nq\widetilde{\varDelta})$, with $q = 1$ and 2. However, based on the inequalities (4.66) and on the assumption that the parameter $M$ is large enough (say, $M \gtrsim 10$)), the following standard approximations

$$\sin(n\widetilde{\varDelta}) \simeq n\widetilde{\varDelta}, \qquad\qquad (4.71)$$

$$\cos(n\widetilde{\varDelta}) \simeq 1 - \frac{1}{2}n^2\widetilde{\varDelta}^2, \qquad\qquad (4.72)$$

$$\sin(2n\widetilde{\varDelta}) \simeq 2n\widetilde{\varDelta} - \frac{4}{3}n^3\widetilde{\varDelta}^3 \qquad\qquad (4.73)$$

and

$$\cos(2n\widetilde{\varDelta}) \simeq 1 - 2n^2\widetilde{\varDelta}^2, \qquad\qquad (4.74)$$

all based on the Taylor series of the trigonometric functions sin(x) and cos(x), can be adopted. Then, substituting the RHS of eqs. (4.71)-(4.74) in that of eq. (4.70) yields, after some manipulation

$$
\begin{aligned}
E\big(\widetilde{F},\widetilde{C}\big) \;\cong\;& E_{\mathrm{SFE},a}\big(\widetilde{\varDelta},\widetilde{C}\big) \\
\triangleq\;& E_x + 2\left[\widetilde{C}_R^2 + \widetilde{C}_I^2\right] \\
& -4\,\widetilde{C}_R\,X_{0,\widehat{a},R} + 2\,\widetilde{\varDelta}^2\,\widetilde{C}_R\,X_{2,\widehat{a},R} - 4\,\widetilde{\varDelta}\,\widetilde{C}_R\,X_{1,\widehat{a},I} \\
& -4\,\widetilde{C}_I\,X_{0,\widehat{a},I} + 2\,\widetilde{\varDelta}^2\,\widetilde{C}_I\,X_{2,\widehat{a},I} + 4\,\widetilde{\varDelta}\,\widetilde{C}_I\,X_{1,\widehat{a},R} \\
& +2\left(\widetilde{C}_R^2 - \widetilde{C}_I^2\right)\Big[\Re\{K_0(2\,\widehat{a})\} - 2\,\widetilde{\varDelta}^2\,\Re\{K_2(2\,\widehat{a})\} \\
& +2\,\widetilde{\varDelta}\,\Im\{K_1(2\,\widehat{a})\} - \tfrac{4}{3}\widetilde{\varDelta}^3\,\Im\{K_3(2\,\widehat{a})\}\Big] \\
& -4\,\widetilde{C}_R\,\widetilde{C}_I\Big[-\Im\{K_0(2\,\widehat{a})\} + 2\,\widetilde{\varDelta}^2\,\Im\{K_2(2\,\widehat{a})\} \\
& +2\,\widetilde{\varDelta}\,\Re\{K_1(2\,\widehat{a})\} - \tfrac{4}{3}\widetilde{\varDelta}^3\,\Re\{K_3(2\,\widehat{a})\}\Big],
\end{aligned}
\tag{4.75}
$$

where $X_{0,\widehat{a},R} \triangleq \Re\{X_{0,\widehat{a}}\}$, $X_{0,\widehat{a},I} \triangleq \Im\{X_{0,\widehat{a}}\}$, $X_{1,\widehat{a},R} \triangleq \Re\{X_{1,\widehat{a}}\}$, $X_{1,\widehat{a},I} \triangleq \Im\{X_{1,\widehat{a}}\}$, $X_{2,\widehat{a},R} \triangleq \Re\{X_{2,\widehat{a}}\}$, $X_{2,\widehat{a},I} \triangleq \Im\{X_{2,\widehat{a}}\}$,

$$
X_{0,\widehat{a}} \triangleq \frac{1}{N}\sum_{n=0}^{N-1} x_n \exp\left(-j\frac{2\pi n\,\widehat{a}}{N_0}\right),
\tag{4.76}
$$

$$
X_{1,\widehat{a}} \triangleq \frac{1}{N}\sum_{n=0}^{N-1} n\,x_n \exp\left(-j\frac{2\pi n\,\widehat{a}}{N_0}\right),
\tag{4.77}
$$

$$
X_{2,\widehat{a}} \triangleq \frac{1}{N}\sum_{n=0}^{N-1} n^2 x_n \exp\left(-j\frac{2\pi n\,\widehat{a}}{N_0}\right),
\tag{4.78}
$$

and $K_p(x)$ are defined by eq. (4.30). Note that the quantities $X_{0,\widehat{a}}$, $X_{1,\widehat{a}}$ and $X_{2,\widehat{a}}$ represent the $a$-th element of the vectors $\overline{\mathbf{X}}_0$ (4.11), $\overline{\mathbf{X}}_1$ (4.12) and $\overline{\mathbf{X}}_2$ (4.13), respectively.

Given the function $E_{\mathrm{SFE},a}(\widetilde{\varDelta},\widetilde{C})$ (4.75), an approximate expression for $\widehat{\varDelta}$ is obtained by computing the partial derivative of this function with respect to $\widetilde{\varDelta}$ and setting it to zero; this results in

$$
\begin{aligned}
& 4\,\widetilde{\varDelta}\,\widetilde{C}_R\,X_{2,\widehat{a},R} + 4\,\widetilde{\varDelta}\,\widetilde{C}_I\,X_{2,\widehat{a},I} - 4\,\widetilde{C}_R\,X_{1,\widehat{a},I} + 4\,\widetilde{C}_I\,X_{1,\widehat{a},R} \\
& +2\left(\widetilde{C}_R^2 - \widetilde{C}_I^2\right)\Big[-4\,\widetilde{\varDelta}\,\Re\{K_2(2\,\widehat{a})\} + 2\Im\{K_1(2\,\widehat{a})\} - 4\,\widetilde{\varDelta}^2\,\Im\{K_3(2\,\widehat{a})\}\Big] \\
& -4\,\widetilde{C}_R\,\widetilde{C}_I\Big[4\,\widetilde{\varDelta}\,\Im\{K_2(2\,\widehat{a})\} + 2\Re\{K_1(2\,\widehat{a})\} - 4\,\widetilde{\varDelta}^2\,\Re\{K_3(2\,\widehat{a})\}\Big] = 0.
\end{aligned}
\tag{4.79}
$$

The last equation can be easily put in the form

$$
\begin{aligned}
& 2\,\widetilde{\varDelta}^2\left[\left(\widetilde{C}_R^2 - \widetilde{C}_I^2\right)\Im\{K_3(2\,\widehat{a})\} - 2\,\widetilde{C}_R\,\widetilde{C}_I\,\Re\{K_3(2\,\widehat{a})\}\right] \\
& +\widetilde{\varDelta}\Big[-\widetilde{C}_R\,X_{2,\widehat{a},R} - \widetilde{C}_I\,X_{2,\widehat{a},I} + 2\Re\{K_2(2\,\widehat{a})\}\left(\widetilde{C}_R^2 - \widetilde{C}_I^2\right) + 4\,\widetilde{C}_R\,\widetilde{C}_I\,\Im\{K_2( \\
& +\widetilde{C}_R\,X_{1,\widehat{a},I} - \widetilde{C}_I\,X_{1,\widehat{a},R} - \left(\widetilde{C}_R^2 - \widetilde{C}_I^2\right)\Im\{K_1(2\,\widehat{a})\} + 2\,\widetilde{C}_R\,\widetilde{C}_I\,\Re\{K_1(2\,\widehat{a})\} \Big) \\
& = 0,
\end{aligned}
\tag{4.80}
$$

which is equivalent to

$$a\,\widetilde{\Delta}^2 + b\,\widetilde{\Delta} + c = 0, \qquad (4.81)$$

where

$$\begin{aligned}
a &\triangleq 2\left[\left(\widetilde{C}_R^2 - \widetilde{C}_I^2\right)\Im\{K_3(2\,\widehat{\alpha})\} - 2\,\widetilde{C}_R\,\widetilde{C}_I\,\Re\{K_3(2\,\widehat{\alpha})\}\right] \qquad (4.82 \\
&= 2\Im\{\left(\widetilde{C}^*\right)^2 K_3(2\,\widehat{\alpha})\}, \qquad\qquad )
\end{aligned}$$

$$\begin{aligned}
b &\triangleq -\widetilde{C}_R\, X_{2,\widehat{\alpha},R} - \widetilde{C}_I\, X_{2,\widehat{\alpha},I} + 2\Re\{K_2(2\,\widehat{\alpha})\}\left(\widetilde{C}_R^2 - \widetilde{C}_I^2\right) + 4\,\widetilde{C}_R\,\widetilde{C}_I\,\Im\{K_2(2\,\widehat{\alpha}) \quad (4.83 \\
&= -\Re\{\widetilde{C}^*\, X_{2,\widehat{\alpha}}\} + 2\Re\{\left(\widetilde{C}^*\right)^2 K_2(2\,\widehat{\alpha})\} \qquad\qquad )
\end{aligned}$$

and

$$\begin{aligned}
c &\triangleq \widetilde{C}_R\, X_{1,\widehat{\alpha},I} - \widetilde{C}_I\, X_{1,\widehat{\alpha},R} - \left(\widetilde{C}_R^2 - \widetilde{C}_I^2\right)\Im\{K_1(2\,\widehat{\alpha})\} + 2\,\widetilde{C}_R\,\widetilde{C}_I\,\Re\{K_1(2\,\widehat{\alpha})\} \\
&= \Im\{\widetilde{C}^*\, X_{1,\widehat{\alpha}}\} - \Im\{\left(\widetilde{C}^*\right)^2 K_1(2\,\widehat{\alpha})\}. \qquad\qquad (4.84)
\end{aligned}$$

It should be expected that only one of the two solutions of Eq. (4.81) satisfies the inequalities (4.66); this solution is denoted $\widehat{\Delta}$ and is used to compute the estimate (see eq. (4.65))

$$\widehat{F} = \frac{\widehat{\alpha}}{N_0} + \frac{\widehat{\Delta}}{2\pi} \qquad (4.85)$$

of F. This solves the second problem.

4.1.3. Complex single frequency estimator

The algorithm executed by the CFSE processes the complex vectors

$$\mathbf{x}_m \triangleq \left[x_{m,0}, x_{m,1}, \ldots, x_{m,\overline{N}-1}\right]^T, \qquad (4.86)$$

with $m = 0,1,2$ and 3; here, $\{x_{0,n}\}$ is the sequence of available noisy measurements,

$$x_{m,n} = n^m \cdot x_{0,n}, \qquad (4.87)$$

with $m = 1,2$ and 3 and $n = 0,1,\ldots,\overline{N}-1$. This algorithm is derived under the assumption that the n-th element of the vector $\mathbf{x}_0$ (4.86) can be expressed as

$$x_{0,n} = a\,exp(j(2\pi F_x n + \varphi_x)) + w_n, \qquad (4.88)$$

with $n = 0,1,\ldots,\overline{N}-1$; here, $F_x$ is a normalized frequency, $a$ is a real positive parameter and $\{w_n\}$ is a complex noise sequence. It is worth stressing that $F_x$ represents a normalized frequency if this algorithm is applied to the time domain complex samples acquired by an FMCW radar and a normalized spatial frequency if it is applied to the FFT coefficients computed over multiple receive antennas of the same radar device for the estimation of the angular coordinates of targets.
The CSFE algorithm computes an estimate $\widehat{F}_x$ of the frequency $F_x$ and an estimate $\widehat{A}_x$ of the complex amplitude

$$A_x \triangleq a \exp(j\varphi_x) \qquad (4.89)$$

characterizing the complex exponential contained in the sequence $\{x_{0,n}\}$.

It operates as follows. The vectors $\{\mathbf{x}_0, \mathbf{x}_1, \mathbf{x}_2, \mathbf{x}_3\}$ (4.86) are zero padded by appending to it $(\overline{M}-1)\overline{N}$ zeros, where $\overline{M}$ is an integer parameter (oversampling factor); this results in the $\overline{M}\,\overline{N}$-dimensional vectors

$$\mathbf{x}_{m,\mathrm{ZP}} = \left[ (\mathbf{x}_m)^T\ \mathbf{0}_{(\overline{M}-1)\overline{N}}^T \right]^T, \qquad (4.90)$$

with $m = 0,1,2$ and 3. These vectors undergo $\overline{N}_0 \triangleq \overline{M}\,\overline{N}$ -th order DFT processing; this produces the $\overline{N}_0$-dimensional vector

$$\mathbf{X}_m = \left[ X_{m,0}, X_{m,1}, \ldots, X_{m,\overline{N}_0-1} \right]^T \triangleq \mathrm{DFT}_{\overline{N}_0}\left[ \mathbf{x}_{m,\mathrm{ZP}} \right], \qquad (4.91)$$

with m = 0,1,2 and 3. Note that, generally speaking, the frequency $F_x$ is not a multiple of the fundamental frequency $1/\overline{N}_0$ associated with the FFT processing; for this reason, it can be expressed as

$$F_x = \frac{1}{\overline{N}_0}\alpha_x + \frac{1}{\overline{N}_0}\delta_x, \qquad (4.92)$$

where $\alpha_x$ is an integer belonging to the set $\{0, 1, \ldots, \overline{N}_0 - 1\}$ and $\delta_x$ is a real quantity, such that

$$\begin{cases} 0 \le \delta_x \le 0.5 & \text{for } \alpha_x = 0 \\ -0.5 < \delta_x \le 0 & \text{for } \alpha_x = \overline{N}_0 - 1. \\ -0.5 < \delta_x \le 0.5 & \text{otherwise} \end{cases} \qquad (4.93)$$

The representation (4.92) can be also rewritten as

$$2\pi F_x = \frac{2\pi}{\overline{N}_0}\alpha_x + \Delta_x, \qquad (4.94)$$

where

$$\Delta_x = \frac{2\pi}{\overline{N}_0}\delta_x \qquad (4.95)$$

with (see eq. (4.93))

$$\begin{cases} 0 \le \Delta_x \le \dfrac{\pi}{\overline{N}_0} & \text{for } \alpha_x = 0 \\[2ex] -\dfrac{\pi}{\overline{N}_0} < \Delta_x \le 0 & \text{for } \alpha_x = \overline{N}_0 - 1. \\[2ex] -\dfrac{\pi}{\overline{N}_0} < \Delta_x \le \dfrac{\pi}{\overline{N}_0} & \text{otherwise} \end{cases} \qquad (4.96)$$

The CSFE computes the estimates $\hat{A}_x$, $\hat{\alpha}_x$ and $\hat{\Delta}_x$ of the parameters $\hat{A}_x$, $\alpha_x$ and $\hat{A}_x$, respectively; this allows to compute the estimate

$$\widehat{F}_x = \frac{1}{\overline{N}_0}\widehat{\alpha}_x + \frac{1}{2\pi}\widehat{\Delta}_x \qquad (4.97)$$

of the normalized frequency $F_x$(4.92).

The CSFE operates as follows. First of all, the estimate $\hat{\alpha}_{\hat{x}}$ is evaluated by means of the *periodogram method* (e.g., see "J. G. Proakis and D. G. Manolakis, Digital Signal processing: Principles, Algorithms and Applications. Third Edition. New York, Ny: Prentice Hall, New York, 1993."), i.e. as

$$\widehat{\alpha}_x = \arg\max_{\widetilde{\alpha}\in\{0,1,\ldots,\overline{N}_0-1\}}\left|\overline{X}_{0,\widetilde{\alpha}}\right|, \qquad (4.98)$$

Then, an iterative algorithm is employed to generate the estimates $\hat{\Delta}_x$ and $\hat{A}_x$. The *i*-th iteration is fed by the estimates $\widehat{\Delta}_x^{(i-1)}$, $\widehat{F}_x^{(i-1)}$ and $\widehat{A}_x^{(i-1)}$ of $\Delta_x$, $F_x$ and $\hat{A}_x$, respectively, and generates the new estimates $\widehat{\Delta}_x^{(i)}$, $\widehat{F}_x^{(i)}$ and $\widehat{A}_x^{(i)}$. The algorithm is initialised by setting the iteration index i to 1,

$$\widehat{A}_x^{(0)} = \overline{X}_{0,\widehat{\alpha}_x} \qquad (4.99)$$

In its *i*-th iteration (with $i = 1,2,\ldots,N_{\text{CSFE}}$, where $N_{\text{CSFE}}$ is the overall number of recursions), the two steps described below are accomplished.

1) The equation

$$a_{\widehat{\alpha}_x}^{(i)}\left(\widetilde{\Delta}_x^{(i)}\right)^2 + b_{\widehat{\alpha}_x}^{(i)}\,\widetilde{\Delta}_x^{(i)} + c_{\widehat{\alpha}_x}^{(i)} = 0 \qquad (4.100)$$

or the equation

$$b_{\widehat{\alpha}_x}^{(i)}\,\widetilde{\Delta}_x^{(i)} + c_{\widehat{\alpha}_x}^{(i)} = 0 \qquad (4.101)$$

in the variable $\Delta_x$ are solved; here (see eqs. (4.139)-(4.141)),

$$a_{\widehat{\alpha}_x}^{(i)} \triangleq \Im\left\{\left(\left(\widehat{A}^{(i-1)}\right)^*\right)^2 \overline{X}_{3,\widehat{\alpha}_x}\right\}, \qquad (4.102)$$

$$b_{\widehat{\alpha}_x}^{(i)} \triangleq \Re\left\{\left(\widehat{A}^{(i-1)}\right)^* \overline{X}_{2,\widehat{\alpha}_x}\right\} \qquad (4.103)$$

$$c_{\widehat{\alpha}_x}^{(i)} \triangleq -\Im\left\{\left(\widehat{A}^{(i-1)}\right)^* \overline{X}_{1,\widehat{\alpha}_x}\right\}. \qquad (4.104)$$

If eq. (4.100) is solved, one of its two solutions can be easily discarded, since it does not satisfy the inequalities (4.93). The solution of eq. (4.101) (or the selected solution of eq. (4.100)) represents $\widehat{\Delta}_x^{(i)}$; for this, reason, it is exploited to compute the new estimate (see eq. (4.97))

$$\widehat{F}_x^{(i)} = \frac{1}{\overline{N}_0}\widehat{\alpha}_x + \frac{1}{2\pi}\widehat{\Delta}_x^{(i)} \qquad (4.105)$$

of $F_x$.

2) The estimate $\widehat{F}_x^{(i)}$ is employed to compute the new estimate $\widehat{A}_x^{(i)} \triangleq \widehat{A}_{x,R}^{(i)} + j\widehat{A}_{x,I}^{(i)}$ as

$$\widehat{A}_x^{(i)} = \overline{X}_{\text{int}}(\widehat{F}_x^{(i)}) \qquad (4.106)$$

and $\overline{X}_{\text{int}}\left(\widehat{F}_x^{(i)}\right)$ is generated by interpolating the elements of the vector

$$\overline{\mathbf{X}}_s \triangleq M\,\overline{\mathbf{X}}_0, \qquad (4.107)$$

that collects $\overline{N}_0$ uniformly spaced samples of the spectrum of the vector $\mathbf{x}_0$ (4.86); in our work, similarly as the SFE, barycentric interpolation is used.

It important to point out that:

a) Eq. (4.101) is simpler to solve than eq. (4.100), but is expected to provide a less accurate estimate of $\Delta_x$. If eq. (4.100) is used, the solution

$$\widehat{\Delta}_x^{(i)} = -\frac{b_{\widehat{\alpha}_x}^{(i)} + \sqrt{\left(b_{\widehat{\alpha}_x}^{(i)}\right)^2 - 4\,a_{\widehat{\alpha}_x}^{(i)}\,c_{\widehat{\alpha}_x}^{(i)}}}{2\,a_{\widehat{\alpha}_x}^{(i)}} \qquad (4.108)$$

is selected. In our simulation results illustrated in Section 6, eq. (4.101) is used.

b) The CSFE can be exploited even if the exponential appearing in the RHS of eq. (4.88) is replaced by a sum of $L$ exponentials, characterized by distinct frequencies (see eq. (1.23)). This is equivalent to considering one of the $L$ exponentials as the useful component of the processed signal and the remaining ones as part of the noise affecting it. Note that, in this case, the CSFE estimates the parameters of the complex exponential generating the highest peak in the amplitude spectrum of the noisy sequence $\{x_{0,n}\}$ and the quality of its estimates is affected by both the amplitudes and the frequencies of the other $(L - 1)$ exponentials. An alternative to the CSFE is represented by a related estimation algorithm (called complex single frequency estimator #2, CSFE#2) that relies on the same mathematical results as CSFE and has the same structure. However, it is also based on the idea of taking the estimate $\widehat{F}_x^{(i-1)}$ generated in its $(i-1)$-th iteration as a coarse estimate of $F$ in the following (i.e., the $i$-th) iteration. The initialization phase of CSFE#2 is very similar to that of CSFE, the only difference being represented by the fact that the quantity

$$\widehat{\rho}_x^{(0)} = \widehat{F}_x^{(0)}\,N_0 = \widehat{\alpha}_x \qquad (4.109)$$

is also defined. The new estimate $\widehat{\Delta}_x^{(i)}$ of $\Delta_x$ is computed through eq. (4.100) or eq. (4.101); in the evaluation of the coefficients $\left\{a_{\widehat{\alpha}_x}^{(i)}, b_{\widehat{\alpha}_x}^{(i)}, c_{\widehat{\alpha}_x}^{(i)}\right\}$ or $\left\{b_{\widehat{\alpha}_x}^{(i)}, c_{\widehat{\alpha}_x}^{(i)}\right\}$ appearing in the RHS of these equations, the quantity $\{\vec{X}_{k,\widehat{\alpha}_x}; k = 1,2,3\}$ is replaced by

$$X_{k,\widehat{\rho}_x^{(i-1)}} \triangleq \frac{1}{N} \sum_{n=0}^{N-1} n^k\,x_n\exp\left(-j\frac{2\pi n\,\widehat{\rho}_x^{(i-1)}}{N_0}\right), \qquad (4.110)$$

for $k = 1,2,3$, where

$$(4.111)$$

$$\widehat{\rho}_x^{(i-1)} = \widehat{F}_x^{(i-1)} N_0.$$

Then, the new estimate of the normalised frequency $\widehat{F}_x^{(i)}$ is computed as

$$(4.112)$$

$$\widehat{F}_x^{(i)} = \widehat{F}_x^{(i-1)} + \frac{\widehat{\Delta}_x^{(i)}}{2\pi}.$$

The new estimate $\hat{C}^{(i)}$ of $C$ is computed in the same way as in the CSFE. It is important to point out that all the comments illustrated for the CSFE also apply to CSFE#2 and that:

a) The quantity $\left\{\overline{X}_{k,\widehat{\rho}_x^{(i-1)}};\ k = 1, 2, 3\right\}$ required in the first step of CSFE#2 can be computed exactly through eq. (4.110). However, it can be also evaluated, in an approximate fashion, at a lower computational cost by interpolating $I$ consecutive elements of the $N_0$-dimensional vectors $\{\mathbf{X}_m;\ m = 1,2,3\}$ (4.91), where $I$ denotes the adopted interpolation order.

b) the quantity $\widehat{\rho}_x^{(i-1)}$ (4.111) accounts for both the components of $\widehat{F}_x^{(i-1)}$ (i.e., for both the integer $\hat{\alpha}_x$ and the residual $\widehat{\Delta}_x^{(i)}$) appearing in the RHS of (4.105).

In the remaining part of this paragraph, the equations on which the CSFE and CSFE#2 previously described are based are illustrated. We consider the complex counterpart of the real model expressed by eq. (4.45), i.e.

$$x_n = \alpha \exp(j(2\pi n f T_s + \phi)) + w_n \qquad (4.113)$$

and rewrite it as

$$x_n = A \exp(j 2\pi n F) + w_n, \qquad (4.114)$$

where

$$A \triangleq \alpha \exp(j\phi) \qquad (4.115)$$

and

$$F \triangleq f T_s. \qquad (4.116)$$

Our objective is estimating the parameters $A$ and $F$ of the complex exponential contained in the sequence $\{x_n;\ n = 0,1,...,N-1\}$; if the sequence $\{w_n\}$ can be modelled as white Gaussian noise, optimal estimation of these parameters in the *maximum likelihood* (ML) sense is obtained by minimizing the *mean square error* (MSE)

$$E\left(\widetilde{F}, \widetilde{A}\right) \triangleq \frac{1}{N} \sum_{n=0}^{N-1} E_n\left(\widetilde{F}, \widetilde{A}\right), \qquad (4.117)$$

with respect to the trial parameters $\widetilde{F}$ and $\widetilde{A}$; here

$$E_n\left(\widetilde{F}, \widetilde{A}\right) \triangleq \left|x_n - s_n(\widetilde{F}, \widetilde{A})\right|^2 \qquad (4.118)$$

is the *square error* between the noisy sample $x_n$ and the sample

$$s_n\big(\tilde{F},\tilde{A}\big) \triangleq \tilde{A}\exp\big(j2\pi n\tilde{F}\big), \qquad (4.119)$$

that represents the useful component of $x_n$ (4.114) under the assumption that $F = \tilde{F}$ and $A = \tilde{A}$. Substituting the RHS of the last equation in that of eq. (4.118) yields

$$
\begin{aligned}
E_n\big(\tilde{F},\tilde{A}\big) &= \big|x_n - \tilde{A}\exp\big(j2\pi n\tilde{F}\big)\big|^2 \\
&= |x_n|^2 + \tilde{A}_R^2 + \tilde{A}_I^2 - 2\Re\{x_n\tilde{A}^*\exp(-j\tilde{\phi}_n)\} \\
&= |x_n|^2 + \tilde{A}_R^2 + \tilde{A}_I^2 - 2(x_{n,R}\tilde{A}_R + x_{n,I}\tilde{A}_I)\cos(\tilde{\phi}_n) \\
&\quad -2(x_{n,I}\tilde{A}_R - x_{n,R}\tilde{A}_I)\sin(\tilde{\phi}_n),
\end{aligned}
\qquad (4.120)
$$

where $\tilde{A}_R \triangleq \Re\{\tilde{A}\}, \ \tilde{A}_I \triangleq \Im\{\tilde{A}\}, \ x_{n,R} \triangleq \Re\{x_n\}, \ x_{n,I} \triangleq \Im\{x_n\}$ and

$$\tilde{\phi}_n \triangleq 2\pi n\tilde{F}. \qquad (4.121)$$

Then, substituting the RHS of eq. (4.120) in that of eq. (4.117) produces, after some manipulation,

$$E\big(\tilde{F},\tilde{A}\big) = E_x + \tilde{A}_R^2 + \tilde{A}_I^2 - 2\tilde{A}_R\,X_{0,\hat{\alpha},R} - 2\tilde{A}_I\,X_{0,\hat{\alpha},I}, \qquad (4.122)$$

where

$$E_x \triangleq \frac{1}{N}\sum_{n=0}^{N-1}|x_n|^2, \qquad (4.123)$$

$$X_{m,\hat{\alpha},R} \triangleq \Re\{X_{m,\hat{\alpha}}\}, \ \ X_{m,\hat{\alpha},I} \triangleq \Im\{X_{m,\hat{\alpha}}\} \ \ \text{and}$$

$$X_{m,\hat{\alpha}} \triangleq \frac{1}{N}\sum_{n=0}^{N-1} n^m x_n\exp\left(-j\frac{2\pi n\,\hat{\alpha}}{N_0}\right). \qquad (4.124)$$

The procedure we follow to minimise the function $E(\tilde{F},\tilde{A})$ (4.122) with respect to $\tilde{F}$ and $\tilde{A}$ is similar to that illustrated in Paragraph 4.1.2 for the SFE. For this reason, we first show how the function $E(\tilde{F},\tilde{A})$ (4.122) can be minimised with respect to $\tilde{A}$ for a given $\tilde{F}$; then, we show how the same function can be minimised with respect to F for a given $\tilde{A}$. The solution of the first problem can be obtained by solving the equations

$$\tilde{A}_R - X_{0,\hat{\alpha},R} = 0 \qquad (4.125)$$

and

$$\tilde{A}_I - X_{0,\hat{\alpha},I} = 0, \qquad (4.126)$$

that result from computing the partial derivative of the function $E(\tilde{F},\tilde{A})$ (4.122) with respect to $\tilde{A}_R$ and $\tilde{A}_I$, respectively. Solving this linear system of equations in the unknowns $\tilde{A}_R$ and $\tilde{A}_I$ produces

$$\hat{A} = X_{0,\hat{\alpha}}. \qquad (4.127)$$

Note that the last formula is *exact* and require the evaluation of the function $X_{0,\hat{\alpha}}$ (see the definition (4.124)).

Unluckily, an exact expression for the value of $\tilde{F}$ minimising the function $E(\tilde{F},\tilde{A})$ for a given $\tilde{A}$ cannot be derived because of its *nonlinear* dependence on this variable. The approximate solution we propose is based on: 1) assuming that (see eqs. (4.94)-(4.96))

$$2\pi\,\tilde{F} = \frac{2\pi}{\overline{N}_0}\,\hat{\alpha} + \tilde{\Delta}, \qquad\qquad (4.128)$$

where $\overline{N}_0 = \overline{M}\,N$, $\hat{\alpha}$ is a known quantity, whereas $\tilde{\Delta}$ is a variable satisfying the inequalities

$$\begin{cases} 0 \le \tilde{\Delta} \le \dfrac{\pi}{\overline{N}_0} & \text{for } \hat{\alpha} = 0 \\[2ex] -\dfrac{\pi}{\overline{N}_0} < \tilde{\Delta} \le 0 & \text{for } \hat{\alpha} = \overline{N}_0 - 1 \\[2ex] -\dfrac{\pi}{\overline{N}_0} < \tilde{\Delta} \le \dfrac{\pi}{\overline{N}_0} & \text{otherwise} \end{cases} \qquad (4.129)$$

2) approximating the trigonometric functions $\cos(\tilde{\phi}_n)$ and $\sin(\tilde{\phi}_n)$ appearing in the RHS of eq. (4.120). More specifically, based on eq. (4.128), the function $E_n(\tilde{F},\tilde{A})$ (4.120) is rewritten as

$$\begin{aligned} E_n\big(\tilde{F},\tilde{A}\big) \;=\; & |x_n|^2 + \tilde{A}_R^2 + \tilde{A}_I^2 \\ & -2(x_{n,R}\,\tilde{A}_R + x_{n,I}\,\tilde{A}_I)\cos(\hat{\theta}_n + n\,\tilde{\Delta}) \qquad (4.130) \\ & -2(x_{n,I}\,\tilde{A}_R - x_{n,R}\,\tilde{A}_I)\sin(\hat{\theta}_n + n\,\tilde{\Delta}) \end{aligned}$$

where

$$\hat{\theta}_n \triangleq \frac{2\pi n}{\overline{N}_0}\,\hat{\alpha}. \qquad\qquad (4.131)$$

Then, eq. (4.130) is put in the equivalent form

$$\begin{aligned} E_n\big(\tilde{F},\tilde{A}\big) \;=\; & |x_n|^2 + \tilde{A}_R^2 + \tilde{A}_I^2 \\ & -2(x_{n,R}\,\tilde{A}_R + x_{n,I}\,\tilde{A}_I)\big[\cos(\hat{\theta}_n)\cos(n\,\tilde{\Delta}) - \sin(\hat{\theta}_n)\sin(n\,\tilde{\Delta})\big] \quad (4.132) \\ & -2(x_{n,I}\,\tilde{A}_R - x_{n,R}\,\tilde{A}_I)\big[\sin(\hat{\theta}_n)\cos(n\,\tilde{\Delta}) + \cos(\hat{\theta}_n)\sin(n\,\tilde{\Delta})\big] \end{aligned}$$

by exploiting standard trigonometric formulas. Then, substituting the RHS of eq. (4.132) in that of eq. (4.117) yields

$$\begin{aligned} E\big(\tilde{F},\tilde{A}\big) \;=\; & E_x + \tilde{A}_R^2 + \tilde{A}_I^2 \\ & -2\frac{1}{N}\sum_{n=0}^{N-1} (x_{n,R}\,\tilde{A}_R + x_{n,I}\,\tilde{A}_I)\big[\cos(\hat{\theta}_n)\cos(n\,\tilde{\Delta}) - \sin(\hat{\theta}_n)\sin(n\,\hat{\Delta}) \quad (4.133) \\ & -2\frac{1}{N}\sum_{n=0}^{N-1} (x_{n,I}\,\tilde{A}_R - x_{n,R}\,\tilde{A}_I)\big[\sin(\hat{\theta}_n)\cos(n\,\tilde{\Delta}) + \cos(\hat{\theta}_n)\sin(n\,\hat{\Delta}) \end{aligned}$$

The last formula depends on $\tilde{\Delta}$ through the nonlinear functions $\sin(n\tilde{\Delta})$ and $\cos(n\tilde{\Delta})$. However, based on the inequalities (4.129) and on the assumption that $\overline{M}$ is large enough (see eq. (2.37)), the following standard approximations

$$\sin(n\widetilde{\Delta}) \simeq n\widetilde{\Delta} - n^3 \frac{\widetilde{\Delta}^3}{3} \tag{4.134}$$

and

$$\cos(n\widetilde{\Delta}) \simeq 1 - \frac{1}{2}n^2\widetilde{\Delta}^2, \tag{4.135}$$

all based on the Taylor series of the trigonometric functions $\sin(x)$ and $\cos(x)$, can be adopted.

Finally, substituting the RHSs of eqs. (4.134) and (4.135) in that of eq. (4.133) yields, after some manipulation

$$
\begin{aligned}
E_n(\widetilde{F},\widetilde{A}) \;\cong\;& E_{\mathrm{CSFE},a}(\widetilde{\Delta},\widetilde{A}) \\
\triangleq\;& E_x + \widetilde{A}_R^2 + \widetilde{A}_I^2 \\
&+ \frac{2}{3}\widetilde{\Delta}^3\left(\widetilde{A}_R\, X_{3,\widehat{a},I} - \widetilde{A}_I\, X_{3,\widehat{a},R}\right) \\
&+ \widetilde{\Delta}^2\left(\widetilde{A}_R\, X_{2,\widehat{a},R} + \widetilde{A}_I\, X_{2,\widehat{a},I}\right) \\
&+ 2\widetilde{\Delta}\left(\widetilde{A}_I\, X_{1,\widehat{a},R} - \widetilde{A}_R\, X_{1,\widehat{a},I}\right) \\
&- 2\left(\widetilde{A}_R\, X_{0,\widehat{a},R} + \widetilde{A}_I\, X_{0,\widehat{a},I}\right).
\end{aligned}
\tag{4.136}
$$

The function $E_{\mathrm{CSFE},a}(\widetilde{\Delta},\widetilde{A})$ (4.136) can be minimized with respect to $\widetilde{\Delta}$ by taking its partial derivative with respect to this variable and setting it to zero; this results in the equation

$$
\begin{aligned}
&2\widetilde{\Delta}^2\left(\widetilde{A}_R\, X_{3,\widehat{a},I} - \widetilde{A}_I\, X_{3,\widehat{a},R}\right) \\
&+ 2\widetilde{\Delta}\left(\widetilde{A}_R\, X_{2,\widehat{a},R} + \widetilde{A}_I\, X_{2,\widehat{a},I}\right) \\
&+ 2\left(\widetilde{A}_I\, X_{1,\widehat{a},R} - \widetilde{A}_R\, X_{1,\widehat{a},I}\right) = 0,
\end{aligned}
\tag{4.137}
$$

that can be easily put in form

$$a\widetilde{\Delta}^2 + b\widetilde{\Delta} + c = 0, \tag{4.138}$$

where

$$
\begin{aligned}
a \;\triangleq\;& \widetilde{A}_R\, X_{3,\widehat{a},I} - \widetilde{A}_I\, X_{3,\widehat{a},R} \\
=\;& \mathfrak{I}\{\widetilde{A}^* X_{3,\widehat{a}}\},
\end{aligned}
\tag{4.139}
$$

$$
\begin{aligned}
b \;\triangleq\;& \widetilde{A}_R\, X_{2,\widehat{a},R} + \widetilde{A}_I\, X_{2,\widehat{a},I} \\
=\;& \mathfrak{R}\{\widetilde{A}^* X_{2,\widehat{a}}\}
\end{aligned}
\tag{4.140}
$$

and

$$
\begin{aligned}
c \;\triangleq\;& \widetilde{A}_I\, X_{1,\widehat{a},R} - \widetilde{A}_R\, X_{1,\widehat{a},I} \\
=\;& -\mathfrak{I}\{\widetilde{A}^* X_{1,\widehat{a}}\}.
\end{aligned}
\tag{4.141}
$$

It should be expected that only one of the two solutions of Eq. (4.138) satisfies the inequalities (4.129)[3]. If this solution is denoted $\widehat{\Delta}$, the estimate (see eq. (4.128))

$$\widehat{F} = \frac{\widehat{\alpha}}{\overline{N}_0} + \frac{\widehat{\Delta}}{2\pi} \qquad (4.142)$$

of F can be computed.

[3] In running our computer simulations, only the first-order problem has been solved.

### 4.1.4. Complex single delay estimator

The algorithm executed by the CSDE processes the complex vectors

$$\mathbf{x}_m \triangleq \left[ x_{m,0}, x_{m,1}, \ldots, x_{m,\overline{N}-1} \right]^T, \qquad (4.143)$$

with $m = 0,1,2$ and 3; here, $\{x_{0,n}\}$ is the sequence of available noisy measurements,

$$x_{m,n} = n^m \cdot x_{0,n}, \qquad (4.144)$$

with $m = 1,2$ and 3 and $n = 0,1,\ldots,\overline{N} - 1$. This algorithm is derived under the assumption that the n-th element of the vector $\mathbf{x}_0$ (4.143) can be expressed as

$$x_{0,n} = a\exp(-j(2\pi T_x n + \varphi_x)) + w_n, \qquad (4.145)$$

with $n = 0,1,\ldots,\overline{N} - 1$; here, $T_x$ is a normalized delay, $a$ is a real positive parameter and $\{w_n\}$ is a complex noise sequence. It is worth stressing that $T_x$ represents a normalized delay if this algorithm is applied to the frequency response samples acquired by an SFCW radar and a normalized spatial delay if it is applied to the IFFT coefficients computed over multiple receive antennas of the same radar device for the estimation of the angular coordinates of targets.

The CSDE algorithm computes an estimate $\hat{T}_x$ of the delay $T_x$ and an estimate $\hat{A}_x$ of the complex amplitude

$$A_x \triangleq a\exp(-j\varphi_x) \qquad (4.146)$$

characterizing the complex exponential contained in the sequence $\{x_{0,n}\}$.

It operates as follows. The vectors $\{\mathbf{x}_0, \mathbf{x}_1, \mathbf{x}_2, \mathbf{x}_3\}$ (4.143) are zero padded by appending to it $(\overline{M} - 1)\overline{N}$ zeros, where $\overline{M}$ is an integer parameter (oversampling factor); this results in the $\overline{M}\,\overline{N}$-dimensional vector

$$\mathbf{x}_{m,\mathrm{ZP}} = \left[ (\mathbf{x}_m)^T \; \mathbf{0}^T_{(\overline{M}-1)\overline{N}} \right]^T, \qquad (4.147)$$

with $m = 0,1,2$ and 3. The four vectors $\{\mathbf{x}_{m,\mathrm{ZP}}\}$ undergo $\overline{N}_0 \triangleq \overline{M}\,\overline{N}$ -th order IDFT processing; this produces the $\overline{N}_0$-dimensional vector

$$\mathbf{X}_m = \left[ X_{m,0}, X_{m,1}, \ldots, X_{m,\overline{N}_0-1} \right]^T \triangleq \mathrm{IDFT}_{\overline{N}_0}\left[ \mathbf{x}_{m,\mathrm{ZP}} \right], \qquad (4.148)$$

with $m = 0,1,2$ and 3. Note that, generally speaking, the delay $T_x$ is not a multiple of the fundamental delay $1/\overline{N}_0$ associated with the IFFT processing; for this reason, it can be expressed as

$$T_x = \frac{1}{\overline{N}_0}\alpha_x + \frac{1}{\overline{N}_0}\delta_x, \qquad (4.149)$$

where $\alpha_x$ is an integer belonging to the set $\{0, 1, \ldots, \overline{N}_0 - 1\}$ and $\delta_x$ is a real quantity, such that

$$\begin{cases} 0 \le \delta_x \le 0.5 & \text{for } \alpha_x = 0 \\ -0.5 < \delta_x \le 0 & \text{for } \alpha_x = \bar{N}_0 - 1. \\ -0.5 < \delta_x \le 0.5 & \text{otherwise} \end{cases} \qquad (4.150)$$

The representation (4.149) can be also rewritten as

$$2\pi T_x = \frac{2\pi}{\bar{N}_0} \alpha_x + \varDelta_x, \qquad (4.151)$$

where

$$\varDelta_x = \frac{2\pi}{\bar{N}_0} \delta_x \qquad (4.152)$$

with (see eq. (4.150))

$$\begin{cases} 0 \le \varDelta_x \le \dfrac{\pi}{\bar{N}_0} & \text{for } \alpha_x = 0 \\ -\dfrac{\pi}{\bar{N}_0} < \varDelta_x \le 0 & \text{for } \alpha_x = \bar{N}_0 - 1. \\ -\dfrac{\pi}{\bar{N}_0} < \varDelta_x \le \dfrac{\pi}{\bar{N}_0} & \text{otherwise} \end{cases} \qquad (4.153)$$

The CSDE computes the estimates $\hat{A}_x$, $\hat{\alpha}_{\hat{x}}$ and $\hat{\varDelta}_x$ of the parameters $\hat{A}_x$, $\alpha_x$ and $\hat{A}_x$, respectively; this allows to compute the estimate

$$\widehat{T}_x = \frac{1}{\bar{N}_0} \widehat{\alpha}_x + \frac{1}{2\pi} \widehat{\varDelta}_x \qquad (4.154)$$

of the normalized delay $T_x$ (4.149).

The CSDE operates as follows. First of all, the estimate $\hat{\alpha}_{\hat{x}}$ is evaluated by means of the *periodogram method* (e.g., see "J. G. Proakis and D. G. Manolakis, Digital Signal processing: Principles, Algorithms and Applications. Third Edition. New York, Ny: Prentice Hall, New York, 1993."), i.e. as

$$\widehat{\alpha}_x = \arg \max_{\widetilde{\alpha} \in \{0,1,\dots,\bar{N}_0 - 1\}} |\overline{X}_{0,\widetilde{\alpha}}|, \qquad (4.155)$$

Then, an iterative algorithm is employed to generate the estimates $\hat{\varDelta}_x$ and $\hat{A}_x$. The *i*-th iteration is fed by the estimates $\widehat{\varDelta}_x^{(i-1)}$, $\widehat{T}_x^{(i-1)}$ and $\widehat{A}_x^{(i-1)}$ of $\varDelta_x$, $T_x$ and $\hat{A}_x$, respectively, and generates the new estimates $\widehat{\varDelta}_x^{(i)}$, $\widehat{T}_x^{(i)}$ and $\widehat{A}_x^{(i)}$. The algorithm is initialised by setting the iteration index i to 1 and

$$\widehat{A}_x^{(0)} = \overline{X}_{0,\widehat{\alpha}_x} \qquad (4.156)$$

In its *i*-th iteration (with $i = 1,2,\dots,N_{\text{CSDE}}$, where $N_{\text{CSDE}}$ is the overall number of recursions), the two steps described below are accomplished.

    1) The equation

$$a_{\widehat{\alpha}_x}^{(i)} \left( \widetilde{\Delta}_x^{(i)} \right)^2 + b_{\widehat{\alpha}_x}^{(i)} \widetilde{\Delta}_x^{(i)} + c_{\widehat{\alpha}_x}^{(i)} = 0 \tag{4.157}$$

or the equation

$$b_{\widehat{\alpha}_x}^{(i)} \widetilde{\Delta}_x^{(i)} + c_{\widehat{\alpha}_x}^{(i)} = 0 \tag{4.158}$$

in the variable $\Delta_x$ are solved; here (see eqs. (4.196)-(4.198)),

$$a_{\widehat{\alpha}_x}^{(i)} \triangleq \mathfrak{I}\left\{ \left( \left( \widehat{A}^{(i-1)} \right)^* \right)^2 \overline{X}_{3,\widehat{\alpha}_x} \right\}, \tag{4.159}$$

$$b_{\widehat{\alpha}_x}^{(i)} \triangleq -\mathfrak{R}\left\{ \left( \widehat{A}^{(i-1)} \right)^* \overline{X}_{2,\widehat{\alpha}_x} \right\} \tag{4.160}$$

$$c_{\widehat{\alpha}_x}^{(i)} \triangleq -\mathfrak{I}\left\{ \left( \widehat{A}^{(i-1)} \right)^* \overline{X}_{1,\widehat{\alpha}_x} \right\}. \tag{4.161}$$

If eq. (4.157) is solved, one of its two solutions can be easily discarded, since it does not satisfy the inequalities (4.150). The solution of eq. (4.158) (or the selected solution of eq. (4.157)) represents $\widehat{\Delta}_x^{(i)}$ ; for this, reason, it is exploited to compute the new estimate (see eq. (4.154))

$$\widehat{T}_x^{(i)} = \frac{1}{\overline{N}_0} \widehat{\alpha}_x + \frac{1}{2\pi} \widehat{\Delta}_x^{(i)} \tag{4.162}$$

of $T_x$.

2) The estimate $\widehat{T}_x^{(i)}$ is employed to compute the new estimate $\widehat{A}_x^{(i)} \triangleq \widehat{A}_{x,R}^{(i)} + j\widehat{A}_{x,I}^{(i)}$ as

$$\widehat{A}_x^{(i)} = \overline{X}_{\text{int}}(\widehat{T}_x^{(i)}) \tag{4.163}$$

and $\overline{X}_{\text{int}}\left( \widehat{T}_x^{(i)} \right)$ is generated by interpolating the elements of the vector

$$\overline{\mathbf{X}}_s \triangleq M \overline{\mathbf{X}}_0, \tag{4.164}$$

that collects $\overline{N}_0$ uniformly spaced samples of the impulse response of the vector $\mathbf{x}_0$ (4.143); in our work, similarly as the CSFE, barycentric interpolation is used.

It important to point out that:

a) Eq. (4.158) is simpler to solve than eq. (4.157), but is expected to provide a less accurate estimate of $\Delta_x$. If eq. (4.157) is used, the solution

$$\widehat{\Delta}_x^{(i)} = -\frac{b_{\widehat{\alpha}_x}^{(i)} + \sqrt{\left( b_{\widehat{\alpha}_x}^{(i)} \right)^2 - 4\, a_{\widehat{\alpha}_x}^{(i)}\, c_{\widehat{\alpha}_x}^{(i)}}}{2\, a_{\widehat{\alpha}_x}^{(i)}} \tag{4.165}$$

is selected. In our simulation results illustrated in Section 6, eq. (4.158) is used.

b) The CSDE can be exploited even if the exponential appearing in the RHS of eq. (4.145) is replaced by a sum of $L$ exponentials, characterized by distinct delays (see eq. (1.23)). This is equivalent to considering one of the $L$ exponentials as the useful component of the processed signal and the remaining ones as part of the noise affecting it. Note that, in this case, the CSDE estimates the parameters of the complex exponential generating the highest peak in the amplitude of the impulse response produced by the IDFT of the noisy sequence $\{x_{0,n}\}$ and the quality of its estimates is affected by both the amplitudes and the delays characterizing the other $(L - 1)$ exponentials.

An alternative to the CSDE is represented by a related estimation algorithm (called complex single delay estimator #2, CSDE#2) that relies on the same mathematical results as CSDE and has the same structure. However, it is also based on the idea of taking the estimate $\widehat{T}_x^{(i-1)}$ generated in its $(i$ - 1)-th iteration as a coarse estimate of $T$ in the following (i.e., the $i$-th) iteration. The initialization phase of CSDE#2 is very similar to that of CSDE, the only difference being represented by the fact that the quantity

$$\widehat{\rho}_x^{(0)} = \widehat{T}_x^{(0)} N_0 = \widehat{\alpha}_x \qquad (4.166)$$

is also defined. The new estimate $\widehat{\Delta}_x^{(i)}$ of $\Delta_x$ is computed through eq. (4.157) or eq. (4.158); in the evaluation of the coefficients $\left\{a_{\widehat{\alpha}_x}^{(i)}, b_{\widehat{\alpha}_x}^{(i)}, c_{\widehat{\alpha}_x}^{(i)}\right\}$ or $\left\{b_{\widehat{\alpha}_x}^{(i)}, c_{\widehat{\alpha}_x}^{(i)}\right\}$ appearing in the RHS of these equations, the quantity $\{\overline{X}_{k,\widehat{\alpha}_x}; k = 1,2,3\}$ is replaced by

$$X_{k,\widehat{\rho}_x^{(i-1)}} \triangleq \frac{1}{N} \sum_{n=0}^{N-1} n^k x_n \exp\left(j\frac{2\pi n \widehat{\rho}_x^{(i-1)}}{N_0}\right), \qquad (4.167)$$

for $k = 1,2,3$, where

$$\widehat{\rho}_x^{(i-1)} = \widehat{T}_x^{(i-1)} N_0 . \qquad (4.168)$$

Then, the new estimate of the normalised delay $\widehat{T}_x^{(i)}$ is computed as

$$\widehat{T}_x^{(i)} = \widehat{T}_x^{(i-1)} + \frac{\widehat{\Delta}_x^{(i)}}{2\pi} . \qquad (4.169)$$

The new estimate $\hat{A}^{(i)}$ of $A$ is computed in the same way as in the CSDE. It is important to point out that all the comments illustrated for CSDE also apply to CSDE#2 and that:

a) The quantity $\left\{\overline{X}_{k,\widehat{\rho}_x^{(i-1)}}; k = 1,2,3\right\}$ required in the first step of CSDE#2 can be computed exactly through eq. (4.167). However, it can be also evaluated, in an approximate fashion, at a lower computational cost by interpolating $I$ consecutive elements of the $N_0$-dimensional vectors $\{\mathbf{X}_m; m = 1,2,3\}$ (4.148), where $I$ denotes the adopted interpolation order.

b) the quantity $\widehat{\rho}_x^{(i-1)}$ (4.168) accounts for both the components of $\widehat{T}_x^{(i-1)}$ (i.e., for both the integer $\hat{\alpha}_x$ and the residual $\widehat{\Delta}_x^{(i)}$ ) appearing in the RHS of (4.162).

In the remaining part of this paragraph, the equations on which the CSDE and CSDE#2 previously described are based are illustrated. We consider the complex counterpart of the real model expressed by eq. (4.45), i.e.

$$x_n = \alpha \exp(-j(2\pi n \tau T_s + \phi)) + w_n \qquad (4.170)$$

and rewrite it as

$$x_n = A \exp(-j2\pi nT) + w_n, \qquad (4.171)$$

where

$$A \triangleq \alpha \exp(-j\phi) \qquad (4.172)$$

and

$$\mathrm{T} \triangleq \tau \, \Delta f. \qquad (4.173)$$

Our objective is estimating the parameters $A$ and $T$ of the complex exponential contained in the sequence $\{x_n; n = 0,1,...,N$-1$\}$; if the sequence $\{w_n\}$ can be modelled as white Gaussian noise, optimal estimation of these parameters in the *maximum likelihood* (ML) sense is obtained by minimizing the *mean square error* (MSE)

$$E(\tilde{T}, \tilde{A}) \triangleq \frac{1}{N} \sum_{n=0}^{N-1} E_n(\tilde{T}, \tilde{A}), \qquad (4.174)$$

with respect to the trial parameters $\tilde{T}$ and $\tilde{A}$; here

$$E_n(\tilde{T}, \tilde{A}) \triangleq \left| x_n - s_n(\tilde{T}, \tilde{A}) \right|^2 \qquad (4.175)$$

is the *square error* between the noisy sample $x_n$ and the sample

$$s_n(\tilde{T}, \tilde{A}) \triangleq \tilde{A} \exp\left(-j2\pi n \tilde{T}\right), \qquad (4.176)$$

that represents the useful component of $x_n$ (4.170) under the assumption that $T = \tilde{T}$ and $A = \tilde{A}$. Substituting the RHS of the last equation in that of eq. (4.175) yields

$$\begin{aligned} E_n(\tilde{T}, \tilde{A}) &= \left| x_n - \tilde{A} \exp\left(-j2\pi n \tilde{T}\right) \right|^2 \\ &= |x_n|^2 + \tilde{A}_R^2 + \tilde{A}_I^2 - 2\Re\{x_n \tilde{A}^* \exp(j \tilde{\phi}_n)\} \\ &= |x_n|^2 + \tilde{A}_R^2 + \tilde{A}_I^2 - 2(x_{n,R} \tilde{A}_R + x_{n,I} \tilde{A}_I)\cos(\tilde{\phi}_n) \\ &\quad -2(x_{n,I} \tilde{A}_R - x_{n,R} \tilde{A}_I)\sin(\tilde{\phi}_n), \end{aligned} \qquad (4.177)$$

where $\tilde{A}_R \triangleq \Re\{\tilde{A}\}, \ \tilde{A}_I \triangleq \Im\{\tilde{A}\}, \ x_{n,R} \triangleq \Re\{x_n\}, \ x_{n,I} \triangleq \Im\{x_n\}$ and

$$\tilde{\phi}_n \triangleq 2\pi n \tilde{T}. \qquad (4.178)$$

Then, substituting the RHS of eq. (4.177) in that of eq. (4.174) produces, after some manipulation,

$$E(\tilde{T}, \tilde{A}) = E_x + \tilde{A}_R^2 + \tilde{A}_I^2 - 2 \tilde{A}_R \, X_{0,\hat{\alpha},R} - 2 \tilde{A}_I \, X_{0,\hat{\alpha},I}, \qquad (4.179)$$

where

$$E_x \triangleq \frac{1}{N} \sum_{n=0}^{N-1} |x_n|^2, \qquad (4.180)$$

$$X_{m,\widehat{\alpha},R} \triangleq \Re\{X_{m,\widehat{\alpha}}\}, \quad X_{m,\widehat{\alpha},I} \triangleq \Im\{X_{m,\widehat{\alpha}}\}$$

and

$$X_{m,\widehat{\alpha}} \triangleq \frac{1}{N} \sum_{n=0}^{N-1} n^m x_n \exp\left(j \frac{2\pi n \widehat{\alpha}}{N_0}\right). \qquad (4.181)$$

The procedure we follow to minimise the function $E(\tilde{T},\tilde{A})$ (4.179) with respect to $\tilde{T}$ and $\tilde{A}$ is similar to that illustrated in Paragraph 4.1.2 for the SFE. For this reason, we first show how the function $E(\tilde{T},\tilde{A})$ (4.179) can be minimised with respect to $\tilde{A}$ for a given $\tilde{T}$; then, we show how the same function can be minimised with respect to $\tilde{T}$ for a given $\tilde{A}$. The solution of the first problem is computed by solving the equations

$$\tilde{A}_R - X_{0,\widehat{\alpha},R} = 0 \qquad (4.182)$$

and

$$\tilde{A}_I - X_{0,\widehat{\alpha},I} = 0, \qquad (4.183)$$

that result from computing the partial derivative of the function $E(\tilde{F},\tilde{A})$ (4.179) with respect to $\tilde{A}_R$ and $\tilde{A}_I$, respectively. Solving this linear system of equations in the unknowns $\tilde{A}_R$ and $\tilde{A}_I$ produces

$$\widehat{A} = X_{0,\widehat{\alpha}}. \qquad (4.184)$$

Note that the last formula is *exact* and require the evaluation of the function $X_{0,\hat{\alpha}}$ (see the definition (4.181)).
Unluckily, an exact expression for the value of $\tilde{T}$ minimising the function $E(\tilde{T},\tilde{A})$ for a given $\tilde{A}$ cannot be derived because of its *nonlinear* dependence on this variable. The approximate solution we propose is based on: 1) assuming that (see eqs. (4.151) - (4.153))

$$2\pi \tilde{T} = \frac{2\pi}{\overline{N}_0} \widehat{\alpha} + \tilde{\Delta}, \qquad (4.185)$$

where $\overline{N}_0 = \overline{M} N$, $\hat{\alpha}$ is a known quantity, whereas $\tilde{\Delta}$ is a variable satisfying the inequalities

$$\begin{cases} 0 \le \tilde{\Delta} \le \dfrac{\pi}{\overline{N}_0} & \text{for } \widehat{\alpha} = 0 \\[2ex] -\dfrac{\pi}{\overline{N}_0} < \tilde{\Delta} \le 0 & \text{for } \widehat{\alpha} = \overline{N}_0 - 1 \\[2ex] -\dfrac{\pi}{\overline{N}_0} < \tilde{\Delta} \le \dfrac{\pi}{\overline{N}_0} & \text{otherwise} \end{cases} \qquad (4.186)$$

2) approximating the trigonometric functions $\cos(\tilde{\phi}_n)$ and $\sin(\tilde{\phi}_n)$ appearing in the RHS of eq. (4.177). More specifically, based on eq. (4.185), the function $E_n(\tilde{T},\tilde{A})$ (4.177) is rewritten as

$$E_n\big(\tilde{T},\tilde{A}\big) \;=\; |x_n|^2 + \tilde{A}_R^2 + \tilde{A}_I^2$$
$$-2(x_{n,R}\,\tilde{A}_R + x_{n,I}\,\tilde{A}_I)\cos(\widehat{\theta}_n + n\,\tilde{\Delta}) \qquad (4.187)$$
$$+2(x_{n,I}\,\tilde{A}_R - x_{n,R}\,\tilde{A}_I)\sin(\widehat{\theta}_n + n\,\tilde{\Delta})$$

where

$$\widehat{\theta}_n \triangleq \frac{2\pi n}{\overline{N}_0}\,\widehat{\alpha}. \qquad (4.188)$$

Then, eq. (4.187) is put in the equivalent form

$$E_n\big(\tilde{T},\tilde{A}\big) \;=\; |x_n|^2 + \tilde{A}_R^2 + \tilde{A}_I^2$$
$$-2(x_{n,R}\,\tilde{A}_R + x_{n,I}\,\tilde{A}_I)\big[\cos(\widehat{\theta}_n)\cos(n\,\tilde{\Delta}) - \sin(\widehat{\theta}_n)\sin(n\,\tilde{\Delta})\big] \quad (4.189)$$
$$+2(x_{n,I}\,\tilde{A}_R - x_{n,R}\,\tilde{A}_I)\big[\sin(\widehat{\theta}_n)\cos(n\,\tilde{\Delta}) + \cos(\widehat{\theta}_n)\sin(n\,\tilde{\Delta})\big]$$

by exploiting standard trigonometric formulas. Then, substituting the RHS of eq. (4.189) in that of eq. (4.174) yields

$$E\big(\tilde{T},\tilde{A}\big) \;=\; E_x + \tilde{A}_R^2 + \tilde{A}_I^2$$
$$-2\frac{1}{N}\sum_{n=0}^{N-1}(x_{n,R}\,\tilde{A}_R + x_{n,I}\,\tilde{A}_I)\big[\cos(\widehat{\theta}_n)\cos(n\,\tilde{\Delta}) - \sin(\widehat{\theta}_n)\sin(n\,\widehat{\Delta}) \quad (4.190$$
$$)$$
$$+2\frac{1}{N}\sum_{n=0}^{N-1}(x_{n,I}\,\tilde{A}_R - x_{n,R}\,\tilde{A}_I)\big[\sin(\widehat{\theta}_n)\cos(n\,\tilde{\Delta}) + \cos(\widehat{\theta}_n)\sin(n\,\widehat{\Delta}$$

The last formula depends on $\tilde{\Delta}$ through the nonlinear functions $\sin(n\tilde{\Delta})$ and $\cos(n\tilde{\Delta})$. However, based on the inequalities (4.186) and on the assumption that oversampling factor $\overline{M}$ is large enough, the following standard approximations

$$\sin\big(n\,\tilde{\Delta}\big) \simeq n\,\tilde{\Delta} - n^3\frac{\tilde{\Delta}^3}{3} \qquad (4.191)$$

and

$$\cos\big(n\,\tilde{\Delta}\big) \simeq 1 - \frac{1}{2}n^2\,\tilde{\Delta}^2, \qquad (4.192)$$

all based on the Taylor series of the trigonometric functions sin(x) and cos(x), can be adopted.
Finally, substituting the RHSs of eqs. (4.191) and (4.192) in that of eq. (4.190) (4.133) yields, after some manipulation

$$
\begin{aligned}
E_n\big(\widetilde{T},\widetilde{A}\big) \quad &\cong \quad E_{\mathrm{CSDE},a}\big(\widetilde{\Delta},\widetilde{A}\big) \\
&\triangleq \quad E_x + \widetilde{A}_R^2 + \widetilde{A}_I^2 \\
&\quad -\frac{2}{3}\widetilde{\Delta}^3\big(\widetilde{A}_R\,X_{3,\widehat{a},I} - \widetilde{A}_I\,X_{3,\widehat{a},R}\big) \\
&\quad +\widetilde{\Delta}^2\big(\widetilde{A}_R\,X_{2,\widehat{a},R} + \widetilde{A}_I\,X_{2,\widehat{a},I}\big) \\
&\quad -2\widetilde{\Delta}\big(\widetilde{A}_I\,X_{1,\widehat{a},R} - \widetilde{A}_R\,X_{1,\widehat{a},I}\big) \\
&\quad -2\big(\widetilde{A}_R\,X_{0,\widehat{a},R} + \widetilde{A}_I\,X_{0,\widehat{a},I}\big).
\end{aligned}
\tag{4.193}
$$

The function $E_{\mathrm{CSDE},a}(\widetilde{\Delta},\widetilde{F})$ (4.136) can be minimized with respect to $\widetilde{\Delta}$ by taking its partial derivative with respect to this variable and setting it to zero; this results in the equation

$$
\begin{aligned}
&-2\widetilde{\Delta}^2\big(\widetilde{A}_R\,X_{3,\widehat{a},I} - \widetilde{A}_I\,X_{3,\widehat{a},R}\big) \\
&+2\widetilde{\Delta}\big(\widetilde{A}_R\,X_{2,\widehat{a},R} + \widetilde{A}_I\,X_{2,\widehat{a},I}\big) \\
&-2\big(\widetilde{A}_I\,X_{1,\widehat{a},R} - \widetilde{A}_R\,X_{1,\widehat{a},I}\big) = 0,
\end{aligned}
\tag{4.194}
$$

that can be easily put in form

$$
a\widetilde{\Delta}^2 + b\widetilde{\Delta} + c = 0,
\tag{4.195}
$$

where

$$
\begin{aligned}
a \quad &\triangleq \quad \widetilde{A}_R\,X_{3,\widehat{a},I} - \widetilde{A}_I\,X_{3,\widehat{a},R} \\
&= \quad \Im\{\widetilde{A}^*\,X_{3,\widehat{a}}\},
\end{aligned}
\tag{4.196}
$$

$$
\begin{aligned}
b \quad &\triangleq \quad -\big[\widetilde{A}_R\,X_{2,\widehat{a},R} + \widetilde{A}_I\,X_{2,\widehat{a},I}\big] \\
&= \quad -\Re\{\widetilde{A}^*\,X_{2,\widehat{a}}\}
\end{aligned}
\tag{4.197}
$$

and

$$
\begin{aligned}
c \quad &\triangleq \quad \widetilde{A}_I\,X_{1,\widehat{a},R} - \widetilde{A}_R\,X_{1,\widehat{a},I} \\
&= \quad -\Im\{\widetilde{A}^*\,X_{1,\widehat{a}}\}.
\end{aligned}
\tag{4.198}
$$

It should be expected that only one of the two solutions of eq. (4.195) satisfies the inequalities (4.186)[4]. If this solution is denoted $\widehat{\Delta}$, the estimate (see eq. (4.185))

$$
\widehat{T} = \frac{\widehat{a}}{\overline{N}_0} + \frac{\widehat{\Delta}}{2\pi}
\tag{4.199}
$$

of T can be computed.

[4] In running our computer simulations, only the first-order problem has been solved.

### 4.1.5. Target cancellation procedure to be employed together with the single frequency estimator

A target cancellation procedure is used in combination with the SFE in T2 of the first embodiment. In this paragraph, we focus on the procedure expressed by eq. (2.15) and requiring the evaluation of the contribution ( $\mathbf{C}_{X_0,v}^{(i)}$, $\mathbf{C}_{X_1,v}^{(i)}$, $\mathbf{C}_{X_2,v}^{(i)}$ ), given by the $i$-th (i.e., by the last) target detected on the $v$-th RVA. In our work, the computation of this contribution is based on the assumption that it is due to a point target for simplicity. Therefore, if $\widehat{f}_v^{(i)}$ and $\widehat{C}_v^{(i)}$ denote the estimates of the frequency
and the complex amplitude, respectively, characterizing this target, the expressions

$$\mathbf{C}_{X_0,v}^{(i)} = \widehat{C}_v^{(i)}\, \overline{\mathbf{W}}_{v,0}^{(i)} + \left(\widehat{C}_v^{(i)}\right)^* \left(\overline{\mathbf{W}}_{v,0,c}^{(i)}\right), \qquad (4.200)$$

$$\mathbf{C}_{X_1,v}^{(i)} = \widehat{C}_v^{(i)}\, \overline{\mathbf{W}}_{v,1}^{(i)} + \left(\widehat{C}_v^{(i)}\right)^* \left(\overline{\mathbf{W}}_{v,1,c}^{(i)}\right) \qquad (4.201)$$

and

$$\mathbf{C}_{X_2,v}^{(i)} = \widehat{C}_v^{(i)}\, \overline{\mathbf{W}}_{v,2}^{(i)} + \left(\widehat{C}_v^{(i)}\right)^* \left(\overline{\mathbf{W}}_{v,2,c}^{(i)}\right) \qquad (4.202)$$

are employed; here, $\overline{\mathbf{W}}_{v,k}^{(i)}$ denotes the $N_0$-th order DFT of the vector

$$\overline{\mathbf{w}}_{v,k}^{(i)} \qquad (4.203)$$

$$\triangleq \left[0, 1^k \cdot \overline{w}_v^{(i)}, 2^k \cdot \left(\overline{w}_v^{(i)}\right)^2, \dots (N-1)^k \cdot \left(\overline{w}_v^{(i)}\right)^{N-1}, 0, \dots, 0\right]^T,$$

with $k = 0$, 1 and 2, $\overline{\mathbf{W}}_{v,k,c}^{(i)}$ the $N_0$-th order DFT of the vector $\left(\overline{\mathbf{w}}_{v,k}^{(i)}\right)^*$,

$$\overline{w}_v^{(i)} \triangleq \exp(j2\pi \overline{F}_v^{(i)}) \qquad (4.204)$$

and

$$\overline{F}_v^{(i)} \triangleq \widehat{f}_v^{(i)}\, T_s \qquad (4.205)$$

is the normalized frequency associated with the frequency $\widehat{f}_v^{(i)}$. It is important to point out that an efficient method can be used for the computation of the vectors $\overline{\mathbf{W}}_{v,k}^{(i)}$ and $\overline{\mathbf{W}}_{v,k,c}^{(i)}$ appearing in eqs. (4.200)-(4.202) (with $k = 0$, 1 and 2); note that, for any $k$, these vectors represent the $N_0$-th order DFTs of the sequences $\{n^k (\overline{w}_v^{(i)})^n;\quad n = 0,1,\dots,N-1\}$ and $\{n^k ((\overline{w}_v^{(i)})^*)^n$; n = 0,1,...,N - 1}, respectively, with $w \triangleq \overline{w}_v^{(i)}$. In fact, the $l$-th element of the vectors $\overline{\mathbf{W}}_{v,k}^{(i)}$ and $\overline{\mathbf{W}}_{v,k,c}^{(i)}$ is given by

$$\overline{\mathbf{W}}_{v,k}^{(i)}[l] = \frac{1}{N} \sum_{n=0}^{N-1} n^k \left(\overline{w}_v^{(i)}\right)^n \exp\left(-j\frac{2\pi l}{N_0} n\right) = \frac{1}{N} \sum_{n=0}^{N-1} n^k (q[l])^n \qquad (4.206)$$

and

$$\overline{\mathbf{W}}_{v,k,c}^{(i)}[l] = \frac{1}{N} \sum_{n=0}^{N-1} n^k \left( \left( \overline{w}_v^{(i)} \right)^* \right)^n \exp\left( -j \frac{2\pi l}{N_0} n \right)$$

$$= \frac{1}{N} \sum_{n=0}^{N-1} n^k \left( q_c[l] \right)^n, \tag{4.207}$$

respectively, where

$$q[l] \triangleq \exp\left( j 2\pi \left( \overline{F}_v^{(i)} - \frac{l}{N_0} \right) \right) \tag{4.208}$$

and

$$q_c[l] \triangleq \exp\left( j 2\pi \left( -\overline{F}_v^{(i)} - \frac{l}{N_0} \right) \right). \tag{4.209}$$

Therefore, the identities

$$\sum_{n=0}^{N-1} p^n = \frac{p^N - 1}{p - 1}, \tag{4.210}$$

$$\sum_{n=0}^{N-1} n\, p^n = \frac{(N-1)p^{N+1} - N p^N + p}{(p-1)^2}, \tag{4.211}$$

$$\sum_{n=0}^{N-1} n^2\, p^n \tag{4.212}$$

$$= \frac{(N-1)^2 p^{N+2} + (-2N^2 + 2N + 1)p^{N+1} + N^2 p^N - p^2 - p}{(p-1)^3},$$

and

$$\sum_{n=0}^{N-1} n^3\, p^n = \frac{(N-1)^3 p^{N+3} + (-3N^3 + 6N^2 - 4)p^{N+2}}{(p-1)^4} +$$

$$\frac{(3N^3 - 3N^2 - 3N - 1)p^{N+1} - N^3 p^N + p^3 + 4p^2 + p}{(p-1)^4} \tag{4.213}$$

that hold for any $p \in \mathbb{C}$, can be exploited for an efficient computation of the RHSs of eqs. (4.206) and (4.207).

Finally, it is important to mention that our cancellation procedure allows to remove the contribution of a single target in each iteration of the STDREC algorithm. If a *cluster* of $m^{(i)}$ distinct frequencies is estimated by the SFE in the *i*-th iteration of the STDREC algorithm, each of the components of the triplet $(\mathbf{C}_{X_0,v}^{(i)}, \mathbf{C}_{X_1,v}^{(i)}, \mathbf{C}_{X_2,v}^{(i)})$ consists of the sum of $m^{(i)}$ terms and each term is evaluated on the basis of eqs. (4.200)-(4.202). The same considerations apply to the CSFE and the cancellation procedures illustrated in the following two paragraphs.

**4.1.6. Target cancellation procedure to be employed with the complex single delay estimator - SFCW radar system**

In this paragraph we take into consideration a MIMO SFCW radar system and focus on the two cancellation procedures employed in embodiment #1 of our method (see paragraph 2.3.1. Embodiment #1); the first procedure is used in combination with the CSDE in **T2** (and, in particular, in **STDREC-S2**), whereas the second one is exploited in combination with the CSDE in **T3-S1,** and in particular in **STDAEC-S2).** The first procedure is expressed by eq. (2.15), that have been already illustrated for a MIMO FMCW radar system; however, the evaluation of the contributions ( $\mathbf{C}_{X_0,v}^{(i)}$ , $\mathbf{C}_{X_1,v}^{(i)}$ , $\mathbf{C}_{X_2,v}^{(i)}$ ) given by the $i$-th (i.e., by the last) target detected on the $v$-th RVA is based on different formulas. These contributions, whose expressions are derived under the assumption that this target can be represented as a point target, are evaluated as

$$\mathbf{C}_{X_0,v}^{(i)} = \widehat{A}_v^{(i)} \, \overline{\mathbf{w}}_{v,0}^{(i)}, \qquad\qquad (4.214)$$

$$\mathbf{C}_{X_1,v}^{(i)} = \widehat{A}_v^{(i)} \, \overline{\mathbf{w}}_{v,1}^{(i)} \qquad\qquad (4.215)$$

and

$$\mathbf{C}_{X_2,v}^{(i)} = \widehat{A}_v^{(i)} \, \overline{\mathbf{w}}_{v,2}^{(i)}, \qquad\qquad (4.216)$$

where $\widehat{A}_v^{(i)}$ is the estimate of the complex amplitude characterizing the considered target, $\overline{\mathbf{w}}_{v,k}^{(i)}$ denotes the $N_0$-th order IDFT of the vector

$$\overline{\mathbf{W}}_{v,k}^{(i)}$$
$$\triangleq \left[0, 1^k \cdot \overline{W}_v^{(i)}, 2^k \cdot \left(\overline{W}_v^{(i)}\right)^2, \dots (N-1)^k \cdot \left(\overline{W}_v^{(i)}\right)^{N-1}, 0, \dots, 0\right]^T, \qquad (4.217)$$

with $k = 0$, 1 and 2,

$$\overline{W}_v^{(i)} \triangleq \exp(-j2\pi \, \widehat{T}_v^{(i)}), \qquad\qquad (4.218)$$

$$\widehat{T}_v^{(i)} \triangleq \widehat{\tau}_v^{(i)} \Delta f \qquad\qquad (4.219)$$

and $\widehat{\tau}_v^{(i)}$ is the estimate of the delay characterizing the considered target. It is important to point out that an efficient method can be used for the computation of the vector $\overline{\mathbf{w}}_{v,k}^{(i)}$ appearing in eqs. (4.214)-(4.216) (with $k = 0$, 1 and 2); note that, for any $k$, this vector is the $N_0$-th order IDFTs of the sequence $\{n^k (\overline{W}_v^{(i)})^n$ ; $n = 0,1,...,N-1\}$, with $W \triangleq \overline{W}_v^{(i)}$ . In fact, the $l$-th element of the vectors $\overline{\mathbf{w}}_{v,k}^{(i)}$ is given by

$$\overline{\mathbf{W}}_{v,k}^{(i)}[l] = \frac{1}{N}\sum_{n=0}^{N-1} n^k \left(\overline{W}_v^{(i)}\right)^n \exp\left(j\frac{2\pi l}{N_0}n\right) = \frac{1}{N}\sum_{n=0}^{N-1} n^k \left(q[l]\right)^n \qquad (4.220)$$

respectively, where

$$q[l] \triangleq \exp\left(-j2\pi\left(\overline{T}_v^{(i)} - \frac{l}{N_0}\right)\right). \qquad (4.221)$$

Therefore, the identities (4.210)-(4.213) can be exploited for an efficient computation of the RHSs of eq. (4.220).

The second cancellation procedure is expressed by eq. (2.57) and requires the evaluation of the contribution $\mathbf{C}_X^{(i)}[l]$ given by the *i*-th (i.e., by the last) target detected in the *l*-th delay bin on the whole array. If $\hat{A}_i[l]$, $\hat{T}_{V,i}[l]$ and $\hat{T}_{H,i}[l]$ denote the estimates of the complex amplitude, the normalized vertical and horizontal spatial delay, respectively, characterizing this target, the expression

$$\mathbf{C}_X^{(i)}[l] = \left[C_X^{(i)}[p,q,l]\right] \qquad (4.222)$$

with

$$\begin{aligned} C_X^{(i)}[p,q,l] \\ = \hat{A}_i[l]\exp\left\{-j2\pi\left[(p-p_R)\hat{T}_{H,i}[l] + (q-q_R)\hat{T}_{V,i}[l]\right]\right\}, \end{aligned} \qquad (4.223)$$

are employed for any RVA (i.e., for any *p* and *q*).

### 4.1.7. Target cancellation procedure to be employed with the complex single frequency estimator - FMCW radar system

In this paragraph we take into consideration a MIMO FMCW radar system and focus on the two cancellation procedures employed in our method; the first procedure is used in combination with the CSFE in **T2** (and, in particular, in **STDREC-S2**), whereas the second one is exploited in combination with the CSFE in **T3-S1,** and in particular in **STDAEC-S2**). The first procedure has been already illustrated for a MIMO FMCW radar system in combination with the SFE; however, in this case, the evaluation of the contributions ( $\mathbf{C}_{X_0,v}^{(i)}$, $\mathbf{C}_{X_1,v}^{(i)}$, $\mathbf{C}_{X_2,v}^{(i)}$ ) given by the *i*-th (i.e., by the last) target detected on the *v*-th RVA is based on different formulas, since the downconverted received signals made available by the considered radar system are complex. These contributions, whose expressions are derived under the assumption that the considered target can be represented as a point target, are evaluated as

$$\mathbf{C}_{X_0,v}^{(i)} = \hat{C}_v^{(i)}\,\overline{\mathbf{W}}_{v,0}^{(i)}, \qquad (4.224)$$

$$\mathbf{C}_{X_1,v}^{(i)} = \hat{C}_v^{(i)}\,\overline{\mathbf{W}}_{v,1}^{(i)} \qquad (4.225)$$

and

$$\mathbf{C}_{X_2,v}^{(i)} = \hat{C}_v^{(i)}\,\overline{\mathbf{W}}_{v,2}^{(i)}; \qquad (4.226)$$

here, $\overline{\mathbf{W}}_{v,k}^{(i)}$ denotes the $N_0$-th order DFT of the vector

$$\overline{\mathbf{w}}_{v,k}^{(i)} \tag{4.227}$$

$$\triangleq \left[0, 1^k \cdot \overline{w}_v^{(i)}, 2^k \cdot \left(\overline{w}_v^{(i)}\right)^2, \dots (N-1)^k \cdot \left(\overline{w}_v^{(i)}\right)^{N-1}, 0, \dots, 0\right]^T,$$

with $k = 0$, 1 and 2,

$$\overline{w}_v^{(i)} \triangleq \exp(j2\pi \overline{F}_v^{(i)}) \tag{4.228}$$

and

$$\overline{F}_v^{(i)} \triangleq \widehat{f}_v^{(i)} T_s \tag{4.229}$$

is the normalized frequency associated with the frequency $\widehat{f}_v^{(i)}$. It is important to point out that the same efficient method described in Paragraph 4.1.5 can be used for the computation of the vector $\overline{\mathbf{W}}_{v,k}^{(i)}$ appearing in eqs. (4.200)-(4.202) (with $k = 0$, 1 and 2).

The second cancellation procedure requires the evaluation of the contribution $\mathbf{C}_X^{(i)}[l]$ given by the $i$-th (i.e., by the last) target detected in the $l$-th frequency bin on the whole array; this target cancellation procedure is used in combination with the CSFE in T3 of both the embodiments described in the previous section for a MIMO FMCW radar system. Here, we focus on the target cancellation procedure employed in the first embodiment. This procedure is expressed by eq. (2.57) and requires the evaluation of the contribution $\mathbf{C}_X^{(i)}[l]$, given by the $i$-th (i.e., by the last) target detected in the $l$-th frequency bin on the whole array; in our method, this target is represented as a point target for simplicity. Therefore, if $\widehat{A}_i[l]$, $\widehat{F}_{V,i}[l]$ and $\widehat{F}_{H,i}[l]$ denote the estimates of the complex amplitude, the normalized vertical spatial frequency and the normalized horizontal spatial frequency, respectively, characterizing this target, the expression

$$\mathbf{C}_X^{(i)}[l] = \left[C_X^{(i)}[p, q, l]\right] \tag{4.230}$$

with

$$C_X^{(i)}[p, q, l] = \widehat{A}_i[l] \exp\left\{j2\pi\left[(p - p_R)\widehat{F}_{H,i}[l] + (q - q_R)\widehat{F}_{V,i}[l]\right]\right\}, \tag{4.231}$$

is employed for any RVA (i.e., for any $p$ and $q$).

### 4.2. Embodiment #2

The processing accomplished in the embodiment #2 of the proposed method is very similar to that of the first one, as illustrated in Paragraph 2.2.1. Embodiment #1. In fact, the only difference is represented by its third task (T3), since spatial estimation is accomplished serially i.e., on a bin-by-bin basis. In the following, we show how the cancellation procedure is accomplished in a MIMO FMCW radar system extracting the inphase component of the RF signals only, in a MIMO FMCW radar system extracting both the inphase and quadrature components of the RF signals and in a MIMO SFCW radar system.

### 4.2.1. Single bin cancellation - FMCW radar system

In a MIMO FMCW radar system, the terms ( $\mathbf{C}_{X_0,v}^{(l)}, \mathbf{C}_{X_1,v}^{(l)}, \mathbf{C}_{X_2,v}^{(l)}$ ) appearing in eq. (2.68) are computed on the basis of eqs. (4.200)-(4.202) if the received sequence $\{r_{v,n}\}$ is real and eqs. (4.224)-(4.226) if the received sequence $\{r_{v,n}\}$ is complex; however, in this case, the presence of $D[l]$ distinct targets detected in the $\hat{\alpha}_r$-th frequency bin and the fact that the frequencies of those targets do not necessarily fall in that bin must be taken into account. In practice, the formulas

$$\mathbf{C}_{X_0,v}^{(l)} \triangleq \sum_{i=0}^{D[l]-1} \left[ \widehat{C}_i[l] \, \overline{\mathbf{W}}_{v,0}^{(i)}[l] + \left( \widehat{C}_i[l] \right)^* \left( \overline{\mathbf{W}}_{v,0,c}^{(i)}[l] \right) \right], \qquad (4.232)$$

$$\mathbf{C}_{X_1,v}^{(l)} \triangleq \sum_{i=0}^{D[l]-1} \left[ \widehat{C}_i[l] \, \overline{\mathbf{W}}_{v,1}^{(i)}[l] + \left( \widehat{C}_i[l] \right)^* \left( \overline{\mathbf{W}}_{v,1,c}^{(i)}[l] \right) \right] \qquad (4.233)$$

and

$$\mathbf{C}_{X_2,v}^{(l)} \triangleq \sum_{i=0}^{D[l]-1} \left[ \widehat{C}_i[l] \, \overline{\mathbf{W}}_{v,2}^{(i)}[l] + \left( \widehat{C}_i[l] \right)^* \left( \overline{\mathbf{W}}_{v,2,c}^{(i)}[l] \right) \right] \qquad (4.234)$$

are used in the case of inphase component only, and

$$\mathbf{C}_{X_0,v}^{(l)} \triangleq \sum_{i=0}^{D[l]-1} \widehat{C}_i[l] \, \overline{\mathbf{W}}_{v,0}^{(i)}[l], \qquad (4.235)$$

$$\mathbf{C}_{X_1,v}^{(l)} \triangleq \sum_{i=0}^{D[l]-1} \widehat{C}_i[l] \, \overline{\mathbf{W}}_{v,1}^{(i)}[l] \qquad (4.236)$$

and

$$\mathbf{C}_{X_2,v}^{(l)} \triangleq \sum_{i=0}^{D[l]-1} \widehat{C}_i[l] \, \overline{\mathbf{W}}_{v,2}^{(i)}[l] \qquad (4.237)$$

in the case of inphase and quadrature components; in both cases, $v = 0, 1, ..., N_{VR} - 1$. In the last six equations, $\hat{C}_i[l]$ denotes the complex amplitude associated with the $i$-th target detected in the $\hat{\alpha}_r$-th frequency bin, and the complex vectors $\overline{\mathbf{W}}_{v,0}^{(i)}[l]$, $\overline{\mathbf{W}}_{v,0,c}^{(i)}[l]$, $\overline{\mathbf{W}}_{v,1}^{(i)}[l]$, $\overline{\mathbf{W}}_{v,1,c}^{(i)}[l]$, $\overline{\mathbf{W}}_{v,2}^{(i)}[l]$ and $\overline{\mathbf{W}}_{v,2,c}^{(i)}[l]$ are computed on the basis of eqs. (4.206)-(4.207), where, however, the normalized frequency $\widehat{F}_i[l] \triangleq \widehat{f}_i[l]T_s$ is used in place of $\overline{F}_v^{(i)}$ (4.205) in the computation of the quantity $\overline{w}_v^{(i)}$ (4.204); moreover, $\hat{f}_i[l]$ represents the frequency associated with the $i$-th target detected in the $\hat{\alpha}_r$-th frequency bin.

### 4.2.2. Single bin cancellation - SFCW radar system

In a MIMO SFCW radar system, the evaluation of the terms ( $\mathbf{C}_{X_0,v}^{(l)}, \mathbf{C}_{X_1,v}^{(l)}, \mathbf{C}_{X_2,v}^{(l)}$ ) employed in the SBC procedure of embodiment #2 (see eq. (2.68)) is based on some formulas different from the ones employed in a MIMO FMCW radar system. In practice, the formulas

$$\mathbf{C}_{X_0,v}^{(l)} \triangleq \sum_{i=0}^{D[l]-1} \widehat{A}_i[l]\, \overline{\mathbf{w}}_{v,0}^{(i)}[l] \qquad (4.238)$$

$$\mathbf{C}_{X_1,v}^{(l)} \triangleq \sum_{i=0}^{D[l]-1} \widehat{A}_i[l]\, \overline{\mathbf{w}}_{v,1}^{(i)}[l] \qquad (4.239)$$

and

$$\mathbf{C}_{X_2,v}^{(l)} \triangleq \sum_{i=0}^{D[l]-1} \widehat{A}_i[l]\, \overline{\mathbf{w}}_{v,2}^{(i)}[l] \qquad (4.240)$$

are used for $v = 0, 1, ..., N_{VR} - 1$. Here, $D[l]$ represents the overall number of distinct targets detected in the $\hat{\alpha}_l$-th time bin and $\hat{A}_i[l]$ denotes the complex amplitude associated with the $i$-th target detected in the $\hat{\alpha}_l$-th time bin. Moreover, the complex vectors $\overline{\mathbf{w}}_{v,0}^{(i)}[l]$, $\overline{\mathbf{w}}_{v,1}^{(i)}[l]$ and $\overline{\mathbf{w}}_{v,2}^{(i)}[l]$ are computed on the basis of eqs. (4.220) (with $k = 0,1$ and 2), where, however, the normalized delay $\widehat{T}_i[l] \triangleq \hat{\tau}_i[l]\Delta f$ (see eq. (1.27)) is used in place of $\overline{T}_v^{(i)}$ (see eq. (4.219)) in the computation of the quantity $\overline{W}_v^{(i)}$ (see eq. (4.218)), $\hat{\tau}_i[l]$ being an estimate of the delay associated with the $i$-th target detected in the $\hat{\alpha}_l$-th time bin.

Finally, it is worth noting that eqs. (4.238)-(4.240) are structurally similar to eqs. (4.232)-(4.234) derived for a MIMO FMCW radar system.

### 5. Novelty of the Developed Estimation Techniques and Other Potential Applications of Them

The iterative estimation technique called single target detection, range estimation and cancellation (STDREC) and employed in task 2, step 2, of both the proposed embodiments for a **FMCW radar system** solves the well known problem of estimating the parameters of multiple undamped sinusoids; for this reason, it can be potentially used in any application, not necessarily related to the field of radar systems, in which other estimators solving the same problem are adopted. It is important to stress that the problem of estimating the parameters (and, in particular, the frequencies) of multiple sinusoids in white noise is a classic one and has been deeply investigated in the technical literature. It has been shown that the periodogram method represents a realization of the *maximum likelihood* (ML) estimator if the spacing among the normalised frequencies of all the sinusoids is greater than $1/N$, where $N$ is the data record length (see "D. C. Rife and R. R. Boorstyn, "Multiple tone parameter estimation from discrete-time observations," The Bell System Technical Journal, vol. 55, no. 9, pp. 1389-1410, 1976."). If, however, this condition is not met, ML estimation leads to a nonlinear least-squares problem. Therefore, in this case, the implementation of the ML estimator requires a nonlinear minimization which, generally speaking, is not guaranteed to converge or may converge to only a local minimum; in addition, its computational burden is high. This explains why a number of suboptimal solutions have been proposed in the technical literature. Most of them are based on iterative algorithms (e.g., see "S. Kay, "Accurate frequency estimation at low signal-to-noise ratio," IEEE Trans. Ac., Speech and Sig. Proc., vol. 32, no. 3, pp. 540-547, 1984.") and usually exploit a two stage approach; in the first stage, suboptimal initial estimates of the parameters of interest are obtained, whereas in the second one such estimates are refined through an iterative maximization of the likelihood function (e.g., see "P. Stoica, R. L. Moses, B. Friedlander, and T. Soderstrom, "Maximum likelihood estimation of the parameters of multiple sinusoids from noisy measurements," IEEE Trans. Ac., Speech, and Sig. Proc., vol. 37, no. 3, pp. 378-392, 1989." and references therein). The novelty of our solution is mainly represented by the SFE technique and by the simplicity of the adopted cancellation procedure. Computer simulations have evidenced that: a) the SFE technique is able to generate an accurate estimate of the parameters of each sinusoid through the computation of both the integer part and its fractional part of its frequency (see eq. (2.12)); b) the accuracy of frequency estimation plays a fundamental role in the efficacy of the adopted serial cancellation procedure, since it mitigates the error accumulation phenomenon occurring in any algorithm implementing the concept of estimation of multiple tones through serial cancellation. Similar considerations apply to the CSFE, which is used to solve the well known problem of estimating the parameters of multiple undamped complex exponentials; for this reason, it can be potentially used in any application, not necessarily related to the field of radar systems, in which other estimators solving the same problem are adopted.

If the STDREC algorithm is employed in the RPE of a **SFCW radar system,** an estimate of the *channel impulse response* (CIR) is obtained for each of the selected $N_A$ RVAs. Moreover, such a CIR is represented by a sequence of lines (i.e., of delayed delta functions), each positioned in a specific *time bin*[5] and characterized by a specific complex gain. It is important to note that the received signal model (1.23) has the same mathematical structure as the signal available at the output of the IDFT evaluated by the demodulator in a digital communication system employing the *orthogonal frequency division multiplexing* (OFDM) modulation (e.g., see eq. (4.129) in Par. 4.4.4 of "G. M. Vitetta, F. Pancaldi, D. P. Taylor, and P. Martin, Wireless Communications: Algorithmic Techniques. John Wiley & Sons.") when *known* (i.e., *pilot*) *channel symbols* are transmitted. For this reason, the STDREC algorithm can be exploited for accomplishing *pilot-based channel estimation* of the impulse response of the communication channel in this system. This result has significant technical implications, since the OFDM has been adopted in the air interface of *fourth generation* (4G) and *fifth generation* (5G) standards for cellular communications (see "A. A. Zaidi, R. Baldemair, V. Moles-Cases, N. He, K. Werner, and A. Cedergren, "Ofdm numerology design for 5g new radio to support iot, embb, and mbsfn," IEEE Communications Standards Magazine, vol. 2, no. 2, pp. 78-83, 2018." and "S. Srikanth, P. A. Murugesa Pandian, and X. Fernando, "Orthogonal frequency division multiple access in wimax and lte: a comparison," IEEE Communications Magazine, vol. 50, no. 9, pp. 153-161, 2012.").
[5] This represents the dual of the frequency bin defined in Paragraph 2.3. SFCW radar system.

In fact, in any wireless link of a *cellular communication system* employing the OFDM modulation, an accurate knowledge of the CIR is required to compensate for the channel distortion at the receive side, i.e. for *channel equalization* (e.g., see Sec. 6.3 of "G. M. Vitetta, F. Pancaldi, D. P. Taylor, and P. Martin,

Wireless Communications: Algorithmic Techniques. John Wiley & Sons."). Moreover, the knowledge of the delay characterizing the first sample of the CIR (i.e., characterizing the first received echo of the transmitted signal) can be exploited to estimate the *time-of-flight* (TOF) of the signal travelling from a base station to a mobile phone or in the opposite direction, and these information can be exploited for *precise positioning* of cellular phones (see "F. Gustafsson and F. Gunnarsson, "Mobile positioning using wireless networks: possibilities and fundamental limitations based on available wireless network measurements," IEEE Signal Processing Magazine, vol. 22, no. 4, pp. 41-53, 2005."). It is worth mentioning that, as far as we know, the use of serial cancellation approach to channel estimation has been proposed in Par. II-A of ref. "X. Wang and S. B. Wicker, "Channel estimation and feedback with continuous time domain parameters," in Proc. 2013 IEEE Global Communications Conference (GLOBECOM), 2013, pp. 4306-4312." for a *long term evolution-advanced* (LTE-advanced) cellular system; however, the estimation technique developed in that manuscript is completely different from the STDREC technique we have devised for a SFCW radar system.

The iterative estimation algorithm called *single target detection, angular estimation and cancellation* (STDAEC) and employed in task 3, step 1, of both the proposed embodiments for a **FMCW radar system** solves the well known problem of *estimating the parameters of multiple undamped complex exponentials.* For this reason, it can be potentially used in any application, not necessarily related to the field of radar systems, in which other estimators solving the same problem are adopted. It is worth mentioning that the estimation of the parameters of multiple superimposed exponential signals in additive Gaussian noise represents a fundamental problem in time series analysis and system identification, and *in antenna array processing.* Various *high resolution methods* achieve excellent performance in terms of estimation accuracy at high SNR and with long data records. However, the performance of these methods is severely degraded when the SNR and/or data record length fall below some threshold, which may be significantly higher than that of the optimal ML estimate. This behavior may originate from the fact that the above methods are essentially heuristic modifications of algorithms yielding exact results when there is no noise, or when the amount of available data is infinite. Unluckily, direct maximization of the likelihood function, which is highly nonlinear in the unknown signal parameters, requires a computationally expensive multidimensional search. This has motivated the development of *suboptimal iterative methods* able to solve this difficult problem (e.g., see "J. Selva, "ML Estimation and Detection of Multiple Frequencies Through Periodogram Estimate Refinement," IEEE Sig. Proc. Lett., vol. 24, no. 3, pp. 249-253, 2017.", "Y. Bresler and A. Macovski, "Exact maximum likelihood parameter estimation of superimposed exponential signals in noise," IEEE Transactions on Acoustics, Speech, and Signal Processing, vol. 34, no. 5, pp. 1081-1089, 1986.", and "L. S. Biradar and V. U. Reddy, "A newton-based ziskind-wax alternating projection algorithm applied to spectral estimation," IEEE Transactions on Signal Processing, vol. 41, no. 3, pp. 1435-1438, 1993." and references therein). An interesting example of this approach is offered by the estimation technique developed in "J. Selva, "ML Estimation and Detection of Multiple Frequencies Through Periodogram Estimate Refinement," IEEE Sig. Proc. Lett., vol. 24, no. 3, pp. 249-253, 2017.". In each iteration of this algorithm, two steps are executed; in the first step, a single frequency or a frequency cluster is detected and estimated using the periodogram, whereas in the second one this estimate/these estimates are refined through an Newton-type method; moreover, once a set of exponentials is detected and estimated, its contribution is subtracted from the log-likelihood function. These two steps are iteratively repeated until no frequency whose contribution to the likelihood function is above a fixed detection threshold is found. The overall structure of this algorithm is conceptually similar to that of the STDAEC algorithm. However, unlike the STDAEC algorithm, it does not make any attempt to estimate the fractional part of each frequency through multiple FFTs; moreover, the cancellation of the contribution of each detected and estimated complex exponential is based on a completely different procedure (see eq. (12) in Sec. III of "J. Selva, "ML Estimation and Detection of Multiple Frequencies Through Periodogram Estimate Refinement," IEEE Sig. Proc. Lett., vol. 24, no. 3, pp. 249-253, 2017.").

As already explained above, the STDREC technique developed for a **SFCW radar system** can be employed in an OFDM communication system for pilot-based CIR estimation. Similarly, the STDAEC technique employed in a **SFCW radar system** can be used in a MIMO OFDM communication system for pilot-based estimation of the *direction of arrival* (DOA) of an OFDM signal. As already mentioned above, OFDM represents the digital modulation format employed in the downlink of 4G and 5G cellular systems. In such systems, the STDAEC technique can be used in any mobile terminal equipped with a receive array to estimate the DOA of the signals transmitted by a near base stations.

Finally, it is worth mentioning that the exploitation of multiple FFTs in the estimation of the frequency of a complex exponential has been previously proposed in "E. Chiavaccini and G. M. Vitetta, "Maximum-likelihood frequency recovery for ofdm signals transmitted over multipath fading channels," IEEE Trans. Commun., vol. 52, no. 2, pp. 244-251, 2004." and "F.Zuccardi Merli and G. M. Vitetta, "Blind feedforward frequency estimation for ofdm signals transmitted over multipath fading channels," IEEE Transactions on Wireless Communications, vol. 6, no. 6, pp. 2055-2059, 2007" to solve the frequency estimation problem at the receive side of a digital communication system employing the OFDM digital modulation. However, the algorithms developed for that applications are completely different from that employed by the CSFE.

## 6. Numerical Results

In this section, some numerical results, generated by means of computer simulations in three different scenarios, are illustrated. The first scenario aims at assessing the accuracy provided by the STDREC algorithm in a *single-input single-output* (SISO) FMCW radar system. The second scenario allows us to show that the STDAEC algorithm is able to detect multiple targes contributing to the same frequency bin in a MIMO FMCW radar system and to generate accurate estimates of their spatial coordinates. Finally, the third scenario aims at showing that the accuracy of the 2D and 3D images generated by the two proposed embodiments is substantially better than that provided by standard algorithms based on the computation of multidimensional FFTs; in this case, both FMCW and SFCW radar systems are considered.

In all the considered scenarios, estimation accuracy is assessed by evaluating the *root mean square error* (RMSE)

$$\overline{\varepsilon}_X \triangleq \sqrt{L^{-1} \sum_{l=0}^{L-1} \left[ X_l - \widehat{X}_l \right]^2} \qquad (6.1)$$

and the peak error

$$\widehat{\varepsilon}_X \triangleq \max_l \left| X_l - \widehat{X}_l \right|; \qquad (6.2)$$

here, $X_l$ and $\hat{X}_l$ represent the exact value of the parameter to be estimated for the *l*-th target (with $l = 0, 1, ..., L - 1$) and the corresponding estimate.

The numerical results illustrated below refer to three different simulation scenarios.

**Scenario #1** - The first scenario is characterized by four point targets having different *radar cross sections* (RCSs). The exact range and RCS of each of these targets are listed in Table 1. An FMCW radar system equipped with a single transmit and a single receive antenna is considered in this case and the STDREC algorithm is employed for range estimation only. Moreover, the following parameters have been selected for the FMCW system: $\mu = 1.5 \cdot 10^{13}$ *Hz/s, B* = 3 GHz (see eq. (1.4)), $f_0 = 77$ GHz, $f_s = 5$ MHz and $N = 1024$; moreover, the variance of the noise affecting the received signal sample $r_{v,n}$ (1.12) is $\sigma_w^2 = 3.0$ (corresponding to a SNR of about 3.5 dB). As far as the STDREC parameters are concerned, the following choices have been made: $M = 8$ (see (2.7)), $N_{SFE} = 5$ and the threshold $T_{STDREC}$ is set to 10% of the energy of the vector $\mathbf{X}_0$ (see eq. (2.16)). The amplitude spectrum of the received signal and the residual spectrum available at the end of the cancellation procedure accomplished by the STDREC are illustrated in Figure 17; the estimates of the ranges of the targets and of their RCSs are listed in Table 1. These results lead to the conclusion that that our method is able to achieve good accuracy both in terms of range and RCS estimation. Note also that the accuracy achieved in range estimation is better than that obtained in RCS estimation; in fact, from Table 1 it is easily inferred that $\bar{\varepsilon}_R = 0.003$ m, $\hat{\varepsilon}_R = 0.006$ m, $\bar{\varepsilon}_{RCS} = 0.05$ V and $\hat{\varepsilon}_{RCS} = 0.08$ V (see eqs. (6.1)-(6.2)).

**Scenario #2** - The second scenario is characterized by four point targets having the same range and placed at the vertices of a rectangle; moreover, the line connecting the centre of the radar with that of the rectangle is orthogonal to the rectangle itself. A 3D representation of the targets together with the estimated position and the associated RCS is shown in Figure 18. The coordinates and the RCS of each of these targets are listed in Table 2. In this case, our simulation results refer to a MIMO FMCW radar system equipped with the antenna array described in Paragraph 3.2 and characterized by the following parameters: $\mu = 1.5 \cdot 10^{13}$ Hz/s, $B = 3$ GHz (see eq. (1.4)), $f_0 = 77$ GHz, $f_s = 5$ MHz, $N = 1024$. Moreover, the variance of the noise affecting the received signal sample $r_{v,n}$ (1.12) is $\sigma_w^2 = 0.2$ (the corresponding SNR is about 22.0 dB). As far as the parameters of the STDREC algorithm are concerned, the following choices have been made: $N_A = 10$, $M = 8$ (2.7) and $N_{SFE} = 5$; moreover, the threshold $T_{STDREC}$ is equal to 80% of the initial energy of the vector $\mathbf{X}_0$ (see eq. (2.16)). In this case, the STDREC algorithm allows to detect the presence of at least one target in the frequency bin $\hat{b}_0 = 493$. The estimation of the azimuth and of the elevation of the four targets contributing to this bin is accomplished by the STDAEC algorithm; the following choices have been made for its parameters: $\bar{N}_0 = 256$ (see eq. (2.37)), $N_{VULA} = 16$, $N_{HULA} = 31$, $p_R = 16$, $q_R = 8$, $N_{CSFE} = 5$; moreover, the threshold $T_{STDAEC}$ is equal to the 20% of the initial energy measured in the considered frequency bin (see eq. (2.58)). The amplitudes of the elements of the vector $\mathbf{X}_{VULA}^{(0)}[0]$ (see eq. (2.33)), the amplitudes of the elements of the vector $\mathbf{X}_0^{(VF)}[0]$ generated by vertical folding (see eq. (2.45)) and the spatial frequencies estimated for the first target of Table 2 are shown in Figure 19. In this case, the STDAEC algorithm allows to detect all the targets, and to estimate their horizontal and vertical spatial frequencies. The estimates of the spatial coordinates of these targets are listed in Table 2; in this case, $\bar{\varepsilon}_R = 0.011$ m, $\hat{\varepsilon}_R = 0.015$ m, $\bar{\varepsilon}_\theta = 0.9°$, $\hat{\varepsilon}_\theta = 0.9°$, $\bar{\varepsilon}_\phi = 0.1°$, $\hat{\varepsilon}_\phi = 0.1°$ and $\bar{\varepsilon}_{RCS} = 0.07$ V, $\hat{\varepsilon}_{RCS} = 0.12$ V (see eqs. (6.1)-(6.2)). These results lead to the conclusion that the joint use of the STDREC and the STDAEC algorithms works well, even in the presence of multiple targets contributing to the same frequency bin.

**Scenario #3** - The third scenario is characterized by nine point targets grouped in three clusters, each made of three points having similar ranges. The target coordinates, the RCS and their estimates for a FMCW (SFCW) radar system are listed in Table 3 (Table 5) for the first embodiment and in Table 4 (Table 6) for the second embodiment.

As far as the FMCW radar system is concerned, our simulation results are obtained under the following assumptions. The RF signal is radiated by a radar system equipped with the antenna array described in Paragraph 3.2 and characterized by the following parameters: $\mu = 1.5 \cdot 10^{13}$ Hz/s, $B = 3$ GHz (see eq. (1.4)), $f_0 = 77$ GHz, $f_s = 5$ MHz, $N = 1024$; moreover, the variance of the noise affecting the received signal sample $r_{v,n}$ (1.12) is $\sigma_w^2 = 0.2$ (the corresponding SNR is about 22.0 dB). As far as the parameters of the STDREC algorithm are concerned, the following choices have been made: $N_A = 10$, $M = 8$ (2.7) and $N_{SFE} = 5$; moreover, the threshold $T_{STDREC}$ is equal to 4% of the energy $\|\mathbf{X}_{0,v_k}\|^2$ on the $v_k$-th RVA. The estimation of the azimuth and of the elevation of all the targets is accomplished by the STDAEC algorithm; the following choices have been made for its parameters: $\bar{N}_0 = 256$ (see eq. (2.37)), $N_{VULA} = 16$, $N_{HULA} = 31$, $p_R = 16$, $q_R = 8$, $N_{CSFE} = 5$; moreover, the threshold $T_{STDAEC}$ is equal to the 3% of the energy $\|\mathbf{X}^{(0)}[l]\|^2$ measured in the considered frequency bin (see eq. (2.30)).

The SFCW radar system, instead, is equipped with an URA (like the one illustrated in Figure 9) composed by $N_{VV} = 20$ antennas along the vertical dimension and $N_{VH} = 16$ physical elements along the horizontal axis. The overall number of virtual channels is $N_{VR} = 20 \times 16 = 320$. This device is characterized by the following parameters: $B = 3$ GHz (see eq. (1.20)), $f_0 = 77$ GHz, $F_S = 3$ MHz, $N = 1024$; moreover, the variance of the noise affecting the frequency response sample $H_{v,n}$ (1.23) is $\sigma_w^2 = 0.2$ (the corresponding SNR is about 22.0 dB). As far as the parameters of the STDREC algorithm are concerned, the following choices have been made: $N_A = 10$, $M = 8$ (2.7) and $N_{SDE} = 5$; moreover, the threshold $T_{STDREC}$ is equal to 4% of the energy $\|\mathbf{X}_{0,v_k}\|^2$ on the $v_k$-th RVA. The estimation of the azimuth and of the elevation of the nine targets is accomplished by the STDAEC algorithm; the following choices have been made for its parameters: $\bar{N}_0 = 320$ (see eq. (2.37)), $N_{VULA} = 20$, $N_{HULA} = 16$, $p_R = 8$, $q_R = 10$, $N_{CSDE} = 5$; moreover, the threshold $T_{STDAEC}$ is equal to the 3% of the initial energy $\|\mathbf{X}^{(0)}[l]\|^2$ measured in the considered frequency bin (see eq. (2.30)). The 3D image generated by both radar systems through the first embodiment is shown in Figure 20. In this case, the STDAEC algorithm allows to detect all the targets, and to estimate their horizontal and vertical spatial frequencies. Moreover, the RMSE and the peak error achieved by both systems are listed in Table 7. These results lead to the conclusion that the joint use of the STDREC and the STDAEC algorithms works well, even in the presence of multiple extended targets.

Tables:

Table 1

| Target | $R$ [m] | | RCS [V] | |
|---|---|---|---|---|
| | Exact | Estimated | Exact | Estimated |
| 1 | 3.000 | 3.006 | 2.50 | 2.46 |
| 2 | 3.050 | 3.051 | 2.00 | 1.92 |
| 3 | 4.000 | 4.000 | 1.50 | 1.51 |
| 4 | 5.000 | 4.999 | 1.00 | 1.03 |

Table 2

| Target | $R$ [m] | | $\theta$ [°] | | $\varphi$ [°] | | RCS [V] | |
|---|---|---|---|---|---|---|---|---|
| | Exact | Estimated | Exact | Estimated | Exact | Estimated | Exact | Estimated |
| 1 | 3.000 | 3.008 | 25.0 | 25.9 | -10.0 | -10.1 | 1.00 | 1.04 |
| 2 | 3.000 | 2.988 | 25.0 | 25.8 | 10.0 | 10.1 | 1.00 | 0.88 |
| 3 | 3.000 | 3.015 | -25.0 | -25.9 | -10.0 | -10.1 | 1.00 | 0.99 |
| 4 | 3.000 | 2.994 | -25.0 | -25.9 | 10.0 | 10.1 | 1.00 | 1.06 |

Table 3

| Target | $R$ [m] | | $\theta$ [°] | | $\varphi$ [°] | | RCS [V] | |
|---|---|---|---|---|---|---|---|---|
| | Exact | Estimated | Exact | Estimated | Exact | Estimated | Exact | Estimated |
| 1 | 1.900 | 1.893 | 22.0 | 23.1 | -23.0 | -23.7 | 0.57 | 0.53 |
| 2 | 2.000 | 1.997 | 20.0 | 21.0 | -20.0 | -20.8 | 0.73 | 0.72 |
| 3 | 2.100 | 2.100 | 17.0 | 17.7 | -17.0 | -17.5 | 0.82 | 0.80 |
| 4 | 2.900 | 2.901 | -4.0 | -4.4 | 23.0 | 23.7 | 0.94 | 0.92 |
| 5 | 3.000 | 2.998 | 0.0 | 0.0 | 20.0 | 20.6 | 0.71 | 0.70 |
| 6 | 3.100 | 3.101 | 4.0 | 4.2 | 17.0 | 17.5 | 0.94 | 0.93 |
| 7 | 3.900 | 3.894 | -22.0 | -22.6 | -2.0 | -2.0 | 0.43 | 0.43 |
| 8 | 4.000 | 4.003 | -20.0 | -21.0 | 0.0 | -0.2 | 0.48 | 0.47 |
| 9 | 4.100 | 4.098 | -17.0 | -17.7 | 3.0 | 3.1 | 0.52 | 0.51 |

Table 4

| Target | $R$ [m] | | $\theta$ [°] | | $\varphi$ [°] | | RCS [V] | |
|---|---|---|---|---|---|---|---|---|
| | Exact | Estimated | Exact | Estimated | Exact | Estimated | Exact | Estimated |
| 1 | 1.900 | 1.894 | 22.0 | 23.1 | -23.0 | -23.5 | 0.57 | 0.53 |
| 2 | 2.000 | 1.990 | 20.0 | 21.0 | -20.0 | -20.8 | 0.73 | 0.71 |
| 3 | 2.100 | 2.100 | 17.0 | 17.6 | -17.0 | -17.7 | 0.82 | 0.79 |
| 4 | 2.900 | 2.901 | -4.0 | -4.4 | 23.0 | 23.5 | 0.94 | 0.95 |
| 5 | 3.000 | 3.005 | 0.0 | 0.0 | 20.0 | 20.6 | 0.71 | 0.71 |
| 6 | 3.100 | 3.108 | 4.0 | 4.2 | 17.0 | 17.5 | 0.94 | 0.94 |
| 7 | 3.900 | 3.901 | -22.0 | -23.0 | -2.0 | -2.3 | 0.43 | 0.43 |
| 8 | 4.000 | 4.003 | -20.0 | -20.6 | 0.0 | 0.0 | 0.48 | 0.49 |

(continued)

| Target | R [m] | | θ [° ] | | φ [° ] | | RCS [V] | |
|---|---|---|---|---|---|---|---|---|
| | Exact | Estimated | Exact | Estimated | Exact | Estimated | Exact | Estimated |
| 9 | 4.100 | 4.098 | -17.0 | -17.7 | 3.0 | 3.1 | 0.52 | 0.51 |

Table 5

| Target | R [m] | | θ [° ] | | φ [° ] | | RCS [V] | |
|---|---|---|---|---|---|---|---|---|
| | Exact | Estimated | Exact | Estimated | Exact | Estimated | Exact | Estimated |
| 1 | 1.900 | 1.899 | 22.0 | 22.0 | -23.0 | -23.2 | 0.57 | 0.59 |
| 2 | 2.000 | 2.003 | 20.0 | 20.2 | -20.0 | -20.1 | 0.73 | 0.74 |
| 3 | 2.100 | 2.102 | 17.0 | 17.1 | -17.0 | -17.1 | 0.82 | 0.81 |
| 4 | 2.900 | 2.899 | -4.0 | -3.9 | 23.0 | 23.2 | 0.94 | 0.94 |
| 5 | 3.000 | 3.001 | 0.0 | 0.0 | 20.0 | 20.1 | 0.71 | 0.69 |
| 6 | 3.100 | 3.104 | 4.0 | 4.1 | 17.0 | 17.1 | 0.94 | 0.92 |
| 7 | 3.900 | 3.905 | -22.0 | -22.1 | -2.0 | -1.8 | 0.43 | 0.44 |
| 8 | 4.000 | 3.999 | -20.0 | -20.1 | 0.0 | 0.0 | 0.48 | 0.47 |
| 9 | 4.100 | 4.099 | -17.0 | -17.1 | 3.0 | 2.9 | 0.52 | 0.52 |

Table 6

| Target | R [m] | | θ [° ] | | φ [° ] | | RCS [V] | |
|---|---|---|---|---|---|---|---|---|
| | Exact | Estimated | Exact | Estimated | Exact | Estimated | Exact | Estimated |
| 1 | 1.900 | 1.899 | 22.0 | 22.3 | -23.0 | -23.2 | 0.57 | 0.56 |
| 2 | 2.000 | 2.004 | 20.0 | 20.2 | -20.0 | -20.1 | 0.73 | 0.73 |
| 3 | 2.100 | 2.102 | 17.0 | 17.1 | -17.0 | -17.1 | 0.82 | 0.81 |
| 4 | 2.900 | 2.899 | -4.0 | -3.9 | 23.0 | 23.2 | 0.94 | 0.94 |
| 5 | 3.000 | 3.001 | 0.0 | 0.0 | 20.0 | 20.1 | 0.71 | 0.7 |
| 6 | 3.100 | 3.104 | 4.0 | 4.1 | 17.0 | 17.1 | 0.94 | 0.92 |
| 7 | 3.900 | 3.899 | -22.0 | -22.1 | -2.0 | -2.1 | 0.43 | 0.43 |
| 8 | 4.000 | 3.999 | -20.0 | -20.1 | 0.0 | 0.0 | 0.48 | 0.47 |
| 9 | 4.100 | 4.099 | -17.0 | -17.1 | 3.0 | 2.9 | 0.52 | 0.52 |

Table 7

| Radar | $\overline{\varepsilon}_R$ [m] | $\hat{\varepsilon}_R$ [m] | $\overline{\varepsilon}_\theta$ [° ] | $\hat{\varepsilon}_\theta$ [° ] | $\overline{\varepsilon}_\varphi$ [° ] | $\hat{\varepsilon}_\varphi$ [° ] | $\overline{\varepsilon}_{RCS}$ [V] | $\hat{\varepsilon}_{RCS}$ [V] |
|---|---|---|---|---|---|---|---|---|
| FMCW emb # 1 | 0.004 | 0.007 | 0.7 | 1.1 | 0.5 | 0.8 | 0.02 | 0.04 |
| FMCW emb # 2 | 0.005 | 0.010 | 0.7 | 1.1 | 0.5 | 0.8 | 0.02 | 0.04 |
| SFCW emb # 1 | 0.003 | 0.005 | 0.1 | 0.2 | 0.1 | 0.2 | 0.01 | 0.02 |
| SFCW emb # 2 | 0.002 | 0.004 | 0.2 | 0.3 | 0.1 | 0.2 | 0.01 | 0.02 |

**Claims**

1. [RPE] Method for detection of targets through a MIMO FMCW radar equipped with a plurality of transmitting (TX) and receiving (RX) antennas, wherein each couple of said TX and RX antennas is replaced with the equivalent virtual antenna; said MIMO FMCW radar having a receive side arranged to generate real or complex down-converted signals in response to a propagation scenario including a plurality of point targets; said method includes:

- (Step 1: FFT processing) estimation of the spectrum ( $\overline{\mathbf{X}}_0^{(\mathrm{v})}$ ) of said signal and its first $N_{FFT}$ - 1 derivatives (

$\{\overline{\mathbf{X}}_k^{(v)}; \ k = 1, \ldots, N_{FFT} - 1\}$) with $N_{FFT}$ = 3 when said signal is real and $N_{FFT}$ = 4 when said signal is complex, for each of said virtual antennas through FFT calculation with an oversampling factor ($M$),

- (Step 2: RVA selection) acquisition of a sub-set of a number ($N_A$) of virtual antennas spectra and of the corresponding derivatives,

Recursive execution of

- (Step 3: STDREC-S1) calculation of an estimate of the parameters of the most dominant point target, including phase ($\psi$), amplitude ($a$) and frequency ($f$) for each of said virtual antennas of said sub-set on the basis of said spectrum, and its derivatives, through $N_{FFT}$ -1 FFTs for each of said virtual antennas of said sub-set,

- (Step 4: STDREC-S2) cancellation of said most dominant point target and computation of a residual spectrum and its first $N_{FFT}$ - 1 derivatives,

- (Step 5: STDREC-S3) computation of an energy of said residual spectrum and return to (Step 3) until said energy is over a predetermined threshold ($T_{STDREC}$), otherwise

- (Step 6) computation of an average energy and fusion of ranges information of said point targets detected by said number of virtual antennas to list said point targets according to said average energy in a decreasing order.

2. [SFE] Method according to claim 1, wherein the receive side of the radar generates a down-converted real signal, said (Step 3) calculation includes:

- (Step 3.1.0) representation of a target normalized frequency $F \triangleq f/f_s$, where $f_s$ is the sampling frequency, as sum of a main portion ($\alpha F_{DFT}$) and a residual portion ($\delta F_{DFT}$), where $F_{DFT} \triangleq 1/N_0$, where $N_0$ is the FFT order, wherein said main portion is determined by searching the index ($\hat{\alpha}$) of the vector element $\overline{X}_{0,\hat{\alpha}}^{(v)}$ corresponding to the maximum absolute value in a first half plus one elements of the same vector $\overline{\mathbf{X}}_0^{(v)}$ and said residual frequency is found through an iterative procedure together with the corresponding target complex amplitude $C \triangleq a\exp(j\psi)/2$, where $a$ is said target amplitude and $\psi$ is said target phase.

3. [CSFE] Method according to claim 1, wherein the receive side of the radar generates a down-converted complex signal, said (Step 3) calculation includes:

- (Step 3.3.0) representation of a target normalized frequency $F \triangleq f/f_s$, where $f_s$ is the sampling frequency, as sum of a main portion ($\alpha F_{DFT}$) and a residual portion ($\delta F_{DFT}$), where $F_{DFT} \triangleq 1/N_0$, where $N_0$ is the FFT order, wherein said main portion is determined by searching the index ($\hat{\alpha}$) of the vector element $\overline{X}_{0,\hat{\alpha}}^{(v)}$ corresponding to the maximum absolute value of the same vector $\overline{\mathbf{X}}_0^{(v)}$ and said residual frequency is found through an iterative procedure together with the corresponding target complex amplitude $A \triangleq a\exp(j\psi)$, where $a$ is said target amplitude and $\psi$ is said target phase.

4. [STDREC-S2: cancellation] Method according to claim 1, wherein said (Step 4) cancellation includes the computation and subtraction of the contribution given by said dominant target to said spectrum ( $\overline{\mathbf{X}}_0^{(v)}$ ) and to the corresponding derivatives to compute a residual of the spectrum and of the corresponding derivatives.

5. Method according to claim 1, wherein said (Step 6) fusion includes:

- (Step 6.1) fusion of the information provided by a number ($N_A$) of sub-sets collecting all the discretized ranges, named frequency bins, of said plurality of targets detected on each virtual antenna, to generate the overall set made of said frequency bins that appear at least once in said sub-sets.

6. [SPE-2D] Method according to any one of the previous claims, further comprising:

- (Step 7) acquisition of said spectrum ( $\overline{\mathbf{X}}_0^{(v)}$ ) of said signal and its first $N_{FFT}$ - 1 derivatives ( $\{\overline{\mathbf{X}}_k^{(v)}; k = 1, \ldots, N_{FFT} - 1\}$ ) with $N_{FFT}$ = 3 when said signal is real and $N_{FFT}$ = 4 when said signal is complex, for each of said virtual antennas,

- (Step 8) acquisition of a list of a predetermined number of discretized ranges, named frequency bins, of said detected point targets,

- (Step 9) selection of a reference antenna, a reference horizontal uniform linear array, named Reference HULA,

- (Step 10 [STDAEC]) sequential execution for each of said frequency bins; said execution includes:

- (Step 10.1 [STDAEC-S1]) estimation of the horizontal spatial frequency and complex amplitude of the most dominant point target; said estimation includes:

- (Step 10.1.4 [STDAE-S4]) computation of the spectrum ($\overline{\mathbf{s}}_{HULA,0}$) and its first three derivatives ($\{\overline{\mathbf{s}}_{HULA,k}; k = 1, 2, 3\}$) of the sequence collecting the samples of said spectrum ($\overline{\mathbf{X}}_0$) referred to said Reference HULA in the considered frequency bin; said computations being carried out through FFT calculation with a second over-sampling factor ($\overline{M}$),

- (Step 10.1.5 [STDAE-S4]) estimation of said horizontal spatial frequency,

- (Step 10.1.6 [STDAE-S5]) checking whether the combination of the spectra associated with said Reference HULA, after compensating for their phase differences on the basis of said estimated horizontal frequency, generates an amplitude peak in the absolute value of the resulting spectrum, named overall folded spectrum; and when the checking is positive execution of the following steps:

- (Step 10.1.7) refinement of said range and complex amplitude of said most dominant point target;

- (Step 10.2 [STDAEC-S2]) cancellation of said most dominant point target,

- (Step 10.3 [STDAEC-S3]) calculation of a residual energy in the considered frequency bin and its comparison with a predetermined threshold ($T_{STDAEC}$), and checking whether said residual energy exceeds said predetermined threshold and, if so, return to computation of the spectrum (Step 10.1.4) and go to computation of the spatial coordinates (Step 11),

otherwise, in negative case of said checking (Step 10.1.6) execution of the following steps:

- (Step 10.4) updating of said acquired list of said frequency bins and return to Step 10 for a further frequency bin or exit when all frequency bins are examined,

wherein said sequential execution (Step 10) ends when all the frequency bins have been analyzed, then

- (Step 11) computation of the spatial coordinates of all the point targets belonging to all the frequency bins on the basis of said spatial frequency and said complex amplitude and generation of an overall image of the propagation scenario.

7.  [SPE-3D] Method according to claim 6, wherein said virtual antennas form a virtual array composed by one or multiple horizontal uniform linear arrays (HULAs) and one or multiple vertical uniform linear arrays (VULAs); the method including the following steps:

- said (Step 7) acquisition of said spectrum ( $\overline{\mathbf{X}}_0^{(v)}$ ) of said signal and its first $N_{FFT}$ - 1 derivatives ( $\{\overline{\mathbf{X}}_k^{(v)}; k = 1, \ldots, N_{FFT} - 1\}$ ) with $N_{FFT}$ = 3 when said signal is real and $N_{FFT}$ = 4 when said signal is complex, for each of said virtual antennas,

- said (Step 8) acquisition of a list of a predetermined number of discretized ranges, named frequency bins, of said detected point targets,

- said (Step 9) selection of a reference antenna, and in addition a reference vertical uniform linear array, named Reference VULA, a reference horizontal uniform linear array, named Reference HULA, and in addition, at least a sub-set with a number of said horizontal uniform linear arrays (HULAs) different from the Reference HULA,

- said (Step 10 [STDAEC]) sequential execution for each of said frequency bins; said execution includes:

- said (Step 10.1 [STDAEC-S1]) estimation of the horizontal spatial frequency and complex amplitude of the most dominant point target and in addition estimation of the vertical spatial frequency; said estimation includes:

- (Step 10.1.1 [STDAE-S1]) computation of the spectrum ($\overline{\mathbf{s}}_{VULA,0}$) of the sequence collecting the samples of said spectrum ($\overline{\mathbf{X}}_0$) referred to said Reference VULA in the considered frequency bin and its first 3 derivatives ($\{\overline{\mathbf{s}}_{VULA,k}$; $k$ = 1, 2, 3$\}$) through FFT calculation with a first oversampling factor ($\overline{M}$),
- (Step 10.1.2 [STDAE-S2]) estimation of said vertical spatial frequency,
- (Step 10.1.3 [STDAE-S3]) combination of the spectra associated with the Reference HULA and said sub-set of HULAs, after compensating for the phase differences between the Reference HULA and said sub-set of HULAs employing said estimate of the vertical spatial frequency ($F_V$); said superposition, named vertical folding, generates a vertically folded spectrum,
- said (Step 10.1.4 [STDAE-S4]) computation of the spectrum ($\overline{\mathbf{s}}_{HULA,0}$) and its first three derivatives ($\{\overline{\mathbf{s}}_{HULA,k}$; $k$ = 1,2,3$\}$) of the sequence collecting the samples of said spectrum ($\overline{\mathbf{X}}_0$) referred to said Reference HULA in the considered frequency bin, and said spectrum is referred to said vertically folded spectrum; said computations being carried out through FFT calculation with a second oversampling factor ($\overline{M}$),
- said (Step 10.1.5 [STDAE-S4]) estimation of said horizontal spatial frequency,
- (Step 10.1.6 [STDAE-S5]) checking whether combination of the spectra associated with said Reference HULA, after compensating for their phase differences on the basis of said estimated horizontal frequency and of said estimated vertical frequency, generates an amplitude peak in the absolute value of the resulting spectrum, named overall folded spectrum, wherein the spectra are associated with said virtual antennas of said sub-set of HULAs; and when the checking is positive execution of the following steps:
- said (Step 10.1.7) refinement of said range and complex amplitude of said most dominant point target;
- said (Step 10.2 [STDAEC-S2]) cancellation of said most dominant point target,
- said (Step 10.3 [STDAEC-S3]) calculation of a residual energy in the considered frequency bin and its comparison with a predetermined threshold ($T_{STDAEC}$), and checking whether said residual energy exceeds said predetermined threshold and, if so, return to said computation of the spectrum (Step 10.1.1), otherwise go to computation of the spatial coordinates (Step 11),

otherwise, in negative case of said checking (Step 10.1.6) execution of the following steps:

- said (Step 10.4) updating of said acquired list of said frequency bins and return to Step 10 for a further frequency bin or exit when all frequency bins are examined,

wherein said sequential execution (Step 10) ends when all the frequency bins have been analyzed, then

- said (Step 11) computation of the spatial coordinates of all the point targets belonging to all the frequency bins on the basis of said spatial frequencies and said complex amplitude and generation of an overall image of the propagation scenario.

8. [RPE] Method for detection of targets through a MIMO SFCW radar equipped with a plurality of transmitting (TX) and receiving (RX) antennas, wherein each couple of said TX and RX antennas is replaced with the equivalent virtual antenna; said MIMO SFCW radar having a receive side arranged to generate complex down-converted signals in response to a propagation scenario including a plurality of point targets; said method includes:

- (Step 1: IFFT processing) estimation of the impulse response ($\overline{\mathbf{X}}_0^{(v)}$) characterizing the communication channel associated with the said equivalent virtual antenna and its first $N_{FFT}$ - 1 derivatives ($\{\overline{\mathbf{X}}_k^{(v)}$; $k = 1, \ldots, N_{FFT} - 1\}$) with $N_{FFT}$ = 4, for each of said virtual antennas through IFFT calculation, with an oversampling factor ($M$),
- (Step 2: RVA selection) acquisition of a sub-set of a number ($N_A$) of virtual antennas impulse responses and of the corresponding derivatives,
Recursive execution of
- (Step 3: STDREC-S1) calculation of an estimate of the parameters of the most dominant point target, including phase ($\psi$), amplitude ($a$) and delay ($\tau$) for each of said virtual antennas of said sub-set on the basis of said impulse response, and its derivatives, through $N_{FFT}$ - 1 IFFTs for each of said virtual antennas of said sub-set,
- (Step 4: STDREC-S2) cancellation of said most dominant point target and computation of a residual impulse response and its first $N_{FFT}$ - 1 derivatives,
- (Step 5: STDREC-S3) computation of an energy of said residual impulse response and return to (Step 3) until said energy is over a predetermined threshold ($T_{STDREC}$), otherwise
- (Step 6) computation of an average energy and fusion of ranges information of said point targets detected by said number of virtual antennas to list said point targets according to said average energy in a decreasing order.

9. [CSDE] Method according to claim 8, wherein said (step 3) calculation includes:

- (Step 3.5.0) representation of a target normalized delay $T \triangleq \tau \Delta f$, where $\Delta f$ is the frequency step size of the employed radar, as sum of a main portion ($\alpha F_{IDFT}$) and a residual portion ($\delta F_{IDFT}$), where $F_{IDFT} \triangleq 1/N_0$, where $N_0$ is the IFFT order, wherein said main portion is determined by searching the index ($\hat{\alpha}$) of the vector element $\overline{X}_{0,\hat{\alpha}}^{(v)}$ corresponding to the maximum absolute value of the same vector $\overline{\mathbf{X}}_0^{(v)}$ and said residual portion is found through an iterative procedure together with the corresponding target complex amplitude $A \triangleq a \exp(-j\psi)$, where $a$ is said target amplitude and $\psi$ is said target phase.

10. [STDREC-S2: cancellation] Method according to claim 8, wherein said (Step 4) cancellation includes the computation and subtraction of the contribution given by said dominant target to said impulse response ($\overline{\mathbf{X}}_0^{(v)}$) and to the corresponding derivatives to compute a residual of the impulse response and of the corresponding derivatives.

11. Method according to claim 8, wherein said (Step 6) fusion includes:

- (Step 6.1) fusion of the information provided by a number ($N_A$) of sub-sets collecting all the discretized ranges, named delay bins, of said plurality of targets detected on each virtual antenna, to generate the overall set made of said delay bins that appear at least once in said sub-sets.

12. [SPE-2D] Method according to any one of the previous claims 8 - 11:

- (Step 7) acquisition of said impulse response ($\overline{\mathbf{X}}_0^{(v)}$) characterizing the communication channel associated with the said equivalent virtual antenna and its first $N_{FFT}$ - 1 derivatives ($\{\overline{\mathbf{X}}_k^{(v)} ; \; k = 1, \ldots, N_{FFT} - 1\}$) with $N_{FFT}$ = 4, for each of said virtual antennas,
- (Step 8) acquisition of a list of a predetermined number of discretized ranges, named delay bins, of said detected point targets,
- (Step 9) selection of a reference antenna, a reference horizontal uniform linear array, named Reference HULA,
- (Step 10 [STDAEC]) sequential execution for each of said delay bins; said execution includes:

  - (Step 10.1 [STDAEC-S1]) estimation of the horizontal spatial delay and complex amplitude of the most dominant point target said estimation includes:

    - (Step 10.1.4 [STDAE-S4]) computation of the spectrum ($\overline{\mathbf{s}}_{HULA,0}$) and its first three derivatives ($\{\overline{\mathbf{s}}_{HULA,k}$; $k$ = 1,2,3\}$) of the sequence collecting the samples of said impulse response ($\overline{\mathbf{X}}_0$) referred to said Reference HULA in the considered delay bin,; said computations are carried out through IFFT calculation with an oversampling factor ($\overline{M}$),
    - (Step 10.1.5 [STDAE-S4]) estimation of said horizontal spatial delay,
    - (Step 10.1.6 [STDAE-S5]) checking whether combination of the impulse responses associated with said virtual antennas of said Reference HULA, after compensating for their phase differences on the basis of said estimated horizontal delay, generates an amplitude peak in the absolute value of the resulting impulse response, named overall folded impulse response; and when the checking is positive execution of the following steps:
    - (Step 10.1.7) refinement of said range and complex amplitude of said most dominant point target;
    - (Step 10.2 [STDAEC-S2]) cancellation of said most dominant point target,
    - (Step 10.3 [STDAEC-S3]) calculation of a residual energy in the considered delay bin and its comparison with a predetermined threshold ($T_{STDAEC}$), and checking whether said residual energy exceeds said predetermined threshold and, if so, return to computation of the spectrum (Step 10.1.4), otherwise go to computation of the spatial coordinates (Step 11)

otherwise, in negative case of said checking (Step 10.1.6) execution of the following steps:

- (Step 10.4) updating of said acquired list of said delay bins and return to Step 10 for a further delay bin or exit when all delay bins are examined,

wherein said execution (Step 10) ends when all the delay bins have been analyzed, then

- (Step 11) computation of the spatial coordinates of all the point targets belonging to all the delay bins on the basis of said spatial delays and said complex amplitude and generation of an overall image of the propagation scenario.

**13.** [SPE-3D] Method according to claim 12, wherein said virtual antennas form a virtual array composed by one or multiple horizontal uniform linear arrays (HULAs) and one or multiple vertical uniform linear arrays (VULAs); the method including the following steps:

- said (Step 7) acquisition of said impulse response ( $\overline{\mathbf{X}}_0^{(v)}$ ) characterizing the communication channel associated with the said equivalent virtual antenna and its first $N_{FFT}$ - 1 derivatives (

$$\{\overline{\mathbf{X}}_k^{(v)}; \ k = 1, \ldots, N_{FFT} - 1\}$$ ) with $N_{FFT}$ = 4, for each of said virtual antennas,

- said (Step 8) acquisition of a list of a predetermined number of discretized ranges, named delay bins, of said detected point targets,

- said (Step 9) selection of a reference antenna, a reference vertical uniform linear array, named Reference VULA, a reference horizontal uniform linear array, named Reference HULA, and at least a sub-set with a number of said horizontal uniform linear arrays (HULAs) different from the Reference HULA,

- said (Step 10 [STDAEC]) sequential execution for each of said delay bins; said execution includes:

- said (Step 10.1 [STDAEC-S1]) estimation of the horizontal spatial delay and complex amplitude of the most dominant point target and estimation of the vertical spatial delay; said estimation includes:

- (Step 10.1.1 [STDAE-S1]) computation of the spectrum ($\overline{\mathbf{s}}_{VULA,0}$) of the sequence collecting the samples of said impulse response ($\overline{\mathbf{X}}_0$) referred to said Reference VULA in the considered delay bin and its first 3 derivatives ($\{\overline{\mathbf{s}}_{VULA,k}; \ k = 1, 2, 3\}$) through IFFT calculation with an oversampling factor ($\overline{M}$),

- (Step 10.1.2 [STDAE-S2]) estimation of said vertical spatial delay,

- (Step 10.1.3 [STDAE-S3]) combination of the spectra associated with the Reference HULA and said sub-set of HULAs, after compensating for the phase differences between the Reference HULA and said sub-set of HULAs employing said estimate of the vertical spatial delay ($T_V$); said superposition, named vertical folding, generates a vertically folded impulse response,

- said (Step 10.1.4 [STDAE-S4]) computation of the spectrum ($\overline{\mathbf{s}}_{HULA,0}$) and its first three derivatives ($\{\overline{\mathbf{s}}_{HULA,k}; \ k = \mathbf{1,2,3}\}$) of the sequence collecting the samples of said impulse response ($\overline{\mathbf{X}}_0$) referred to said Reference HULA in the considered delay bin, and said spectrum is referred to said vertically folded impulse response; said computations are carried out through IFFT calculation with an oversampling factor ($\overline{M}$),

- said (Step 10.1.5 [STDAE-S4]) estimation of said horizontal spatial delay,

- (Step 10.1.6 [STDAE-S5]) checking whether combination of the impulse responses associated with said virtual antennas of said Reference HULA, after compensating for their phase differences on the basis of said estimated horizontal delay and of said estimated vertical delay, generates an amplitude peak in the absolute value of the resulting impulse response, named overall folded impulse response, wherein the impulse responses are associated with said virtual antennas of said sub-set of HULAs; and when the checking is positive execution of the following steps:

- said (Step 10.1.7) refinement of said range and complex amplitude of said most dominant point target;

- said (Step 10.2 [STDAEC-S2]) cancellation of said most dominant point target,

- said (Step 10.3 [STDAEC-S3]) calculation of a residual energy in the considered delay bin and its comparison with a predetermined threshold ($T_{STDAEC}$), and checking whether said residual energy exceeds said predetermined threshold and, if so, return to said computation of the spectrum (Step 10.1.1) or to computation of the spectrum (Step 10.1.4), otherwise go to computation of the spatial coordinates (Step 11)

otherwise, in negative case of said checking (Step 10.1.6) execution of the following steps:

- said (Step 10.4) updating of said acquired list of said delay bins and return to Step 10 for a further delay bin or exit when all delay bins are examined,

wherein said execution (Step 10) ends when all the delay bins have been analyzed, then

- said (Step 11) computation of the spatial coordinates of all the point targets belonging to all the delay bins on the basis of said spatial delays and said complex amplitude and generation of an overall image of the propagation scenario.

14. [DEEPLEARNING] Method according to claim 6 - 7 or 12 - 13, further comprising the compensation for the amplitude distortion due to the non-uniform response of the antenna array for each of said virtual antennas on the basis of said refined complex amplitude (Step 10.1.7), and said estimated spatial frequencies, wherein said compensation includes:

- (Step 10.1.8) exploitation a deep neural network designed to solve a regression problem through a supervised learning approach wherein network training is based on a dataset collecting the amplitude of a number of said point targets; the compensation of the complex amplitude is carried out by multiplying said refined estimate of the complex amplitude (Step 10.1.7) by said estimated amplitude distortion for each of said virtual antennas,

15. A MIMO FMCW radar system including:

- a MIMO FMCW radar equipped with a plurality of transmitting (TX) and receiving (RX) antennas, arranged to generate real or complex signals in response to a propagation scenario including a plurality of point targets, and
- computing means arranged to receive signals generated by said transmitting and receiving antennas and configured to replace each couple of said transmitting and receiving antennas with an equivalent model defining virtual antennas and to perform all the steps of any one of the previous claims from 1 to 7 and 14.

16. A MIMO SFCW radar system including:

- a MIMO SFCW radar equipped with a plurality of transmitting (TX) and receiving (RX) antennas, arranged to generate complex signals in response to a propagation scenario including a plurality of point targets, and
- computing means arranged to receive signals generated by said transmitting and receiving antennas and configured to replace each couple of said transmitting and receiving antennas with an equivalent model defining virtual antennas and to perform all the steps of any one of the previous claims from 8 to 14.

**Patentansprüche**

1. Verfahren zur Erkennung von Zielen mittels eines MIMO-FMCW-Radars, das mit einer Vielzahl von Sendeantennen (TX) und Empfangsantennen (RX) ausgestattet ist, wobei jedes Paar aus TX- und RX-Antennen durch die entsprechende virtuelle Antenne ersetzt wird; wobei die Empfangsseite des MIMO-FMCW-Radars dazu eingerichtet ist, reelle oder komplexe herunterkonvertierte Signale als Reaktion auf ein Ausbreitungsszenario mit einer Vielzahl von Punktzielen zu erzeugen; wobei das Verfahren Folgendes umfasst:

(Schritt 1: FFT-Verarbeitung) Schätzung des Spektrums ($\overline{X}_0^{(v)}$) des Signals und seiner ersten $N_{FFT}$ - 1 Ableitungen ($\{\overline{X}_k^{(v)}; k = 1,..., N_{FFT} - 1\}$) mit $N_{FFT}$ = 3, wenn das Signal reell ist, und NFFT = 4, wenn das Signal komplex ist, für jede der virtuellen Antennen durch FFT-Berechnung mit einem Oversampling-Faktor (M),
(Schritt 2: RVA-Auswahl) Erfassung einer Teilmenge einer Anzahl ($N_A$) von virtuellen Antennenspektren und der zugehörigen Ableitungen,
rekursive Ausführung von:

(Schritt 3: STDREC-S1) Berechnung einer Schätzung der Parameter des dominantesten Punktziels, einschließlich Phase ($\varphi$), Amplitude ($a$) und Frequenz ($f$) für jede virtuelle Antenne der genannten Teilmenge auf Basis des Spektrums und dessen Ableitungen mittels $N_{FFT}$ - 1 FFTs für jede dieser virtuellen Antennen,
(Schritt 4: STDREC-S2) Unterdrückung des dominantesten Punktziels und Berechnung eines Restspektrums und seiner ersten $N_{FFT}$ - 1 Ableitungen,
(Schritt 5: STDREC-S3) Berechnung der Energie des Restspektrums und Rückkehr zu Schritt 3, bis die Energie einen vorgegebenen Schwellwert ($T_{stdrec}$) übersteigt, andernfalls:
(Schritt 6) Berechnung einer durchschnittlichen Energie und Fusion der Entfernungsinformationen der durch die virtuellen Antennen erkannten Punktziele, um diese gemäß der durchschnittlichen Energie in absteigender Reihenfolge aufzulisten.

2. Verfahren nach Anspruch 1, wobei die Empfangsseite des Radars ein herunterkonvertiertes reelles Signal erzeugt, wobei die Berechnung in Schritt 3 Folgendes umfasst:

(Schritt 3.1.0) Darstellung einer normierten Frequenz des Ziels $F \triangleq f / f_s$, wobei $f_s$ die Abtastfrequenz ist, als

Summe eines Hauptanteils ($\alpha F_{DFT}$) und eines Restanteils ($\delta F_{DFT}$), wobei $F_{DFT} \triangleq 1/N_0$ ist, wobei $N_0$ die FFT-Ordnung ist, wobei der Hauptanteil durch Suchen des Indexes ($\tilde{\alpha}$) des Vektorelements $\overline{X}_{0,\tilde{\alpha}}^{(v)}$ bestimmt wird, das dem Betrag nach größten Wert in einer ersten Hälfte plus eins der Elemente desselben Vektors $\overline{X}_0^{(v)}$ entspricht, und wobei die Restfrequenz durch ein iteratives Verfahren zusammen mit der entsprechenden komplexen Zielamplitude $C \triangleq a \cdot exp(j\psi)/2$ gefunden wird, wobei a die Zielamplitude und $\psi$ die Zielphase ist.

3. Verfahren nach Anspruch 1, wobei die Empfangsseite des Radars ein herunterkonvertiertes komplexes Signal erzeugt, wobei die Berechnung in Schritt 3 Folgendes umfasst:

(Schritt 3.3.0) Darstellung einer normierten Frequenz des Ziels $F \triangleq f / f_s$, wobei $f_s$ die Abtastfrequenz ist, als

Summe eines Hauptanteils ($\alpha F_{DFT}$) und eines Restanteils ($\delta F_{DFT}$), wobei $F_{DFT} \triangleq 1/N_0$ ist, wobei $N_0$ die FFT-Ordnung ist, wobei der Hauptanteil durch Suchen des Indexes ($\tilde{\alpha}$) des Vektorelements $\overline{X}_{0,\tilde{\alpha}}^{(v)}$ bestimmt wird, das dem Betrag nach größten Wert desselben Vektors $\overline{X}_0^{(v)}$ entspricht, und wobei die Restfrequenz durch ein iteratives Verfahren zusammen mit der entsprechenden komplexen Zielamplitude $A \triangleq a \cdot exp(j\psi)/2$ gefunden wird, wobei a die Zielamplitude und $\psi$ die Zielphase ist.

4. Verfahren nach Anspruch 1, wobei die Unterdrückung (Schritt 4) die Berechnung und Subtraktion des Beitrags des dominantesten Punktziels zum Spektrum ($\overline{X}_0^{(v)}$) und zu den entsprechenden Ableitungen umfasst, um einen Rest des Spektrums und der entsprechenden Ableitungen zu berechnen.

5. Verfahren nach Anspruch 1, wobei die Fusion (Schritt 6) Folgendes umfasst:
(Schritt 6.1) Fusion der Informationen, bereitgestellt durch eine Anzahl ($N_A$) von Teilmengen, die alle diskretisierten Entfernungen, sogenannte Frequenz-Bins, der Vielzahl von auf jeder virtuellen Antenne erkannten Ziele sammeln, zur Erzeugung der Gesamtmenge derjenigen Frequenz-Bins, die in mindestens einer dieser Teilmengen erscheinen.

6. Verfahren nach einem der vorhergehenden Ansprüche, das des Weiteren folgende Schritte umfasst:

(Schritt 7) Erfassung des Spektrums ($\overline{X}_0^{(v)}$) des Signals und seiner ersten $N_{FFT}$ - 1 Ableitungen ($\{\overline{X}_k^{(v)}; k = 1,..., N_{FFT} - 1\}$) mit $N_{FFT} = 3$, wenn das Signal reell ist, und $N_{FFT} = 4$, wenn das Signal komplex ist, für jede der virtuellen Antennen,
(Schritt 8) Erfassung einer Liste einer vorbestimmten Anzahl diskretisierter Entfernungen, sogenannter Frequenz-Bins, der erkannten Punktziele,
(Schritt 9) Auswahl einer Referenzantenne, eines Referenz-Horizontal-Uniform-Linear-Arrays, genannt Referenz-HULA,
(Schritt 10 [STDAEC]) sequentielle Ausführung für jeden dieser Frequenz-Bins; wobei diese Ausführung Folgendes umfasst:
(Schritt 10.1 [STDAEC-S1]) Schätzung der horizontalen räumlichen Frequenz und der komplexen Amplitude des dominantesten Punktziels; wobei diese Schätzung Folgendes umfasst:

(Schritt 10.1.4 [STDAE-S4]) Berechnung des Spektrums ($\overline{s}_{HULA,0}$) und seiner ersten drei Ableitungen ($\{\overline{s}_{HULA,k}; k = 1,2,3\}$) der Sequenz, die die Proben des Spektrums ($\overline{X}_0$) enthält, bezogen auf die Referenz-HULA im betrachteten Frequenz-Bin; wobei diese Berechnungen durch FFT mit einem zweiten Oversampling-Faktor ($\overline{M}$) durchgeführt werden,

**EP 4 334 740 B1**

(Schritt 10.1.5 [STDAE-S4]) Schätzung der genannten horizontalen räumlichen Frequenz,
(Schritt 10.1.6 [STDAE-S5]) Überprüfung, ob die Kombination der Spektren, die mit der Referenz-HULA verbunden sind und nach Kompensation ihrer Phasendifferenzen auf Grundlage der geschätzten horizontalen Frequenz, einen Amplitudenpeak im Betrag des resultierenden Spektrums erzeugt, genannt Gesamt-Faltungsspektrum; und wenn die Überprüfung positiv ist, Ausführung folgender Schritte:

(Schritt 10.1.7) Verfeinerung der Entfernung und komplexen Amplitude des dominantesten Punktziels;
(Schritt 10.2 [STDAEC-S2]) Unterdrückung des dominantesten Punktziels,
(Schritt 10.3 [STDAEC-S3]) Berechnung einer Restenergie im betrachteten Frequenz-Bin und Vergleich mit einem vorgegebenen Schwellwert ($T_{stdaec}$), und Überprüfung, ob die Restenergie diesen Schwellwert übersteigt, und falls ja, Rückkehr zur Berechnung des Spektrums (Schritt 10.1.4) und Übergang zur Berechnung der räumlichen Koordinaten (Schritt 11),
andernfalls, im negativen Fall der Überprüfung nach Schritt 10.1.6, Ausführung folgender Schritte:
(Schritt 10.4) Aktualisierung der erfassten Liste der Frequenz-Bins und Rückkehr zu Schritt 10 für einen weiteren Frequenz-Bin oder Beendigung, wenn alle Frequenz-Bins untersucht wurden, wobei die sequentielle Ausführung (Schritt 10) endet, wenn alle Frequenz-Bins analysiert wurden, anschließend:

(Schritt 11) Berechnung der räumlichen Koordinaten aller Punktziele, die zu allen Frequenz-Bins gehören, auf Basis der genannten räumlichen Frequenz und komplexen Amplitude sowie Erzeugung eines Gesamtbildes des Ausbreitungsszenarios.

7. Verfahren nach Anspruch 6, wobei die virtuellen Antennen ein virtuelles Array bilden, das aus einem oder mehreren horizontalen uniformen linearen Arrays (HULAs) und einem oder mehreren vertikalen uniformen linearen Arrays (VULAs) besteht; wobei das Verfahren folgende Schritte umfasst:

(Schritt 7) Erfassung des Spektrums ($\overline{X}_0^{(v)}$) des Signals und seiner ersten $N_{FFT}$ - 1 Ableitungen ($\{\overline{X}_k^{(v)}; k = 1,..., N_{FFT} - 1\}$) mit $N_{FFT} = 3$, wenn das Signal reell ist, und $N_{FFT} = 4$, wenn das Signal komplex ist, für jede der virtuellen Antennen,
(Schritt 8) Erfassung einer Liste einer vorbestimmten Anzahl diskretisierter Entfernungen, sogenannte Frequenz-Bins, der erkannten Punktziele,
(Schritt 9) Auswahl einer Referenzantenne, zusätzlich eines Referenz-Vertikal-Uniform-Linear-Arrays, genannt Referenz-VULA, eines Referenz-Horizontal-Uniform-Linear-Arrays, genannt Referenz-HULA, sowie mindestens einer Teilmenge von HULAs, die sich von dem Referenz-HULA unterscheidet,
(Schritt 10 [STDAEC]) sequentielle Ausführung für jeden der genannten Frequenz-Bins; wobei diese Ausführung Folgendes umfasst:
(Schritt 10.1 [STDAEC-S1]) Schätzung der horizontalen räumlichen Frequenz und der komplexen Amplitude des dominantesten Punktziels sowie zusätzlich der vertikalen räumlichen Frequenz; wobei diese Schätzung Folgendes umfasst:

(Schritt 10.1.1 [STDAE-S1]) Berechnung des Spektrums ($\overline{s}_{VULA,0}$) der Sequenz, die die Proben des Spektrums ($\overline{X}_0$) enthält, bezogen auf das Referenz-VULA im betrachteten Frequenz-Bin, und dessen erste drei Ableitungen ($\{\overline{s}_{VULA,k} ; k = 1,2,3\}$) mittels FFT mit einem ersten Oversampling-Faktor ($\overline{M}$),
(Schritt 10.1.2 [STDAE-S2]) Schätzung der vertikalen räumlichen Frequenz,
(Schritt 10.1.3 [STDAE-S3]) Kombination der Spektren, die mit dem Referenz-HULA und der Teilmenge der HULAs verbunden sind, nach Kompensation der Phasendifferenzen zwischen Referenz-HULA und Teilmenge unter Verwendung der geschätzten vertikalen räumlichen Frequenz ($F_v$); wobei diese Überlagerung, genannt vertikale Faltung, ein vertikal gefaltetes Spektrum erzeugt,
(Schritt 10.1.4 [STDAE-S4]) Berechnung des Spektrums ($\overline{s}_{HULA,0}$) und seiner ersten drei Ableitungen ($\{\overline{s}_{HULA,k} ; k = 1,2,3\}$) der Sequenz, die die Proben des Spektrums ($\overline{X}_0$) enthält, bezogen auf das Referenz-HULA im betrachteten Frequenz-Bin; wobei dieses Spektrum auf das vertikal gefaltete Spektrum bezogen ist und die Berechnungen mittels FFT mit einem zweiten Oversampling-Faktor ($\overline{M}$) durchgeführt werden,
(Schritt 10.1.5 [STDAE-S4]) Schätzung der horizontalen räumlichen Frequenz,
(Schritt 10.1.6 [STDAE-S5]) Überprüfung, ob die Kombination der Spektren, die mit den virtuellen Antennen der Teilmenge der HULAs verbunden sind und nach Phasenkorrektur gemäß der geschätzten horizontalen und vertikalen Frequenz einen Amplitudenpeak im Betrag des resultierenden Spektrums erzeugt, genannt Gesamt-Faltungsspektrum; und wenn die Überprüfung positiv ist, Ausführung folgender Schritte:

(Schritt 10.1.7) Verfeinerung der Entfernung und komplexen Amplitude des dominantesten Punktziels;

(Schritt 10.2 [STDAEC-S2]) Unterdrückung des dominantesten Punktziels,

(Schritt 10.3 [STDAEC-S3]) Berechnung einer Restenergie im betrachteten Frequenz-Bin und Vergleich mit einem vorgegebenen Schwellwert ($T_{stdaec}$), und Überprüfung, ob die Restenergie diesen Schwellwert übersteigt, und falls ja, Rückkehr zur Berechnung des Spektrums (Schritt 10.1.1), andernfalls Übergang zur Berechnung der räumlichen Koordinaten (Schritt 11),

andernfalls, im negativen Fall der Überprüfung nach Schritt 10.1.6, Ausführung folgender Schritte:

(Schritt 10.4) Aktualisierung der erfassten Liste der Frequenz-Bins und Rückkehr zu Schritt 10 für einen weiteren Frequenz-Bin oder Beendigung, wenn alle Frequenz-Bins untersucht wurden, wobei die sequentielle Ausführung in Schritt 10 endet, wenn alle Frequenz-Bins analysiert wurden, anschließend:

(Schritt 11) Berechnung der räumlichen Koordinaten aller Punktziele, die zu allen Frequenz-Bins gehören, auf Basis der räumlichen Frequenzen und der komplexen Amplitude sowie Erzeugung eines Gesamtbildes des Ausbreitungsszenarios.

8. Verfahren zur Erkennung von Zielen mittels eines MIMO-SFCW-Radars, das mit einer Vielzahl von Sendeantennen (TX) und Empfangsantennen (RX) ausgestattet ist, wobei jedes Paar aus TX- und RX-Antennen durch die entsprechende virtuelle Antenne ersetzt wird; wobei die Empfangsseite des MIMO-SFCW-Radars dazu eingerichtet ist, komplexe herunterkonvertierte Signale als Reaktion auf ein Ausbreitungsszenario mit einer Vielzahl von Punktzielen zu erzeugen; wobei das Verfahren folgende Schritte umfasst:

(Schritt 1: IFFT-Verarbeitung) Schätzung der Impulsantwort ($\overline{X}_0^{(v)}$), die den Übertragungskanal der entsprechenden virtuellen Antenne charakterisiert, und deren erster $N_{FFT}$ - 1 Ableitungen ($\{\overline{X}_k^{(v)}; k = 1,..., N_{FFT} - 1\}$) mit $N_{FFT}$ = 4, für jede der virtuellen Antennen mittels IFFT-Berechnung mit einem Oversampling-Faktor ($M$),

(Schritt 2: RVA-Auswahl) Erfassung einer Teilmenge einer Anzahl $N_A$ von Impulsantworten virtueller Antennen und der zugehörigen Ableitungen,

rekursive Ausführung von:

(Schritt 3: STDREC-S1) Berechnung einer Schätzung der Parameter des dominantesten Punktziels, einschließlich Phase ($\psi$), Amplitude ($\alpha$) und Verzögerung ($\tau$) für jede virtuelle Antenne der genannten Teilmenge auf Basis der Impulsantwort und deren Ableitungen durch $N_{FFT}$ - 1 IFFTs für jede dieser virtuellen Antennen,

(Schritt 4: STDREC-S2) Unterdrückung des dominantesten Punktziels und Berechnung einer Restimpulsantwort und deren erster $N_{FFT}$ - 1 Ableitungen,

(Schritt 5: STDREC-S3) Berechnung der Energie der Restimpulsantwort und Rückkehr zu Schritt 3, solange die Energie einen vorgegebenen Schwellwert ($T_{stdrec}$) übersteigt, andernfalls:

(Schritt 6) Berechnung einer durchschnittlichen Energie und Fusion der Entfernungsinformationen der durch die virtuellen Antennen erkannten Punktziele, um diese gemäß der durchschnittlichen Energie in absteigender Reihenfolge aufzulisten.

9. Verfahren nach Anspruch 8, wobei die Berechnung (Schritt 3) Folgendes umfasst:

(Schritt 3.5.0) Darstellung einer normierten Verzögerung eines Ziels $T \triangleq \tau / \Delta f$, wobei $\Delta f$ die Frequenzschrittweite des verwendeten Radars ist, als Summe eines Hauptanteils ($\alpha F_{IDFT}$) und eines Restanteils ($\delta F_{IDFT}$), wobei $F_{IDFT} = 1/N_0$ ist, wobei $N_0$ die IFFT-Ordnung ist; wobei der Hauptanteil durch Suchen des Indexes ($\tilde{\alpha}$) des Vektorelements $\overline{X}_{0,\tilde{\alpha}}^{(v)}$ bestimmt wird, das dem Betrag nach größten Wert desselben Vektors $\overline{X}_0^{(v)}$ entspricht, und wobei der Restanteil durch ein iteratives Verfahren zusammen mit der entsprechenden komplexen Zielamplitude $A \triangleq a \, exp(-j\psi)$ gefunden wird, wobei a die Zielamplitude und $\psi$ die Zielphase ist.

10. Verfahren nach Anspruch 8, wobei die Unterdrückung (Schritt 4) die Berechnung und Subtraktion des Beitrags des dominantesten Punktziels zur Impulsantwort ($\overline{X}_0^{(v)}$) und zu den entsprechenden Ableitungen umfasst, um einen Rest der Impulsantwort und der entsprechenden Ableitungen zu berechnen.

11. Verfahren nach Anspruch 8, wobei die Fusion in Schritt 6 Folgendes umfasst:

(Schritt 6.1) Fusion der Informationen, bereitgestellt durch eine Anzahl ($N_A$) von Teilmengen, die alle diskretisierten Entfernungen, sogenannte Verzögerungs-Bins, der Vielzahl von auf jeder virtuellen Antenne erkannten Ziele sammeln, zur Erzeugung der Gesamtmenge derjenigen Verzögerungs-Bins, die in mindestens einer dieser Teilmengen erscheinen.

**12.** Verfahren nach einem der vorhergehenden Ansprüche 8 bis 11, das des Weiteren folgende Schritte umfasst:

(Schritt 7) Erfassung der Impulsantwort ($\overline{X}_0^{(v)}$), die den Übertragungskanal der entsprechenden virtuellen Antenne charakterisiert, und deren ersten $N_{FFT}$ - 1 Ableitungen ($\{\overline{X}_k^{(v)}; k = 1,..., N_{FFT} - 1\}$) mit $N_{FFT}$ = 4, für jede der virtuellen Antennen,
(Schritt 8) Erfassung einer Liste einer vorbestimmten Anzahl diskretisierter Entfernungen, sogenannte Verzögerungs-Bins, der erkannten Punktziele,
(Schritt 9) Auswahl einer Referenzantenne, eines Referenz-Horizontal-Uniform-Linear-Arrays, genannt Referenz-HULA,
(Schritt 10 [STDAEC]) sequentielle Ausführung für jeden der genannten Verzögerungs-Bins; wobei diese Ausführung Folgendes umfasst:
(Schritt 10.1 [STDAEC-S1]) Schätzung der horizontalen räumlichen Verzögerung und der komplexen Amplitude des dominantesten Punktziels; wobei diese Schätzung Folgendes umfasst:

(Schritt 10.1.4 [STDAE-S4]) Berechnung des Spektrums Spektrums ($\overline{s}_{HULA,0}$) und seiner ersten drei Ableitungen ($\{\overline{s}_{HULA,k}; k = 1,2,3\}$) der Sequenz, die die Proben der Impulsantwort ($\overline{X}_0$) enthält, bezogen auf das Referenz-HULA im betrachteten Verzögerungs-Bin; wobei diese Berechnungen durch IFFT mit einem Oversampling-Faktor ($\overline{M}$) durchgeführt werden,
(Schritt 10.1.5 [STDAE-S4]) Schätzung der genannten horizontalen räumlichen Verzögerung,
(Schritt 10.1.6 [STDAE-S5]) Überprüfung, ob die Kombination der Impulsantworten, die mit den virtuellen Antennen des Referenz-HULA verbunden sind, nach Kompensation ihrer Phasendifferenzen auf Grundlage der geschätzten horizontalen Verzögerung, einen Amplitudenpeak im Betrag der resultierenden Impulsantwort erzeugt, genannt Gesamt-Faltungsimpulsantwort; und wenn die Überprüfung positiv ist, Ausführung folgender Schritte:

(Schritt 10.1.7) Verfeinerung der Entfernung und komplexen Amplitude des dominantesten Punktziels;
(Schritt 10.2 [STDAEC-S2]) Unterdrückung des dominantesten Punktziels,
(Schritt 10.3 [STDAEC-S3]) Berechnung einer Restenergie im betrachteten Verzögerungs-Bin und Vergleich mit einem vorgegebenen Schwellwert ($T_{stdaec}$), und Überprüfung, ob die Restenergie diesen Schwellwert übersteigt, und falls ja, Rückkehr zur Berechnung des Spektrums (Schritt 10.1.4), andernfalls Übergang zur Berechnung der räumlichen Koordinaten (Schritt 11),
andernfalls, im negativen Fall der Überprüfung nach Schritt 10.1.6, Ausführung folgender Schritte:

(Schritt 10.4) Aktualisierung der erfassten Liste der Verzögerungs-Bins und Rückkehr zu Schritt 10 für einen weiteren Verzögerungs-Bin oder Beendigung, wenn alle Verzögerungs-Bins untersucht wurden,
wobei die Ausführung in Schritt 10 endet, wenn alle Verzögerungs-Bins analysiert wurden, anschließend:
(Schritt 11) Berechnung der räumlichen Koordinaten aller Punktziele, die zu allen Verzögerungs-Bins gehören, auf Basis der räumlichen Verzögerungen und der komplexen Amplitude sowie Erzeugung eines Gesamtbildes des Ausbreitungsszenarios.

**13.** Verfahren nach Anspruch 12, wobei die virtuellen Antennen ein virtuelles Array bilden, das aus einem oder mehreren horizontalen uniformen linearen Arrays (HULAs) und einem oder mehreren vertikalen uniformen linearen Arrays (VULAs) besteht; wobei das Verfahren folgende Schritte umfasst:

(Schritt 7) Erfassung der Impulsantwort ($\overline{X}_0^{(v)}$), die den Übertragungskanal der entsprechenden virtuellen Antenne charakterisiert, und deren ersten $N_{FFT}$ - 1 Ableitungen ($\{\overline{X}_k^{(v)}; k = 1,..., N_{FFT} - 1\}$) mit $N_{FFT}$ = 4, für jede der virtuellen Antennen,
(Schritt 8) Erfassung einer Liste einer vorbestimmten Anzahl diskretisierter Entfernungen, sogenannte Verzögerungs-Bins, der erkannten Punktziele,
(Schritt 9) Auswahl einer Referenzantenne, eines Referenz-Vertikal-Uniform-Linear-Arrays, genannt Referenz-VULA, eines Referenz-Horizontal-Uniform-Linear-Arrays, genannt Referenz-HULA, sowie mindestens einer Teilmenge von HULAs, die sich von dem Referenz-HULA unterscheidet,
(Schritt 10 [STDAEC]) sequenzielle Ausführung für jeden der genannten Verzögerungs-Bins; wobei diese Ausführung Folgendes umfasst:

(Schritt 10.1 [STDAEC-S1]) Schätzung der horizontalen räumlichen Verzögerung und der komplexen Amplitude des dominantesten Punktziels sowie Schätzung der vertikalen räumlichen Verzögerung; wobei diese Schätzung Folgendes umfasst:

(Schritt 10.1.1 [STDAE-S1]) Berechnung des Spektrums ($\bar{s}_{VULA,0}$) der Sequenz, die die Proben der Impulsantwort ($\bar{X}_0$) enthält, bezogen auf das Referenz-VULA im betrachteten Verzögerungs-Bin, und deren erster drei Ableitungen ($\{\bar{s}_{VULA,k}$ ; $k = 1,2,3\}$) mittels IFFT mit einem Oversampling-Faktor ($\bar{M}$),

(Schritt 10.1.2 [STDAE-S2]) Schätzung der vertikalen räumlichen Verzögerung,

(Schritt 10.1.3 [STDAE-S3]) Kombination der Spektren, die mit dem Referenz-HULA und der Teilmenge der HULAS verbunden sind, nach Kompensation der Phasendifferenzen zwischen Referenz-HULA und der Teilmenge unter Verwendung der geschätzten vertikalen räumlichen Verzögerung ($T_v$); wobei diese Überlagerung, genannt vertikale Faltung, eine vertikal gefaltete Impulsantwort erzeugt,

(Schritt 10.1.4 [STDAE-S4]) Berechnung des Spektrums ($\bar{s}_{HULA,0}$) und seiner ersten drei Ableitungen ($\{\bar{s}_{HULA,k}$ ; $k = 1,2,3\}$) der Sequenz, die die Proben der Impulsantwort ($\bar{X}_0$) enthält, bezogen auf das Referenz-HULA im betrachteten Verzögerungs-Bin; wobei dieses Spektrum auf die vertikal gefaltete Impulsantwort bezogen ist und die Berechnungen durch IFFT mit einem Oversampling-Faktor ($\bar{M}$) erfolgen,

(Schritt 10.1.5 [STDAE-S4]) Schätzung der horizontalen räumlichen Verzögerung,

(Schritt 10.1.6 [STDAE-S5]) Überprüfung, ob die Kombination der Impulsantworten, die mit den virtuellen Antennen der Referenz-HULA verbunden sind, nach Phasenkorrektur gemäß der geschätzten horizontalen und vertikalen Verzögerung, einen Amplitudenpeak im Betrag der resultierenden Impulsantwort erzeugt, genannt Gesamt-Faltungsimpulsantwort; und wenn die Überprüfung positiv ist, Ausführung folgender Schritte:

(Schritt 10.1.7) Verfeinerung der Entfernung und komplexen Amplitude des dominantesten Punktziels;

(Schritt 10.2 [STDAEC-S2]) Unterdrückung des dominantesten Punktziels,

(Schritt 10.3 [STDAEC-S3]) Berechnung einer Restenergie im betrachteten Verzögerungs-Bin und Vergleich mit einem vorgegebenen Schwellwert ($T_{stdaec}$), und Überprüfung, ob die Restenergie diesen Schwellwert übersteigt, und falls ja, Rückkehr zur Berechnung des Spektrums (Schritt 10.1.1 oder 10.1.4), andernfalls Übergang zur Berechnung der räumlichen Koordinaten (Schritt 11),

andernfalls, im negativen Fall der Überprüfung nach Schritt 10.1.6, Ausführung folgender Schritte:

(Schritt 10.4) Aktualisierung der erfassten Liste der Verzögerungs-Bins und Rückkehr zu Schritt 10 für einen weiteren Verzögerungs-Bin oder Beendigung, wenn alle Verzögerungs-Bins untersucht wurden,

wobei die Ausführung in Schritt 10 endet, wenn alle Verzögerungs-Bins analysiert wurden, anschließend:

(Schritt 11) Berechnung der räumlichen Koordinaten aller Punktziele, die zu allen Verzögerungs-Bins gehören, auf Basis der räumlichen Verzögerungen und der komplexen Amplitude sowie Erzeugung eines Gesamtbildes des Ausbreitungsszenarios.

**14.** Verfahren nach Anspruch 6 bis 7 oder 12 bis 13, das des Weiteren die Kompensation der Amplitudenverzerrung infolge der nicht-uniformen Antwort des Antennenarrays für jede der virtuellen Antennen auf Basis der verfeinerten komplexen Amplitude (Schritt 10.1.7) und der geschätzten räumlichen Frequenzen umfasst, wobei diese Kompensation Folgendes umfasst:

(Schritt 10.1.8) Nutzung eines tiefen neuronalen Netzwerks, das zur Lösung eines Regressionsproblems mittels überwachtem Lernverfahren entworfen wurde, wobei das Training des Netzwerks auf einem Datensatz basiert, der die Amplituden einer Anzahl von Punktzielen umfasst,

wobei die Kompensation der komplexen Amplitude durch Multiplikation der verfeinerten Schätzung der komplexen Amplitude (Schritt 10.1.7) mit der geschätzten Amplitudenverzerrung für jede der virtuellen Antennen erfolgt.

**15.** MIMO-FMCW-Radarsystem mit:

einem MIMO-FMCW-Radar, ausgestattet mit einer Vielzahl von Sendeantennen (TX) und Empfangsantennen (RX), die dazu eingerichtet sind, reelle oder komplexe Signale als Reaktion auf ein Ausbreitungsszenario mit einer Vielzahl von Punktzielen zu erzeugen, und

einer Recheneinheit, die dazu eingerichtet ist, die von den Sende- und Empfangsantennen erzeugten Signale zu empfangen und jeweils ein Paar aus Sende- und Empfangsantenne durch ein äquivalentes Modell zu ersetzen, das virtuelle Antennen definiert, und alle Schritte eines der vorhergehenden Ansprüche 1 bis 7 und 14 auszuführen.

**16.** MIMO-SFCW-Radarsystem mit:

einem MIMO-SFCW-Radar, ausgestattet mit einer Vielzahl von Sendeantennen (TX) und Empfangsantennen (RX), die dazu eingerichtet sind, komplexe Signale als Reaktion auf ein Ausbreitungsszenario mit einer Vielzahl von Punktzielen zu erzeugen, und
einer Recheneinheit, die dazu eingerichtet ist, die von den Sende- und Empfangsantennen erzeugten Signale zu empfangen und jeweils ein Paar aus Sende- und Empfangsantenne durch ein äquivalentes Modell zu ersetzen, das virtuelle Antennen definiert, und alle Schritte eines der vorhergehenden Ansprüche 8 bis 14 auszuführen.

## Revendications

**1.** [RPE] Procédé de détection de cibles par un radar MIMO FMCW équipé d'une pluralité d'antennes d'émission (TX) et de réception (RX), dans lequel chaque couple desdites antennes TX et RX est remplacé par une antenne virtuelle équivalente ; ledit radar MIMO FMCW possédant un côté réception agencé pour générer des signaux réels ou complexes convertis à la baisse en réponse à un scénario de propagation incluant une pluralité de cibles ponctuelles ; ledit procédé comprend :

- (Étape 1 : FFT processing) l'estimation du spectre ($\overline{\mathbf{X}}_0^{(v)}$) dudit signal et de ses premières dérivées $N_{FFT}$ - 1 ($\{\overline{\mathbf{X}}_k^{(v)}; \ k = 1, \ldots, N_{FFT} - 1\}$) où $N_{FFT}$ = 3 lorsque ledit signal est réel et $N_{FFT}$ = 4 lorsque ledit signal est complexe, pour chacune desdites antennes virtuelles par le biais d'un calcul FFT avec un facteur de suréchantillonnage ($M$),
- (Étape 2 : Sélection RVA) l'acquisition d'un sous-ensemble d'un certain nombre ($N_A$) de spectres d'antennes virtuelles et des dérivées correspondantes,
exécution récursive
- (Étape 3 : STDREC-S1) du calcul d'une estimation des paramètres de la cible ponctuelle la plus dominante, y compris la phase ($\psi$), l'amplitude ($a$) et la fréquence ($f$) pour chacune desdites antennes virtuelles dudit sous-ensemble en fonction dudit spectre, et de ses dérivées, par le biais de $N_{FFT}$ - 1 FFT pour chacune desdites antennes virtuelles dudit sous-ensemble,
- (Étape 4 : STDREC-S2) l'annulation de ladite cible ponctuelle la plus dominante et le calcul d'un spectre résiduel et de ses premières dérivées $N_{FFT}$ - 1,
- (Étape 5 : STDREC-S3) calcul d'une énergie dudit spectre résiduel et le retour à (Étape 3) jusqu'à ce que ladite énergie soit supérieure à un seuil prédéterminé ($T_{STDREC}$), sinon
- (Étape 6) calcul d'une énergie moyenne et fusion des informations relatives aux portées desdites cibles ponctuelles détectées par le nombre d'antennes virtuelles, afin de dresser une liste desdites cibles ponctuelles conformément à ladite énergie moyenne dans un ordre décroissant.

**2.** [SFE] Procédé selon la revendication 1, dans lequel le côté réception du radar génère un signal réel converti à la baisse, ledit calcul (Étape 3) comprend :

- (Étape 3.1.0) la représentation d'une fréquence normalisée cible $F \triangleq f/f_s$, où $f_s$ est la fréquence d'échantillonnage, comme somme d'une partie principale ($\alpha F_{DFT}$) et d'une partie résiduelle ($\delta F_{DFT}$), où $F_{DFT} \triangleq 1/N_0$, où $N_0$ désigne l'ordre FFT, où ladite partie principale est déterminée par la recherche de l'indice ($\hat{\alpha}$) de l'élément de vecteur $\overline{X}_{0,\hat{\alpha}}^{(v)}$ correspondant à la valeur absolue maximale de la première moitié des éléments plus un du même vecteur $\overline{\mathbf{X}}_0^{(v)}$ et ladite fréquence résiduelle est trouvée par une procédure itérative conjointement avec l'amplitude complexe cible correspondante $C \triangleq a\exp(j\psi)/2$, où $a$ est ladite amplitude cible et $\psi$ est ladite phase cible.

**3.** [CSFE] Procédé selon la revendication 1, dans lequel le côté réception du radar génère un signal complexe converti à la baisse, ledit calcul (Étape 3) comprend :

- (Étape 3.3.0) la représentation d'une fréquence normalisée cible $F \triangleq f/f_s$, où $f_s$ est la fréquence d'échantillonnage, comme somme d'une partie principale ($\alpha F_{DFT}$) et d'une partie résiduelle ($\delta F_{DFT}$), où $F_{DFT} \triangleq 1/N_0$, où $N_0$ désigne l'ordre FFT, où ladite partie principale est déterminée par la recherche de l'indice ($\hat{\alpha}$) de l'élément de vecteur $\overline{X}_{0,\hat{\alpha}}^{(v)}$ correspondant à la valeur absolue maximale du même vecteur $\overline{\mathbf{X}}_0^{(v)}$ et ladite fréquence résiduelle est trouvée par une procédure itérative conjointement avec l'amplitude complexe cible correspondante , $A \triangleq a\exp(j\psi)$ où *a* est ladite amplitude cible et $\psi$ est ladite phase cible.

**4.** [STDREC-S2 : cancellation] Procédé selon la revendication 1, dans lequel ladite annulation (Étape 4) comprend le calcul et la soustraction de la contribution donnée par ladite cible dominante audit spectre ( $\overline{\mathbf{X}}_0^{(v)}$ ) et aux dérivées correspondantes pour calculer un résidu du spectre et des dérivées correspondantes.

**5.** Procédé selon la revendication 1, dans lequel ladite fusion (Étape 6) inclut :

- (Étape 6.1) la fusion des informations fournies par un certain nombre ($N_A$) de sous-ensembles rassemblant toutes les plages discrétisées, nommées bins de fréquence, de ladite pluralité de cibles détectées sur chaque antenne virtuelle, pour générer l'ensemble global composé desdits bins de fréquence qui apparaissent au moins une fois dans lesdits sous-ensembles.

**6.** [SPE-2D] Procédé selon l'une quelconque des revendications précédentes, comprenant en outre :

- (Étape 7) l'acquisition dudit spectre ( $\overline{\mathbf{X}}_0^{(v)}$ ) dudit signal et de ses premières dérivées $N_{FFT}$ - 1 ( $\{\overline{\mathbf{X}}_k^{(v)}; k = 1,\ldots,N_{FFT}-1\}$ ) où $N_{FFT}$ = 3 lorsque ledit signal est réel et $N_{FFT}$ = 4 lorsque ledit signal est complexe, pour chacune desdites antennes virtuelles,
- (Étape 8) l'acquisition d'une liste d'un nombre prédéterminé de plages discrétisées, appelées bins de fréquence, desdites cibles ponctuelles détectées,
- (Étape 9) la sélection d'une antenne de référence, un réseau linéaire horizontal uniforme de référence, appelé HULA de référence,
- (Étape 10 [STDAEC]) l'exécution séquentielle pour chacun desdits bins de fréquence ; cette exécution inclut :

  - (Étape 10.1 [STDAEC-S1]) l'estimation de la fréquence spatiale horizontale et de l'amplitude complexe de la cible ponctuelle la plus dominante ; ladite estimation inclut :
  - (Étape 10.1.4 [STDAE-S4]) le calcul du spectre ($\overline{\mathbf{s}}_{HULA,0}$) et de ses trois premières dérivées ($\{\overline{\mathbf{s}}_{HULA,k}; k$ = 1, 2, 3$\}$) de la séquence rassemblant les échantillons dudit spectre ($\overline{\mathbf{X}}_0$) référencés audit HULA de référence dans le bin de fréquence considéré ; lesdits calculs sont effectués par le biais d'un calcul FFT avec un second facteur de suréchantillonnage ($\overline{M}$),
  - (Étape 10.1.5 [STDAE-S4]) l'estimation de ladite fréquence spatiale horizontale,
  - (Étape 10.1.6 [STDAE-S5]) la vérification afin de savoir si la combinaison des spectres associés audit HULA de référence, après compensation de leurs différences de phase en fonction de ladite fréquence horizontale estimée, génère un pic d'amplitude dans la valeur absolue du spectre résultant, appelé spectre replié global ; et lorsque la vérification est positive, exécution des étapes consistant à :

    - (Étape 10.1.7) l'affinement de ladite portée et de l'amplitude complexe de ladite cible ponctuelle la plus dominante ;
    - (Étape 10.2 [STDAEC-S2]) l'annulation de ladite cible ponctuelle la plus dominante,
    - (Étape 10.3 [STDAEC-S3]) le calcul d'une énergie résiduelle dans le bin de fréquence considéré et sa comparaison avec un seuil prédéterminé ($T_{STDAEC}$), la vérification que ladite énergie résiduelle dépasse ledit seuil prédéterminé et, dans l'affirmative, le retour au calcul du spectre (Étape 10.1.4) et le passage au calcul des coordonnées spatiales (Étape 11),

sinon, dans la négative de ladite vérification (Étape 10.1.6), l'exécution des étapes suivantes consistant à :

- (Étape 10.4) la mise à jour de la liste acquise desdits bins de fréquence et le retour à l'Étape 10 pour un autre bin de fréquence ou la sortie lorsque tous les bins de fréquence ont été examinés, dans laquelle l'exécution séquentielle (Étape 10) se termine lorsque tous les bins de fréquence ont été analysés, puis
- (Étape 11) le calcul des coordonnées spatiales de toutes les cibles ponctuelles appartenant à tous les bins de fréquence en fonction de ladite fréquence spatiale, de ladite amplitude complexe et de ladite génération d'une image globale du scénario de propagation.

7. [SPE-3D] Procédé selon la revendication 6, dans lequel lesdites antennes virtuelles forment un réseau virtuel composé d'un ou de plusieurs réseaux linéaires uniformes horizontaux (HULA) et d'un ou de plusieurs réseaux linéaires uniformes verticaux (VULA) ; le procédé comprenant les étapes consistant à :

- ladite (Étape 7) acquisition dudit spectre ( $\overline{\mathbf{X}}_0^{(v)}$ ) dudit signal et de ses premières dérivées $N_{FFT}$ - 1 ( $\{\overline{\mathbf{X}}_k^{(v)}; k = 1, \ldots, N_{FFT} - 1\}$ ) où $N_{FFT}$ = 3 lorsque ledit signal est réel et où $N_{FFT}$ = 4 lorsque ledit signal est complexe, pour chacune desdites antennes virtuelles,
- ladite (Étape 8) acquisition d'une liste d'un nombre prédéterminé de plages discrétisées, appelés bins de fréquence, desdites cibles ponctuelles détectées,
- ladite (Étape 9) sélection d'une antenne de référence, et en outre d'un réseau linéaire uniforme vertical de référence, appelé VULA de référence, d'un réseau linéaire uniforme horizontal de référence, appelé HULA de référence, et en outre d'au moins un sous-ensemble avec un certain nombre de ces réseaux linéaires uniformes horizontaux (HULA) différents du HULA de référence,
- ladite (Étape 10 [STDAEC]) exécution séquentielle pour chacun desdits bins de fréquence ; ladite exécution inclut :
- ladite (Étape 10.1 [STDAEC-S1]) estimation de la fréquence spatiale horizontale et de l'amplitude complexe de la cible ponctuelle la plus dominante et, en outre, l'estimation de la fréquence spatiale verticale ; ladite estimation inclut :

- (Étape 10.1.1 [STDAE-S1]) le calcul du spectre ($\overline{\mathbf{s}}_{VULA,0}$) de la séquence rassemblant les échantillons dudit spectre ($\overline{\mathbf{X}}_0$) se rapportant au VULA de référence dans le bin de fréquence considéré et ses premières dérivées 3 ($\{\overline{\mathbf{s}}_{VULA,k}; k = 1, 2, 3\}$) par le biais d'un calcul FFT avec un premier facteur de suréchantillonnage ($\overline{M}$),
- (Étape 10.1.2 [STDAE-S2]) l'estimation de ladite fréquence spatiale verticale,
- (Étape 10.1.3 [STDAE-S3]) la combinaison des spectres associés à l'HULA de référence et audit sous-ensemble d'HULA, après compensation des différences de phase entre l'HULA de référence et ledit sous-ensemble d'HULA à l'aide de ladite estimation de la fréquence spatiale verticale ($F_V$) ; cette superposition, appelée pliage vertical, génère un spectre replié verticalement,
- ledit (Étape 10.1.4 [STDAE-S4]) calcul du spectre ($\overline{\mathbf{s}}_{HULA,0}$) et de ses trois premières dérivées ($\{\overline{\mathbf{s}}_{HULA,k}; k = 1, 2, 3\}$) de la séquence rassemblant les échantillons dudit spectre ($\overline{\mathbf{X}}_0$) se référant audit HULA de référence dans le bin de fréquence considéré, ledit spectre se réfère audit spectre replié verticalement ; lesdits calculs sont effectués par le biais d'un calcul FFT avec un second facteur de suréchantillonnage ($\overline{M}$),
- ladite (Étape 10.1.5 [STDAE-S4]) estimation de ladite fréquence spatiale horizontale,
- (Étape 10.1.6 [STDAE-S5]) la vérification afin de savoir si la combinaison des spectres associés audit HULA de référence, après compensation de leurs différences de phase en fonction de ladite fréquence horizontale estimée et de ladite fréquence verticale estimée, génère un pic d'amplitude dans la valeur absolue du spectre résultant, appelé spectre replié global, dans lequel les spectres sont associés aux antennes virtuelles dudit sous-ensemble d'HULA ; et lorsque la vérification est positive, exécution des étapes consistant à :

- ledit (Étape 10.1.7) affinement de ladite portée et de ladite amplitude complexe de ladite cible ponctuelle la plus dominante ;
- ladite (Étape 10.2 [STDAEC-S2]) annulation de ladite cible ponctuelle la plus dominante,
- ledit (Étape 10.3 [STDAEC-S3]) calcul d'une énergie résiduelle dans le bin de fréquence considéré et sa comparaison avec un seuil prédéterminé ($T_{STDAEC}$), et la vérification que ladite énergie résiduelle dépasse ledit seuil prédéterminé et, dans l'affirmative, retour au calcul du spectre (Étape 10.1.1), sinon passage au calcul des coordonnées spatiales (Étape 11),

sinon, dans la négative de ladite vérification (Étape 10.1.6), l'exécution des étapes suivantes consistant à :

- ladite (Étape 10.4) mise à jour de la liste acquise desdits bins de fréquence et le retour à l'Étape 10 pour un autre bin de fréquence ou la sortie lorsque tous les bins de fréquence ont été examinés,

dans laquelle l'exécution séquentielle (Étape 10) se termine lorsque tous les bins de fréquence ont été analysés, puis

- ledit (Étape 11) calcul des coordonnées spatiales de toutes les cibles ponctuelles appartenant à tous les bins de fréquence en fonction desdites fréquences spatiales, de ladite amplitude complexe et de ladite génération d'une image globale du scénario de propagation.

8. [RPE] Procédé de détection de cibles par un radar MIMO SFCW équipé d'une pluralité d'antennes d'émission (TX) et de réception (RX), dans lequel chaque couple desdites antennes TX et RX est remplacé par une antenne virtuelle équivalente ; ledit radar MIMO SFCW possédant un côté réception agencé pour générer des signaux complexes convertis à la baisse en réponse à un scénario de propagation incluant une pluralité de cibles ponctuelles ; ledit procédé comprend :

- (Étape 1 : IFFT processing) l'estimation de la réponse impulsionnelle ( $\overline{\mathbf{X}}_0^{(v)}$ ) caractérisant le canal de communication associé à ladite antenne virtuelle équivalente et ses premières dérivées $N_{FFT}$ - 1 ( $\{\overline{\mathbf{X}}_k^{(v)};\ k = 1,\ldots, N_{FFT} - 1\}$ ) où $N_{FFT}$ = 4, pour chacune desdites antennes virtuelles par le biais d'un calcul IFFT, avec un facteur de suréchantillonnage (*M*),

- (Étape 2 : RVA selection) l'acquisition d'un sous-ensemble d'un certain nombre ($N_A$) de réponses impulsionnelles d'antennes virtuelles et des dérivées correspondantes,
exécution récursive

- (Étape 3 : STDREC-S1) du calcul d'une estimation des paramètres de la cible ponctuelle la plus dominante, y compris la phase ($\psi$), l'amplitude (*a*) et le retard ($\tau$) pour chacune desdites antennes virtuelles dudit sous-ensemble en fonction de ladite réponse impulsionnelle, et de ses dérivées, par le biais des IFFT $N_{FFT}$ - 1 pour chacune desdites antennes virtuelles dudit sous-ensemble,

- (Étape 4 : STDREC-S2) l'annulation de ladite cible ponctuelle la plus dominante et le calcul d'une réponse impulsionnelle résiduelle et de ses premières dérivées $N_{FFT}$ - 1,

- (Étape 5 : STDREC-S3) le calcul d'une énergie de ladite réponse impulsionnelle résiduelle et le retour à (Étape 3) jusqu'à ce que ladite énergie soit supérieure à un seuil prédéterminé ($T_{STDREC}$), sinon

- (Étape 6) calcul d'une énergie moyenne et fusion des informations relatives aux portées desdites cibles ponctuelles détectées par le nombre d'antennes virtuelles, afin de dresser une liste desdites cibles ponctuelles conformément à ladite énergie moyenne dans un ordre décroissant.

9. [CSDE] Procédé selon la revendication 8, dans lequel ledit calcul (Étape 3) inclut :

- (Étape 3.5.0) la représentation d'un retard normalisé cible $T \triangleq \tau\,\Delta f$ , où $\Delta f$ est le pas de fréquence du radar utilisé, comme somme d'une partie principale ($\alpha F_{\mathrm{IDFT}}$) et d'une partie résiduelle ($\delta F_{\mathrm{IDFT}}$), où $F_{\mathrm{IDFT}} \triangleq 1/N_0$ , où $N_0$ désigne l'ordre IFFT, où ladite partie principale est déterminée par la recherche de l'indice ($\hat{\alpha}$) de l'élément de vecteur $\overline{X}_{0,\hat{\alpha}}^{(v)}$ correspondant à la valeur absolue maximale du même vecteur $\overline{\mathbf{X}}_0^{(v)}$ et ladite partie résiduelle est trouvée par une procédure itérative conjointement avec l'amplitude complexe cible correspondante $A \triangleq a\exp(-j\psi)$ , où *a* est ladite amplitude cible et $\psi$ est ladite phase cible.

10. [STDREC-S2 : cancellation] Procédé selon la revendication 8, dans lequel ladite annulation (Étape 4) comprend le calcul et la soustraction de la contribution donnée par ladite cible dominante à ladite réponse impulsionnelle ( $\overline{\mathbf{X}}_0^{(v)}$ ) et aux dérivées correspondantes pour calculer un résidu de la réponse impulsionnelle et des dérivées correspondantes.

11. Procédé selon la revendication 8, dans lequel ladite fusion (Étape 6) inclut :

- (Étape 6.1) la fusion des informations fournies par un certain nombre ($N_A$) de sous-ensembles rassemblant toutes les plages discrétisées, nommées bins de retard, de ladite pluralité de cibles détectées sur chaque antenne virtuelle, pour générer l'ensemble global composé desdits bins de retard qui apparaissent au moins une fois dans lesdits sous-ensembles.

12. [SPE-2D] Procédé selon l'une quelconque des revendications précédentes 8 à 11 :

- (Étape 7) l'acquisition de ladite réponse impulsionnelle ( $\overline{\mathbf{X}}_0^{(v)}$ ) caractérisant le canal de communication associé à ladite antenne virtuelle équivalente et ses premières dérivées $N_{FFT}$ - 1 ( $\{\overline{\mathbf{X}}_k^{(v)};\ k = 1,\ldots,N_{FFT}-1\}$ ) où $N_{FFT}$ = 4, pour chacune desdites antennes virtuelles,
- (Étape 8) l'acquisition d'une liste d'un nombre prédéterminé de plages discrétisées, appelées bins de retard, desdites cibles ponctuelles détectées,
- (Étape 9) la sélection d'une antenne de référence, un réseau linéaire horizontal uniforme de référence, appelé HULA de référence,
- (Étape 10 [STDAEC]) l'exécution séquentielle pour chacun desdits bins de retard ; cette exécution inclut :

  - (Étape 10.1 [STDAEC-S1]) l'estimation du retard spatial horizontal et de l'amplitude complexe de la cible ponctuelle la plus dominante ; ladite estimation inclut :

    - (Étape 10.1.4 [STDAE-S4]) le calcul du spectre ($\overline{\mathbf{s}}_{HULA,0}$) et de ses trois premières dérivées ($\{\overline{\mathbf{s}}_{HULA,k}$; $k$ = 1, 2, 3}) de la séquence rassemblant les échantillons de ladite réponse impulsionnelle ($\overline{\mathbf{X}}_0$) se référant audit HULA de référence dans le bin de retard considéré ; lesdits calculs sont effectués par le biais d'un calcul IFFT avec un facteur de suréchantillonnage ($\overline{M}$),
    - (Étape 10.1.5 [STDAE-S4]) l'estimation dudit retard spatial horizontal,
    - (Étape 10.1.6 [STDAE-S5]) la vérification afin de savoir si la combinaison des réponses impulsionnelles associées auxdites antennes virtuelles dudit HULA de référence, après compensation de leurs différences de phase en fonction dudit retard horizontal estimé, génère un pic d'amplitude dans la valeur absolue de la réponse impulsionnelle résultante, appelée réponse impulsionnelle repliée globale ; et lorsque la vérification est positive, exécution des étapes consistant à :

      - (Étape 10.1.7) l'affinement de ladite portée et de l'amplitude complexe de ladite cible ponctuelle la plus dominante ;
      - (Étape 10.2 [STDAEC-S2]) l'annulation de ladite cible ponctuelle la plus dominante,
      - (Étape 10.3 [STDAEC-S3]) le calcul d'une énergie résiduelle dans le bin de retard considéré et sa comparaison avec un seuil prédéterminé ($T_{STDAEC}$), la vérification que ladite énergie résiduelle dépasse ledit seuil prédéterminé et, dans l'affirmative, le retour au calcul du spectre (Étape 10.1.4), sinon, le passage au calcul des coordonnées spatiales (Étape 11),

  sinon, dans la négative de ladite vérification (Étape 10.1.6), l'exécution des étapes suivantes consistant à :

    - (Étape 10.4) la mise à jour de la liste acquise desdits bins de retard et le retour à l'Étape 10 pour un autre bin de retard ou la sortie lorsque tous les bins de retard ont été examinés,

  dans laquelle l'exécution (Étape 10) se termine lorsque tous les bins de retard ont été analysés, puis

    - (Étape 11) le calcul des coordonnées spatiales de toutes les cibles ponctuelles appartenant à toutes les bins de retard en fonction dudit retard spatial, de ladite amplitude complexe et de ladite génération d'une image globale du scénario de propagation.

13. [SPE-3D] Procédé selon la revendication 12, dans lequel lesdites antennes virtuelles forment un réseau virtuel composé d'un ou de plusieurs réseaux linéaires uniformes horizontaux (HULA) et d'un ou de plusieurs réseaux linéaires uniformes verticaux (VULA) ; le procédé comprenant les étapes consistant à :

- ladite (Étape 7) acquisition de ladite réponse impulsionnelle ( $\overline{\mathbf{X}}_0^{(v)}$ ) caractérisant le canal de communication associé à ladite antenne virtuelle équivalente et ses premières dérivées $N_{FFT}$ - 1 (

$$\{\overline{\mathbf{X}}_k^{(v)}\,;\ k = 1, \ldots, N_{FFT} - 1\}$$ ) où $N_{FFT}$ = 4, pour chacune desdites antennes virtuelles,

- ladite (Étape 8) acquisition d'une liste d'un nombre prédéterminé de plages discrétisées, appelées bins de retard, desdites cibles ponctuelles détectées,
- ladite (Étape 9) sélection d'une antenne de référence, d'un réseau linéaire uniforme vertical de référence, appelé VULA de référence, d'un réseau linéaire uniforme horizontal de référence, appelé HULA de référence, et d'au moins un sous-ensemble avec un certain nombre de ces réseaux linéaires uniformes horizontaux (HULA) différents du HULA de référence,
- ladite (Étape 10 [STDAEC]) exécution séquentielle pour chacun desdits bins de retard ; cette exécution inclut :

  - ladite (Étape 10.1 [STDAEC-S1]) estimation du retard spatial horizontal et de l'amplitude complexe de la cible ponctuelle la plus dominante et l'estimation du retard spatial vertical ; ladite estimation inclut :

    - (Étape 10.1.1 [STDAE-S1]) le calcul du spectre ($\overline{\mathbf{s}}_{SVULA,0}$) de la séquence rassemblant les échantillons de ladite réponse impulsionnelle ($\overline{\mathbf{X}}_0$) se référant au VULA de référence dans le bin de retard considéré et ses premières dérivées 3 ($\{\overline{\mathbf{s}}_{VULA,k}\,;\ k$ = 1, 2, 3$\}$) par le biais d'un calcul IFFT avec un facteur de suréchantillonnage ($\overline{M}$),
    - (Étape 10.1.2 [STDAE-S2]) l'estimation dudit retard spatial vertical,
    - (Étape 10.1.3 [STDAE-S3]) la combinaison des spectres associés à l'HULA de référence et audit sous-ensemble d'HULA, après compensation des différences de phase entre l'HULA de référence et ledit sous-ensemble d'HULA à l'aide de ladite estimation dudit retard spatial vertical ($T_V$) ; cette superposition, appelée pliage vertical, génère une réponse impulsionnelle repliée verticalement,
    - ledit (Étape 10.1.4 [STDAE-S4]) calcul du spectre ($\overline{\mathbf{s}}_{HULA,0}$) et de ses trois premières dérivées ($\{\overline{\mathbf{s}}_{HULA,k}\,;\ k$ = 1, 2, 3$\}$) de la séquence rassemblant les échantillons de ladite réponse impulsionnelle ($\overline{\mathbf{X}}_0$) se référant audit HULA de retard dans le bin de retard considéré, ledit spectre se réfère à ladite réponse impulsionnelle repliée verticalement ; lesdits calculs sont effectués par le biais d'un calcul IFFT avec un facteur de suréchantillonnage ($\overline{M}$),
    - ladite (Étape 10.1.5 [STDAE-S4]) estimation dudit retard spatial horizontal,
    - (Étape 10.1.6 [STDAE-S5]) la vérification afin de savoir si la combinaison des réponses impulsionnelles associées auxdites antennes virtuelles dudit HULA de référence, après compensation de leurs différences de phase en fonction dudit retard horizontal estimé et dudit retard vertical estimé, génère un pic d'amplitude dans la valeur absolue de la réponse impulsionnelle résultant, appelée réponse impulsionnelle repliée globale, dans lequel les réponses impulsionnelles sont associées aux antennes virtuelles dudit sous-ensemble d'HULA ; et lorsque la vérification est positive, exécution des étapes consistant à :

      - ledit (Étape 10.1.7) affinement de ladite portée et de ladite amplitude complexe de ladite cible ponctuelle la plus dominante ;
      - ladite (Étape 10.2 [STDAEC-S2]) annulation de ladite cible ponctuelle la plus dominante,
      - ledit (Étape 10.3 [STDAEC-S3]) calcul d'une énergie résiduelle dans le bin de retard considéré et sa comparaison avec un seuil prédéterminé ($T_{STDAEC}$), et la vérification que ladite énergie résiduelle dépasse ledit seuil prédéterminé et, dans l'affirmative, retour audit calcul du spectre (Étape 10.1.1) ou au calcul du spectre (Étape 10.1.4), sinon passage au calcul des coordonnées spatiales (Étape 11),

  sinon, dans la négative de ladite vérification (Étape 10.1.6), l'exécution des étapes suivantes consistant à :

    - ladite (Étape 10.4) mise à jour de la liste acquise desdits bins de retard et le retour à l'Étape 10 pour un autre bin de retard ou la sortie lorsque tous les bins de retard ont été examinés,

  dans laquelle l'exécution (Étape 10) se termine lorsque tous les bins de retard ont été analysés, puis

    - ledit (Étape 11) calcul des coordonnées spatiales de toutes les cibles ponctuelles appartenant à tous les bins de retard en fonction dudit retard spatial, de ladite amplitude complexe et de ladite génération d'une image globale du scénario de propagation.

**14.** [DEEPLEARNING] Procédé selon les revendications 6 à 7 ou les revendications 12 à 13, comprenant en outre la compensation de la distorsion d'amplitude due à la réponse non uniforme du réseau d'antennes pour chacune desdites antennes virtuelles en fonction de ladite amplitude complexe affinée (Étape 10.1.7), et desdites fréquences spatiales estimées, dans lequel ladite compensation inclut :

- (Étape 10.1.8) l'exploitation d'un réseau neuronal profond conçu pour résoudre un problème de régression par une approche d'apprentissage supervisé dans laquelle l'entraînement du réseau est basé sur un ensemble de données recueillant l'amplitude d'un certain nombre desdites cibles ponctuelles ;

la compensation de l'amplitude complexe est effectuée en multipliant ladite estimation affinée de l'amplitude complexe (Étape 10.1.7) par ladite distorsion d'amplitude estimée pour chacune desdites antennes virtuelles,

15. Un système de radar MIMO FMCW incluant :

- un radar MIMO FMCW équipé d'une pluralité d'antennes d'émission (TX) et de réception (RX), agencées pour générer des signaux réels ou complexes en réponse à un scénario de propagation comprenant une pluralité de cibles ponctuelles, et
- des moyens de calcul agencés pour recevoir les signaux générés par lesdites antennes d'émission et de réception et configurés pour remplacer chaque couple desdites antennes d'émission et de réception par un modèle équivalent définissant des antennes virtuelles et pour réaliser toutes les étapes de l'une quelconque des revendications 1 à 7 et de la revendication 14 précédentes.

16. Un système de radar MIMO SFCW incluant :

- un radar MIMO SFCW équipé d'une pluralité d'antennes d'émission (TX) et de réception (RX), agencées pour générer des signaux complexes en réponse à un scénario de propagation comprenant une pluralité de cibles ponctuelles, et
- des moyens de calcul agencés pour recevoir les signaux générés par lesdites antennes d'émission et de réception et configurés pour remplacer chaque couple desdites antennes d'émission et de réception par un modèle équivalent définissant des antennes virtuelles et pour réaliser toutes les étapes de l'une quelconque des revendications 8 à 14 précédentes.

EP 4 334 740 B1

$N_T$ TX antennas

*Transmitter*

| Ramp Generator | → | VCO | → | Power Amplifier |

$s_{RF}(t)$

Targets

*Receiver*

$\{\mathbf{r}_v\}$

| S/P | ← | ADC | ← | Band-Pass Filter | ← ⊗ ← | LNA |

Further processing

Received Signal Samples

Downconverted Received Signal

RF Received Signal

$N_R$ RX antennas

Fig. 1

Fig. 2

Fig. 3

Fig. 4

Fig. 5

EP 4 334 740 B1

Fig. 6

Fig. 7

Target spatial info

$\{\hat{R}_l, \hat{\theta}_l, \hat{\phi}_l, |\hat{C}_l|; l = 0,1,...,\hat{L}-1\}$

Radar Image Generation

Bin analysis

$L_b$ branches

STDAEC

STDAEC

STDAEC

SPE

$\{(\hat{\alpha}_l, \hat{E}_{b,l}); l = 0,1,...,L_b-1\}$

TRP

$\{r_v\}$

FFT Processing

$\{X_{0,v}, X_{1,v}, X_{2,v}\}$

$N_A$ branches

RVA Selection

RPE

STDREC

STDREC

STDREC

Range Info Fusion

$\{X_{0,v}, X_{1,v}, X_{2,v}\}_{v \in S_A}$ $\{(\hat{\alpha}_{v_k}^{(i)}, \hat{C}_{v_k}^{(i)}); i = 0,1,...,L_k\}_{v_k \in S_A}$

Target detection and range estimation

Fig. 8

Fig. 9

EP 4 334 740 B1

Fig. 10

Fig. 11

Fig. 12

EP 4 334 740 B1

Fig. 13

TX array

RX array

Fig. 14

EP 4 334 740 B1

Fig. 15

Fig. 16

Input layer

Hidden layer 1

Hidden layer K

Output layer

Neuron

$\hat{C}_i[1,l]$ $\hat{C}_i[2,l]$ $\hat{C}_i[3,l]$ $\hat{C}_i[N_{VR},l]$

$\tilde{C}_i[1,l]$ $\tilde{C}_i[2,l]$ $\tilde{C}_i[3,l]$ $\tilde{C}_i[N_{VR},l]$

EP 4 334 740 B1

Fig. 17

Fig. 18

Fig. 19

Fig. 20

**RPE**

START

1: FFT Proc.

2: RVA selection

3: STDREC-S1

4: STDREC-S2

5: STDREC-S3

6

Fig. 21

3 SFE#1

3.1.0

3.1.1

3.1.2

Fig. 22

3 SFE#2

3.1.0

3.2.1

3.2.2

Fig. 23

3 CSFE#1

3.3.0

3.3.1

3.3.2

Fig. 24

Fig. 28

Fig. 27

Fig. 26

Fig. 25

Fig. 29

```
┌ ─ ─ ─ ─ ─ ─ ─ ─ ─ ─ ─ ┐
│  10.1.2 CSFE#1        │
│  ┌─────────────────┐  │
│  │   10.1.2.1.0    │  │
│  └─────────────────┘  │
│           │           │
│           ▼           │
│  ┌─────────────────┐  │
│  │   10.1.2.1.1    │  │
│  └─────────────────┘  │
│           │           │
│           ▼           │
│  ┌─────────────────┐  │
│  │   10.1.2.1.2    │  │
│  └─────────────────┘  │
└ ─ ─ ─ ─ ─ ─ ─ ─ ─ ─ ─ ┘
```

**Fig. 30**

```
┌ ─ ─ ─ ─ ─ ─ ─ ─ ─ ─ ─ ┐
│  10.1.2 CSFE#2        │
│  ┌─────────────────┐  │
│  │   10.1.2.1.0    │  │
│  └─────────────────┘  │
│           │           │
│           ▼           │
│  ┌─────────────────┐  │
│  │   10.1.2.2.1    │  │
│  └─────────────────┘  │
│           │           │
│           ▼           │
│  ┌─────────────────┐  │
│  │   10.1.2.2.2    │  │
│  └─────────────────┘  │
└ ─ ─ ─ ─ ─ ─ ─ ─ ─ ─ ─ ┘
```

**Fig. 31**

```
┌───────────────────────┐
│  10.1.5 CSFE#1        │
│  ┌─────────────────┐  │
│  │   10.1.5.1.0    │  │
│  └─────────────────┘  │
│           │           │
│           ▼           │
│  ┌─────────────────┐  │
│  │   10.1.5.1.1    │  │
│  └─────────────────┘  │
│           │           │
│           ▼           │
│  ┌─────────────────┐  │
│  │   10.1.5.1.2    │  │
│  └─────────────────┘  │
└───────────────────────┘
```

**Fig. 32**

```
┌───────────────────────┐
│  10.1.5 CSFE#2        │
│  ┌─────────────────┐  │
│  │   10.1.5.1.0    │  │
│  └─────────────────┘  │
│           │           │
│           ▼           │
│  ┌─────────────────┐  │
│  │   10.1.5.2.1    │  │
│  └─────────────────┘  │
│           │           │
│           ▼           │
│  ┌─────────────────┐  │
│  │   10.1.5.2.2    │  │
│  └─────────────────┘  │
└───────────────────────┘
```

**Fig. 33**

**Fig. 34**

10.1.6 CSFE#1

10.1.6.1.0 → 10.1.6.1.1 → 10.1.6.1.2

**Fig. 35**

10.1.6 CSFE#2

10.1.6.1.0 → 10.1.6.2.1 → 10.1.6.2.2

**Fig. 36**

RPE

START → 1: IFFT Proc. → 2: RVA selection → 3: STDREC-S1 → 4: STDREC-S2 → 5: STDREC-S3 → 6

**Fig. 37**

3 CSDE#1

3.5.0 → 3.5.1 → 3.5.2

EP 4 334 740 B1

```
┌─────────────────────┐
│ 3 CSDE#2            │
│  ┌───────────────┐  │
│  │    3.5.0      │  │
│  └───────┬───────┘  │
│          ↓          │
│  ┌───────────────┐  │
│  │    3.6.1      │  │
│  └───────┬───────┘  │
│          ↓          │
│  ┌───────────────┐  │
│  │    3.6.2      │  │
│  └───────────────┘  │
└─────────────────────┘
```

**Fig. 38**

```
┌─────────────────────────┐
│ 10.1.2 CSDE#1           │
│  ┌───────────────────┐  │
│  │   10.1.2.1.0      │  │
│  └─────────┬─────────┘  │
│            ↓            │
│  ┌───────────────────┐  │
│  │   10.1.2.1.1      │  │
│  └─────────┬─────────┘  │
│            ↓            │
│  ┌───────────────────┐  │
│  │   10.1.2.1.2      │  │
│  └───────────────────┘  │
└─────────────────────────┘
```

**Fig. 39**

```
┌─────────────────────────┐
│ 10.1.2 CSDE#2           │
│  ┌───────────────────┐  │
│  │   10.1.2.1.0      │  │
│  └─────────┬─────────┘  │
│            ↓            │
│  ┌───────────────────┐  │
│  │   10.1.2.2.1      │  │
│  └─────────┬─────────┘  │
│            ↓            │
│  ┌───────────────────┐  │
│  │   10.1.2.2.2      │  │
│  └───────────────────┘  │
└─────────────────────────┘
```

**Fig. 40**

```
┌─────────────────────────┐
│ 10.1.5 CSDE#1           │
│  ┌───────────────────┐  │
│  │   10.1.5.1.0      │  │
│  └─────────┬─────────┘  │
│            ↓            │
│  ┌───────────────────┐  │
│  │   10.1.5.1.1      │  │
│  └─────────┬─────────┘  │
│            ↓            │
│  ┌───────────────────┐  │
│  │   10.1.5.1.2      │  │
│  └───────────────────┘  │
└─────────────────────────┘
```

**Fig. 41**

EP 4 334 740 B1

```
┌─────────────────────────┐
│ 10.1.5 CSDE#2           │
│  ┌───────────────────┐  │
│  │   10.1.5.1.0      │  │
│  └───────────────────┘  │
│            │            │
│            ▼            │
│  ┌───────────────────┐  │
│  │   10.1.5.2.1      │  │
│  └───────────────────┘  │
│            │            │
│            ▼            │
│  ┌───────────────────┐  │
│  │   10.1.5.2.2      │  │
│  └───────────────────┘  │
└─────────────────────────┘
```

Fig. 42

```
┌─────────────────────────┐
│ 10.1.6 CSDE#1           │
│  ┌───────────────────┐  │
│  │   10.1.6.1.0      │  │
│  └───────────────────┘  │
│            │            │
│            ▼            │
│  ┌───────────────────┐  │
│  │   10.1.6.1.1      │  │
│  └───────────────────┘  │
│            │            │
│            ▼            │
│  ┌───────────────────┐  │
│  │   10.1.6.1.2      │  │
│  └───────────────────┘  │
└─────────────────────────┘
```

Fig. 43

```
┌─────────────────────────┐
│ 10.1.6 CSDE#2           │
│  ┌───────────────────┐  │
│  │   10.1.6.1.0      │  │
│  └───────────────────┘  │
│            │            │
│            ▼            │
│  ┌───────────────────┐  │
│  │   10.1.6.2.1      │  │
│  └───────────────────┘  │
│            │            │
│            ▼            │
│  ┌───────────────────┐  │
│  │   10.1.6.2.2      │  │
│  └───────────────────┘  │
└─────────────────────────┘
```

Fig. 44

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S. RAO**. MIMO Radar. *Texas Instruments - Application Report SWRA554A*, July 2018
- **D. OH** ; **J. LEE**. Low-Complexity Range-Azimuth FMCW Radar Sensor Using Joint Angle and Delay Estimation Without SVD and EVD. *IEEE Sensors Journal*, September 2015, vol. 15 (9), 4799-4811
- **J.-J. LIN** ; **Y.-P. LI** ; **W.-C. HSU** ; **T.-S. LEE**. Design of an FMCW radar baseband signal processing system for automotive application. *SpringerPlus*, 01 January 2016, vol. 5 (42)
- **E. SIRIGNANO** ; **A. DAVOLI** ; **G. M. VITETTA** ; **F. VIAPPIANI**. A Comparative Analysis of Deterministic Detection and Estimation Techniques for MIMO SFCW Radars. *IEEE Access*, 2019, vol. 7, 129 848-129 861
- **I. BILIK** ; **O. LONGMAN** ; **S. VILLEVAL** ; **J. TABRIKIAN**. The rise of radar for autonomous vehicles: Signal processing solutions and future research directions. *IEEE Sig. Proc. Mag.*, September 2019, vol. 36 (5), 20-31
- **E. SIRIGNANO** ; **A. DAVOLI** ; **G. M. VITETTA** ; **F. VIAPPIANI**. A Comparative Analysis of Deterministic Detection and Estimation Techniques for MIMO SFCW Radars. *IEEE Access*, 2019, vol. 7, 129848-129861
- **I. ZISKIND** ; **M. WAX**. Maximum likelihood localization of multiple sources by alternating projection. *IEEE Trans Ac., Speech and Sig. Proc.*, 1988, vol. 36 (10), 1553-1560
- **J. SELVA**. ML Estimation and Detection of Multiple Frequencies Through Periodogram Estimate Refinement. *IEEE Signal Processing Letters*, March 2017, vol. 24 (3), 249-253
- Pattern Recognition and Machine Learning, ser. **C. M. BISHOP**. Information Science and Statistics. Springer, 2006
- **0. SIMEONE**. A very brief introduction to machine learning with applications to communication systems. *IEEE Transactions on Cognitive Communications and Networking*, 2018, vol. 4 (4), 648-664
- **N. SHLEZINGER** ; **R. FU** ; **Y. C. ELDAR**. Deep soft interference cancellation for mimo detection. *ICASSP 2020 - 2020 IEEE International Conference on Acoustics, Speech and Signal Processing (ICASSP)*, 2020, 8881-8885
- **A. ROMERO** ; **N. BALLAS** ; **S. E. KAHOU** ; **A. CHASSANG** ; **C. GATTA** ; **Y. BENGIO**. *Fitnets: Hints for thin deep nets*, 2014

- **S. SUN** ; **A. P. PETROPULU** ; **H. V. POOR**. MIMO Radar for Advanced Driver-Assistance Systems and Autonomous Driving: Advantages and Challenges. *IEEE Signal Processing Magazine*, July 2020, vol. 37 (4), 98-117
- **C. M. SCHMID** ; **S. SCHUSTER** ; **R. FEGER** ; **A. STELZER**. On the Effects of Calibration Errors and Mutual Coupling on the Beam Pattern of an Antenna Array. *IEEE Transactions on Antennas and Propagation*, August 2013, vol. 61 (8), 4063-4072
- **C. M. SCHMID** ; **C. PFEFFER** ; **R. FEGER** ; **A. STELZER**. An FMCW MIMO radar calibration and mutual coupling compensation approach. *2013 European Radar Conference*, October 2013, 13-16
- **J. SELVA**. Efficient Wideband DOA Estimation Through Function Evaluation Techniques. *IEEE Trans. Sig. Proc.*, June 2018, vol. 66 (12), 3112-3123
- **J. G. PROAKIS** ; **D. G. MANOLAKIS**. Digital Signal processing: Principles, Algorithms and Applications. 1993
- **J. SELVA**. ML Estimation and Detection of Multiple Frequencies Through Periodogram Estimate Refinement. *IEEE Sig. Proc. Lett.*, 2017, vol. 24 (3), 249-253
- **I. ZISKIND** ; **M. WAX**. Maximum likelihood localization of multiple sources by alternating projection. *IEEE Trans. Ac., Speech and Sig. Proc.*, October 1988, vol. 36 (10), 1553-1560
- **D. C. RIFE** ; **R. R. BOORSTYN**. Multiple tone parameter estimation from discrete-time observations. *The Bell System Technical Journal*, 1976, vol. 55 (9), 1389-1410
- **S. KAY**. Accurate frequency estimation at low signal-to-noise ratio. *IEEE Trans. Ac., Speech and Sig. Proc.*, 1984, vol. 32 (3), 540-547
- **P. STOICA** ; **R. L. MOSES** ; **B. FRIEDLANDER** ; **T. SODERSTROM**. Maximum likelihood estimation of the parameters of multiple sinusoids from noisy measurements. *IEEE Trans. Ac., Speech, and Sig. Proc.*, 1989, vol. 37 (3), 378-392
- **G. M. VITETTA** ; **F. PANCALDI** ; **D. P. TAYLOR** ; **P. MARTIN**. Wireless Communications: Algorithmic Techniques. John Wiley & Sons

- **A. A. ZAIDI** ; **R. BALDEMAIR** ; **V. MOLES-CASES** ; **N. HE** ; **K. WERNER** ; **A. CEDERGREN**. Ofdm numerology design for 5g new radio to support iot, embb, and mbsfn. *IEEE Communications Standards Magazine*, 2018, vol. 2 (2), 78-83
- **S. SRIKANTH** ; **P. A. MURUGESA PANDIAN** ; **X. FERNANDO**. Orthogonal frequency division multiple access in wimax and lte: a comparison. *IEEE Communications Magazine*, 2012, vol. 50 (9), 153-161
- **WIRELESS COMMUNICATIONS**. Algorithmic Techniques. John Wiley & Sons
- **F. GUSTAFSSON** ; **F. GUNNARSSON**. Mobile positioning using wireless networks: possibilities and fundamental limitations based on available wireless network measurements. *IEEE Signal Processing Magazine*, 2005, vol. 22 (4), 41-53
- **X. WANG** ; **S. B. WICKER**. Channel estimation and feedback with continuous time domain parameters. *Proc. 2013 IEEE Global Communications Conference (GLOBECOM)*, 2013, 4306-4312
- **Y. BRESLER** ; **A. MACOVSKI**. Exact maximum likelihood parameter estimation of superimposed exponential signals in noise. *IEEE Transactions on Acoustics, Speech, and Signal Processing*, 1986, vol. 34 (5), 1081-1089
- **L. S. BIRADAR** ; **V. U. REDDY**. A newton-based ziskind-wax alternating projection algorithm applied to spectral estimation. *IEEE Transactions on Signal Processing*, 1993, vol. 41 (3), 1435-1438
- **E. CHIAVACCINI** ; **G. M. VITETTA**. Maximum-likelihood frequency recovery for ofdm signals transmitted over multipath fading channels. *IEEE Trans. Commun.*, 2004, vol. 52 (2), 244-251
- **F.ZUCCARDI MERLI** ; **G. M. VITETTA**. Blind feedforward frequency estimation for ofdm signals transmitted over multipath fading channels. *IEEE Transactions on Wireless Communications*, 2007, vol. 6 (6), 2055-2059